(19) Europäisches Patentamt
European Patent Office
Office européen des brevets

(11) **EP 4 325 191 A1**

(12) **EUROPÄISCHE PATENTANMELDUNG**

(43) Veröffentlichungstag:
**21.02.2024 Patentblatt 2024/08**

(21) Anmeldenummer: **23193087.6**

(22) Anmeldetag: **28.11.2017**

(51) Internationale Patentklassifikation (IPC):
**G01L 5/00** *(2006.01)* **F16C 19/52** *(2006.01)*
**F16H 49/00** *(2006.01)*

(52) Gemeinsame Patentklassifikation (CPC):
**G01L 5/0019; B62J 45/411; B62J 45/421;**
**B62M 6/50; B62M 6/55; B62M 11/145;**
**B62M 11/18; F16C 19/522; F16C 35/077;**
**F16C 41/00; F16D 41/067; F16D 41/12;**
**F16D 41/24; F16H 49/001;** F16C 19/06; (Forts.)

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **28.11.2016 DE 102016122845**

(62) Dokumentnummer(n) der früheren Anmeldung(en)
nach Art. 76 EPÜ:
**21208360.4 / 3 978 886**
**17822453.1 / 3 545 276**

(71) Anmelder: **TQ-Systems GmbH**
**82229 Seefeld (DE)**

(72) Erfinder: **ROSSBERGER, Antonius Georg**
**Seefeld (DE)**

(74) Vertreter: **Schweiger, Martin**
**Patentanwalt**
**Martin Schweiger**
**Erhardtstraße 12**
**80469 München (DE)**

Bemerkungen:
Diese Anmeldung ist am 24-08-2023 als
Teilanmeldung zu der unter INID-Code 62 erwähnten
Anmeldung eingereicht worden.

(54) **KRAFTMESSDOSE ZUR BESTIMMUNG EINER RADIALEN KRAFT AUF EINE KURBELWELLE**

(57) Die Erfindung betrifft ein harmonisches Pinring Getriebe mit Verzahnungen gemäß einer Epizykelkonstruktion, ein Innenrad, ein Außenrad und ein Verfahren.

Fig. 96

EP 4 325 191 A1

(52) Gemeinsame Patentklassifikation (CPC): (Forts.)
F16C 19/547; F16C 2326/28; F16C 2380/27;
F16H 1/32

**Beschreibung**

Die vorliegende Beschreibung offenbart in einem ersten Aspekt eine Kraftmessdose zur Bestimmung einer radialen Kraft auf eine Kurbelwelle. Die Kraftmessdose weist eine zylindrische Aufnahmehülse zur Aufnahme eines Rings eines Lagers auf, sowie einen Befestigungsring zur Befestigung der Kraftmessdose in einem Getriebegehäuse. Bei dem Ring kann es sich insbesondere um einen Außenring eines Wälzlagers handeln. Der Befestigungsring der Kraftmessdose ist mit dem Aufnahmering über Verbindungsbereiche beziehungsweise Messbereiche verbunden. Die Messbereiche sind zur Aufnahme von radialen Kräften der Aufnahmehülse vorgesehen, die von dem Ring des Lagers auf die Messbereiche übertragen werden.

An mindestens zwei der Messbereichen sind Dehnungssensoren befestigt, beispielsweise als aufgeklebte Dehnmessstreifen. Weiterhin weist die Kraftmessdose Axialstützbereiche auf, die an dem Befestigungsring zur axialen Abstützung des Außenrings des Lagers bzw. zur Aufnahme axialer Kräfte vorgesehen sind. Hierbei sind axiale Kräfte parallel zur Längsrichtung der Aufnahmehülse ausgerichtet und radiale Kräfte senkrecht dazu.

Insbesondere kann die Kraftmessdose zur Aufnahme eines Lagers ausgebildet sein, das sich radial innerhalb der Aufnahmehülse befindet, wobei ein Außenring des Lagers in Kontakt mit einer Innenfläche der Aufnahmehülse steht und die Messbereiche und die Axialstützbereich können sich radial nach innen an den Befestigungsring anschließen.

Die Axialstützbereiche sind durch Radialschlitze von den Messbereichen getrennt, wobei die Axialstützbereiche durch einen Umfangsschlitz von der Aufnahmehülse getrennt sind.

Insbesondere können die Messbereiche als Winkel ausgebildete Messlaschen aufweisen, wobei die Winkel insbesondere einen radialen Bereich und einen an den radialen Bereich anschließenden axialen Bereich aufweisen können. Diese Form eignet sich gut zur Erzeugung einer kontrollierten Deformation unter Einwirkung radialer Kräfte.

Der radiale Bereich ist mit dem Befestigungsring verbunden und der axiale Bereich ist mit der Aufnahmehülse verbunden. Insbesondere kann dabei der radiale Bereich zu dem axialen Bereich in einem Winkel von ungefähr 90 Grad angeordnet sein.

Gemäß einer weiteren Ausgestaltung schließt der axiale Bereich mit einer zylinderförmigen Innenfläche der Aufnahmehülse bündig ab.

Insbesondere können die Axialstützlaschen so ausgestaltet sein, dass sie über eine Innenfläche der Aufnahmehülse radial nach innen hervorstehen. Dadurch kann ein Lager so in die Aufnahmehülse eingeführt werden, dass ein Ring des Lagers, insbesondere ein Außenring, an den überstehenden Bereich anstößt und die auf das Lager wirkenden axialen Kräfte auf die Kraftmessdose übertragen und über den Befestigungsbereich abgeleitet werden.

Gemäß einer weiteren Ausführungsform ist mindestens einer der Dehnungssensoren als Dehnmessstreifen ausgebildet. Gemäß einer weiteren Ausführungsform ist an jedem der Messbereiche ein Dehnungssensor befestigt, insbesondere kann der Dehnungssensor jeweils an einem radialen Bereich des Messbereichs befestigt sein.

Gemäß einer weiteren Ausführungsform weisen mindestens zwei der Messbereiche abgesenkte Bereiche zur Befestigung der Dehnungssensoren auf, wodurch die Dehnungssensoren leicht positioniert werden können und vor Beschädigung geschützt werden.

Gemäß einer speziellen Ausführungsform weist die Kraftmessdose vier Messbereiche auf, die im Abstand von 90 Grad angeordnet sind. Dadurch kann einerseits eine gute Abstützung des in der Kraftmessdose aufgenommenen Lagers erreicht werden und andererseits eine Messung definierter Radialkräfte ermöglicht werden, aus denen ein auf eine Kurbelwelle wirkendes Drehmoment berechnet werden kann, wobei die Kurbelwelle von dem Lager abgestützt wird.

Insbesondere kann der Befestigungsring Befestigungsbereiche aufweisen, in denen Befestigungslöcher vorgesehen sind, die sich zum Anschrauben des Befestigungsrings an ein Gehäuse eignen.

Weiterhin kann der Befestigungsring Ausnehmungen aufweisen, wobei die Messbereiche in den Ausnehmungen angeordnet sind. Dabei können die Messlaschen, die Schlitze, die die Messlaschen begrenzen und die Axialstützbereiche insbesondere so dimensioniert sein, dass ein Winkelbereich der die Messlaschen und der die Messlaschen begrenzenden Schlitze umfasst, in etwa gleich einem Winkelbereich der Axialstützbereiche entspricht.

Gemäß einem Ausführungsbeispiel ist eine Winkelausdehnung der Messbereiche in Umfangsrichtung kleiner oder gleich 30 Grad. Dadurch kann eine gute Verformbarkeit erreicht werden und die einwirkende radiale Kraft entspricht einer gut definierten Richtung.

Insbesondere kann die Kraftmessdose integral aus Metall gefertigt sein, das sich elastisch verformt und eine gute Stabilität und Formbeständigkeit bietet. Hierbei bezieht sich "Metall" auf ein metallisches Material und schließt insbesondere auch Metall-Legierungen mit ein.

In einem weiteren Aspekt offenbart die vorliegende Beschreibung eine Messvorrichtung zur Bestimmung einer Kraft auf eine Kurbelwelle. Die Messvorrichtung weist eine Kurbelwelle mit einem auf der Kurbelwelle angeordneten Lager und mit der oben beschriebenen Kraftmessdose auf. Die Aufnahmehülse der Kraftmessdose ist auf einem Außenring des Lagers angeordnet, und die Axialstützbereiche der Kraftmessdose in axialer Richtung an dem Außenring des Lagers abgestützt.

Weiterhin ist eine Auswertungselektronik mit den Dehnungssensoren der Kraftmessdose verbunden, die dazu eingerichtet ist, aus Signalen der Dehnungssensoren eine auf die Kurbelwelle wirkende Kraft zu bestimmen. Die Kurbelwelle kann insbesondere eine Tretwelle sein, aber beispielsweise auch eine Kurbelwelle eines Kolbenmotors.

Weiterhin offenbart die vorliegende Beschreibung eine Getriebeanordnung mit der zuvor genannten Messvorrichtung. Die Getriebeanordnung weist ein Getriebegehäuse und einer Kurbelwelle auf, wobei die Kurbelwelle über ein erstes Lager und ein zweites Lager im Getriebegehäuse gelagert ist.

Das erste Lager ist über die Kraftmessdose der Messvorrichtung in dem Getriebegehäuse aufgenommen. Die Kraftmessdose ist ihrerseits über den Befestigungsring in dem Getriebegehäuse aufgenommen. Dabei nimmt die Aufnahmehülse einen Außenring des ersten Lagers auf und die Axialstützbereiche sind an dem Außenring des ersten Lagers abgestützt.

Bei der Getriebeanordnung kann insbesondere die Kurbelwelle einen ersten Absatz und einen zweiten Absatz zur Abstützung der Lager aufweisen. Die Absätze können beispielsweise dadurch gebildet werden, dass die Kurbelwelle in der Mitte einen größeren Durchmesser aufweist als an ihren beiden Enden. Insbesondere kann ein Innenring des ersten Lagers der Messvorrichtung so an dem ersten Absatz der Tretwelle anliegen und ein Innenring des zweiten Lagers so an dem zweiten Absatz der Kurbelwelle anliegen, dass eine X-Anordnung einer schräg angestellten Lagerung gebildet wird.

Bei der X-Anordnung der auf der Kurbelwelle angeordneten Lager werden auf die Kurbelwelle wirkende Kräfte nach außen über die Lager abgeleitet. Dadurch kann eine Kraftmessdose weiter außen in der Nähe einer Auswertungselektronik angeordnet werden. Zudem wirkt eine Kraft auf eine auf dem abtriebsseitigen Lager angeordnete Abtriebswelle ebenfalls nach außen. Dadurch kann die Abtriebswelle auf Abstand von einer Rotorwelle gehalten werden, die antriebsseitig von der Abtriebswelle angeordnet ist.

Zur Aufnahme axialer Kräfte können das erste Lager der Messvorrichtung und das zweite Lager der Messvorrichtung speziell als einreihige Schrägkugellager ausgebildet sein. Gemäß einer Ausführungsform ist das zweite Lager über eine Wellenfeder an dem zweiten Absatz der Tretwelle oder an dem Gehäuse abgestützt.

Gemäß einer weiteren Ausführungsform ist das zweite Lager über eine Abstandsscheibe an dem zweiten Absatz der Tretwelle oder an dem Gehäuse abgestützt.

Weiterhin offenbart die vorliegende Beschreibung eine Getriebeanordnung mit den oben genannten Merkmalen, die weiterhin einen Motor und ein mit dem Motor verbundenen Untersetzungsgetriebe aufweist, sowie eine mit dem Untersetzungsgetriebeverbundene Abtriebs-Hohlwelle.

Bei dieser Getriebeanordnung ist die Kurbelwelle als Tretwelle ausgebildet, und das erste Lager und das zweite Lager sind jeweils als Wälzlager ausgebildet. Die Tretwelle ist durch die Abtriebs-Hohlwelle hindurchgeführt, und zur Entkopplung der Tretwelle von der Abtriebs-Hohlwelle ist ein Freilauf zwischen der Tretwelle und der Abtriebs-Hohlwelle vorgesehen.

Weiterhin offenbart die vorliegende Beschreibung ein elektrisch betriebenes Fahrzeug mit der vorgenannten Getriebeanordnung. Hierbei ist der Motor als Elektromotor ausgebildet, und eine Batterie des elektrisch betriebenen Fahrzeugs ist mit dem Elektromotor verbunden.

Gemäß einem weiteren Aspekt offenbart die vorliegende Beschreibung ein harmonisches Pinring-Getriebe mit einer Eingangswelle und einer Ausgangswelle. Insbesondere kann die Eingangswelle als eine Hohlwelle ausgebildet sein, die als Rotorwelle eines elektrischen Motors geeignet ist, und die Ausgangswelle kann als eine Hohlwelle ausgebildet sein, die sich im Kraftfluss hinter dem weiter unten erwähnten Innenrad befindet.

Bei diesem Getriebe ist eine Kurvenscheibe, die dazu dient, ein Zugmittel an Außenräder anzudrücken, in einem Stück mit einer Antriebs-Hohlwelle ausgebildet, wobei die Antriebs-Hohlwelle insbesondere einen Rotor eines Elektromotors bilden kann.

Das Getriebe weist ein erstes Außenrad und ein Innenrad auf, das konzentrisch in Bezug auf das erste Außenrad in einer ersten axialen Ebene angeordnet ist. Ein zweites Außenrad ist in einer zweiten axialen Ebene angeordnet und ein Zugmittel erstreckt sich zwischen dem ersten Außenrad und dem Innenrad. Anders ausgedrückt befindet sich ein axialer Bereich des Zugmittels in einem zwischen dem Außenrad und dem Innenrad ausgebildeten Zwischenraum.

Ein umlaufender Transmitter, hebt das Zugmittel von einem äußeren Umfang des Innenrads ab drückt es gegen einen inneren Umfang des ersten Außenrads und gegen einen inneren Umfang des zweiten Außenrads drückt. Der Transmitter weist eine Antriebs-Hohlwelle und eine Kurvenscheibe auf. Die Kurvenscheibe und ein Pin-Halterig des Pinrings ist in einer dritten axialen Ebene angeordnet, die sich zwischen der ersten axialen Ebene und der zweiten axialen Ebene befindet. Die Kurvenscheibe ist in einem Stück mit der Antriebs-Hohlwelle ausgebildet.

Gemäß einer vorteilhaften Ausgestaltung ist das Zugmittel als ein Pinring ausgebildet, wobei Pins bzw. Fortsätze an zwei gegenüberliegenden Seiten von einem mittleren Bereich hervorstehen, wobei der mittlere Bereich in der dritten axialen Ebene angeordnet ist. Der mittlere Bereich kann insbesondere flexibel ausgebildet sein und entspricht einem Pin-Halterig. Weiterhin kann der mittlere Bereich des Pinrings eine innere Auflagefläche zur Auflage auf einer Kurvenscheibe und eine äußere Auflagefläche zur Auflage auf einem Getriebeteil, wie beispielsweise einem Stützring, aufweisen.

Im Betrieb hebt der umlaufende Transmitter die Pins von einem äußeren Umfang des Innenrads ab und drückt die Pins gegen einen inneren Umfang des ersten Außenrads und gegen einen inneren Umfang des zweiten Außenrads.

Gemäß einer weiteren Ausführungsform ist ein Umfang der Kurvenscheibe so ausgestaltet, dass er eine ovale Form hat, wie beispielsweise eine sinusüberlagerte Kreisform oder eine Ellipse. Gemäß einer anderen Ausführungsform hat ein Umfang der Kurvenscheibe eine kreisförmige Form und ist exzentrisch zu einer Getriebe-Mittelachse angeordnet.

Insbesondere kann zur Vermeidung von Kräften entlang des Umfangs ein Wälzlager radial zwischen der Kurvenscheibe und dem Zugmittel angeordnet sein, wobei das Wälzlager bei einer ovalen Kurvenscheibe vorteilhafterweise deformierbar ist.

Insbesondere kann der Transmitter im Wesentlichen aus leichtgewichtigem Aluminium bestehen und in einem Stück mit einer Hohlwelle gefertigt sein, die einen Rotor eines Elektromotors bildet.

Insbesondere, wenn der Transmitter eine Exzenterscheibe bzw. eine exzentrisch angeordnete Kreisscheibe aufweist, kann der Transmitter einen Ring aufweisen, der über Verbindungsstreben mit der Antriebs-Hohlwelle verbunden ist.

Gemäß einem weiteren Aspekt offenbart die vorliegende Beschreibung ein harmonisches Pinring-Getriebe mit einem Stützring.

Das Getriebe weist die folgenden Bestandteile auf. Ein erstes Außenrad, ein Innenrad, das konzentrisch in Bezug auf das erste Außenrad in einer ersten axialen Ebene angeordnet ist, sowie ein zweites Außenrad, das in einer zweiten axialen Ebene angeordnet ist.

Weiterhin weist das Getriebe ein Zugmittel auf, das sich zwischen dem ersten Außenrad und dem Innenrad erstreckt, und einen umlaufenden Transmitter, der das Zugmittel von einem äußeren Umfang des Innenrads abhebt, gegen einen inneren Umfang des ersten Außenrads drückt und gegen einen inneren Umfang des zweiten Außenrads drückt.

Der Transmitter weist eine Antriebs-Hohlwelle und eine Kurvenscheibe auf, wobei die Kurvenscheibe und ein Pin-Haltering des Pinrings in einer dritten axialen Ebene angeordnet ist, die sich zwischen der ersten axialen Ebene und der zweiten axialen Ebene befindet. Ferner ist und das erste Außenrad durch einen ersten Außenring gebildet, und das zweite Außenrad ist durch einen zweiten Außenring gebildet, wobei der erste Außenring und der zweite Außenring in einen Stützring eingesetzt sind. Insbesondere kann der zweite Außenring zu dem ersten Außenring baugleich und/oder spiegelsymmetrisch sein.

Des Weiteren kann der erste Außenring und der zweite Außenring jeweils aus Plastik wie beispielsweise PA66 oder Polymethylmetacrylat (PMMA) im Spritzgussverfahren gefertigt sein. Es ist insbesondere dann möglich, die Außenräder aus Plastik auszubilden, wenn die Pins eines Pinrings an allen Zähnen der Außenradverzahnung anliegen, so dass sich eine gleichmäßige Verteilung der Belastung ergibt. Durch eine geeignete Dimensionierung der Pins eines Pinrings und eine geeignet gewählte Verzahnung kann erreicht werden, dass jeder der Pins entweder an der Innenverzahnung des Außenrads oder an der Außenverzahnung des Innenrads anliegt.

Insbesondere können der erste Außenring und der zweite Außenring jeweils radial nach außen abstehende Zapfen aufweisen, die über den Umfang des jeweiligen Außenrings verteilt sind, wobei der Stützring dazu passende Ausnehmungen aufweist, in die die Zapfen eingesetzt sind.

Gemäß einem anderen Ausführungsbeispiel sind in dem ersten Außenring und dem zweiten Außenring Kerben ausgeformt, die jeweils über den Umfang des ersten Außenrings und des zweiten Außenrings verteilt sind, und der Stützring ist als Bereich eines Getriebegehäuses ausgebildet, der Zapfen aufweist, die in die Kerben eingreifen. Diese Ausführungsform eignet sich besonders gut für einen Getriebemotor.

Der Stützring, der die Außenräder aufnimmt, kann aus leichtgewichtigem Aluminium gefertigt sein, insbesondere kann er durch ein Aluminium-Druckguss-Verfahren gefertigt sein.

Gemäß einem weiteren Ausführungsbeispiel weist der Stützring zwei Teilringe auf, die in axialer Richtung aneinander stossen. Auf diese Weise stützen sich die Gehäuseteile in axialer Richtung gegenseitig ab.

Zum leichterem Verbinden mit dem Getriebegehäuse können der erste Außenring, der zweite Außenring und der Stützring zueinander passende und zueinander ausgerichtete Schrauböffnungen aufweisen. Insbesondere können die Außenräder bzw. Außenringe und der Stützring mit dem Getriebegehäuse verbunden werden, indem Schrauben durch Schrauböffnungen eines Getriebedeckels und durch die zueinander passenden Schrauböffnungen des ersten Außenrings, des Stützrings und des zweiten Außenrings hindurchgeführt und in einem Gewinde eines Getriebegehäuses des Harmonischen Pinring-Getriebes festgeschraubt sind.

Gemäß einem weiteren Aspekt offenbart die vorliegende Beschreibung ein harmonisches Getriebe mit einem Zugmittel, und insbesondere ein harmonisches Pinring-Getriebe mit einem Pinring, das eine Freilaufeinrichtung aufweist.

Das Getriebe weist eine Eingangswelle zum Einleiten einer Antriebskraft eines Motors und eine Ausgangswelle zum Ausleiten einer Abtriebskraft auf. Weiterhin weist das Getriebe ein erstes Außenrad, ein Innenrad, das konzentrisch in Bezug auf das erste Außenrad in einer ersten axialen Ebene angeordnet ist, und ein zweites Außenrad auf, das in einer zweiten axialen Ebene angeordnet ist, sowie ein Zugmittel, das sich zwischen dem ersten Außenrad und dem Innenrad erstreckt.

Weiterhin weist das Getriebe einen umlaufenden Transmitter auf, der das Zugmittel von einem äußeren Umfang des Innenrads abhebt, gegen einen inneren Umfang des ersten Außenrads drückt und gegen einen inneren Umfang des zweiten Außenrads drückt.

Der Transmitter weist eine Antriebs-Hohlwelle und eine Kurvenscheibe auf, wobei die Kurvenscheibe und das Zugmittel in einer dritten axialen Ebene angeordnet ist, die sich zwischen der ersten axialen Ebene und der zweiten axialen Ebene befindet. Bei Verwendung eines Pinrings ist ein Pin-Haltering des Pinrings bzw. ein Bereich eines einstückigen Pinrings, der einem Pin-Haltering entspricht, in der dritten axialen Ebene angeordnet.

Weiterhin weist das Getriebe optional eine Abtriebs-Hohlwelle auf, die in dem Innenrad über einen Motor-Freilauf gelagert ist, und eine Tretwelle, die in der Abtriebs-Hohlwelle durch einen Tretwellen-Freilauf gelagert ist. Die Tretwelle ist in einem Getriebegehäuse des Getriebes aufgenommen. Die Tretwelle weist an einem äußeren Umfang einen Aufnahmebereich bzw. eine Schnittstelle für den Motor-Freilauf auf. An einem inneren Umfang, der dem äußeren Umfang gegenüberliegt, weist die Tretwelle einen Aufnahmebereich für den Tretwellen-Freilauf auf.

Insbesondere kann der Motor-Freilauf als Klemmrollen-Freilauf ausgebildet sein und der Tretwellen-Freilauf kann als Sperrklinken-Freilauf ausgebildet sein. Gemäß einem weiteren Ausführungsbeispiel sind sowohl der Motor-Freilauf als auch der Tretwellen-Freilauf als Klemmrollen-Freiläufe ausgebildet.

Die Abtriebswelle bzw. Abtriebs-Hohlwelle erstreckt sich in axialer Richtung abtriebsseitig von der Antriebs-Hohlwelle, wobei ein Kugellager zwischen der Abtriebs-Hohlwelle und der Tretwelle angeordnet ist, und wobei die Abtriebs-Hohlwelle einen Befestigungsbereich für ein Abtriebselement wie beispielsweise ein Zahnrad oder eine Riemenscheibe aufweist.

Weiterhin offenbart die vorliegende Beschreibung eine Freilaufanordnung mit einem äußeren Klemmrollen-Freilauf und einem inneren Sperrklinken-Freilauf.

Die Freilaufanordnung weist eine Antriebs-Hohlwelle, eine Abtriebs-Hohlwelle und eine Tretwelle auf. In dieser Anordnung sind die Tretwelle, die Abtriebs-Hohlwelle und die Antriebs-Hohlwelle konzentrisch zueinander angeordnet. Die Abtriebs-Hohlwelle ist radial innerhalb der Antriebs-Hohlwelle angeordnet und die Tretwelle ist radial innerhalb der Abtriebs-Hohlwelle angeordnet.

Weiterhin weist die Abtriebs-Hohlwelle an einem inneren Umfang einen treppenförmigen Sperrklinken-Eingriffsbereich auf und weist an einem äußeren Umfang, der radial gegenüberliegend zu einem inneren Umfang ist, einen treppenförmigen Klemmrollen-Abrollbereich auf.

Die Tretwelle weist einen sternförmigen Aufnahmebereich für Sperrklinken auf, wobei der sternförmige Aufnahmebereich gleichmäßig über den Umfang verteilte Sperrklinkensitze zur Aufnahme von Sperrklinken und benachbart zu den Sperrklinkensitzen angeordnete Federsitze zur Aufnahme von Federn aufweist.

In dieser Anordnung sind Stufen des treppenförmigen Sperrklinken-Eingriffsbereichs und Stufen des treppenförmigen Klemmrollen-Abrollbereichs, die auf der Tretwelle ausgeformt sind, so ausgerichtet, dass eine Antriebsrichtung des äußeren Klemmrollen-Freilaufs mit einer Antriebsrichtung des inneren Sperrklinken-Freilaufs übereinstimmt.

Der äußere Klemmrollen-Freilauf weist unter anderem die Antriebs-Hohlwelle und den treppenförmigen Klemmrollen-Abrollbereich der Abtriebs-Hohlwelle auf und der innere Sperrklinken-Freilauf weist unter anderem die Tretwelle und den treppenförmigen Sperrklinken-Eingriffsbereich auf.

In der vorliegenden Beschreibung bezieht sich "radial innerhalb" in Bezug auf eine Hohlwelle auf den inneren Umfang bzw. seine gedachte Verlängerung. Dabei braucht sich das Bauteil in axialer Richtung nicht vollständig innerhalb der Hohlwelle befinden.

Gemäß einer weiteren Ausführungsform befinden sich der treppenförmige Klemmkörper-Abrollbereich auf dem äußeren Umfang der Abtriebs-Hohlwelle und der treppenförmige Sperrklinken-Eingriffsbereich auf dem inneren Umfang der Abtriebs-Hohlwelle im Wesentlichen in der gleichen axialen Ebene. Dadurch kann ein Kippmoment auf die Abtriebs-Hohlwelle vermieden werden und es kann in axialer Richtung Platz eingespart werden.

Gemäß einem weiteren Ausführungsbeispiel weist die Antriebs-Hohlwelle der Freilaufanordnung einen scheibenförmigen Bereich mit einer Außenverzahnung auf, die an einem äußeren Umfang des scheibenförmigen Bereichs vorgesehen ist. Der scheibenförmige Bereich braucht nicht als Vollscheibe ausgebildet sein, sondern kann beispielsweise auch als Scheibe ausgebildet sein, die gelocht ist oder andere Unterbrechungen aufweist oder als ein Ring mit einer Verstrebung. Der scheibenförmige Bereich dient zur Aufnahme eines Abtriebsdrehmoments. Beispielsweise kann er als Innenrad eines harmonischen Pinring-Getriebes ausgestaltet sein.

Gemäß einem weiteren Ausführungsbeispiel weist die Abtriebshohlwelle an einem ersten Ende eine ringförmige Verdickung auf, und weist an einem dem ersten Ende gegenüberliegenden zweiten Ende einen Befestigungsbereich für ein Abtriebsmittel auf, insbesondere für einen Kettenblattadapter.

Gemäß einem weiteren Ausführungsbeispiel weist der äußere Umfang der Abtriebshohlwelle der Freilaufanordnung einen abgestuften Auflagebereich für ein Wälzlager auf. Entsprechend kann auch der innere Umfang der Abtriebshohlwelle einen abgestuften Auflagebereich für ein Wälzlager aufweisen.

Gemäß einer weiteren Ausführungsform weist die Abtriebshohlwelle an einem abtriebsseitigen Ende ein Innengewinde auf.

Gemäß einer weiteren Ausführungsform weist die Freilaufanordnung Sperrklinken auf, die in den Sperrklinkensitzen drehbar angeordnet sind und Federelemente, die in den Federsitzen angeordnet und mit den Sperrklinken in Kontakt sind.

Weiterhin weist die Freilaufanordnung einen Freilaufkäfig mit Stegen und zwischen den Stegen angeordneten Klemmrollen auf, wobei der Freilaufkäfig und die Klemmrollen radial zwischen dem Klemmrollen-Abrollbereich der Abtriebs-Hohlwelle und einem inneren Umfang der Antriebs-Hohlwelle angeordnet sind.

Gemäß einem weiteren Ausführungsbeispiel sind die Sperrklinkensitze zylinderförmig ausgeformt, an einem Ende durch eine Wandung abgeschlossen und sind an einem dazu gegenüberliegenden Ende offen.

Gemäß einem weiteren Ausführungsbeispiel weisen der treppenförmige Klemmkörper-Abrollbereich und der Freilaufkäfig jeweils mindestens zwei Aufnahmebereiche für Federelemente, wie beispielsweise Schraubfedern auf, wobei jeweils ein Federelement zwischen einem Aufnahmebereich des Klemmkörper-Abrollbereichs und einem Aufnahmebereich des Freilaufkäfigs angeordnet ist.

Weiterhin kann die Tretwelle eine Kraftsensor-Einheit aufweisen, wobei die Kraftsensor-Einheit eine Kraftmessdose aus Metall und ein antriebsseitiges Tretwellen-Kugellager aufweist und wobei die Kraftmessdose auf dem Tretwellen-Kugellager angeordnet ist.

Gemäß einem weiteren Ausführungsbeispiel weist die Kraftmessdose der Freilaufanordnung einen inneren ringförmigen Bereich auf, der über Befestigungslaschen an einem äußeren ringförmigen Bereich befestigt ist, wobei es sich insbesondere um vier im 45° Abstand angeordnete Befestigungslaschen handeln kann. Das Tretwellen-Kugellager ist in den inneren ringförmigen Bereich eingesetzt.

Gemäß einem weiteren Ausführungsbeispiel sind der innere Bereich und der äußere Bereich der Kraftmessdose radial zueinander versetzt, wobei die Befestigungslaschen durch radiale Schlitze seitlich begrenzt sind, und wobei mindestens zwei der Befestigungslaschen einen Dehnungssensor aufweisen. Die Befestigungslaschen sind zur Aufnahme radialer Kräfte geeignet und werden auch als Messlaschen bezeichnet.

Weiterhin kann eine axiale Dicke des äußeren Rings im Bereich der Befestigungslaschen reduziert sein, so dass die Befestigungslaschen gegenüber einem ringförmigen Befestigungsbereich, der zur Befestigung an einem Getriebegehäuse dient, zurückgesetzt sind.

Weiterhin offenbart die vorliegende Anmeldung eine Tretwelle für eine Freilaufanordnung, wobei die Tretwelle an einem ersten Ende einen ersten Befestigungsbereich für eine Tretkurbel und an einem dazu gegenüberliegenden zweiten Ende einen zweiten Befestigungsbereich für eine Tretkurbel aufweist. Weiterhin weist die Tretwelle in der Nähe des ersten Endes einen sternförmigen Aufnahmebereich für Sperrklinken auf.

Gemäß einem speziellen Ausführungsbeispiel weist der sternförmige Aufnahmebereich Stufen auf, wobei die Stufen jeweils eine erste Seitenfläche, eine zweite Seitenfläche, einen in einer vordefinierten Richtung gegenüber der Umfangsrichtung um etwa 45° geneigten Sperrklinken-Auflagebereich und einen Federsitz aufweisen. Weiterhin weisen die Stufen eine Oberseite auf, die im Wesentlichen zum Umfang der Welle parallel ist.

Zudem weisen den Stufen einen Endbereich mit einem Sperrklinkensitz auf, wobei der Sperrklinkensitz zumindest teilweise zylinderförmig ausgeformt, axial zu einer Seite hin offen und zu einer axial dazu gegenüberliegenden Seite abgeschlossen ist. Insbesondere kann es sich um sechs Stufen handeln.

In einem weiteren Aspekt offenbart die vorliegende Beschreibung ein harmonisches Getriebe, insbesondere ein harmonisches Pinring-Getriebe, mit einer Abtriebswelle, die integrierte Schnittstellen für Freiläufe aufweist.

Das harmonische Getriebe weist eine Eingangswelle und eine Ausgangswelle und weiterhin die folgenden Merkmale auf.

Ein erstes Außenrad und ein Innenrad, das konzentrisch in Bezug auf das erste Außenrad in einer ersten axialen Ebene angeordnet ist. Ein zweites Außenrad ist in einer zweiten axialen Ebene angeordnet. Weiterhin ist ein Zugmittel vorgesehen, das sich zwischen dem ersten Außenrad und dem Innenrad erstreckt, beispielsweise ein Pinring.

Ein umlaufender Transmitter ist mit der Eingangswelle verbunden. Im Betrieb hebt der Transmitter das Zugmittel von einem äußeren Umfang des Innenrads ab und drückt es gegen einen inneren Umfang des ersten Außenrads und gegen einen inneren Umfang des zweiten Außenrads.

Der Transmitter weist eine Antriebs-Hohlwelle und eine Kurvenscheibe auf, wobei die Kurvenscheibe und, falls das Zugmittel als ein Pinring ausgebildet ist, ein Pin-Haltering des Pinrings in einer dritten axialen Ebene angeordnet ist, die sich zwischen der ersten axialen Ebene und der zweiten axialen Ebene befindet.

Weiterhin weist das harmonische Getriebe eine Abtriebs-Hohlwelle auf, die in dem Innenrad über einen Motor-Freilauf gelagert ist, und eine Tretwelle, die in der Abtriebs-Hohlwelle durch einen Tretwellen-Freilauf gelagert ist. Die Tretwelle ist in einem Getriebegehäuse des harmonischen Getriebes aufgenommen. Ferner weist die Tretwelle an einem äußeren Umfang einen Aufnahmebereich bzw. eine Schnittstelle für den Motor-Freilauf und an einem dem äußeren Umfang radial gegenüberliegenden inneren Umfang einen Aufnahmebereich für den Tretwellen-Freilauf auf.

Gemäß einem Ausführungsbeispiel ist der Motor-Freilauf als Klemmrollen-Freilauf ausgebildet und der Tretwellen-Freilauf ist als Sperrklinken-Freilauf ausgebildet.

Die Abtriebswelle erstreckt sich in axialer Richtung abtriebsseitig von der Antriebs-Hohlwelle, wobei ein Kugellager zwischen der Abtriebs-Hohlwelle und der Tretwelle angeordnet ist, und wobei die Abtriebs-Hohlwelle einen Befestigungsbereich für ein Abtriebselement, insbesondere eine Abtriebselement wie beispielsweise ein Zahnrad oder eine Riemenscheibe zur Verbindung mit einem Zugmittel aufweist.

Gemäß einem weiteren Aspekt offenbart die vorliegende Beschreibung ein harmonisches Pinring-Getriebe mit einer Eingangswelle und einer Ausgangswelle, wobei das Getriebe die folgenden Bestandteile aufweist.

In dem Getriebe sind ein erstes Außenrad und ein Innenrad vorgesehen, wobei das Innenrad konzentrisch in Bezug auf das erste Außenrad in einer ersten axialen Ebene angeordnet ist. Ein zweites Außenrad ist in einer zweiten axialen Ebene angeordnet. Ein Pinring mit Pins erstreckt sich zwischen dem ersten Außenrad und dem Innenrad.

Ein umlaufender Transmitter ist im Bereich des Innenrads und der Außenräder angeordnet. Im Betrieb hebt der umlaufende Transmitter die Pins des Pinrings von einem äußeren Umfang des Innenrads ab und drückt die Pins gegen einen inneren Umfang des ersten Außenrads und gegen einen inneren Umfang des zweiten Außenrads.

Der Transmitter weist eine Antriebs-Hohlwelle und eine Kurvenscheibe auf, wobei die Kurvenscheibe und ein mittlerer Bereich des Pinrings in einer dritten axialen Ebene angeordnet ist, die sich zwischen der ersten axialen Ebene und der zweiten axialen Ebene befindet.

Der Pinring ist aus einem Stück ausgebildet. Insbesondere kann der Pinring aus Metall bestehen. Die Pins des Pinrings werden durch Fortsätze gebildet werden, die von zwei axial gegenüberliegenden Seiten eines mittleren Bereichs des Pinrings hervorstehen, wobei der mittlere Bereich eine glatte, zylinderförmige innere Auflagefläche zur Auflage auf einem Lager und eine glatte, zylinderförmige äußere Fläche aufweist.

Gemäß einem weiteren Ausführungsbeispiel sind die Fortsätze an einer ersten Seite der zwei gegenüberliegen Seiten zylinderförmig ausgebildet und die Fortsätze sind an einer zweiten der zwei gegenüberliegenden Seiten teilweise zylinderförmig ausgebildet, wobei ein zylinderförmig ausgebildeter Bereich sich in radialer Richtung an der Außenseite des Pinrings befindet.

Gemäß einem weiteren Ausführungsbeispiel weisen die Fortsätze an einer ersten Seite der zwei gegenüberliegen Seiten in radialer Richtung an der Innenseite des Pinrings einen inneren abgerundeten Eingriffsbereich und in radialer Richtung an der Außenseite des Pinrings einen äußeren abgerundeten Eingriffsbereich auf. Weiterhin weisen die Fortsätze an einer zweiten der zwei gegenüberliegenden Seiten einen äußeren abgerundeten Eingriffsbereich auf.

Gemäß einem weiteren Ausführungsbeispiel ist ein Lager wie beispielsweise ein Wälz- oder Kugellager oder ein flexibles Wälz- oder Kugellager zwischen der Kurvenscheibe und dem Pinring angeordnet ist, und wobei der Pinring an einer Innenseite einen Absatz zur Abstützung des Lagers aufweist.

Gemäß einem weiteren Aspekt offenbart die vorliegende Beschreibung einen einstückigen Pinring für ein harmonisches Pinring Getriebe, der aus einem Stück ausgebildet ist und aus Metall besteht. Der Pinring weist Pins auf, die durch Fortsätze gebildet werden, die von zwei axial gegenüberliegenden Seiten eines mittleren Bereichs des Pinrings hervorstehen.

Dabei weist der mittlere Bereich eine glatte, zylinderförmige innere Auflagefläche zur Auflage auf einem Lager und eine glatte, zylinderförmige äußere Auflagefläche zur Auflage an einem Stützzylinder auf.

Gemäß einem weiteren Ausführungsbeispiel sind die Fortsätze an einer ersten Seite der zwei gegenüberliegen Seiten zylinderförmig ausgebildet und die Fortsätze sind an einer zweiten der zwei gegenüberliegenden Seiten teilweise zylinderförmig ausgebildet. Ein zylinderförmig ausgebildeter Bereich befindet sich in radialer Richtung an der Außenseite des Pinrings.

Gemäß einem weiteren Ausführungsbeispiel weisen die Fortsätze an einer ersten Seite der zwei gegenüberliegen Seiten in radialer Richtung an der Innenseite des Pinrings einen inneren abgerundeten Eingriffsbereich und in radialer Richtung an der Außenseite des Pinrings einen äußeren abgerundeten Eingriffsbereich auf. Weiterhin weisen die Fortsätze an einer zweiten der zwei gegenüberliegenden Seiten einen äußeren abgerundeten Eingriffsbereich auf.

Gemäß einem weiteren Ausführungsbeispiel befindet sich zwischen den Fortsätzen an der ersten der gegenüberliegenden zwei Seiten jeweils ein tangential angeordneter Steg, wobei eine äußere Begrenzungslinie eines Querschnitts der Fortsätze glatt in eine äußere Begrenzungslinie des Stegs übergeht. Hierin kann "glatt" so aufgefasst werden, dass es sich auf eine stetige erste Ableitung bezieht, wenn über die Oberflächenrauigkeit gemittelt wird.

Gemäß einem weiteren Ausführungsbeispiel ist ein Lager wie beispielsweise ein Wälz- oder Kugellager, oder ein flexibles Wälz- oder Kugellager zwischen der Kurvenscheibe und dem Pinring angeordnet ist. Dabei weist der Pinring an einer Innenseite einen Absatz zur Abstützung des Lagers auf.

Gemäß einem weiteren Aspekt offenbart die vorliegende Beschreibung ein harmonisches Getriebe mit einer angestellten Lagerung.

Das Getriebe weist ein erstes Außenrad und ein Innenrad auf, das konzentrisch in Bezug auf das erste Außenrad in einer ersten axialen Ebene angeordnet ist, sowie ein zweites Außenrad, das in einer zweiten axialen Ebene angeordnet ist.

Ein Zugmittel erstreckt sich zwischen dem ersten Außenrad und dem Innenrad. Weiterhin ist ein umlaufender Transmitter vorgesehen, der das Zugmittel von einem äußeren Umfang des Innenrads abhebt und gegen einen inneren Umfang des ersten Außenrads und gegen einen inneren Umfang des zweiten Außenrads drückt.

Der Transmitter weist eine Antriebs-Hohlwelle und eine Kurvenscheibe auf, wobei die Kurvenscheibe und ein Pin-Haltering des Pinrings in einer dritten axialen Ebene angeordnet ist, die sich zwischen der ersten axialen Ebene und der zweiten axialen Ebene befindet.

Eine Tretwelle ist radial innerhalb der Abtriebswelle angeordnet, wobei die Tretwelle über ein antriebsseitiges Tretwellen-Kugellager und eine aus Metall bzw. einer Metalllegierung bestehende Kraftmessdose in dem Motorgehäuse gelagert ist.

Gemäß einem weiteren Ausführungsbeispiel weist die Kraftmessdose einen inneren ringförmigen Bereich auf, der über Befestigungslaschen an einem äußeren ringförmigen Bereich befestigt ist, wobei das Tretwellen-Kugellager in den inneren ringförmigen Bereich eingesetzt ist. Insbesondere können dies vier im 45 Grad Abstand zueinander angeordnete Befestigungslaschen sein. Die Befestigungslaschen werden auch als Messlaschen bezeichnet.

Der äußere ringförmige Bereich ist in einen zylindrischen Bereich des Motorgehäuses eingesetzt. Der innere Bereich und der äußere Bereich sind radial gegeneinander versetzt. Ferner sind die Befestigungslaschen durch radiale Schlitze seitlich begrenzt und eine Materialausnehmung radial außerhalb oder Messlaschen vorgesehen. Dadurch wird unter anderem die Dicke der Messlaschen reduziert, wodurch eine Verformbarkeit der Messlaschen erleichtert wird.

Auf einer Oberfläche von mindestens zwei der Messlaschen können jeweils Dehnungssensoren wie beispielsweise Dehnungsmessstreifen auf mindestens zwei der Messlaschen aufgebracht sein.

Weiterhin kann eine Wellenfeder zwischen der Kraftmessdose und dem antriebsseitigen Rotor-Kugellager angeordnet sein, die unter anderem dem Ausgleich von Toleranzen dienen kann.

Gemäß einem weiteren Aspekt offenbart die vorliegende Beschreibung ein harmonisches Pinring-Getriebe mit einem Kurbelgetriebe, das als Planetengetriebe ausgebildet ist. Das harmonische Pinring-Getriebe weist eine Eingangswelle und eine Ausgangswelle auf, die auch als Antriebswelle und Abtriebswelle bezeichnet werden.

Weiterhin weist das Getriebe ein erstes Außenrad und ein Innenrad auf, das konzentrisch in Bezug auf das erste Außenrad in einer ersten axialen Ebene angeordnet ist, sowie ein zweites Außenrad, das in einer zweiten axialen Ebene angeordnet ist.

Ein Zugmittel erstreckt sich zwischen dem ersten Außenrad und dem Innenrad. Ein umlaufender Transmitter ist dazu vorgesehen, das Zugmittel von einem äußeren Umfang des Innenrads abzuheben und gegen einen inneren Umfang des ersten Außenrads anzudrücken. Der Transmitter weist eine Antriebs-Hohlwelle und eine Kurvenscheibe auf, wobei die Kurvenscheibe in einer dritten axialen Ebene angeordnet ist, die sich zwischen der ersten axialen Ebene und der zweiten axialen Ebene befindet.

Weiterhin ist eine Tretwelle radial innerhalb der Ausgangswelle angeordnet, und ein Planetengetriebe und ein Tretwellen-Freilauf sind im Kraftfluss zwischen der Tretwelle und der Ausgangswelle angeordnet.

Gemäß einer Ausführungsform ist ein Planetenträger des Planetengetriebes mit der Tretwelle verbunden, ein Hohlrad des Planetengetriebes weist einen Verbindungsbereich zum Verbindung mit einem Getriebegehäuse auf und ein Sonnenrad des Planetengetriebes ist auf der Tretwelle gelagert. Der Tretwellen-Freilauf ist zwischen einer mit dem Sonnenrad verbundenen Hohlwelle des Planetengetriebes und der Ausgangswelle angeordnet.

Gemäß einer anderen Ausführungsform ist der Tretwellen-Freilauf zwischen der Kurbelwelle und einem Planetenträger des Planetengetriebes angeordnet, wobei ein Hohlrad des Planetengetriebes in dem harmonischen Getriebe drehbar gelagert ist und wobei ein Sonnenrad des Planetengetriebes zur Befestigung an einem stationären Gehäuseteil des harmonischen Getriebes ausgebildet ist.

Weiterhin offenbart die vorliegende Beschreibung ein Spannwellengetriebe, wobei die Verzahnungsgeometrie insbesondere so ausgelegt sein kann, dass eine vollständiger Zahneingriff zwischen Innen- und Außenverzahnung vorliegt. Dies ist sogar dann der Fall, wenn der Transmitter anstatt einer ovalen Kurvenscheibe eine Exzenterscheibe aufweist.

Das Spannwellengetriebe hat im wesentlichen zwei Bauformen, nämlich: erstens eine Bauform mit abgetriebener topfförmiger Spannwelle, die einen Befestigungsbereich für eine Abtriebswelle aufweist und zweitens eine Bauform mit beweglichem zweitem Außenrad und zylinderförmiger Spannwelle.

Das Spannwellen-Getriebe weist ein Außenrad mit einer Innenverzahnung, wobei das Außenrad einen Befestigungsbereich zur Befestigung an einem Getriebegehäuse aufweist, sowie eine Spannwelle mit einer Außenverzahnung, wobei die Spannwelle konzentrisch in Bezug auf das Außenrad in einer axialen Ebene angeordnet ist.

Ein umlaufender Transmitter ist so gestaltet, dass er geeignet ist zur Befestigung an einer rotierenden Eingangswelle, und so, dass er geeignet ist im Betrieb die Spannwelle gegen die Innenverzahnung des Außenrads zu drücken. Zu diesem Zweck ist der Transmitter innerhalb der Spannwelle angeordnet und ein äußerer Umfang des Transmitters ist zum Andrücken der Spannwelle geeignet.

Der Transmitter weist eine Antriebs-Hohlwelle und eine Kurvenscheibe auf, die vorzugsweise als einen exzentrisch zur Mittelachse des Außenrads angeordneten kreisförmigen oder einen zentriert zur Mittellachse des Außenrads angeordneten ovalen oder elliptischen Umfang aufweist, wobei auf dem Umfang der Kurvenscheibe ein Kugellager angeordnet ist, das im Fall des ovalen oder elliptischen Umfangs vorzugsweise ein flexibles Kugellager ist. Die weiter unten angegebene Verzahnung des Außenrads ist jedoch insbesondere für einen ovalen Transmitter geeignet und bewirkt in diesem Fall einen besonders guten Zahneingriff.

Ein Querschnitt der Zahnköpfe der Außenverzahnung der Spannwelle entspricht im Wesentlichen einem Kreisausschnitt entspricht. Somit entspricht der Querschnitt der Zahnköpfe einem Querschnitt eines Teilbereichs von zylinderförmigen Pins und vorzugsweise im Wesentlichen einem Halbkreis.

Die Innenverzahnung des Außenrads ist in Bezug auf eine Mittelachse des Außenrads im Wesentlichen durch eine äußere Äquidistante zu der durch die Formeln $x(t) = r1*cost(t) + r2*cos((n+1)*t) + r3*cos((n+3)*t)$ und $y(t) = r1*sin(t)-r2*sin((n+1)*t) + r3*sin((n+3)*t)$ festgelegten Radkurve bestimmt ist, wobei n+1 die Anzahl der Zähne der Innenverzahnung des Außenrads ist, wobei die Radien r1, r2 und r3 größer Null sind, und wobei für das Größenverhältnis der Radien r2 > r3 und r1 > r2 + r3 gilt. Weitere Bedingungen für die Parameter n und t und für die Radien sind weiter unten in der Beschreibung im Zusammenhang mit dieser Verzahnung angegeben.

Die Koordinate x und y beziehen sich auf ein senkrecht zur Mittelachse des Außenrads angeordnetes rechtwinkliges Koordinatensystem mit Ursprung in der Mittelachse des Außenrads bzw. des Getriebes.

Insbesondere kann die Spannwelle in einer Topfform ausgebildet sein, wobei am Grund der Topfform ein Befestigungsbereich zum Befestigen einer Abtriebswelle ausgebildet ist. Dies kann auch dergestalt erfolgen, dass die Spannwelle einstückig mit der Abtriebswelle ausgebildet ist.

Weiterhin kann am Grund der Topfform eine zentrale kreisförmige Öffnung ausgebildet sein, wobei der Befestigungsbereich der Spannwelle Befestigungslöcher aufweist, die um die zentrale kreisförmige Öffnung herum angeordnet sind. Diese Ausführungsform kann insbesondere für einen Getriebemotor vorteilhaft sein.

Gemäß einer alternativen Ausführungsform hat die Spannwelle die Form eines Kreiszylinders, wobei das Getriebe ein zweites drehbar angeordnetes Außenrad aufweist, das einen Befestigungsbereich zum Befestigen einer Abtriebswelle aufweist, wobei die Innenverzahnung des Außenrads durch die gleiche Konstruktion bzw. Formel bestimmt ist wie die Innenverzahnung des ersten Außenrads.

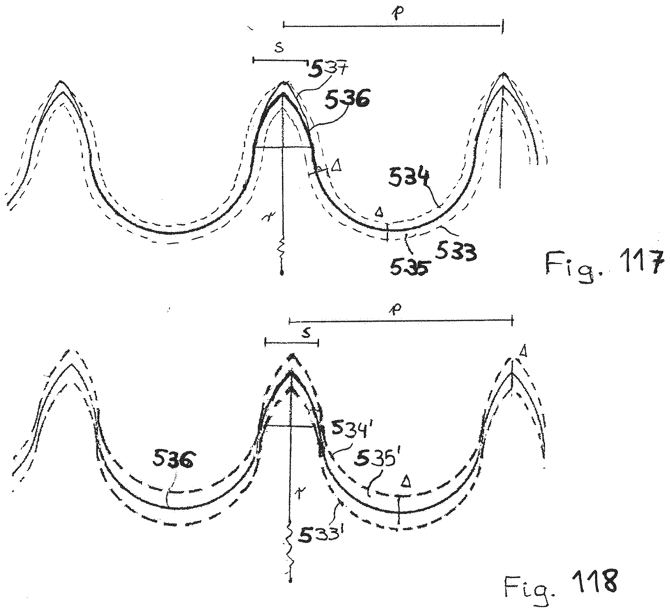

Der Ausdruck "Im Wesentlichen" insbesondere in Bezug auf eine Verzahnung kann sich z.B. auf max 5% oder 10% Abweichung in Bezug auf die in der Beschreibung unter Bezug auf Fig. 117, 118 genannten Abstandsmasse beziehen.

Alternativ kann die Form der Außenradverzahnung auch durch explizite Angabe der Epizykelkonstruktion angegeben werden, wonach die Zahnoberfläche der Innenverzahnung des Außenrads durch einen radialen Abstand von einer Mittelachse des Innenrads in Abhängigkeit von einem Zykelwinkel bestimmt ist. Dabei ist der radiale Abstand von der Mittelachse seinerseits durch eine innere Äquidistante zu einer Radkurve bestimmt ist, wobei ein Ort auf der Radkurve jeweils durch die Vektorsumme eines Zykelvektors, eines ersten Epizykelvektors und eines zweiten Epizykelvektors bestimmt ist.

Ferner liegt ein Anfangspunkt des Zykelvektors auf der Mittelachse, ein Anfangspunkt des ersten Epizykelvektors im Endpunkt des Zykelvektors und ein Anfangspunkt des zweiten Epizykelvektors im Endpunkt des ersten Epizykelvektors.

Weiterhin ist ein Epizykelwinkel des ersten Epizykelvektors n + 1 mal so groß ist wie der Zykelwinkel und ein Epizykelwinkel des zweiten Epizykelvektors n + 3 mal so groß ist wie der Zykelwinkel, wobei n eine Anzahl von Pins des harmonischen Pinring-Getriebes ist, die mindestens vier ist.

Weiterhin ist eine Länge des Zykelvektors größer als die Summe der Längen des ersten Epizykelvektors und des zweiten Epizykelvektors, und eine Länge des ersten Epizykelvektors größer ist als eine Länge des zweiten Epizykelvektors.

Weiterhin offenbart die vorliegende Beschreibung zweistufiges Untersetzungsgetriebe, das ein am Getriebegehäuse stationär befestigtes Außenrad mit einer ersten Innenverzahnung aufweist, wobei das Außenrad einen Befestigungsbereich zur Befestigung an einem Getriebegehäuse aufweist.

Ein am Getriebegehäuse drehbar gelagertes Außenrad ist mit einer zweiten Innenverzahnung versehen, wobei das Außenrad einen Befestigungsbereich zur Befestigung an einer Abtriebswelle aufweist.

Ein zweigeteilter bzw. zwei-abschnittiger, aber dennoch einstückiger Pinring ist konzentrisch zu den Außenrädern angeordnet, wobei der zweigeteilte einstückige Pinring eine erste Außenverzahnung und eine zweite Außenverzahnung aufweist. Die erste Außenverzahnung des zweigeteilten einstückigen Pinrings greift in die Innenverzahnung des stationären Außenrads. Die zweite Außenverzahnung des zweigeteilten einstückigen Pinrings greift in die Innenverzahnung des drehbaren Außenrads ein.

Ein umlaufender Transmitter, ist dazu ausgebildet den zweigeteilten einstückigen Pinring gegen die Innenverzahnung des stationären Außenrads und gegen die Innenverzahnung des drehbaren Außenrads zu drücken. Auf einem Umfang des umlaufenden Transmitters ist ein Kugellager angeordnet.

Insbesondere kann zur Erzielung einer hohen Untersetzung die Anzahl der Zähne der Innenverzahnung des stationären Außenrads größer sein als die Anzahl der Zähne der ersten Außenverzahnung, und die Anzahl der Zähne der Innenverzahnung des drehbaren Außenrads größer sein als die Anzahl der Zähne der zweiten Außenverzahnung, wobei ferner die Anzahl der Zähne des stationären Außenrads größer ist als die Anzahl der Zähne des drehbaren Außenrads und die Anzahl der Zähne der ersten Außenverzahnung größer ist als die Anzahl der Zähne der zweiten Außenverzahnung.

Weiterhin kann der Transmitter einen exzentrisch zur Achse des stationären Außenrads angeordneten Kreisring aufweisen. Das exzentrische Getriebe bietet eine besondere einfache und robuste Bauform, bei dem kein verformbares Lager erforderlich ist.

Insbesondere kann ein Querschnitt der Zahnköpfe der ersten Außenverzahnung und ein Querschnitt der Zahnköpfe der zweiten Außenverzahnung im Wesentlichen einem Kreisausschnitt entsprechen, vorzugsweise einem Halbkreis. Somit entspricht die Verzahnungsgeometrie zylindrischen Pins, was insbesondere beim Exzentergetriebe günstig ist.

Weiterhin kann ein Querschnitt der Zahnköpfe der ersten Außenverzahnung und ein Querschnitt der Zahnköpfe der zweiten Außenverzahnung im Wesentlichen einer inneren Äquidistante, insbesondere im Abstand eines Pin-Radius durch die Formel x(t) = r1*cos(t)+r2*cos(nt) und y(t)=r1*sin(t)+r2*sin(nt) bestimmten Radkurve entsprechen, wobei für die Radien r1, r2 gilt: r1 > 0, r2 > 0 und r1 > r2. Insbesondere kann die Verzahnung entlang des gesamten Umfangs dieser Form entsprechen, und nicht nur im Bereich der Zahnköpfe.

Entsprechendes gilt auch für die Verzahnung des Pinrings. So kann ein Querschnitt der Zahnköpfe der ersten Außenverzahnung und ein Querschnitt der Zahnköpfe der zweiten Außenverzahnung im Wesentlichen einer äußeren Äquidistante, insbesondere im Abstand eines Pin-Radius, zu der durch die Formel x(t) = r1*cos(t) +r2*cos(nt) und y(t)=r1*sin(t)-r2*sin(nt) bestimmten Radkurve entsprechen, wobei für die Radien r1, r2 gilt: r1 > 0, r2 > 0 und r1 > r2, und wobei die r1, r2 und n dieselben Werte haben wie für die Außenradverzahnung. Insbesondere kann diese Verzahnungsform für die Verzahnung entlang des gesamten Umfangs gelten, und nicht nur im Bereich der Zahnköpfe.

Weiterhin offenbart die vorliegende Beschreibung eine Kraftmessdose zur Bestimmung einer radialen Kraft auf eine Kurbelwelle mit einer Aufnahmehülse zur Aufnahme eines Rings eines Lagers, einem Befestigungsring zur Befestigung der Kraftmessdose in einem Getriebegehäuse, und Axialstützbereichen, die an dem Befestigungsring zur axialen Abstützung des Rings des Lagers vorgesehen sind.

Weiterhin sind Messbereiche zur Aufnahme von radialen Kräften der Aufnahmehülse vorgesehen, die die Aufnahmehülse mit dem Befestigungsring verbinden, wobei an mindestens zwei der Messbereiche Dehnungssensoren befestigt sind.

Weiterhin offenbart die vorliegende Beschreibung eine Freilaufanordnung mit einem äußeren Getriebe-Freilauf und einem inneren Tretwellen-Freilauf. Die Freilauf-Anordnung weist eine Antriebs-Hohlwelle, eine Abtriebs-Hohlwelle, und eine Tretwelle auf. Die Tretwelle, die Abtriebs-Hohlwelle und die Antriebs-Hohlwelle sind konzentrisch zueinander angeordnet.

Weiterhin ist die Abtriebs-Hohlwelle radial innerhalb der Antriebs-Hohlwelle angeordnet, und die Tretwelle ist radial innerhalb der Abtriebs-Hohlwelle angeordnet ist, wobei der Tretwellen-Freilauf zwischen der Tretwelle und der Abtriebs-Hohlwelle angeordnet ist. Der ist Getriebe-Freilauf gegenüber dem Tretwell-Freilauf auf der Abtriebs-Hohlwelle angeordnet ist. Die Abtriebs-Hohlwelle weist an einer Innenseite und an einer Außenseite im Bereich des jeweiligen Freilaufs angepasste Bereiche auf.

Somit kann der doppelte Freilauf auf platzsparende Weise im Bereich der Tretwelle in den Antrieb integriert werden ohne dass ein gesonderter Außenring bzw. Innenring erforderlich ist. Dabei kann der äußere Freilauf insbesondere ein Klemmrollen Freilauf und der innere Freilauf insbesondere Klinkenfreilauf sein. Es können aber auch beide Freiläufe Klemmrollenfreiläufe sein. Weitere Kombinationen sind ebenfalls möglich.

Weiterhin offenbart die vorliegende Beschreibung einen einstückigen Pinring, der vorzugsweise in Verbindung mit einem Exzentergetriebe eingesetzt wird.

Gemäß einer ersten Ausführungsform ist der einstückige Pinring aus Metall gefertigt, wobei ein Pin-Haltering und eine Anordnung aus Pins, die in axialer Richtung an zwei gegenüberliegenden Seiten von dem Pin-Haltering hervorstehen, aus einem Stück gefertigt ist.

Dabei können insbesondere die Pins in Umfangsrichtung miteinander verbunden sein, was zusätzliche Stabilität bietet und eine effizientere Fertigung ermöglichen kann.

Weiterhin können die Pins an einer ersten der beiden gegenüberliegenden Seiten als halbe Pins ausgebildet sein, die zum Eingriff eine Innenverzahnung geeignet sind, und die Pins and einer zweiten der gegenüberliegenden Seite können als ganze Pins ausgebildet sind, die zum Eingriff in eine Innverzahnung und zum Eingriff in eine der Innenverzahnung gegenüberliegende Außenverzahnung geeignet sind. Somit kann Gewicht und Material gespart werden.

In einer weiteren Ausführungsform weist der einstückige Pin-Haltering auf einer Innenseite einen glatten inneren Umfang auf und auf einer Außenseite abgerundete Ausbuchtungen auf, die aus einem Stück mit dem Pin-Haltering gefertigt sind. Diese Ausführungsform ist beispielsweise für ein zweistufiges Untersetzungsgetriebe mit Exzenter geeignet.

Weiterhin kann zumindest ein Kopfbereich der abgerundeten Ausbuchtungen einen halbkreisförmigen Querschnitt aufweist. Somit können dieselben Verzahnungen eingesetzt werden, die auch für einen Pinring mit zylindrischen Pins geeignet sind.

Weiterhin offenbart die vorliegende Beschreibung eine Stützring-Anordnung für ein Untersetzungsgetriebe mit einem ersten Außenrad und einem zweiten Außenrad, das einen Stützring, ein erstes Außenrad mit einer ersten Innenverzahnung und ein zweites Außenrad mit einer zweiten Innenverzahnung aufweist, wobei das erste Außenrad und das zweite Außenrad an gegenüberliegenden Seiten in den Stützring eingesetzt sind, und wobei der Stützring einen Befestigungsbereich, beispielsweise axiale Bohrungen, zur Befestigung an einem Getriebegehäuse aufweist.

Insbesondere können das erste Außenrad und das zweite Außenrad aus Plastik gefertigt sein. Weiterhin kann das erste Außenrad und das zweite Außenrad jeweils über eine Zapfen-Nut Verbindung mit dem Stützrad verbunden sein, so dass sie sich einfach montieren lassen.

Desweiteren offenbart die vorliegende Beschreibung ein einstückiges Rotor-Transmitter Element für ein Untersetzungsgetriebe, das eine Hohlwelle aufweist, die an einer ersten Seite einen Befestigungsbereich zum Befestigen eines Rotor-Paketes aufweist, und an einer zu der ersten Seite gegenüberliegenden zweiten Seite eine Kurvenscheibe aufweist, wobei eine äußerer Umfang der Kurvenscheibe als Aufnahmebereich für ein Kugellager ausgebildet ist.

Insbesondere kann das einstückige Rotor-Transmitter-Element aus Aluminium gefertigt sein. Außerdem kann die Hohlwelle des einstückigen Rotor-Transmitter Element so dimensioniert sein, dass eine Tretwelle durch die Hohlwelle hindurchgeführt werden kann.

In einer weiteren Ausführungsform weist die Kurvenscheibe einen zur Mittelachse der Hohlwelle exzentrisch angeordnete kreisförmigen Umfang auf. In einer dazu alternativen Ausführungsform weist die Kurvenscheibe einen zur Mittelachse der Hohlwelle einen ovalen Umfang auf.

Weiterhin offenbart die vorliegende Beschreibung Kurbelgetriebe, die eine Übersetzung ins Schnelle bieten. Gemäß einer ersten Ausführungsform weist das Kurbelgetriebe eine Antriebswelle, insbesondere eine Kurbel- oder Tretwelle mit einem auf der Antriebswelle angeordneten Planetengetriebe auf, wobei ein Planetenträger des Planetengetriebes fest mit der Antriebswelle verbunden ist, ein Hohlrad des Planetengetriebes einen Befestigungsbereich zum Befestigen an einem Getriebegehäuse und einen Aufnahmebereich für einen Drehmomentsensor aufweist, und ein Sonnenrad des Planetengetriebes als Hohlrad ausgebildet ist, dass konzentrisch zu der Antriebswelle angeordnet ist, und wobei das Sonnenrad mit einer Abtriebs-Hohlwelle des Planetengetriebes verbunden ist, die drehbar auf der Antriebswelle gelagert ist.

Gemäß einer zweiten Ausführungsform weist das Kurbelgetriebe eine Antriebswelle, insbesondere eine Kurbel- oder Tretwelle, mit einem auf der Antriebswelle angeordneten Planetengetriebe auf, wobei ein Planetenträger des Planetengetriebes über einen Freilauf auf der Antriebswelle gelagert ist, ein Sonnenrad des Planetengetriebes einen Befestigungsbereich zum Befestigen an einem Getriebegehäuse und einen Aufnahmebereich für einen Drehmomentsensor aufweist, und ein Hohlrad des Planetengetriebes einen Aufnahmebereich für ein Kugellager zum Abstützen an einem Getriebegehäuse aufweist.

Gemäß einer dritten Ausführungsform weist das Kurbelgetriebe eine Antriebswelle, insbesondere eine Kurbel- oder Tretwelle, mit einem auf der Antriebswelle angeordneten Planetengetriebe auf, wobei ein Planetenträger des Planetengetriebes einen Befestigungsbereich zum Befestigen an einem Getriebegehäuse aufweist, wobei eine Hohlwelle des Planetengetriebes fest mit der Antriebswelle verbunden ist, und wobei ein Sonnenrad des Planetengetriebes als eine Hohlwelle ausgebildet ist, die konzentrisch zur Antriebswelle drehbar auf der Antriebswelle angeordnet ist.

Weiterhin offenbart die vorliegende Beschreibung ein Zykloid-Getriebe, wobei das Zykloid-Getriebe, das die folgenden Bestandteile aufweist: Ein Getriebegehäuse, ein Außenrad mit einer Innenverzahnung, das an dem Getriebegehäuse befestigt ist, und eine konzentrisch zu dem Außenrad angeordnete Eingangswelle, wobei die Eingangswelle eine antriebsseitige Exzenterscheibe aufweist, auf der ein erstes Kugellager angeordnet ist und eine abtriebsseitige Exzenterscheibe, auf der ein zweites Kugellager angeordnet ist.

Ein antriebsseitiges Innenrad mit einer Außenverzahnung ist auf dem ersten Kugellager gelagert ist und ein abtriebsseitiges Innenrad mit einer Außenverzahnung ist auf dem zweiten Kugellager gelagert. Das antriebsseitige Innenrad und das abtriebsseitige Innenrad sind innerhalb des Außenrads angeordnet und die Außenverzahnungen des antriebseitigen Innenrads und des abtriebsseitigen Außenrads greifen jeweils in die Innenverzahnung des Außenrads ein.

Insbesondere kann das Zykloidgetriebe eine Kurbellwelle aufweisen, die innerhalb der Eingangswelle gelagert ist, und die zuvor beschriebene Kraftmessdose, die antriebsseitig auf der Kurbelwelle gelagert ist.

Weiterhin kann die Eingangswelle als ein weiter oben beschriebenes einstückiges Rotor-Transmitterelement ausgebildet sein.

Gemäß einer weiteren Ausführungsform weist das Zykloidgetriebe eine Kurbelwelle auf, die innerhalb der Eingangswelle gelagert ist, und wobei die Kurbelwelle eines der oben beschriebenen Planetengetriebe aufweist, wobei die Kurbelwelle die Antriebswelle des Planetengetriebes bildet.

Gemäß einer weiteren Ausführungsform ist auf der Eingangswelle abtriebsseitig von der abtriebsseitigen Exzenterscheibe ein drittes Kugellager angeordnet, wobei auf dem dritten Kugellager eine Abtriebsscheibe angeordnet ist, wobei die Abtriebsscheibe Mitnehmerbolzen aufweist, die in axial hintereinander angeordnete Öffnungen des antriebsseitigen Innenrads und des abtriebseitigen Innenrads eingreifen, wobei radial innen an der Abtriebsscheibe eine Ausgangswelle ausgeformt ist.

Dabei kann radial innen an der Abtriebsscheibe eine Ausgangswelle ausgeformt ist, wobei das dritte Kugellager auf einer inneren Schulter der Ausgangswelle angeordnet ist. Weiterhin ist ein Innenrad-Kugellager diagonal gegenüberliegend bezogen auf die Mittelpunkte der Lager in axialer Richtung zu dem dritten Kugellager auf einer äußeren Schulter der Ausgangswelle angeordnet, wobei das Innenrad-Kugellager an einem Gehäusedeckel des Getriebegehäuses abgestützt ist.

Gemäß einer weiteren alternativen Ausführungsform weist zumindest eines der Innenräder eine erste Verzahnung und eine zweite Außenverzahnung auf. Das Zykoid-Getriebe weist weiterhin ein drehbares Außenrad mit einer Innenverzahnung auf, wobei die zweite Außenverzahnung in die Innenverzahnung des drehbaren Außenrads eingreift, und wobei das drehbare Außenrad einen Befestigungsbereich zur Befestigung einer Abtriebswelle aufweist. Somit kann eine zweistufige Untersetzung bereitgestellt werden.

Des Weiter kann die Innenverzahnung durch durch eine innere Oberfläche des Außenrads gebildet sein oder aber durch eine Anordnung von stationären Pins gebildet auf denen Rollen angeordnet sind.

Der Gegenstand der Beschreibung wird im Folgenden unter Bezug auf die untenstehenden Figuren näher erläutert.

Hierbei zeigt

Figur 1      eine Querschnittsansicht eines harmonischen Pinring-Getriebes,
Figur 2      einen antriebsseitigen Teil einer Explosionsansicht des Getriebes von Fig. 1,
Figur 3      einen abtriebsseitigen Teil einer Explosionsansicht des Getriebes von Fig. 1,
Figur 4      eine Explosionsansicht eines inneren Bereichs des Getriebes von Fig. 1,
Figur 5      eine perspektivische Ansicht einer Getriebe-Baugruppe des Getriebes von Fig. 1,
Figur 6      eine Tretlager-Baugruppe des Getriebes von Fig. 1,
Figur 7      eine Querschnittsansicht einer in Fig. 6 gezeigten Tretlager-Baugruppe,
Figur 8      eine antriebsseitige perspektivische Ansicht des Getriebes von Fig. 1 im zusammengebauten Zustand,
Figur 9      eine abtriebsseitige perspektivische Ansicht des Getriebes von Fig. 1 im zusammengebauten Zustand,
Figur 10    eine Ableitung axialer Kräfte in das Gehäuse gemäß dem Lagerungskonzept des Getriebes von Fig. 1 bis 9,
Figur 11    eine Querschnittsansicht eines harmonischen Pinring-Getriebes mit Exzenterscheibe,
Figur 12    eine Explosionsansicht des Getriebes von Fig. 11,
Figur 13    eine Seitenansicht einer Teilbaugruppe des Getriebes von Fig. 11,
Figur 14    eine Querschnittsansicht der Teilbaugruppe von Fig. 13,
Figur 15    eine abtriebsseitige Draufsicht eines Pinrings des Getriebes von Fig. 11,
Figur 16    einen Querschnitt durch den Pinring von Fig. 15,
Figur 17    eine Teilansicht des Pinrings von Fig. 15,
Figur 18    eine abtriebsseitige Draufsicht auf den Pinring von Fig. 15, und
Figur 19    eine abtriebsseitige Draufsicht auf das Getriebe von Fig. 11,
Figur 20    einen Drehmomentverlauf in dem Getriebe von Fig. 11,
Figur 21    eine von der Antriebsseite her gesehene perspektivische Ansicht einer Kraftmessdose,
Figur 22    eine von der Antriebsseite her gesehene Aufsicht auf die Kraftmessdose,
Figur 23    eine von der Abtriebsseite her gesehene Aufsicht auf die Kraftmessdose,
Figur 24    eine Querschnittsansicht der Kraftmessdose entlang der Querschnittslinie A-A von Fig. 22,
Figur 25    eine seitliche Ansicht der Kraftmessdose,
Figur 26    eine von der Abtriebsseite her gesehene perspektivische Ansicht der Kraftmessdose,
Figur 27    eine von der Abtriebsseite her gesehene Aufsicht auf die Kraftmessdose,
Figur 28    eine Querschnittsansicht entlang der Schnittlinie A-A der Figur 27,
Figur 29    eine Querschnittsansicht entlang der Schnittlinie B-B der Figur 27,
Figur 30    ein harmonisches Pinring-Getriebe mit der Kraftmessdose von Fig. 21,
Figur 31    einen Ausschnitt aus dem Pinring-Getriebe von Fig. 30,
Figur 32    eine Querschnittsansicht einer schräg angestellten Lagerung mit einer Kraftmessdose,
Figur 33    eine erste Querschnittsansicht einer schräg angestellten Lagerung mit einer Kraftmessdose,
Figur 34    eine weitere Querschnittsansicht einer schräg angestellten Lagerung mit einer Kraftmessdose,
Figur 35    eine erste Ausführungsform eines Drehmomentsensors,
Figur 36    eine zweite Ausführungsform eines Drehmomentsensors,
Figur 37    eine dritte Ausführungsform eines Drehmomentsensors,
Figur 38    eine vierte Ausführungsform eines Drehmomentsensors,
Figur 39    eine fünfte Ausführungsform eines Drehmomentsensors mit zwei Paaren gegenüberliegender Dehnmessstreifen im 90 Grad Abstand,
Figur 40    eine fünfte Ausführungsform eines Drehmomentsensors mit zwei benachbarten Paaren gegenüberliegender Dehnmessstreifen,
Figur 41    einen Messwerteverlauf einer Kraftmessvor-richtung gemäß Fig. 38,

| | | |
|---|---|---|
| Figur 42 | einen weiteren Messwerteverlauf einer Kraftmessvorrichtung gemäß Fig. 37 im Vergleich mit einer direkten Drehmomentmessung an einer verformbaren Dose, | |
| Fig. 43 | einen Querschnitt eines weiteren HPD-Getriebes mit einer Kraftmessdose, das zu dem HPD-Getriebe von Fig. 29 ähnlich ist, | |
| Fig. 44 | eine Ausschnittvergrößerung des in Fig. 43 gezeigten HPD-Getriebes im Bereich der Kraftmess-dose, | |
| Figur 45 | eine Explosionsansicht einer Freilauf-Baugruppe, | |
| Figur 46 | eine abtriebsseitige Aufsicht auf die Frei-lauf-Baugruppe von Fig. 44 bei abgenommener Seitenabdeckung, | |
| Figur 47 | eine Querschnittsansicht der Freilaufbau-gruppe von Fig. 45, Tretwelle und Getriebe-Innenrad, | |
| Figur 48 | eine abtriebsseitige perspektivische Ansicht der Freilauf-Baugruppe von Fig. 45 bei abgenommener Seitenabdeckung, | |
| Figur 49 | eine antriebsseitige perspektivische Ansicht der Freilauf-Baugruppe von Fig. 45 bei abgenommener Seitenabdeckung, | |
| Figur 50 | eine Seitenansicht der Tretwelle der Frei-laufbaugruppe von Fig. 45, | |
| Figur 51 | eine Seitenansicht der Freilaufbaugruppe von Fig. 45 mit Abtriebswelle, | |
| Figur 52 | eine Aufsicht in auf die Tretwelle in Achs-richtung, | |
| Figur 53 | eine abtriebsseitige Aufsicht auf die Ab-triebswelle, | |
| Figur 54 | eine antriebsseitige Aufsicht auf die Ab-triebswelle, | |
| Figur 55 | einen Freilaufkäfig des Getriebefreilaufs, | |
| Figur 56 | einen Klemmkörperring des Getriebefreilaufs, | |
| Figur 57 | eine Seitenansicht der Freilaufbaugruppe mit Abtriebswelle und Sensor Anordnung, | |
| Figur 58 | eine weitere Querschnittsansicht der Frei-laufbaugruppe entlang der Querschnittslinie D-D der Fig. 57, | |
| Figur 59 | eine von der Abtriebsseite her gesehene Querschnittsansicht der Freilaufbaugruppe von Fig. 57, | |
| Figur 60 | einen Querschnitt eines Harmonischen Pinring-Getriebes mit einem Klemmrollen-Freilauf, | |
| Figur 61 | eine Querschnittsansicht eines Getriebemotors mit einem harmonischen Pinring-Getriebe entlang der Schnittlinie von Fig. 61, | |
| Figur 62 | eine abtriebsseitige Seitenansicht des Getriebemotors, | |
| Figur 63 | einen antriebsseitigen Teil einer Explosionsansicht des Getriebemotors von Fig. 60, | |
| Figur 64 | einen abtriebsseitigen Teil der Explosionsansicht des Getriebemotors von Fig. 60, | |
| Figur 65 | eine von der Abtriebsseite her gesehene perspektivische Ansicht des Getriebemotors von Fig. 60, und | |
| Figur 66 | eine von der Antriebsseite her gesehene perspektivische Ansicht des Getriebemotors von Fig. 60, | |
| Figur 67 | ein harmonisches Pinring Getriebe mit einem auf einer Tretwelle angeordneten Planetengetriebe, bei dem ein Abtrieb über einen Planetenträger erfolgt, | |
| Figur 68 | eine perspektivische Ansicht der Planetengetriebe-Baugruppe von Fig. 67, | |
| Figur 69 | eine Seitenansicht der Planetengetriebe-Baugruppe von Fig. 68, | |
| Figur 70 | einen Querschnitt entlang der Schnittlinie C-C von Fig. 69 | |
| Figur 71 | einen Querschnitt entlang der Schnittlinie B-B von Fig. 69, | |
| Figur 72 | ein harmonisches Pinring Getriebe mit einem auf einer Tretwelle angeordneten Planetengetriebe, bei dem ein Abtrieb über ein Hohlrad erfolgt, | |
| Figur 73 | zeigt eine perspektivische Ansicht der Planetengetriebe Baugruppe von Fig. 67, | |
| Figur 74 | eine Seitenansicht der Planetengetriebe-Baugruppe von Fig. 68, | |
| Figur 75 | einen Querschnitt entlang der Schnittlinie C-C von Fig. 74, und | |
| Figur 76 | einen Querschnitt entlang der Schnittlinie B-B von Fig. 74, | |
| Figur 77 | eine Querschnittsansicht einer Motor-Getriebe Einheit für ein Elektrofahrrad mit Zykloidgetriebe, | |
| Figur 78 | eine Explosionsansicht der Motor-Getriebe-Einheit von Fig. 77, | |
| Figur 79 | eine abtriebsseitige Seitenansicht des Zykloidgetriebes von Fig. 77, | |
| Figur 80 | einen Querschnitt des in Fig. 77 gezeigten Zykloidgetriebes entlang der Querschnittslinie A-A von Fig. 79, | |
| Figur 81 | die Seitenansicht von Fig. 79, in der in Fig. 79 verdeckte Bauteile durch gestrichelte Linien angedeutet sind, | |
| Figur 82 | einen Querschnitt einer Motor-Getriebe Einheit mit Spannwellen-Getriebe, | |
| Figur 83 | eine Explosionsansicht des Spannwellen-Getriebes von Fig. 82, | |
| Figur 84 | eine antriebsseitige Seitenansicht des Spannwellengetriebes von Fig. 82, | |
| Figur 85 | einen Querschnitt entlang der Querschnittslinie A-A von Fig. 84, | |
| Figur 86 | einen Querschnitt entlang der Querschnittslinie B-B von Fig. 84, | |
| Figur 87 | eine Ausschnittsvergrößerung des Ausschnitts "C" von Fig. 84, | |
| Figur 88 | eine antriebsseitige perspektivische Ansicht des Spannwellengetriebes im zusammengebauten Zustand, | |
| Figur 89 | eine Seitenansicht eines zweistufigen Übersetzungsgetriebes mit zweigeteiltem Pinring, | |
| Figur 90 | einen Querschnitt des zweistufigen Untersetzungsgetriebes entlang der Querschnittslinie A-A von Fig. 89, | |
| Figur 91 | die Seitenansicht von Fig. 89, wobei in der Ansicht von Fig. 89 verdeckte Bauteile durch gestrichelte Linien angedeutet sind, | |

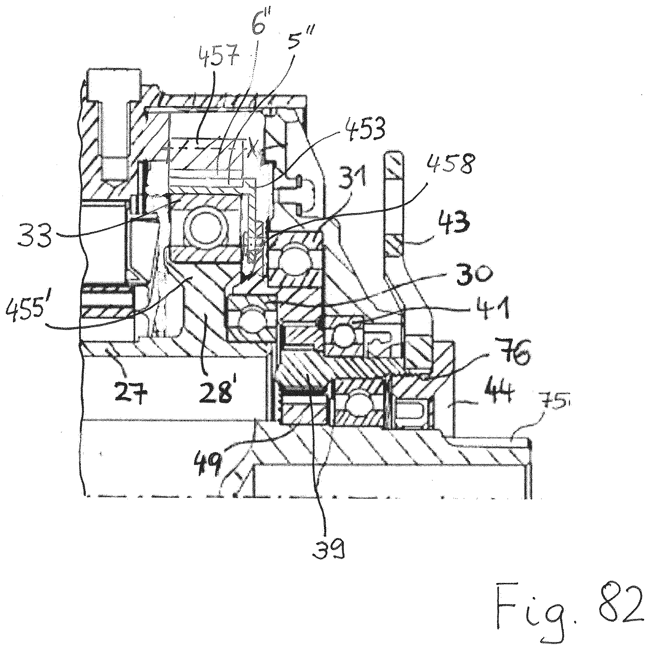

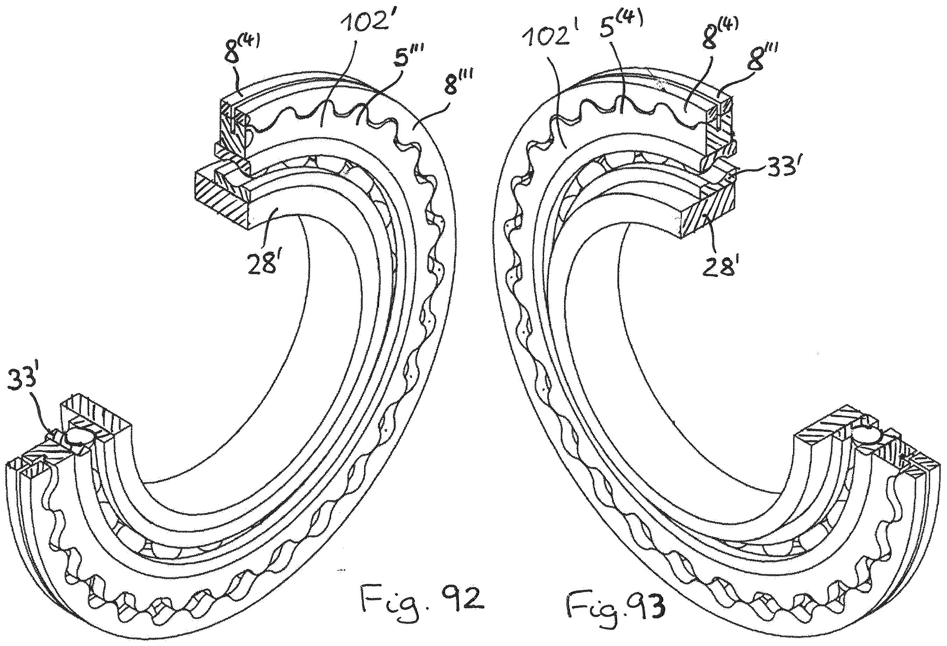

Figur 92    eine abtriebsseitige eines Dreiviertel-Ausschnitts des zweistufigen Untersetzungsgetriebes von Fig. 82,

Figur 93    eine abtriebsseitige perspektivische Ansicht des Dreiviertel-Ausschnitts der Fig. 92,

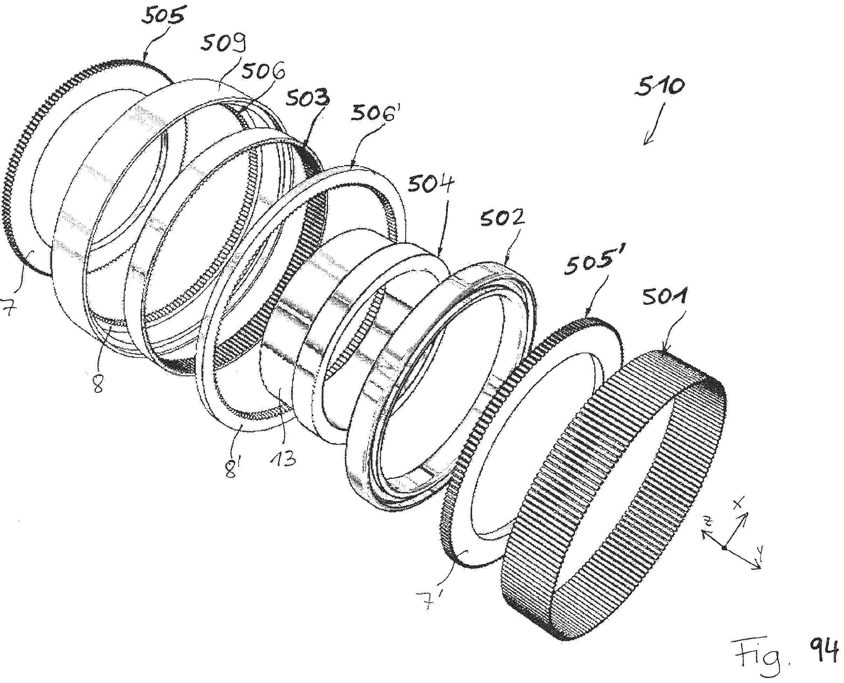

Figur 94    ein HPD-F Getriebe mit einer ovalen Kurvenscheibe,

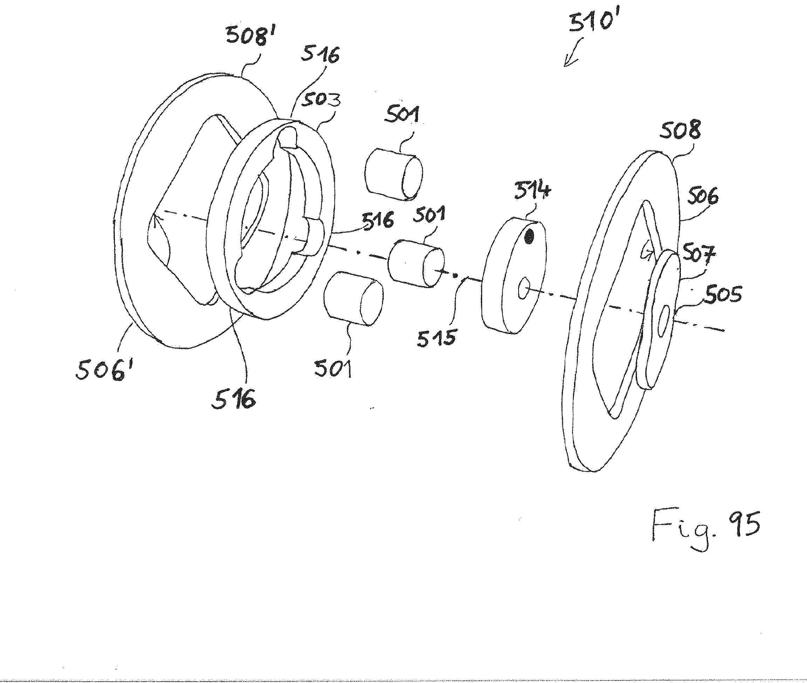

Figur 95    ein HPD-E Getriebe mit einer einzelnen Exzenterscheibe,

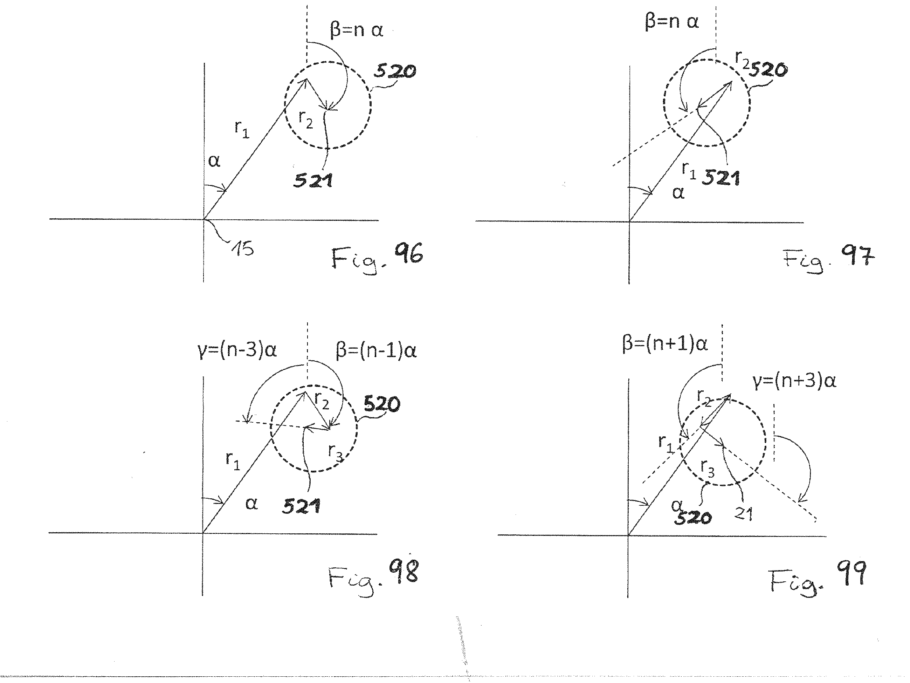

Figur 96    eine Epizykelkonstruktion für eine Innenradverzahnung eines HPD-E Getriebes,

Figur 97    eine Epizykelkonstruktion für eine Außenradverzahnung eines HPD-E Getriebes,

Figur 98    eine Epizykelkonstruktion für eine Innenradverzahnung eines HPD-F Getriebes,

Figur 99    eine Epizykelkonstruktion für eine Außenradverzahnung eines HPD-F Getriebes,

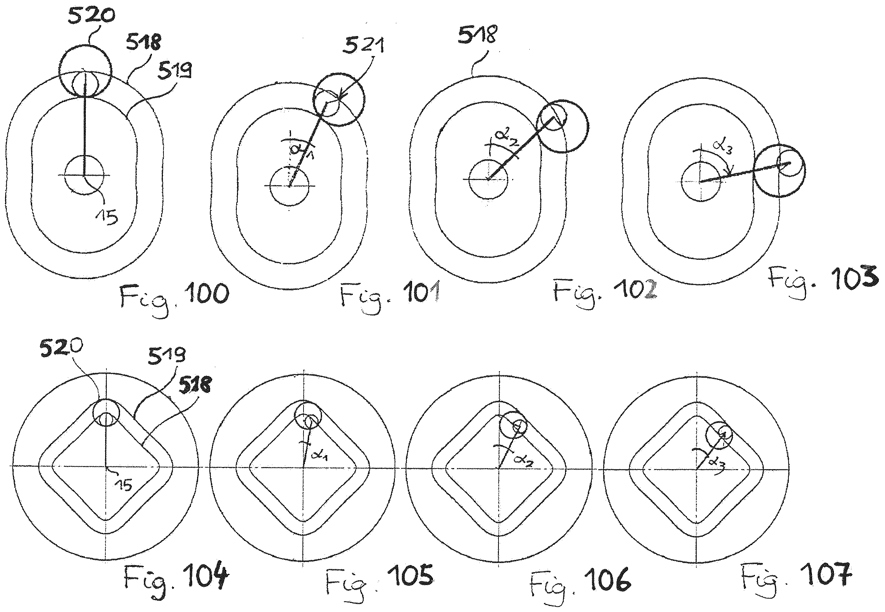

Figur 100   eine Anwendung der Epizykelkonstruktion von Fig. 98 in einer ersten Winkelposition,

Figur 101   die Epizykelkonstruktion von Fig. 100 in einer zweiten Winkelposition,

Figur 102   die Epizykelkonstruktion von Fig. 100 in einer dritten Winkelposition,

Figur 103   die Epizykelkonstruktion von Fig. 100 in einer vierten Winkelposition,

Figur 104   eine Anwendung der Epizykelkonstruktion von Fig. 97 in einer ersten Winkelposition,

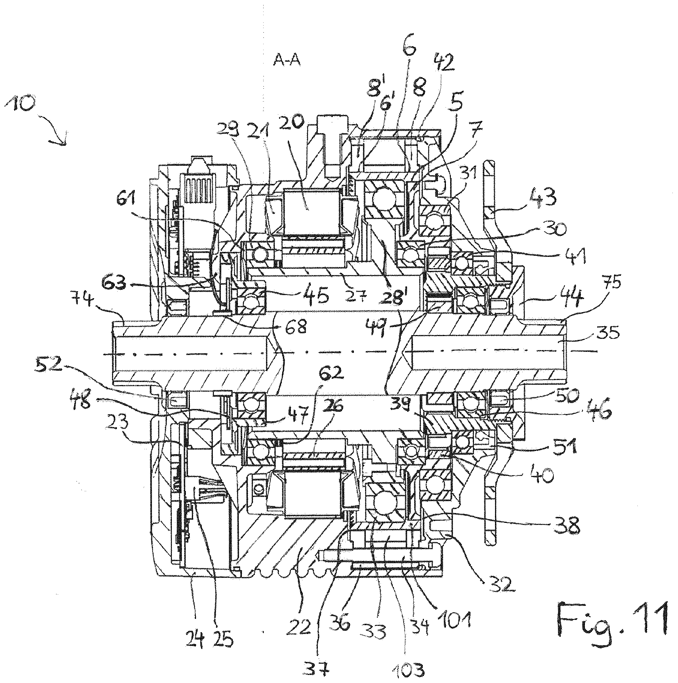

Figur 105   die Epizykelkonstruktion von Fig. 11 in einer zweiten Winkelposition,

Figur 106   die Epizykelkonstruktion von Fig. 11 in einer dritten Winkelposition,

Figur 107   die Epizykelkonstruktion von Fig. 11 in einer vierten Winkelposition,

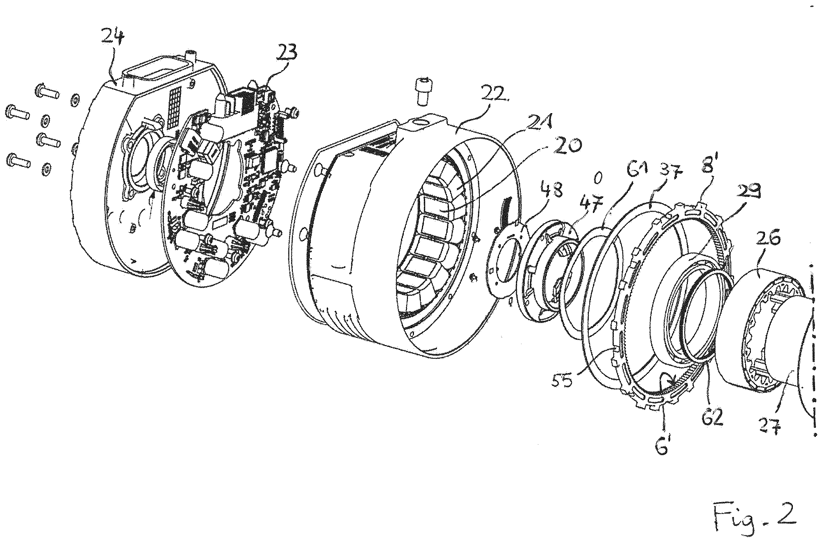

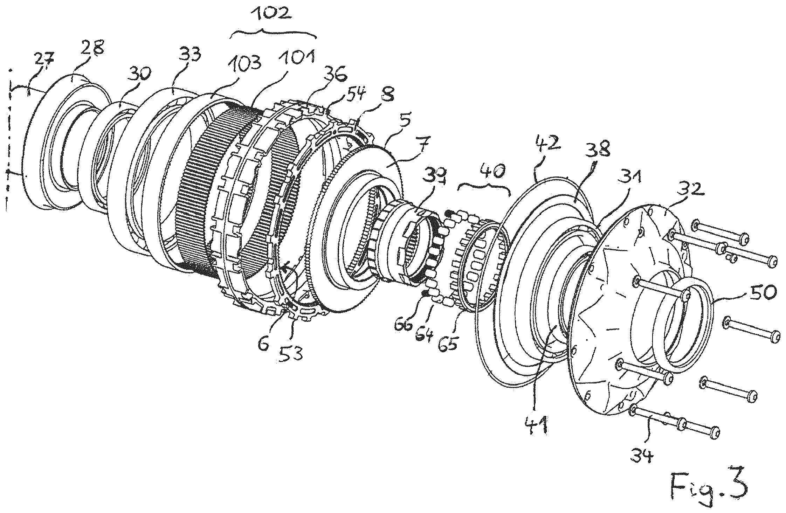

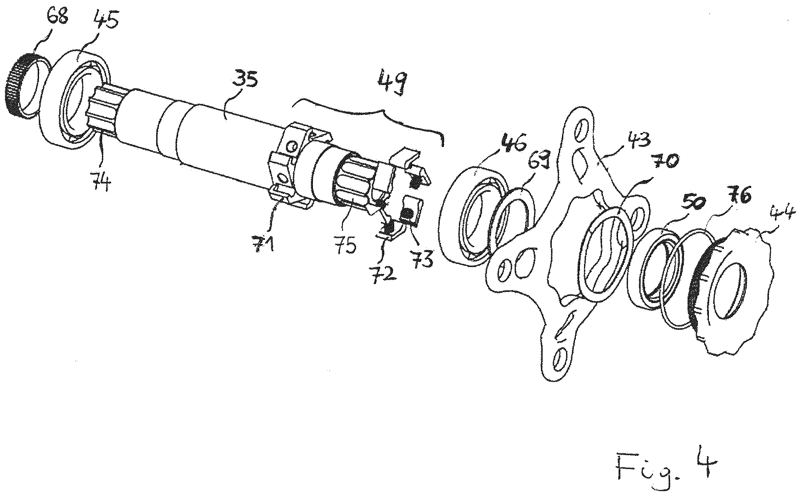

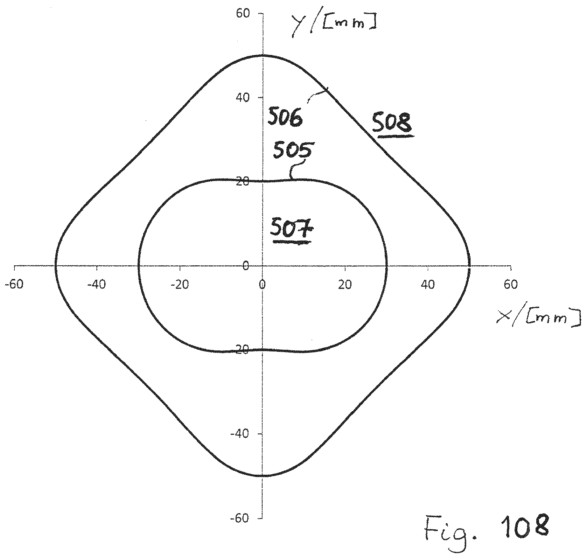

Figur 108   eine Zahngeometrie für das Getriebe der Fig. 2 gemäß der Konstruktion von Fig. 3 und Fig. 4,

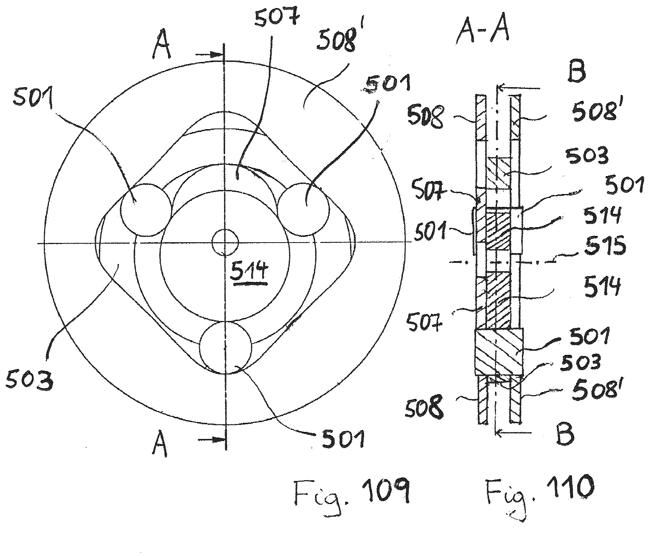

Figur 109   eine abtriebsseitige Draufsicht auf das Getriebe von Fig. 95,

Figur 110   eine Querschnittsansicht des Getriebes von Fig. 2,

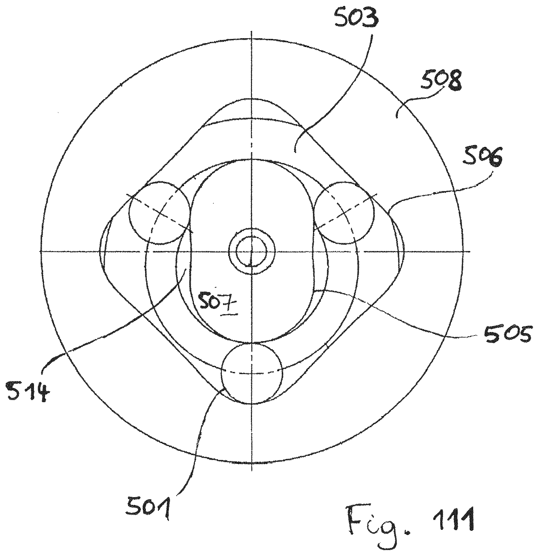

Figur 111   eine antriebsseitige Draufsicht auf das Getriebe von Fig. 95,

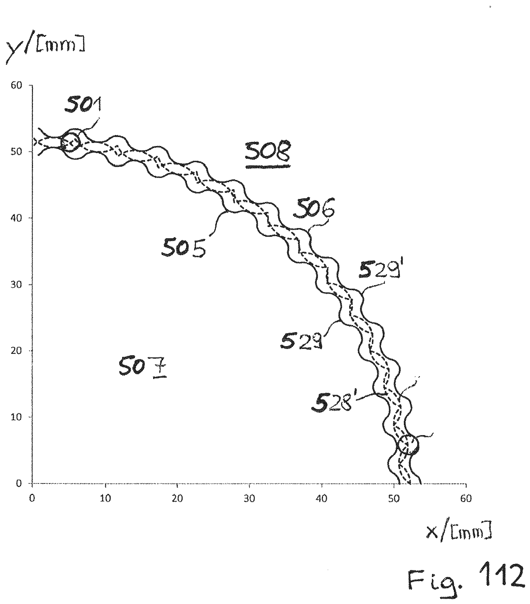

Figur 112   eine Verzahnungsgeometrie für ein weiteres HPD-E Getriebe mit 55 Pins und die dazugehörigen Radkurven gemäß der Konstruktion von Fig. 96 und Fig. 97,

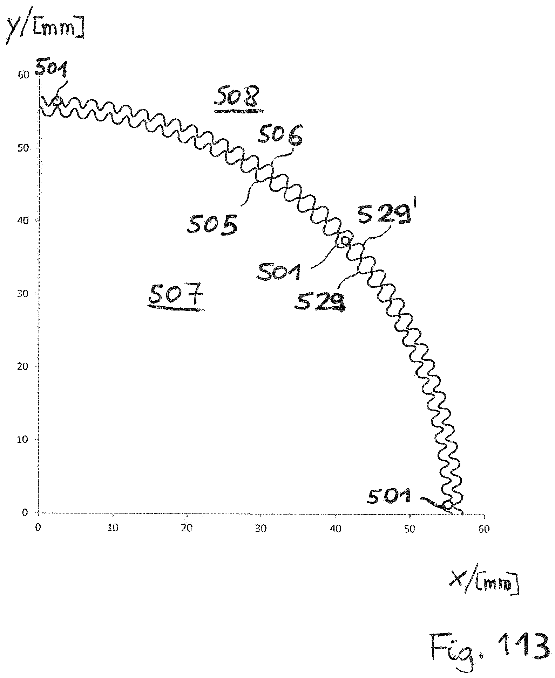

Figur 113   eine Verzahnungsgeometrie für eine HPD-F Getriebe mit 150 Pins gemäß der Konstruktion von Fig. 98 und Fig. 99,

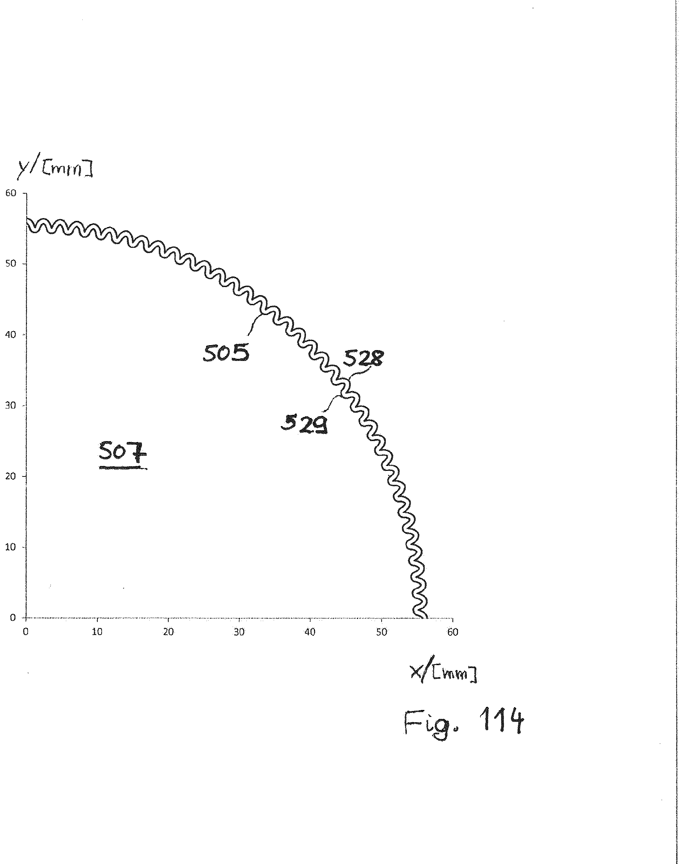

Figur 114   eine Verzahnungsgeometrie der Innenradverzahnung von Fig. 113 und die dazugehörige Radkurve,

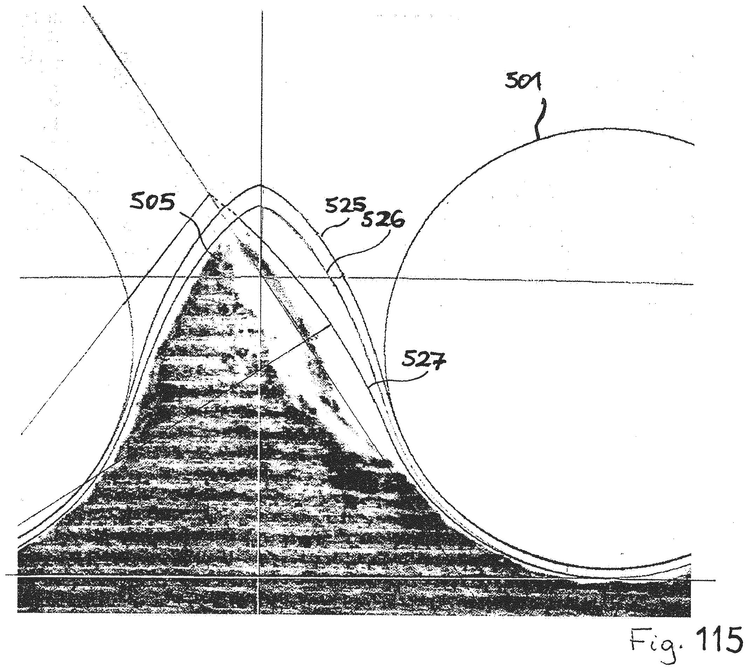

Figur 115   eine eingelaufene Verzahnung eines Getriebes gemäß Fig. 94 und eine entsprechend angepasste Zahngeometrie,

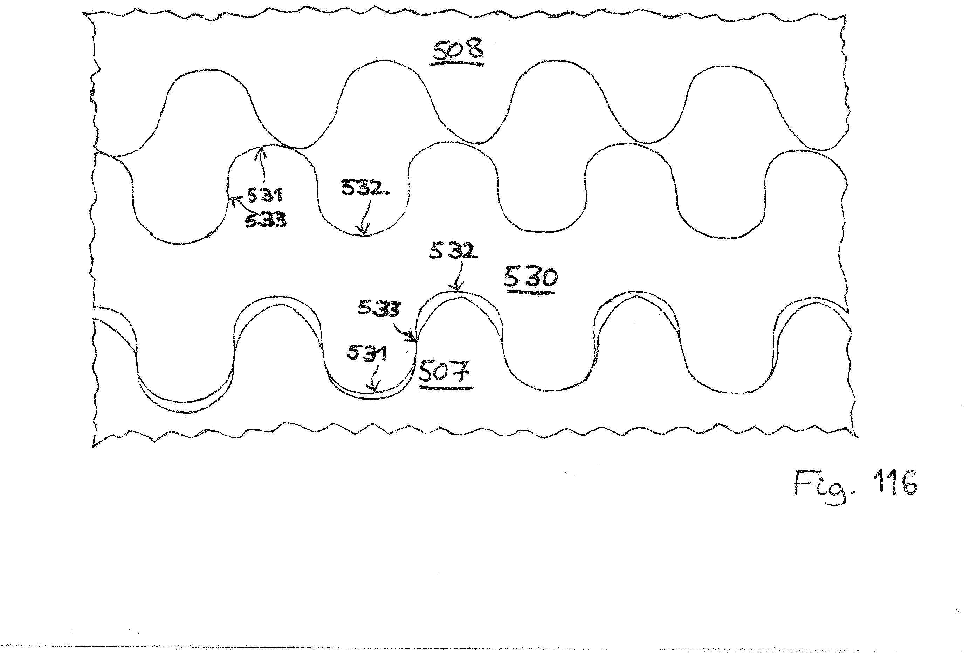

Figur 116   einen Ausschnitt aus einem HPD-F Getriebe mit einer Verzahnung gemäß der in Fig. 98 und 99 gezeigten Epizykelkonstruktionen und einem integral geformten Pinring,

Figur 117   einen durch Hüllkurven definierten Toleranzbereich eines Zahnprofils, und

Figur 118   einen durch Profilverschiebungen definierten Toleranzbereich eines Zahnprofils,

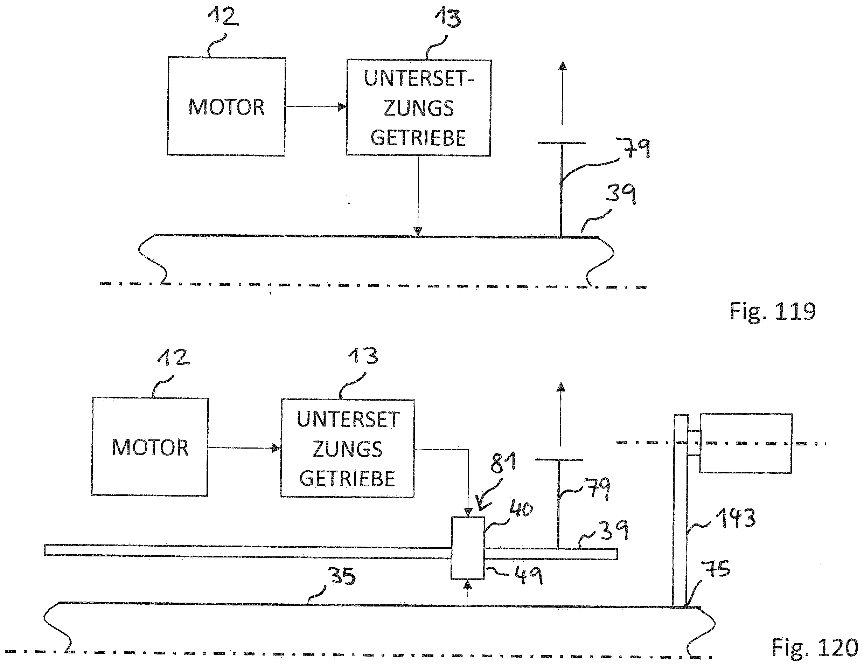

Figur 119   eine Prinzipzeichnung eines ersten Antriebs,

Figur 120   eine Prinzipzeichnung eines weiteren Antriebs,

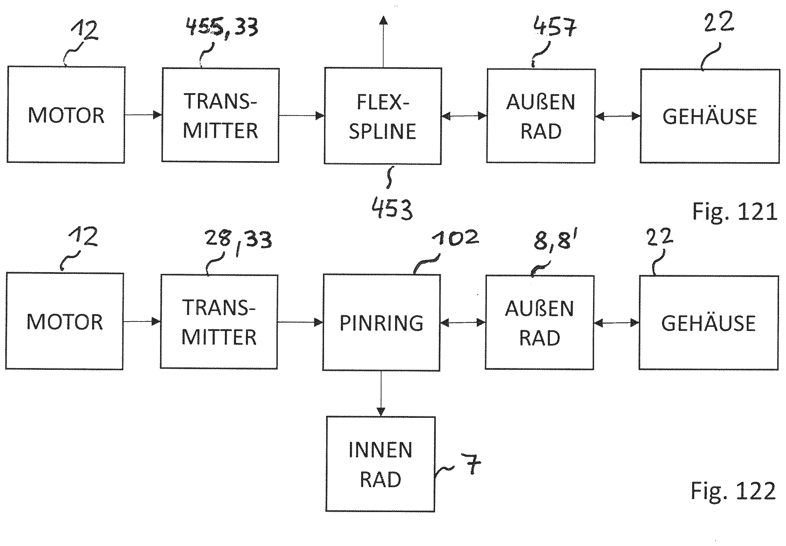

Figur 121   eine Prinzipzeichnung eines Spannungswellen-Antriebs zeigt

Figur 122   eine Prinzipzeichnung eines harmonischen Pinring-Antriebs,

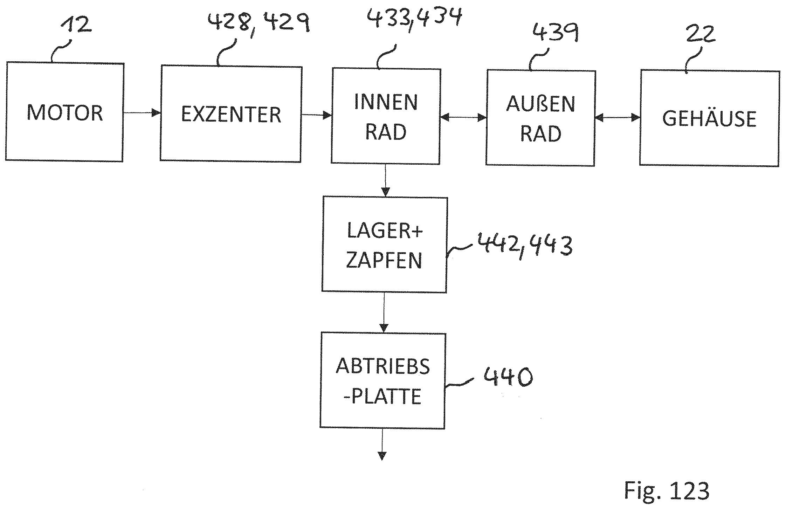

Figur 123   eine Prinzipzeichnung eines Exzentergetriebes,

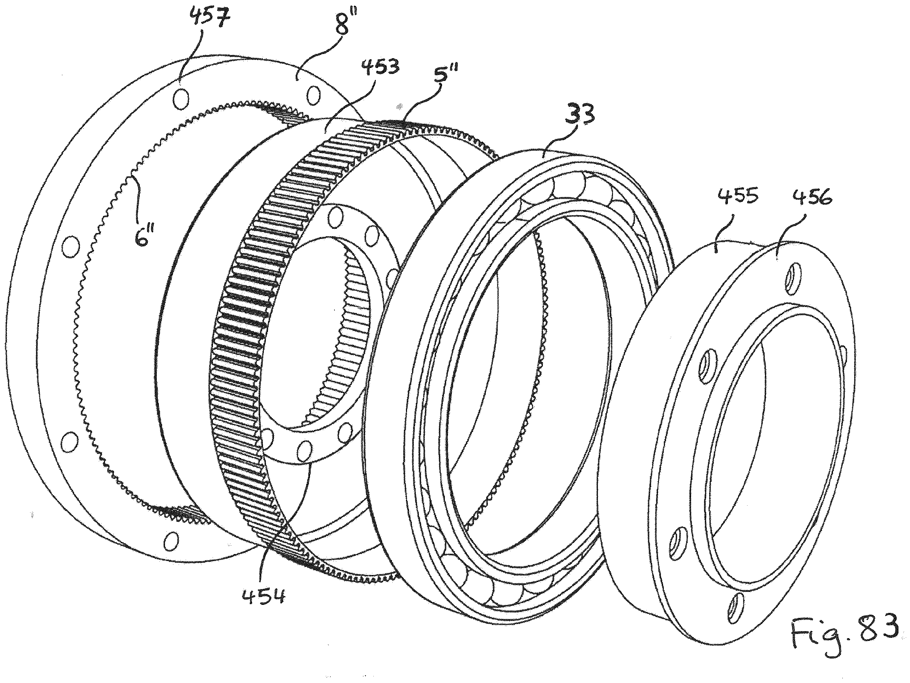

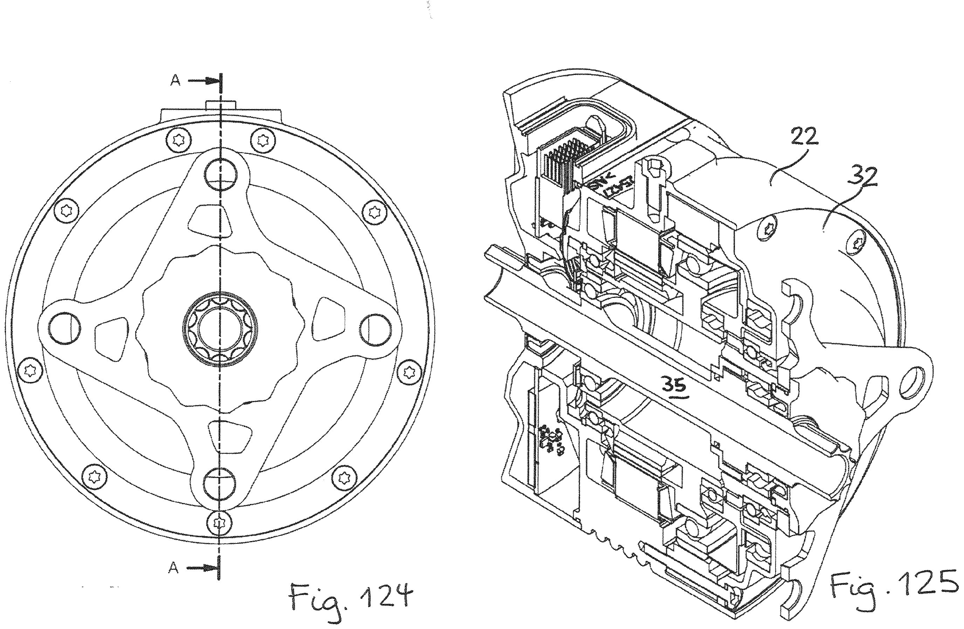

Figur 124   eine abtriebsseitige Ansicht einer Motor-Getriebe Einheit mit einem Spannwellen-Getriebe, das ähnlich zu dem Spannwellen-Getriebe von Fig. 83 ist,

Figur 125   eine perspektivische Schnittzeichnung der Motor-Getriebe Einheit von Fig. 124, die entlang der Schnittline A-A von Fig. 124 geschnitten ist, und

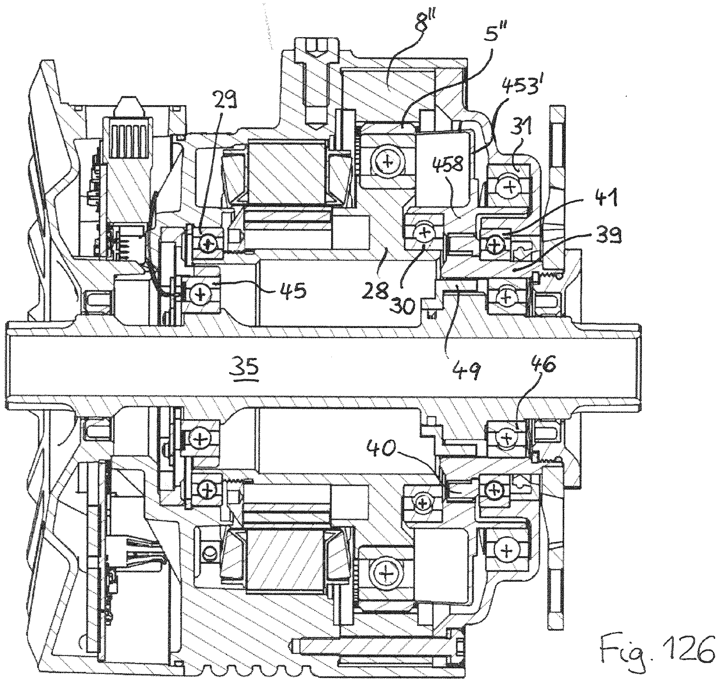

Figur 126   einen Querschnitt entlang der Schnittlinie A-A von Fig. 124.

In der folgenden Beschreibung werden Einzelheiten bereitgestellt, um die Ausführungsbeispiele der Beschreibung zu veranschaulichen. Für den Fachmann soll es jedoch erkenntlich sein, dass die Ausführungsbeispiele auch ohne solche Details umgesetzt werden können.

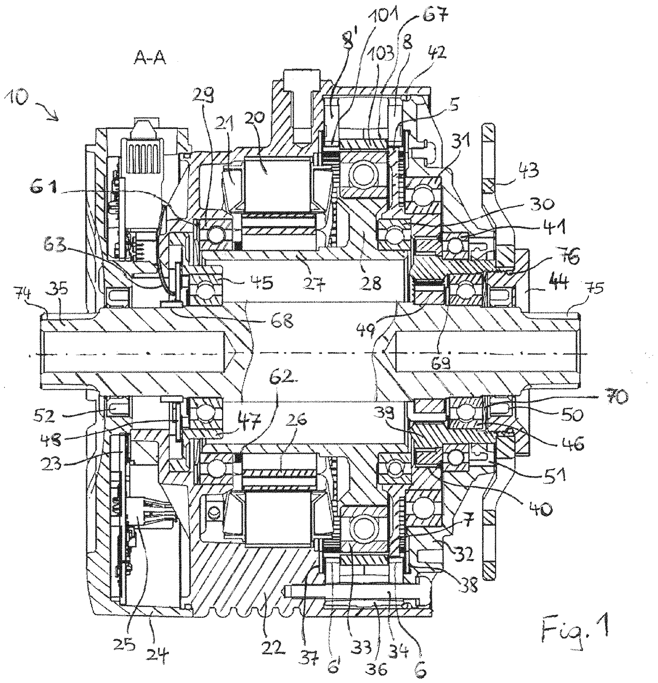

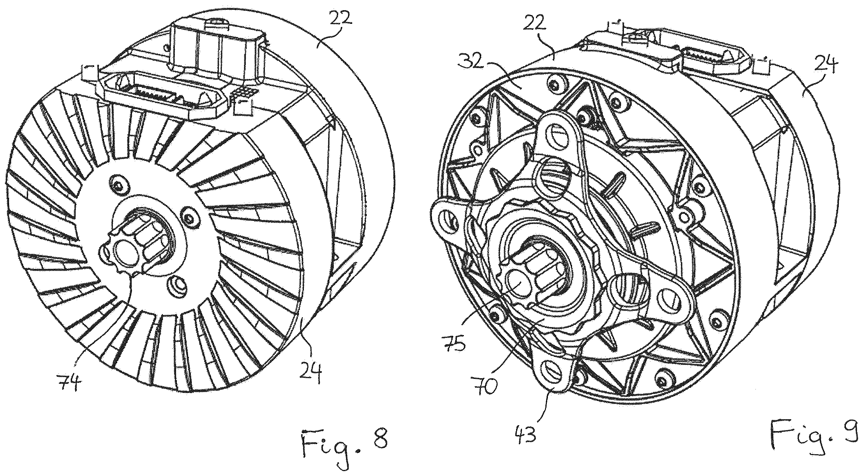

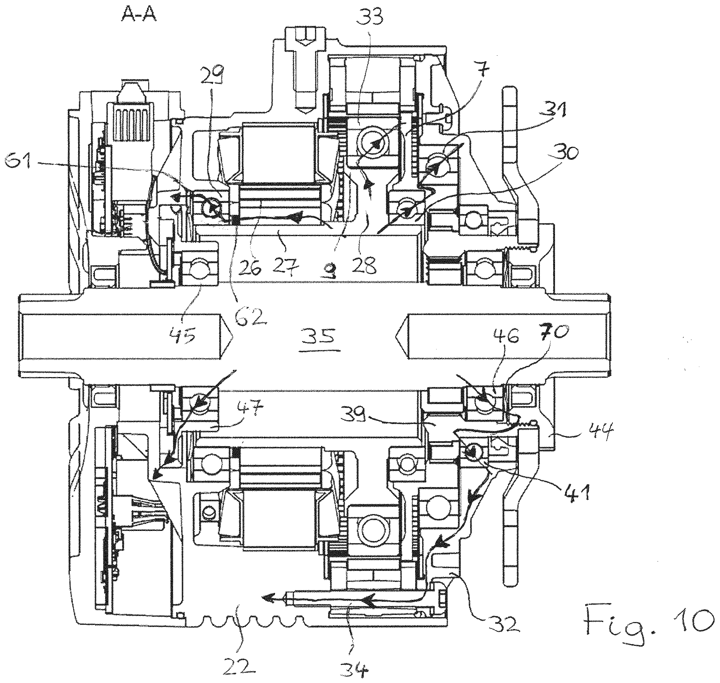

Fig. 1 zeigt eine Querschnittsansicht eines harmonischen Pinring-Getriebes 10. Die Querschnittsebene A-A der Fig. 1 ist in Fig. 9 gekennzeichnet. In Fig. 1 entspricht die linke Seite einer Antriebsseite und die rechte Seite einer Abtriebsseite des harmonischen Pinring-Getriebes 10. Gemäß der üblichen Anordnung des Antriebs auf der rechten Seite ist die Blickrichtung von Fig. 10 in Fahrtrichtung gerichtet.

Ein Stator 20 einer Stator-Baugruppe des harmonischen Pinring-Getriebes 10 ist in einem Motorgehäuse 22 angeordnet. Der Stator 20 weist drei separate Spulen 21 zum Anschluss an drei Phasen eines Dreiphasen-Wechselrichters auf. Die drei Spulen des Stators 20 sind mit dem Dreiphasen-Wechselrichter durch drei Anschlüsse 25 verbunden, von denen einer in Fig. 1 gezeigt ist.

Der Dreiphasen-Wechselrichter ist als eine Leistungselektronik ausgebildet, die auf einer Leiterplatte 23 angeordnet ist, wobei die Leiterplatte 23 in einem Kühldeckel 24 angeordnet ist, das antriebsseitig auf das Motorgehäuse 22 aufgesetzt ist. Die Leiterplatte 23 ist als eine ringförmige Scheibe ausgebildet, die sich außerhalb von zylindrischen hervorragenden Abschnitten des Motorgehäuses und des Kühldeckels befinden, so dass die darauf befindliche Motorelektronik gegen Öl und Fett des Getriebes abgedichtet ist.

Eine mittig durch das Motorgehäuse 22 verlaufende Tretwelle 35 ist abtriebsseitig abgestuft und weist drei Stufen auf, deren Durchmesser von außen nach innen zunimmt und auf denen jeweils der Wellendichtring 50, das abtriebsseitige Tretwellen-Kugellager 46 und der Tretwellen-Freilauf 49 angeordnet sind. Der Durchmesser der Tretwelle 35 ist antriebsseitig ebenfalls abgestuft und weist zwei Stufen auf, wobei auf der äußeren Stufe der Wellendichtring und ein Sensorring 68, und auf der inneren Stufe das Kugellager 45 angeordnet sind. Die Abstufung der Tretwelle ist ebenfalls in der perspektivischen Ansicht von Fig. 4 gezeigt.

Eine äußere Rotorwelle 26, die mit Permanentmagneten bestückt ist, ist radial innerhalb des Stators 20 angeordnet. Diese äußere Rotorwelle wird auch als "Rotorpaket" bezeichnet. Die äußere Rotorwelle 26 weist an ihrer Innenseite einen elastischen Bereich auf, der auf einer inneren Rotorwelle 27 aufgesteckt ist. Auf der inneren Rotorwelle 27 ist abtriebsseitig eine exzentrisch angeordnete ovale Kurvenscheibe 28 ausgeformt, die in Fig. 3 näher gezeigt ist.

Die innere Rotorwelle 27 ist an der Antriebsseite nach außen durch ein antriebsseitiges Rotor-Kugellager 29 in dem Motorgehäuse 22 gelagert. Und zwar ist ein Außenring des antriebsseitigen Rotor-Kugellagers 29 in einer zylindrischen Aussparung des Motorgehäuses 22 angeordnet.

Weiterhin ist die innere Rotorwelle 27 an der Abtriebsseite in einem abtriebsseitigen Rotor-Kugellager 30 radial nach außen in einem Innenrad 7 gelagert. Eine Hohlwelle des Innenrads 7 ist abtriebsseitig integral mit einem ringförmigen Bereich des Innenrads 7 verbunden, der eine Außenverzahnung 5 aufweist.

Die Hohlwelle des Innenrads 7 ist ihrerseits radial nach außen über ein Innenrad-Kugellager 31 auf einem Gehäusedeckel 32 gelagert, der an dem Motorgehäuse 22 durch Schrauben 33 festgeschraubt ist. Das Innenrad-Kugellager 31 ist gegenüber dem abtriebsseitigen Rotor-Kugellager 30 in axialer Richtung zur Abtriebsseite hin versetzt und ist in radialer Richtung nach außen hin versetzt. Außerdem überlappt das Innenrad-Kugellager 31 mit dem abtriebsseitigen Rotor-Kugellager 30 in axialer Richtung.

Auf der Kurvenscheibe 28 der inneren Rotorwelle 27 ist ein flexibles Kugellager oder Dünnringkugellager 33 aufgespannt, bei dem ein Innenring und ein Außenring verformbar sind. Auf dem flexiblen Kugellager 33 liegt ein Pin-Haltering 103 mit Pins 101 auf, wobei die Pins 101 in zylindrischen Aussparungen an der Innenseite eines Pin-Halterings gehalten sind. Gemäß dem Ausführungsbeispiel der Fig. 1 sind die Pins 101 miteinander verbunden. Die Pins 101 des Pinrings 103 stehen in axialer Richtung zu beiden Seiten über das flexible Kugellager 33 und über den Pin-Haltering 103 hervor. Der Einfachheit halber wird im Folgenden die Pinring-Anordnung aus Pin-Haltering 103 und Pins 101 auch als Pinring 102 bezeichnet.

Die Kurvenscheibe 28 und das flexible Kugellager 33 bilden zusammen eine Transmitteranordnung, die ein Drehmoment in eine radiale Kraft umwandelt. Statt eines flexiblen Kugellagers mit flexiblem Innen- und Außenring kann auch ein Drahtwälzlager oder ein flexibles Kugellager ohne Außenring, oder ein anders geartetes flexibles Wälzlager verwendet werden.

Der Gehäusedeckel 32 ist auf der Abtriebsseite des Motorgehäuses an dem Motorgehäuse mit Befestigungsschrauben 34 aufgeschraubt. Weiterhin sind ein antriebsseitiges Außenrad 8' und ein abtriebsseitiges Außenrad 8 in einen Stützring 36 eingesteckt und durch die Schrauben 34 an dem Stützring 36 festgeschraubt. Der Stützring 36 ist in axialer Richtung in zwei zueinander spiegelsymmetrische Hälften geteilt, die zusammen eine Laufbahn 67 für den Pinhaltering 103 ausbilden.

Das antriebsseitige Außenrad 8' und das abtriebsseitige Außenrad 8 sind in axialer Richtung außerhalb der Kurvenscheibe 28 und des flexiblen Kugellagers 33 angeordnet. Das antriebseitige Außenrad 8' steht in radialer Richtung den Bereichen der Pins 101 gegenüber, die auf der Antriebsseite in axialer Richtung über den Pin-Haltering 103 überstehen. Das abtriebsseitige Außenrad 8 steht in radialer Richtung den Bereichen der Pins 101 gegenüber, die auf der Abtriebsseite in axialer Richtung über den Pin-Haltering 103 überstehen.

Auf der Antriebsseite ist ein antriebsseitiger Anlaufring 37 so in dem Motorgehäuse 22 angeordnet, dass er den antriebseitigen Stirnflächen der Pins 101 in axialer Richtung gegenübersteht. In ähnlicher Weise ist auf der Abtriebsseite ein abtriebsseitiger Anlaufring 38 so in dem Motorgehäuse 22 angeordnet, dass er den abtriebsseitigen Stirnflächen der Pins 101 in axialer Richtung gegenübersteht.

Eine Abtriebswelle 39 ist radial innerhalb der Hohlwelle des Innenrads 7 angeordnet, wobei ein Getriebe-Freilauf 40 zwischen der Hohlwelle des Innenrads 7 und der Abtriebswelle 39 angeordnet ist. Die Abtriebswelle 39 ist radial nach außen in ein einem abtriebsseitigen Abtriebs-Kugellager 41 gelagert, das in eine zylinderförmige Aussparung oder Schulter des Gehäusedeckels 32 eingesetzt ist. Der abtriebsseitige Bereich der Abtriebswelle 39 steht in axialer Richtung über den Gehäusedeckel 32 über. Eine Kettenblattadapter 43 ist auf die Abtriebswelle 39 aufgesetzt, der über einer runde Abtriebsmutter 44 festgehalten ist, die in ein Innengewinde der Abtriebswelle 39 eingeschraubt ist.

Die Tretwelle 35 ist konzentrisch zur Rotorwelle 27 und zur Abtriebswelle 39 teilweise im Innern der Rotorwelle 27 und teilweise im Innern der Abtriebswelle 39 angeordnet. Die Tretwelle 35 ist über ein antriebsseitiges Tretwellen-Kugellager 45 radial nach außen in einer Kraftmessdose 47 gelagert, die ihrerseits in das Motorgehäuse 22 eingesetzt ist. Eine auch als "PCB-Kraftsensor" bezeichnete Leiterplatte 48 mit einer Auswertungselektronik ist an der Kraftmessdose 47 befestigt und ein Anschluss der Leiterplatte 48 ist über ein Flachbandkabel 63 radial nach außen geführt und mit der Elektronik auf der Leiterplatte 23 verbunden.

Die Kraftmessdose 47 weist Dehnmessstreifen auf, die elektrische Signale erzeugen, die einer Verformung der als Aufhängung des antriebsseitigen Tretwellen-Kugellagers dienenden Kraftmessdose 47 entsprechen. Die Kraftmessdose 47 weist vier Stege auf, die im 45 Grad Abstand in Umfangsrichtung angeordnet sind und die mit einem Ring verbunden sind, in dem der Außenring des abtriebsseitigen Tretlager-Kugellagers eingesetzt ist. Auf jedem dieser Stege ist jeweils ein Dehnungsmessstreifen aufgebracht, der mit der ringförmigen Leiterplatte 22 elektrisch verbunden ist.

In antriebsseitiger Richtung von dem abtriebsseitigen Tret-wellen-Kugellager 46 ist ein Tretwellen-Freilauf 49 zwischen der Tretwelle 35 und der Abtriebswelle 39 angeordnet. Radial nach außen schließen sich der Getriebe-Freilauf 40, die Hohlwelle des Innenrads 7 und das Innenrad-Kugellager 31 an. Anstatt eines einzelnen Tretwellen-Freilaufs 49 können auch zwei benachbarte Freiläufe oder ein einzelner Freilauf und ein dazu benachbartes Wälzlager, wie zum Beispiel ein Nadellager, eingebaut werden.

Abtriebsseitig von dem abtriebsseitigen Tretwellen-Kugellager 46 ist gegenüber dem abtriebsseitigen Tretwellen-Kugellager 46 ein innerer Wellendichtring 50 zwischen der Tretwelle 35 und der Abtriebswelle 39 eingefügt. Weiterhin ist ein äußerer Wellendichtring 51 gegenüber dem abtriebsseitigen Abtriebs-Kugellager 46 zwischen der Abtriebswelle 39 und dem Gehäusedeckel 32 angeordnet. Ein weiterer Wellendichtring 52 ist auf der Antriebsseite zwischen dem Kühldeckel 24 und der Tretwelle 35 angeordnet. Zwischen dem abtriebsseitigen Außenrad 8 und dem Gehäusedeckel 32 ist radial außen ein O-Ring 42 eingefügt.

Im Betrieb wird vom Stator 20 durch elektromagnetische Kraftwirkung ein Eingangs-Drehmoment auf die äußere Rotorwelle 26 und von dort auf die innere Rotorwelle 27 übertragen, das durch die Kurvenscheibe 28 und das flexible Kugellager 33 in eine Radialkraft umgewandelt wird. Diese Radialkraft wird an den Zahnflanken der Innenverzahnungen 6, 6' der Außenräder 8, 8' und des Außenverzahnung 5 des Innenrads 7 in ein Ausgangs-Drehmoment umgewandelt, wobei das Innenrad 7 abgetrieben ist, und die Außenräder 8, 8' am Gehäuse festgelegt sind. Das Ausgangs-Drehmoment ist um das Untersetzungsverhältnis größer als das Eingangsdrehmoment.

Die innere Verzahnung, die durch die Außenverzahnung 5 des Innenrads 7 gebildet wird, liegt gegenüber der Innenverzahnung 6 des abtriebsseitigen Außenrads 8, und stellt dadurch das Abtriebsdrehmoment bereit, insbesondere durch diejenigen Pins 101, die sowohl an der Außenverzahnung 5 als auch an den Innenverzahnungen 6, 6' anliegen.

Fig. 2 zeigt eine Explosionsansicht des Getriebes von Fig. 1, in der, von der Antriebsseite zur Abtriebsseite her gesehen, das antriebsseitige Rotor-Kugellager 29, die innere Rotorwelle 27, die Kurvenscheibe 28, das abtriebsseitige Rotor-Kugellager 30, das zweite Außenrad 8', das flexible Kugellager 33, der Pinhaltering 103 mit den Pins 101, der Stützring 36, das erste Außenrad 8, das Innenrad 7 mit der Innenrad-Hohlwelle und das Innenrad Kugellager 31 gezeigt sind.

Die Außenräder 8, 8' weisen jeweils Zapfen 53 auf, die radial von dem jeweiligen Außenrad 8, 8' nach außen abstehen und in gleichmäßigen Abständen über den Umfang des Außenrads 8, 8' verteilt sind. Der Stützring 36 weist an radial gegenüberliegenden Seiten zu den Zapfen 53 passende auf dem Umfang verteilte radiale Schlitze 54 auf. Zusätzlich sind zur Befestigung der Außenräder Schraublöcher 55 vorgesehen, die sich in dem Ausführungsbeispiel von Fig. 2 teilweise in den Außenrädern 8, 8' und teilweise in dem Stützring 36 befinden.

Zwischen dem antriebsseitigen Rotor-Kugellager 29 und dem Motorgehäuse 22 ist antriebsseitig von dem antriebsseitigen Rotor-Kugellager 29 eine Wellenfeder 61 angeordnet und zwischen dem antriebsseitigen Rotor-Kugellager 29 und der äußeren Rotorwelle 26 ist abtriebsseitig von dem antriebsseitigen Rotor-Kugellager 29 ein Abstandsring 62 angeordnet.

Insbesondere kann der Stützring 36 aus Aluminium bestehen und die Außenräder 8, 8' aus Plastik, wie zum Beispiel Polyamid 66 (PA66), wobei der Stützring 36 insbesondere durch Aluminium-Druckguss hergestellt sein kann, und die Außenräder insbesondere durch einen Plastik Spritzguss hergestellt sein können. Des Weiteren kann die innere Rotorwelle 27 aus Aluminium hergestellt sein.

Wie in Fig. 1 gezeigt ist, reichen die Schrauben 34 im zusammengebauten Zustand durch den Getriebedeckel 32, das erste Außenrad 8, das zweite Außenrad 8' und den Stützring 36 in das Motorgehäuse 22.

Fig. 3 zeigt einen antriebsseitigen Teil einer Explosionsansicht des Getriebes von Fig. 1, in der, von der Antriebsseite her gesehen, der Kühldeckel 24, die Leiterplatte 23, das Motorgehäuse 22 mit dem Stator 20 und der Spule 21 bzw. mit den Spulen 21, die Leiterplatte 48, die Kraftmessdose 47, die Wellenfeder 61, der antriebsseitige Anlaufring 37, das zweite Außenrad 8' mit der Innenverzahnung 6', das antriebsseitige Rotor-Kugellager 29, der Abstandsring 62, die äußere Rotorwelle 26, sowie ein Teil der inneren Rotorwelle 27 gezeigt sind.

Fig. 3 zeigt einen abtriebsseitigen Teil einer Explosionsansicht des Getriebes von Fig. 1, in der, von der Antriebsseite her gesehen, die innere Rotorwelle 27 mit der Kurvenscheibe 28, das abtriebsseitige Rotor-Kugellager 30, der Pinring 102 mit dem Pin-Haltering 103 und den Pins 101, der Stützring 36, das abtriebsseitige Außenrad 8, das Innenrad 7 mit der Außenverzahnung 5, die Abtriebswelle 37, der Getriebe-Freilauf 40, der O-Ring, die abtriebsseitige Anlaufscheibe 38, das Innenrad-Kugellager 31, der Gehäusedeckel 32 mit den Befestigungsschrauben 34 und der Wellendichtring 50 gezeigt sind.

Der Getriebe-Freilauf 40 weist, wie in Fig. 3 gezeigt, Schraubenfedern Zylinderrollen 64 auf, die in einem Klemmkörperkäfig 65 angeordnet sind. Zum Andrücken der Zylinderrollen 64 sind in dem Klemmkörperkäfig 65 weiterhin Schraubenfedern 66 vorgesehen.

Fig. 4 zeigt eine Explosionsansicht einer inneren Baugruppe des Getriebes von Fig. 1, und dabei insbesondere den Tretwellen-Freilauf 49. Im Einzelnen zeigt Fig. 4, von der Antriebsseite her gesehen, einen Sensorring 68, das antriebsseitige Tretwellen-Kugellager 45, die Tretwelle 35, den Tretwellen-Freilauf 49, das abtriebsseitige Tretwellen-Kugellager 46, eine Distanzscheibe 69, einen Kettenblattadapter 43, eine Wellenfeder 70, einen inneren Wellendichtring 50, einen O-Ring 76 und die Abtriebsmutter 44.

Der Tretwellen-Freilauf 49 weist, wie in Fig. 4 gezeigt, schaufelförmige Stufen 71 auf, die auf der Tretwelle 35 ausgebildet sind. Zwischen den Stufen 71 sind Sperrklinken 73 und Schraubenfedern 72 angeordnet. An beiden Enden der Tretwelle sind jeweils Befestigungsbereiche 74, 75 für Tretkurbeln angeordnet, die in Fig. 1 im Querschnitt gezeigt sind.

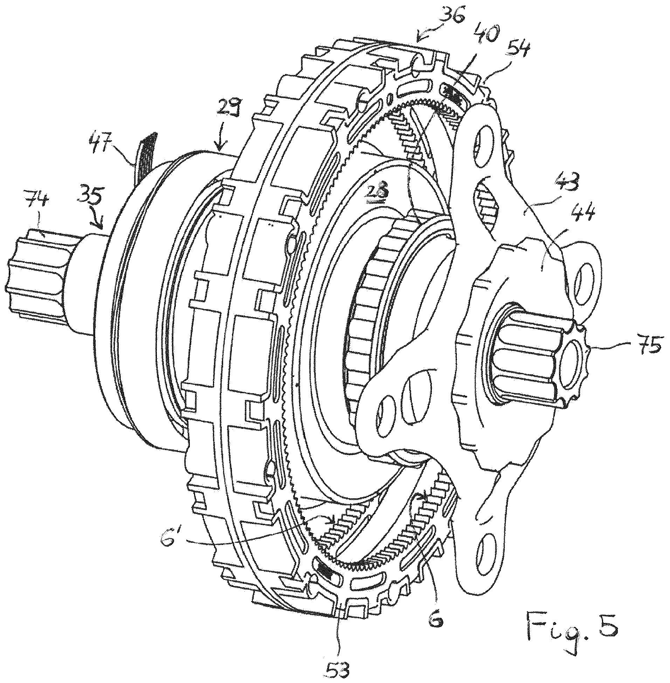

Fig. 5 zeigt eine perspektivische Ansicht einer inneren Baugruppe des Getriebes von Fig. 1 im zusammengebauten Zustand. Der Übersichtlichkeit halber sind in Fig. 5 das Innenrad 7 und das flexible Kugellager 33 fortgelassen.

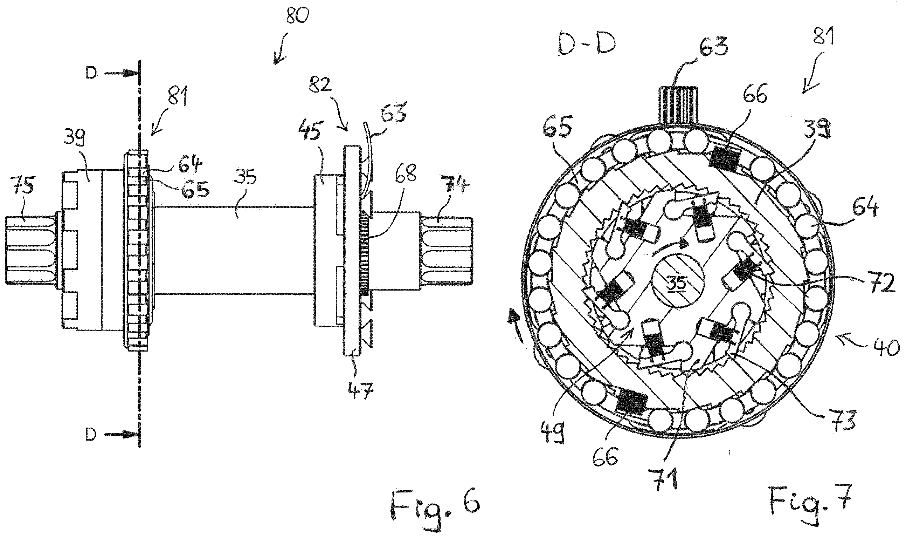

Fig. 6 zeigt eine Tretwellen-Baugruppe 80 bzw. Tretwellen-Einheit 80 des Getriebes 10 von Fig. 1, wobei sich die Antriebsseite rechts und die Abtriebsseite links befinden. Die Tretwellen-Baugruppe 80 weist eine Freilauf-Anordnung 81 und eine Sensor-Anordnung 82 auf. Die Blickrichtung der Ansicht von Fig. 6 ist im eingebauten Zustand in Gegenfahrtrichtung.

Fig. 7 zeigt einen Querschnitt durch die Freilauf-Anordnung 81 von Fig. 6 entlang der Schnittlinie D-D, der von der Abtriebsseite her betrachtet ist, wobei im Hintergrund das zu der Sensor-Anordnung 82 gehörige Flachkabel 63 sichtbar ist. Weiterhin sind auf der rechten Seite der Kraftmessdose 47 Schraubenköpfe der Schrauben erkennbar, mit denen die ringförmige Leiterplatte 23 an der Kraftmessdose 47 festgeschraubt ist.

Die Freilaufanordnung 81 weist den Tretwellen-Freilauf 49 und den Getriebe-Freilauf 40 auf, wobei die Ab- triebswelle 39 zugleich als Außenring des Tretwellen-Freilaufs 49 und als Innenring des Getriebe-Freilaufs 40 ausgebildet ist. Wie in Fig. 7 gezeigt, ist der Tretwellen-Freilauf 49 als Sperrklinken-Freilauf ausgebildet während der Getriebe- Freilauf 40 als Klemmrollen-Freilauf mit zylindrischen Klemmrollen 64 ausgebildet ist. Der innere Umfang der Abtriebswelle 39 bildet eine gezackte Treppe, deren Stufen Anschläge für die Sperrklinken 73 bilden, die durch die Schraubenfedern 72 an den inneren Umfang der Abtriebswelle 39 gedrückt werden.

In ähnlicher Weise bildet der äußere Umfang der Abtriebswelle 39 eine auch als "Stern" bezeichnete gezackte Treppe, deren Stufen Anschläge für die Zylinderrollen 64 des Getriebe-Freilaufs 40 bilden. Der Freilaufkäfig 65 und damit die Zylinderrollen 64 werden durch die Schraubfedern 66, die zwischen dem äußeren Umfang der Abtriebswelle 39 und dem Freilaufkäfig 65 angeordnet sind, an den äußeren Umfang der Antriebswelle 39 gedrückt.

Die Stufen der Antriebswelle 39 sind dabei so angeordnet, dass eine Freilaufrichtung des Tretwellen-Freilaufs 49 und eine Freilaufrichtung des Getriebe-Freilaufs 40 in der Ansicht von Fig. 7 im Gegenuhrzeigersinn verläuft. Diese Freilaufrichtung ist jeweils umgekehrt zur jeweiligen Antriebsrichtung bzw. Sperrrichtung.

Somit kann die Tretwelle 35 die Abtriebswelle 39 im Uhrzeigersinn antreiben, solange sich die Abtriebswelle 39 nicht schneller bewegt als die Tretwelle 35 und der Außenring des Getriebe-Freilaufs 40, der durch einen inneren Bereich des Innenrads 5 gebildet wird, kann die Abtriebswelle 39 im Uhrzeigersinn antreiben, solange sich die Abtriebswelle 39 nicht schneller bewegt als der Außenring. Die Antriebs- bzw. Sperrrichtungen der Freiläufe 40, 49 sind in Fig. 7 jeweils durch Pfeile angedeutet.

Fig. 10 zeigt eine vereinfache Querschnittsansicht, wodurch die in dem Getriebe von Fig. 1 verwendeten Kraftmessdose 47 und die Verwendung einer schräg angestellten Lagerung veranschaulicht wird. Zur Vereinfachung ist in dieser Darstellung der elektrische Motor und der Antriebsstrang des elektrischen Motors weggelassen, so dass die Tretwelle 35 direkt auf einem Gehäusedeckel 32' gelagert ist.

Gemäß Fig. 10 ist das antriebsseitige Tretwellen-Kugellager 45 und das abtriebsseitige Tretwellen-Kugellager 46 jeweils als ein Schrägkugellager ausgebildet, das in gewissem Umfang axiale Kräfte aufnehmen kann. Anstelle von Kugellagern können auch andere Lagertypen vorgesehen sein, die neben Radialkräften auch Axialkräfte aufnehmen können, wie beispielsweise Schrägrollenlager. Dies ist jedoch in der Regel aufwendiger als die Verwendung von Kugellagern.

Die Kraftmessdose 47, die über das Lager 45 auf der Tretwelle 35 gelagert ist, weist Stützlaschen 91 und Messlaschen 90 auf. Die Stützlaschen 91 sind in axialer Richtung an einem Außenring des Kugellagers abgestützt und die Messlaschen 90 sind in radialer Richtung an dem Außenring abgestützt. An mindestens zwei der 90 Messlaschen sind Dehnmessstreifen angebracht. Der Innenring des Kugellagers 45 liegt zur Mitte der Tretwelle 35 hin an einer Schulter bzw. an einem Absatz der Tretwelle 35 an.

Der Innenring des Kugellagers 46 liegt zur Mitte der Tretwelle 35 hin über eine Wellenfeder 70 an einer Schulter der Tretwelle 35 an. Der Außenring des Kugellagers 46 liegt über eine Abstandsscheibe an dem Getriebedeckel 44' an.

Im Betrieb überträgt ein Fahrer radiale Kräfte über eine Tretkurbel auf die Tretwelle 35. Diese radialen Kräfte werden von den Messlaschen 90 aufgenommen und führen zu einer Verformung der Messlaschen 90, die durch die Dehnmessstreifen bestimmt wird. Dagegen führen axiale Kräfte auf den Außenring des Kugellagers 45 nicht zu einer Verformung der zweiten Laschen. Stattdessen werden die axialen Kräfte durch die Stützlaschen 91 der Kraftmessdose 47 aufgenommen, wodurch das Kugellager 45 seitlich gehalten wird.

Im Vergleich zu der Krafteinwirkung des Fahrers auf die Kraftmessdose führt ein eventuell vorhandenes Drehmoment durch einen Hilfsantrieb nicht oder nur unwesentlich zu einer Verformung der zweiten Laschen. Somit kann der Beitrag des Fahrers für sich bestimmt werden. Zusätzlich kann ein Winkelpositionssensor vorhanden sein, mit dessen Hilfe die Position der Tretkurbeln bestimmt werden kann und dadurch der Hebelarm der Pedale. Durch ein geeignetes Rechenmodell, das durch ein gespeichertes Programm und/oder Schaltkreis umgesetzt wird, kann das von dem Fahrer bereitgestellte Drehmoment aus den gemessenen Radialkräften rekonstruiert werden.

Figur 10 illustriert eine Ableitung axialer Kräfte in das Gehäuse gemäß dem Lagerungskonzept des Getriebes von Fig. 1 bis 9.

Wie rechts unten in Fig. 10 gezeigt wird eine abtriebsseitige axiale Kraft der Tretwelle 35 über eine Schulter der Tretwelle 35, das abtriebsseitige Tretwellen-Kugellager 46, die Wellenfeder 70, die Abtriebsmutter 44, das Innengewinde der Abtriebs-Hohlwelle 39, die Abtriebs-Hohlwelle 39, einen Absatzder Abtriebs-Hohlwelle 39, das Abtriebs-Kugellager 41, den Gehäusedeckel 32, die Schrauben 34 und das Schraubgewinde 60 in das Gehäuse 22 abgeleitet.

Eine antriebsseitige axiale Kraft der Tretwelle 35 wird über einen antriebsseigen Absatz 123 der Tretwelle 35, das antriebsseitige Tretwellen Kugellager 45, Axial-Stützlaschen der Kraftmessdose 47 und einen Befestigungsring der Kraftmessdose 47 in das Gehäuse 22 abgeleitet.

Wie rechts oben in Fig. 10 gezeigt ist, wird eine abtriebsseitige axiale Kraft der Rotorwelle 28 über das abtriebsseitige Rotor-Kugellager 30, das Innenrad 7 und das Innenrad-Kugellager 31 in den Gehäusedeckel abgeleitet. Von dort wird die axiale Kraft über die Schrauben 34 in das Gehäuse 22 abgeleitet, wie rechts unten in Fig. 10 gezeigt.

Eine antriebsseitige axiale Kraft der Rotorwelle 27 wird über eine Schulter 9 der Rotorwelle 27, die äußere Rotorwelle 26, den Distanzring 62, das antriebsseitige Rotor-Kugellager 29 und die Wellenfeder 61 in das Gehäuse 22 abgeleitet.

Weiterhin wird eine axiale Kraft auf das auf der Kurvenscheibe angeordnete Kugellager 33 über das Innenrad 7 und das Kugellager 31 in das Getriebegehäuse 22 abgeleitet. Die Gegenkraft dazu wird über einen Absatz 9 der Kurvenscheibe 28 in die Rotorwelle 27 und von dort über den oben beschriebenen Weg in das Gehäuse 22 abgeleitet.

Das Innenrad 7 verjüngt sich radial einwärts eines äußeren Umfangs, so dass nur der Außenring des Kugellagers 33 an dem Innenrad 7 anliegt, der sich im Wesentlichen synchron mit dem Pinring 101 und mit dem Innenrad 7 bewegt, und nicht der Innenring des Kugellagers 33, der wesentlich schneller als das Innenrad 7 rotiert. Die Breite der Wellenfeder 70 ist so eingestellt, dass der Kettenblattadapter 43 nicht an den Gehäusedeckel 32 anstößt.

Die Figuren 11 bis 20 zeigen ein harmonisches Pinring-Getriebe mit exzentrischer Kurvenscheibe, wobei die exzentrische Kurvenscheibe eine exzentrisch angeordnete Kreisscheibe ist.

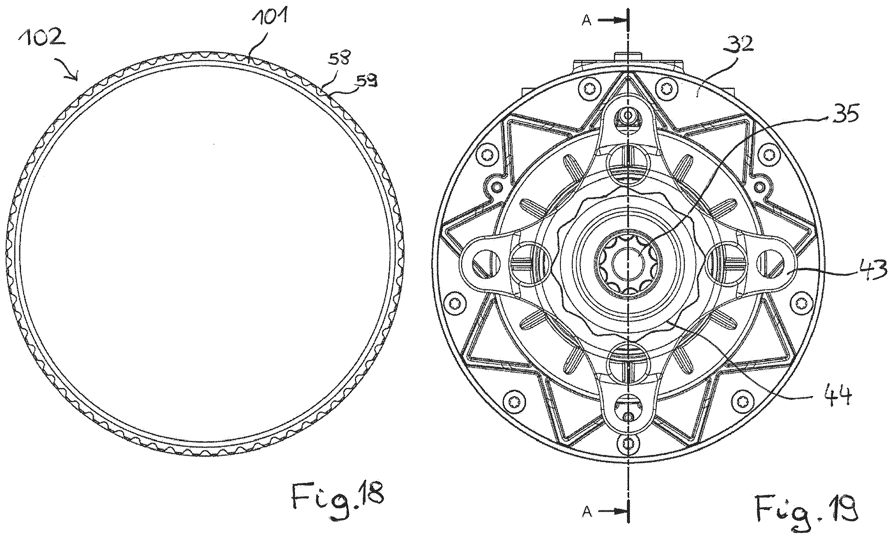

Fig. 11 zeigt eine Querschnittsansicht eines harmonischen Pinring-Getriebes 10. Die Querschnittsebene A-A der Fig. 11 ist in Fig. 19 gekennzeichnet. In Fig. 11 entspricht die lin-ke Seite einer Antriebsseite und die rechte Seite einer Ab-triebsseite des harmonischen Pinring-Getriebes 10.

Ein Stator 20 einer Stator-Baugruppe des harmonischen Pin-ring-Getriebes 10 ist in einem Motorgehäuse 22 angeordnet. Der Stator 20 weist drei separate Spulen 21 zum Anschluss an drei Phasen eines Dreiphasen-Wechselrichters auf. Der Dreiphasen-Wechselrichter ist als eine Leistungselektronik ausgebildet, die auf einer Leiterplatte 23 angeordnet ist, wobei die Leiterplatte 23 in einem Kühldeckel 24 angeordnet ist, das antriebsseitig auf das Motorgehäuse 22 aufgesetzt ist. Die drei Spulen des Stators 20 sind mit dem Dreiphasen-Wechselrichter durch drei Anschlüsse 25 verbunden, von denen einer in Fig. 11 gezeigt ist.

Das Motorgehäuse 22 und der Kühldeckel 24 weisen jeweils zylindrische hervorkragende Abschnitte auf, die eine zentral durch das Motorgehäuse 22 verlaufende Tretwelle 35 um-schließen. Die Leiterplatte 23 ist als eine Lochscheibe ausgebildet, die außerhalb der hervorkragenden Abschnitte befindet, so dass die darauf befindliche Elektronik gegen Öl und Fett des Getriebes abgedichtet ist.

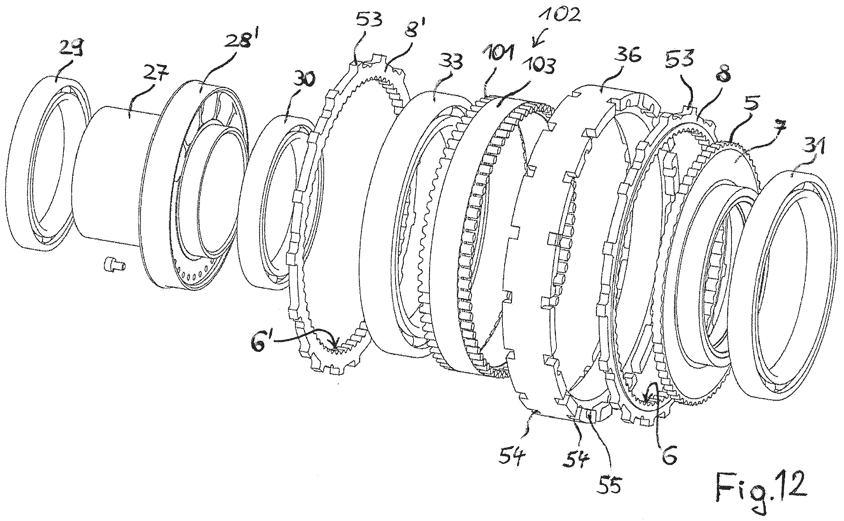

Eine äußere Rotorwelle 26, die mit Permanentmagneten bestückt ist, ist radial innerhalb des Stators 20 angeordnet. Diese äußere Rotorwelle 26 wird auch als "Rotorpaket" bezeichnet. Die äußere Rotorwelle 26 weist an ihrer Innenseite einen elastischen Bereich auf, der auf einer inneren Rotorwelle 27 aufgesteckt ist. Auf der inneren Rotorwelle 27 ist abtriebsseitig eine exzentrisch angeordnete kreisförmige Exzenterscheibe 28' ausgeformt, die in Fig. 12 näher gezeigt ist.

Die innere Rotorwelle 17 ist an der Antriebsseite nach außen durch ein antriebsseitiges Rotor-Kugellager 29 in dem Motorgehäuse 22 gelagert. Und zwar ist ein Außenring des antriebsseitigen Rotor-Kugellagers 29 in einer zylindrischen Aussparung des Motorgehäuses 22 angeordnet.

Weiterhin ist die innere Rotorwelle 27 an der Abtriebsseite in einem abtriebseitigen Rotor-Kugellager 30 radial nach außen in einem Innenrad 7 gelagert. Eine Hohlwelle des Innenrads 7 ist abtriebsseitig integral mit einem ringförmigen Bereich des Innenrads 7 verbunden, der eine Außenverzahnung 5 aufweist.

Die Hohlwelle des Innenrads 7 ist ihrerseits radial nach außen über ein Innenrad-Kugellager 31 auf einem Gehäusedeckel 32 gelagert, der an dem Motorgehäuse 22 durch Schrauben 34 festgeschraubt ist. Das Innenrad-Kugellager 31 ist gegenüber dem abtriebsseitigen Rotor-Kugellager 30 in axialer Richtung zur Abtriebsseite hin versetzt und ist in radialer Richtung nach außen hin versetzt. Außerdem überlappt das Innenrad-Kugellager 31 mit dem abtriebsseitigen Rotor-Kugellager 30 in axialer Richtung.

Auf der exzentrischen Kreisscheibe 28 der inneren Rotorwelle 27 ist ein Kugellager 33 aufgespannt. Auf dem Kugellager 33 liegt ein Pin-Haltering 103 mit Pins 101 auf, wobei die Pins 101 in zylindrischen Aussparungen an der Innenseite eines Pin-Halterings gehalten sind.

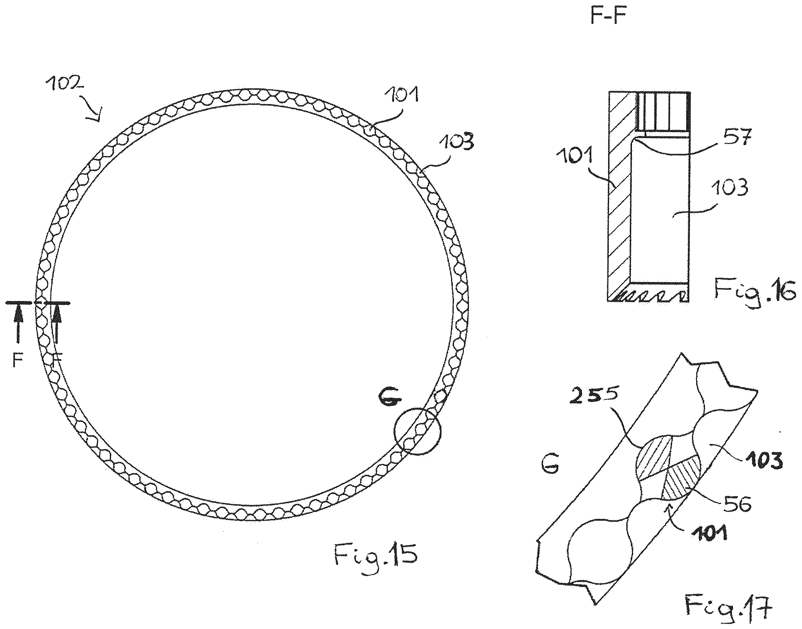

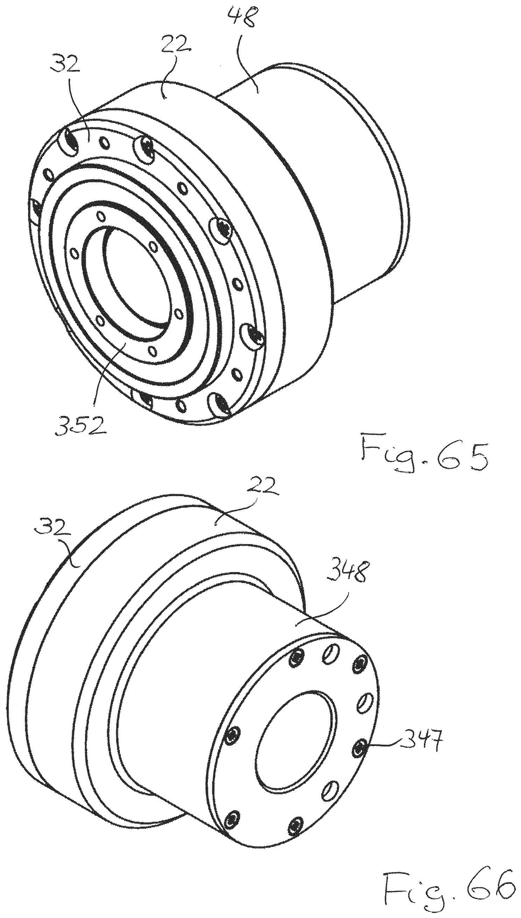

Die Pinring-Anordnung aus Pins 101 und Pin-Haltering 103 ist in den Figuren 15 bis 17 näher gezeigt. Gemäß dem Ausführungsbeispiel der Figuren 15 bis 17 ist der Pinring 103, anders als im Ausführungsbeispiel der Figuren 1 bis 10, aus einem Stück ausgeformt und weist Bereiche auf, die den Pins 101 und dem Pin-Haltering 103 entsprechen. Die einstückige Ausführungsform des Pinrings 103 eignet sich besonders gut für ein Getriebe, bei dem der Pinring nicht oder nur unwesentlich deformiert wird. Dies ist beispielsweise bei einem Getriebe mit exzentrisch angeordneter Kreisscheibe der Fall, welches in den Figuren 11 bis 20, 61 bis 66, 67 und 72 gezeigt ist. Die Pins 101 des Pinrings 103 stehen in axialer Richtung zu beiden Seiten über das flexible Kugellager 33 und über den Pin-Haltering 103 hervor.

Die Exzenterscheibe 28' und das Kugellager 33 bilden zusammen eine Transmitteranordnung, die eine Drehbewegung in eine radiale Bewegung umwandelt, die durch das Kugellager 33 und den Pinring 103 auf die Pins 101 übertragen wird, und die anschließend durch den Eingriff der Pins 101 in die Außenräder 8, 8' wieder in eine Drehbewegung umgewandelt wird.

Der Gehäusedeckel 32 ist auf der Abtriebsseite des Motorge-häuses an dem Motorgehäuse mit Befestigungsschrauben 34 aufgeschraubt. Weiterhin sind ein antriebsseitiges Außenrad 8' und ein abtriebsseitiges Außenrad 8 in einen Stützring 36 eingesteckt und durch die Schrauben 34 an dem Stützring 36 festgeschraubt. Zwischen dem abtriebsseitigen Außenrad 8 und dem Gehäusedeckel ist radial außen ein O-Ring 42 eingefügt.

Das antriebsseitige Außenrad 8' und das abtriebsseitige Au-ßenrad 8 sind in axialer Richtung außerhalb der Exzenter-scheibe 28' und des Kugellagers 33 angeordnet. Das antriebseitige Außenrad 8' steht in radialer Richtung den Bereichen der Pins 101 gegenüber, die auf der Antriebseite in axialer Richtung über den Pin-Haltering 103 überstehen. Das abtriebsseitige Außenrad 8 steht in radialer Richtung den Bereichen der Pins 101 gegenüber, die auf der Abtriebsseite in axialer Richtung über den Pin-Haltering 103 überstehen.

Auf der Antriebsseite ist ein antriebsseitiger Anlaufring 37 so in dem Motorgehäuse 22 angeordnet, dass er den an-triebseitigen Stirnflächen der Pins 101 in axialer Richtung gegenübersteht. In ähnlicher Weise ist auf der Ab-triebseite ein abtriebsseitiger Anlaufring 38 so in dem Motorgehäuse 22 angeordnet, dass er den abtriebsseitigen Stirnflächen der Pins 101 in axialer Richtung gegenübersteht.

Eine Abtriebswelle 39 ist radial innerhalb der Hohlwelle des Innenrads 7 angeordnet, wobei ein Getriebe-Freilauf 40 zwischen der Hohlwelle des Innenrads 7 und der Abtriebswelle 39 angeordnet ist. Die Abtriebswelle 39 ist radial nach außen in ein einem abtriebsseitigen Abtriebs-Kugellager 41 gelagert, das in eine zylinderförmige Aussparung oder Schulter des Gehäusedeckels 32 eingesetzt ist. Der abtriebsseitige Bereich der Abtriebswelle 39 steht in axialer Richtung über den Gehäusedeckel 32 über. Eine Kettenblattadapter 43 ist auf die Abtriebswelle 39 aufgesetzt, der über einen Getriebedeckel 44 festgehalten ist, der in ein Innengewinde der Abtriebswelle 39 eingeschraubt ist.

Die oben genannte Tretwelle 35 ist konzentrisch zur Rotor-welle 27 und zur Abtriebswelle 39 teilweise im Innern der Rotorwelle 27 und teilweise im Innern Abtriebswelle 39 an-geordnet. Die Tretwelle 35 ist über ein antriebsseitiges Tretwellen-Kugellager 45 radial nach außen in einer Kraftmessdose 47 gelagert, die ihrerseits in das Motorgehäuse 22 eingesetzt ist. Eine Leiterplatte 48 mit einem Kraftsensor ist an der Kraftmessdose 47 befestigt und ein Anschluss der Leiterplatte 48 ist über ein Flachkabel 63 radial nach außen geführt und mit der Elektronik auf der Leiterplatte 23 verbunden.

In antriebsseitiger Richtung von dem abtriebsseitigen Tret-wellen-Kugellager 46 ist ein Tretwellen-Freilauf 49 zwischen der Tretwelle 35 und der Abtriebswelle 39 angeordnet. Radial nach außen schließen sich der Getriebe-Freilauf 40, die Hohlwelle des Innenrads 7 und das Innenrad-Kugellager 31 an. Anstatt eines einzelnen Tretwellen-Freilaufs 49 können auch zwei benachbarte Freiläufe oder ein einzelner Freilauf und ein dazu benachbartes Wälzlager, wie zum Beispiel ein Nadellager, eingebaut werden.

Abtriebsseitig von dem abtriebsseitigen Tretwellen-Kugellager 46 ist gegenüber dem abtriebsseitigen Tretwellen-Kugellager 46 ein innerer Wellendichtring 50 zwischen der Tretwelle 35 und der Abtriebswelle 39 eingefügt. Weiterhin ist ein äußerer Wellendichtring 51 gegenüber dem abtriebsseitigen Abtriebs-Kugellager 46 zwischen der Abtriebswelle 39 und dem Gehäusedeckel 32 angeordnet. Ein weiterer Wellendichtring 52 ist auf der Antriebsseite zwischen dem Kühldeckel 24 und der Tretwelle 35 angeordnet.

Im Betrieb wird vom Stator 20 durch elektromagnetische Kraftwirkung ein Eingangs-Drehmoment auf die äußere Rotorwelle 26 und von dort auf die innere Rotorwelle 27 übertragen, das durch die Exzenterscheibe 28' und das Kugellager 33 in eine Radialkraft umgewandelt wird. Diese Radialkraft wird an den Zahnflanken Innenverzahnungen 6, 6' der Außenräder 8, 8' und des Außenverzahnung 5 des Innenrads 7 in ein Ausgangs-Drehmoment umgewandelt, wobei das Innenrad 7 abgetrieben ist, und die Außenräder 8, 8' am Gehäuse festgelegt sind. Das Ausgangs-Drehmoment ist um das Untersetzungsverhältnis größer als das Eingangsdrehmoment.

Die innere Verzahnung, die durch die Außenverzahnung 5 des Innenrads 7 gebildet wird, liegt gegenüber der Innenverzah-nung 6 des abtriebsseitigen Außenrads 8, und stellt dadurch das Abtriebsdrehmoment bereit, insbesondere durch diejenigen Pins 101, die sowohl an der Außenverzahnung 5 als auch an den Innenverzahnungen 6, 6' anliegen.

Fig. 12 zeigt eine Explosionsansicht des Getriebes von Fig. 11, in der, von der Antriebsseite zur Abtriebsseite her gesehen, das antriebsseitige Rotor-Kugellager 29, die innere Rotorwelle 27, die Exzenterscheibe 28', das abtriebsseitige Rotor-Kugellager 30, das zweite Außenrad 8', das Kugellager 33, der Pinhaltering 103 mit den Pins 101, der Stützring 36, das erste Außenrad 8, das Innenrad 7 mit der Innenrad-Hohlwelle und das Innenrad-Kugellager 31 gezeigt sind.

Die Außenräder 8, 8' weisen jeweils Zapfen 53 auf, die ra-dial von dem jeweiligen Außenrad 8, 8' nach außen abstehen und in gleichmäßigen Abständen über den Umfang des Außen-rads 8, 8' verteilt sind. Der Stützring 36 weist an radial gegenüberliegenden Seiten zu den Zapfen 53 passende auf dem Umfang verteilte radiale Schlitze 54 auf. Zusätzlich sind zur Befestigung der Außenräder Schraublöcher 55 vorgesehen, die sich in dem Ausführungsbeispiel von Fig. 12 teilweise in den Außenrädern 8, 8' und teilweise in dem Stützring 36 befinden.

Zwischen dem antriebsseitigen Rotor-Kugellager 29 und dem Motorgehäuse 22 ist antriebsseitig von dem antriebsseitigen Rotor-Kugellager 29 eine Wellenfeder 61 angeordnet und zwi-schen dem antriebsseitigen Rotor-Kugellager 29 und der äu-ßeren Rotorwelle 26 ist abtriebsseitig von dem antriebssei-tigen Rotor-Kugellager 29 ein Abstandsring 62 angeordnet.

Insbesondere kann der Stützring 36 aus Aluminium bestehen und die Außenräder 8, 8' aus Plastik, wie zum Beispiel Polyamid 66 (PA66), wobei der Stützring 36 insbesondere durch Aluminium-Druckguss hergestellt sein kann, und die Außenräder insbesondere durch einen Plastik-Spritzguss hergestellt sein können. Des Weiteren kann die innere Rotorwelle 27 aus Aluminium hergestellt sein.

Wie in Fig. 11 gezeigt ist, reichen die Schrauben 34 im zusammengebauten Zustand durch den Getriebedeckel 32, das erste Außenrad 8, das zweite Außenrad 8' und den Stützring 36 in das Motorgehäuse 22.

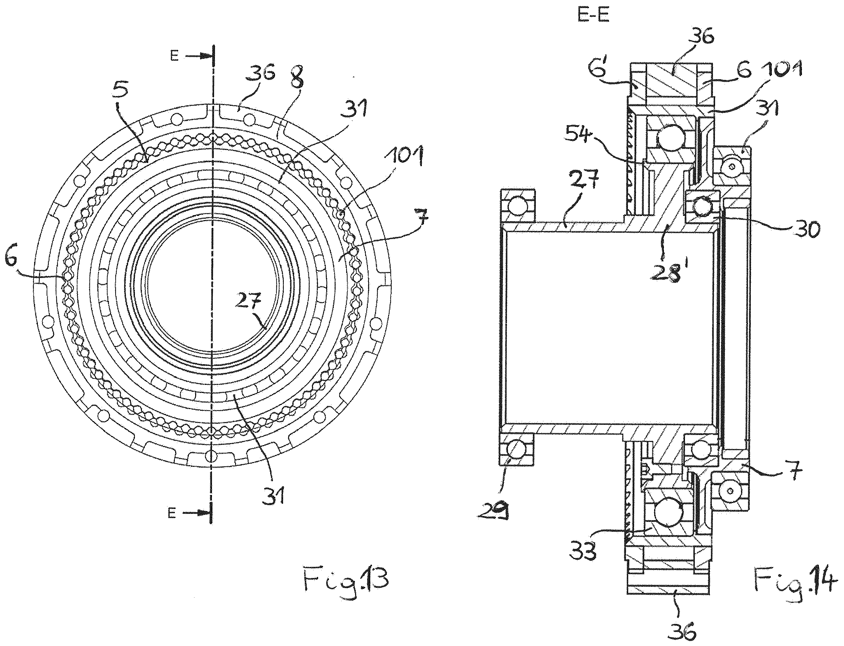

Fig. 13 zeigt eine von der Abtriebsseite gesehene Seitenansicht einer zusammengebauten Anordnung aus innerer Rotor-welle 27, Innenrad 7, Pins 101 und Außenrad 8. Wie in Fig. 13 erkennbar ist liegen die Pins 101 bei einer vorgegebenen Stellung der Exzenterscheibe 28' an einer ersten Position vollständig an der äußeren Innenverzahnung 6 an und in einer zweiten Position, die der ersten Position gegenüberliegt, vollständig an der inneren Außenverzahnung 5 an.

Fig. 14 zeigt eine Querschnittsansicht durch die Anordnung von Fig. 13 entlang der Schnittlinie E-E. Wie in der Quer-schnittsansicht von Fig. 14 gezeigt, weist die Exzenter-scheibe 28' antriebsseitig einen Absatz 11 auf, durch den ein Innenring des Kugellagers 33 von der Antriebsseite her festgehalten ist.

Fig. 15 zeigt eine abtriebsseitige Ansicht eines Pinrings 102 zur Verwendung in dem Getriebe der Fig. 11. Die Figuren 16 und 17 zeigen Detailansichten des Pinrings 102 von Fig. 15 und Figur 18 zeigt eine antriebsseitige Ansicht des Pinrings 102 von Fig. 15.

Der Pinring 102 weist einen Pin-Haltering 103 und Pins 101 auf. Der Pinring 102 ist einstückig ausgebildet, wobei der Pin-Haltering 103 und die Pins 101 jeweils durch Bereiche des Pinrings 102 ausgebildet sind, der in einem Stück ausgeformt ist. Die Pins 101 sind an eine Abtriebsseite und an einer gegenüberliegenden Antriebsseite jeweils unterschiedlich ausgeformt.

Und zwar sind die Pins an der Abtriebsseite des Pinrings 102, an der die Pins 101 sowohl in das Innenrad 7 als auch in das Außenrad 8 eingreifen, linsenförmig ausgeformt, wobei zwei radial gegenüberliegende Bereiche jeweils eine kreisabschnittsförmige Begrenzung aufweisen und zwei peripher gegenüberliegende Bereiche jeweils spitz zulaufen. Dies ist am besten in der Seitenansicht der Fig. 17 erkennbar, die in Fig. 15 mit "G" markiert ist.

Dagegen sind die Pins 101 an der Antriebsseite, an der die Pins 101 nur in das zweite Außenrad 8' eingreifen als "halbe Pins" ausgeformt, die jeweils Zinken eines Kamms bilden, der entlang des Umfangs des Pinrings 102 verläuft, wie in der Querschnittsansicht der Fig. 16 und in der Ansicht von Fig. 18 gezeigt.

In der Seitenansicht der Fig. 17 ist weiterhin ein erster Bereich 255 eines Pins 101 gezeigt, der an das Innenrad 7 Drehmoment überträgt und ein zweiter dazu radial gegenüberliegender Bereich 56, der an das Außenrad 8 Drehmoment überträgt. Durch die entlang der Umfangsrichtung spitz zulaufenden Bereiche der Pins 101 entstehen tangentiale Übergänge zwischen den Pins 101. Dadurch kann zum einen eine wirtschaftliche CNC Fertigung der Pins 101 bereitgestellt werden und zum andern eine höhere tangentiale Steifigkeit der Pins 101 erreicht werden.

Gemäß einem weiteren Herstellungsverfahren wird der Pinring durch Fließformung hergestellt. Nach diesem Verfahren wird zunächst ein Hohlring hergestellt, aus dem dann durch Abstechen oder Abfräsen die Pins 101 ausgeformt werden. Bei einer Ausformung durch Abfräsen kann eine sich drehende Fräsmaschine verwendet werden, die sich auf einer Kreislinie bewegt, wobei die Pins in radialer Richtung erst von innen, dann von außen ausgeformt werden.

Das Fließformen ist zum Beispiel in den Standards DIN 8582 und DIN 8583 näher definiert. Gemäß einem speziellen Verfahren wird ein umzuformendes Werkstück zunächst auf einem Montagedorn aufgebracht. Das umzuformende Werkstück wird anschließend von außen durch Fließformräder verformt, die durch einen Vorschubantrieb in kontrollierter Weise angetrieben werden, gegen das Werkstück drücken und das Material in kontrollierter Weise ausdünnen.

Weiterhin ist an der Abtriebsseite der Pins 101 radial innen ein Absatz 57 ausgebildet. Wie in Fig. 11 erkennbar ist, liegt dieser Absatz 57 im eingebauten Zustand des Pinrings 102 auf der Abtriebsseite auf dem Außenring des Kugellagers 33 auf.

Wie in der antriebsseitigen Ansicht des Pinrings 102 von Fig. 8 gezeigt, ist an der Antriebsseite des Pinrings 102 ein Kamm mit runden Vertiefungen 58 und dazwischenliegenden Plateaus 59 ausgebildet. Die dazwischenliegenden Plateaus 59 bilden eine Verlängerung der in Fig. 17 im Detail gezeigten Pins 101 und können somit als antriebsseitiger Bereich der Pins 101 aufgefasst werden.

Fig. 19 zeigt eine abtriebsseitige Ansicht des zusammengebauten Getriebes von Fig. 11, in der die Querschnittsebene der Figur 11 mit "A" markiert ist.

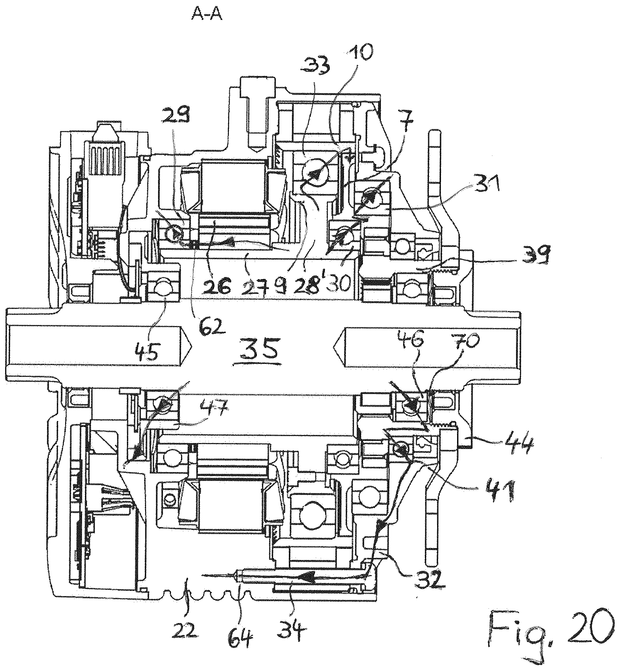

Figur 20 illustriert eine Ableitung axialer Kräfte in das Gehäuse gemäß dem Lagerungskonzept des Getriebes von Fig. 11 bis 19.

Wie rechts unten in Fig. 20 gezeigt ist, wird eine abtriebsseitige axiale Kraft der Tretwelle 35 über eine Schulter der Tretwelle 35, das abtriebsseitige Tretwellen-Kugellager 46, die Wellenfeder 70, die Abtriebsmutter 44, das Innengewinde der Abtriebs-Hohlwelle 39, die Abtriebs-Hohlwelle 39, einen Absatz der Abtriebs-Hohlwelle 39, das Abtriebs-Kugellager 41, den Gehäusedeckel 32, die Schrauben 34 und das Schraub-gewinde 69 in das Gehäuse 22 abgeleitet.

Eine antriebsseitige axiale Kraft der Tretwelle 35 wird über einen antriebsseigen Absatz 123 der Tretwelle 35, das antriebsseitige Tretwellen Kugellager 45, Axial-Stützlaschen der Kraftmessdose 47 und einen Befestigungsring der Kraftmessdose 47 in das Gehäuse 22 abgeleitet.

Wie rechts oben in Fig. 10 gezeigt ist, wird eine abtriebs-seitige axiale Kraft der Rotorwelle 27 über das abtriebsseitige Rotor-Kugellager 30, das Innenrad 7 und das Innen-rad-Kugellager 31 in den Gehäusedeckel abgeleitet. Von dort wird die axiale Kraft über die Schrauben 34 in das Gehäuse 22 abgeleitet, wie rechts unten in Fig. 20 gezeigt.

Eine antriebsseitige axiale Kraft der Rotorwelle 27 wird über einen antriebsseitigen Absatz der Rotorwelle 27, die äußere Rotorwelle 26, den Distanzring 62, das antriebsseitige Rotor-Kugellager 29 und die Wellenfeder 61 in das Gehäuse 22 abgeleitet.

Weiterhin wird eine axiale Kraft über einen Absatz 9 der Kurvenscheibe 28 auf das Kugellager 33 über eine Absatz 10 des Pinrings 100, das Innenrad 7 und das Kugellager 31 in das Getriebegehäuse 22 abgeleitet. Die entsprechende Gegenkraft wird über den Absatz 9 der Kurvenscheibe 28 in die Rotorwelle 28 und von dort über den oben beschriebenen Weg in das Gehäuse 22 abgeleitet.

Das Innenrad 7 verjüngt sich radial einwärts eines äußeren Umfangs, so dass nur der Außenring des Kugellagers 33 an dem Innenrad 7 anliegt, der sich im Wesentlichen synchron mit dem Pinring 101 und mit dem Innenrad 7 bewegt, und nicht der Innenring des Kugellagers 33, der wesentlich schneller als das Innenrad 7 rotiert. Die Breite der Wellenfeder 70 ist so eingestellt, dass der Kettenblattadapter 43 nicht an den Gehäusedeckel 32 anstößt.

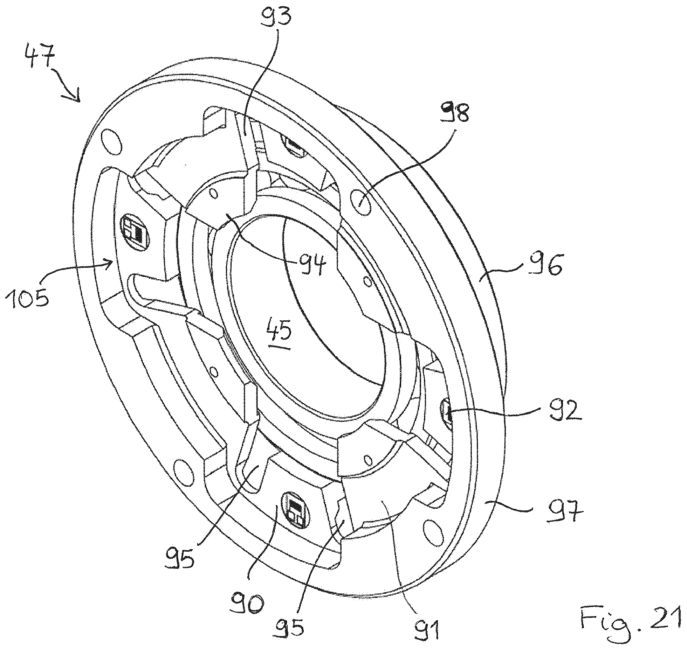

Die Ausführungsbeispiele der Figuren 21 bis 44 offenbaren Vorrichtungen und Verfahren zur Messung eines Drehmoments, das auf auf eine Tretwelle eines mit einem Elektroantrieb unterstützten Fahrrades einwirkt.

Durch die Messung des Drehmomentes auf eine Tretwelle kann die Unterstützung eines Elektromotors für ein elektrisches Fahrrad eingestellt werden. Hierfür sind verschieden Verfahren bekannt. Zum Beispiel kann das Drehmoment berührungsfrei durch eine magnetische Messung der Verspannung der Tretwelle bestimmt werden. Bei einem anderen Verfahren wird eine mechanische Verformung der Tretlageraufhängung bestimmt. Eine entspreche Vorrichtung ist beispielsweise in der Patentanmeldung DE 102013220871 A1 offenbart. Gemäß dieser Vorrichtung wird ein einziger elektromagnetischer oder mechanischer Sensor dazu verwendet um eine horizontale Auslenkung oder Verformung der Tretlageraufhängung zu bestimmen.

Die vorliegende Beschreibung offenbart eine Kraftmessdose zur Bestimmung einer radialen Kraft auf eine Kurbelwelle mit einer Aufnahmehülse zur Aufnahme eines Rings eines Lagers und einem Befestigungsring zur Befestigung der Kraftmessdose in einem Getriebegehäuse. Axialstützbereiche sind an dem Befestigungsring zur axialen Abstützung des Außenrings des ersten Lagers vorgesehen. Messbereiche, die die Aufnahmehülse mit dem Befestigungsring verbinden, sind zur Aufnahme von radialen Kräften der Aufnahmehülse vorgesehen.

An mindestens zwei der Messbereiche sind Dehnungssensoren befestigt. Die Dehnungssensoren können insbesondere als Dehnmessstreifen ausgebildet sein, wobei die Dehnmessstreifen an einer Oberfläche der Messbereiche angeklebt sein können.

Die Axialstützbereiche und die Messbereiche können insbesondere als Laschen bzw. Finger ausgebildet sein. Weiterhin können die Messbereiche als winkelförmige Laschen ausgebildet sein.

Die radiale Kraft auf die Kurbelwelle wird indirekt durch eine auf die Aufnahmehülse wirkende radiale Kraft bestimmt, die ihrerseits über ein Lager von der Kurbelwelle an die Aufnahmehülse weitergeleitet wird. Bei der Kurbelwelle kann es sich insbesondere um eine Tretwelle handeln.

Die Kraftmessdose kann insbesondere in Elektrofahrrädern zur Ausregelung einer Motorunterstützung eingesetzt werden, wobei eine Tretwelle über die Kraftmessdose in axialer Richtung abgestützt ist. Im weiteren Sinne kann die Kraftmessdose überall dort verwendet werden, wo an einer Welle eine radiale Kraft in eine Drehbewegung der Welle umgewandelt wird, insbesondere bei einer Fahrradtretwelle oder bei einem Kolben der durch einen Verbrennungsmotor oder einen sonstigen Antrieb angetrieben wird. In diesem Fall kann die Messung der radialen Kräfte über die Kraftmessdose eine Berechnung des auf die Welle ausgeübten Drehmoments erlauben. Die radialen Kräfte könne aber auch ohne den Zwischenschritt einer Drehmomentberechnung zur Erzeugung von Steuersignalen verwendet werden.

Wenn keine Umwandlung von radialen Kräften vorliegt, wie zum Beispiel bei einem Zahnradgetriebe, kann eine Kraftmessdose gemäß der vorliegenden Beschreibung auch dazu verwendet werden, eine Unwucht an der Welle zu bestimmen. Die Kraftmessdose ist insbesondere bei einem mechanischen Antrieb wie bei einer Tretwelle vorteilhaft, da in diesem Fall das angewandte Drehmoment nicht bereits über eine Motorleistung bestimmt werden kann, was beispielsweise bei einem Elektromotor leicht möglich ist.

Bei einer Kraftmessdose gemäß der vorliegenden Beschreibung werden radiale und axiale Kräfte dadurch entkoppelt, dass axiale Kräfte von den Axialstützbereichen bzw. Laschen aufgenommen werden und radiale Kräfte von den Messbereichen bzw. Laschen aufgenommen werden. Dadurch kann die Kraftmessdose in einer angestellten Lagerung verwendet werden, wie zum Beispiel in einer O-Anordnung oder einer X-Anordnung. Außerdem kann das Entkoppeln der radialen von den axialen Kräften eine genauere Messung der radialen Kraftkomponente erlauben, und somit eine genauere Bestimmung des auf die Welle aufgebrachten Drehmoments.

Eine Kraftmessdose gemäß der vorliegenden Beschreibung ist einfach aufgebaut und benötigt nur wenig Platz in einem Getriebe, insbesondere in axialer Richtung. Die Gesamtbreite der Kraftmessdose wird im Wesentlichen durch die Breite des Lagers und durch die Breite des axial daran anschließenden Befestigungsbereichs bestimmt. Daher kann die Kraftmessdose in axialer Richtung relativ schmal gebaut werden, beispielsweise kann sie nur ungefähr die zweifache Breite eines Wälzlagers oder weniger haben.

Die Aufnahme der axialen Kräfte durch die Kraftmessdose erfolgt vorteilhafterweise an dem stationären Außenring des Kugellagers und nicht am beweglichen Innenring oder an der Welle, wo die Relativbewegung zu Reibungsverlusten führen würde. Somit stehen die Axialstützbereiche vorteilhafterweise nur mit dem Außenring des Lagers in Berührung. Die Stützfunktion der Axialstützbereiche kann insbesondere dadurch erreicht werden, dass die Axialstützbereiche bzw. Laschen über eine Innenfläche der Aufnahmehülse radial nach innen hervorstehen, wobei es ausreicht, wenn die Axialstützbereiche nur soweit nach innen überstehen wie es der Breite eines Lagerrings entspricht. Die Axialstützbereiche können weiterhin ein Profil zur Ausrichtung an dem Lagerring aufweisen.

Die Messlaschen sind zweckmäßigerweise als Winkel ausgeführt, wobei ein mit der Aufnahmehülse verbundener axialer Bereich des Winkels in axialer Richtung verläuft und ein mit dem Befestigungsbereich verbundener radialer Bereich des Winkels in radialer Richtung verläuft. Auf diese Weise bildet der Winkel einen Hebelarm, der eine Verbiegung des radialen Bereichs des Messlaschen gegenüber der radialen Ausrichtung bewirkt. Durch die Verbiegung wird eine Oberfläche der Messlaschen gestreckt bzw. gestaucht und eine dazu axial gegenüberliegende Oberfläche wird gestaucht bzw. getreckt. Diese Stauchung bzw. Streckung wird von den Dehnmessstreifen erfasst, die auf einer der beiden Oberflächen des radialen Bereichs aufgebracht sind.

Die beiden Bereiche des von der Messlasche gebildeten Winkels können auch leicht gegenüber der axialen bzw. der radialen Ausrichtung geneigt sein, beispielsweise um eine größere Verformung zu ermöglichen. Vorteilhafterweise sind die Messlaschen in axialer Richtung hinreichend dünn, um eine gute Verformung zu ermöglichen. Dabei kann der zweite Bereich dünner ausgeführt sein als der erste Bereich. Weiterhin kann der zweite Bereich nahe der Spitze des Winkels verstärkt sein, um eine Verformung in der Nähe der Winkelspitze zu vermeiden.

Der axiale Bereich der Messlasche ist vorteilhafterweise so ausgebildet, dass er über die Oberfläche der Aufnahmehülse, die auf dem Wälzlager aufliegt, nicht hinausragt. Dadurch wird vermieden, dass ein Ring eines Wälzlagers, auf dem die Aufnahmehülse aufliegt, an die Messlasche anstößt und axiale Kräfte über die Messlasche übertragen werden. Insbesondere kann der axiale Bereich bündig mit einer Oberfläche der Aufnahmehülse abschließen bzw. ausgeführt sein, wobei die Oberfläche eine zylinderförmig ausgebildete Innenfläche der Aufnahmehülse ist.

Gemäß einem Ausführungsbeispiel weisen die Messbereiche als Winkel ausgebildete Messlaschen auf bzw. sind als winkelförmige Messlaschen ausgebildet. Gemäß einem weiteren Ausführungsbeispiel weisen die Messlaschen einen radialen Bereich und einen an den radialen Bereich anschließenden axialen Bereich auf. Dabei ist der radiale Bereich mit dem Befestigungsring verbunden und der axiale Bereich ist mit der Aufnahmehülse verbunden ist, wobei der radiale Bereich zu dem axialen Bereich in einem Winkel von ungefähr 90 Grad angeordnet ist.

Gemäß einem vorteilhaften Ausführungsbeispiel sind vier Messbereiche bzw. Messlaschen vorgesehen, so dass die Welle in vier Richtungen abgestützt werden kann. Insbesondere können die Messlaschen im Abstand von 90 Grand angeordnet sind, so dass die Richtungen senkrecht aufeinander stehen. Die Messlaschen sind gleichzeitig Stützlaschen zur radialen Abstützung. Die Bezeichnung "Messlasche" bedeutet, dass die Deformation der Messlasche zur Messung von Kräften verwendet werden kann, die in radialer Richtung auf die Aufnahmehülse einwirken.

Gemäß einem weiteren Ausführungsbeispiel kann eine Winkelausdehnung der Messlasche im Umfangsrichtung geeignet gewählt sein, um eine Kraft in einer definierten Richtung zu erfassen und eine gute Verformung zu ermöglichen. Beispielsweise kann die Winkelausdehnung der Messlasche entlang der Umfangsrichtung auf 30 Grad oder weniger oder auf 25 Grad oder weniger begrenzt sein, wobei 90 Grad einem rechten Winkel entspricht.

Gemäß einem Ausführungsbeispiel weist die Kraftmessdose vier Messbereiche, die im Abstand von 90 Grad angeordnet sind. Dadurch können radiale Kräfte in vier zueinander senkrecht stehenden Richtungen gemessen werden, wenn alle vier Messbereiche bzw. Messlaschen mit Dehnungssensoren ausgestattet sind.

Dabei können mindestens einer, mehrere oder auch alle der Dehnungssensoren als Dehnmessstreifen ausgebildet sein, die insbesondere verglichen mit einer optischen Dehnungsmessung preisgünstig und robust sind.

Insbesondere kann an jedem der Messbereiche bzw. Messlaschen ein Dehnungssensor befestigt sein, um in möglichst vielen Richtungen Radialkräfte zu messen. Zur leichteren Anbringung der Dehnmessstreifen können die Oberflächen der Messbereiche, an denen die Dehnmessstreifen angebracht sind, abgesenkte Bereiche oder Taschen zur Befestigung der Dehnungssensoren oder Dehnmessstreifen aufweisen.

Die Dehnmessstreifen können nahe dem Befestigungsbereich angeordnet werden, beispielsweise, um die elektrischen Verbindung zu einer an dem Getriebegehäuse befestigten Platine möglichst kurz zu halten oder weil dort eine größere Verformung eintritt.

Gemäß einem weiteren Ausführungsbeispiel sind die Axialstütz-bereiche bzw. Laschen durch Radialschlitze von den Messbereichen getrennt. Weiterhin sind die Axialstützbereiche bzw. Laschen durch einen Umfangsschlitz von der Aufnahmehülse getrennt. Unter anderem können die Axialstützbereiche und die Messbereiche dadurch auf einfache Weise aus einem Werkstück ausgeformt werden. Die Kraftmessdose kann aber auch in dieser Form gegossen sein. Zweckmäßigerweise sind die Radial bzw. Umfangsschlitze in Radial- bzw. Umfangsrichtung geradlinige Schlitze. Die Form kann aber auch von einer geraden Linie abweichen.

Die Richtung der Radialschlitze kann von einer radialen Richtung abweichen, beispielsweise um zu erreichen, dass sich die Messlasche nach innen stärker verjüngt. Beispielsweise kann die Ausrichtung der Radialschlitze um bis zu 5 Grad oder um bis zu 10 Grad gegenüber der radialen Richtung nach innen geneigt sein.

Zur Befestigung an dem Getriebegehäuse weist der Befestigungsring gemäß einem Ausführungsbeispiel Befestigungsbereiche auf, in denen Befestigungslöcher vorgesehen sind. Die Befestigungsbereiche können Bestandteil des Befestigungsrings sein, oder aber Fortsätze sein, die von dem Befestigungsring abstehen.

Vorteilhafterweise fixiert die Befestigung die Kraftmessdose sowohl in axialer Richtung als auch gegenüber einer Verdrehung in Umfangsrichtung, wobei sich die Befestigung mechanisch wieder lösen lässt. Gemäß einem anderen Ausführungsbeispiel wird dies auch durch eine formschlüssige Verbindung wie einer Zapfenverbindung oder einen Schnappverschluss erreicht.

Verbindungen, die sich nicht ohne weiteres wieder lösen lassen, wie Niet- oder Schweißverbindungen sind auch möglich. Sie sind jedoch für Wartungszwecke weniger geeignet.

Gemäß einem weiteren Ausführungsbeispiel weist der Befesti-gungsring Ausnehmungen auf, wobei die Messbereiche in den Ausnehmungen angeordnet sind, wobei die Ausnehmung in radialer und in axialer Richtung ausgeformt sein können. Dadurch kann beispielsweise vermieden werden, dass die Messlaschen direkt an das Getriebegehäuse anstossen oder die Dicke des Befestigungsrings kann unabhängig von der Dicke der Messlaschen eingestellt werden.

Gemäß einem weiteren Ausführungsbeispiel ist eine Winkelausdehnung der Messlaschen und der die Messlaschen begrenzenden Schlitze in etwa gleich einem Winkelbereich der Axialstützbereiche.

Gemäß einem weiteren Ausführungsbeispiel ist eine Winkelausdehnung der Messbereiche in Umfangsrichtung kleiner oder gleich 30 Grad, so dass die Kraft in einer definierten Richtung gemessen werden kann.

Die Gestaltung einer Kraftmessdose gemäß der vorliegenden Beschreibung eignet sich insbesondere dazu, die Kraftmessdose integral aus Metall zu fertigen, beispielsweise durch Gießen aus einer Gussform und mechanische Nachbearbeitungsschritte.

Gemäß einem weiteren Aspekt offenbart die vorliegende Beschreibung eine Messvorrichtung zur Bestimmung einer Kraft auf eine Kurbelwelle, insbesondere einer Tretwelle. Die Messvorrichtung weist eine Kurbelwelle mit einem auf der Kurbelwelle angeordneten Lager auf, sowie eine Kraftmessdose gemäß einem der vorher erwähnten Ausführungsbeispiele. In dieser Vorrichtung ist die Aufnahmehülse der Kraftmessdose auf einem Außenring des Lagers angeordnet, wobei die Axialstützbereiche der Kraftmessdose in axialer Richtung an dem Außenring des Lagers abgestützt sind. Weiterhin ist eine Auswertungselektronik mit den Dehnungs-sensoren der Kraftmessdose verbunden ist.

Weiterhin offenbart die vorliegende Beschreibung eine Getriebeanordnung mit der zuvor erwähnten Messvorrichtung. Die Getriebeanordnung weist ein Getriebegehäuse und eine Kurbelwelle, insbesondere eine Tretwelle, auf. Die Kurbelwelle über ein erstes antriebsseitiges Lager und ein zweites abtriebsseitiges Lager direkt oder indirekt im Getriebegehäuse aufgenommen bzw. gelagert. Die Lager können insbesondere durch Wälzlager bereitgestellt werden.

Weiterhin kann die Kurbelwelle durch eine Abtriebs-Hohlwelle hindurchgeführt sein, wobei insbesondere zur Entkopplung der Tretwelle von der Antriebs-Hohlwelle ein Freilauf zwischen Tretwelle und Antriebs-Hohlwelle angeordnet sein kann.

Das erste Lager über die Kraftmessdose in dem Getriebegehäuse aufgenommen, wobei die Kraftmessdose über den Befestigungsring in dem Getriebegehäuse aufgenommen bzw. an dem Getriebegehäuse befestigt ist. Die Aufnahmehülse nimmt einen Außenring des ersten Lagers auf, wobei die Axialstützbereiche an dem Außenring des ersten Lagers abgestützt sind.

Gemäß einem weiteren Ausführungsbeispiel weist die Kurbelwelle der Getriebeanordnung in der Mitte einen größeren Durchmesser aufweist als an ihren beiden Enden. Dadurch werden ein erster Absatz und ein zweiter Absatz der Kurbelwelle gebildet. Ein Innenring des ersten Lagers der Messvorrichtung liegt an dem ersten Absatz der Tretwelle an, und ein Innenring des zweiten Lagers liegt an dem zweiten Absatz der Tretwelle an. Dadurch wird eine X-Anordnung einer schräg angestellten Lagerung gebildet und die Kraftmessdose nimmt einen Teil der Kräfte der angestellten Lagerung auf.

Gemäß einem weiteren Ausführungsbeispiel sind das erste Lager der Messvorrichtung und das zweite Lager jeweils als einreihige Schrägkugellager ausgebildet. Gemäß einem weiteren Ausführungsbeispiel das erste Lager der Messvorrichtung und das zweite Lager jeweils als schräg angestellt Zylinderrollenlager ausgebildet.

Gemäß einem weiteren Ausführungsbeispiel ist das zweite Lager über eine Wellenfeder an dem zweiten Absatz der Tretwelle oder an dem Gehäuse bzw. an einem mit dem Gehäuse verbundenen Bauteil abgestützt.

Gemäß einem weiteren Ausführungsbeispiel ist das zweite Wälzlager weiterhin über eine Abstandsscheibe an dem zweiten Absatz der Tretwelle oder an dem Gehäuse bzw. an einem mit dem Gehäuse verbundenen Bauteil abgestützt.

Weiterhin offenbart die vorliegende Beschreibung eine Getriebeanordnung die außerdem die folgenden Merkmale aufweist:

einen Motor, ein mit dem Motor verbundenen Untersetzungsgetriebe, und eine mit dem Untersetzungsgetriebe-verbundene Abtriebs-Hohlwelle. In dieser Getriebeanordnung, die für ein Elektrofahrrad geeignet ist, wobei die Kurbelwelle als Tretwelle ausgebildet ist, wobei das erste Lager und das zweite Lager jeweils als Wälzlager ausgebildet sind, wobei die Tretwelle durch die Abtriebs-Hohlwelle hindurchgeführt ist, und wobei zur Entkopplung der Tretwelle von der Abtriebs-Hohlwelle ein Freilauf zwischen der Tretwelle und der Abtriebs-Hohlwelle vorgesehen ist.

Weiterhin offenbart die vorliegende Beschreibung ein elektrisch betriebenes Fahrzeug, insbesondere ein Elektrofahrrad, mit der zuvor beschriebenen Getriebeanordnung, wobei der Motor als Elektromotor ausgebildet ist, und wobei eine Batterie des elektrisch betriebenen Fahrzeugs mit dem Elektromotor verbunden ist.

In der nun folgenden Beschreibung sind weitere Einzelheiten zur Beschreibung der Ausführungsbeispiele genannt. Dem Fachmann ist ersichtlich, dass die Ausführungsbeispiele gegebenenfalls auch ohne diese Einzelheiten realisiert werden können.

Fig. 21 zeigt eine von der Antriebsseite her gesehene perspektivische Ansicht einer Kraftmessdose 47. Die Kraftmessdose 47 weist vier Axialstützlaschen 91 auf, an denen ein Außenring eines Kugellagers 45 in axialer Richtung abgestützt ist, und vier zwischen den Axialstützlaschen 91 angeordnete Messlaschen 90, auf denen jeweils ein Dehnmessstreifen 92 aufgebracht ist. Zur leichteren Positionierung der Dehnmessstreifen 92 können die Oberflächen der Messlaschen 90 mit Vertiefungen versehen sein.

Die Axialstützlaschen 91 weisen einen äußeren Bereich 93 auf, der auf einem Außenring des Kugellagers aufliegt und einen inneren Bereich 94. Der Bereich, in dem der Außenring des Kugellagers aufliegt ist im Detail in der Querschnittsansicht von Fig. 9 erkennbar.

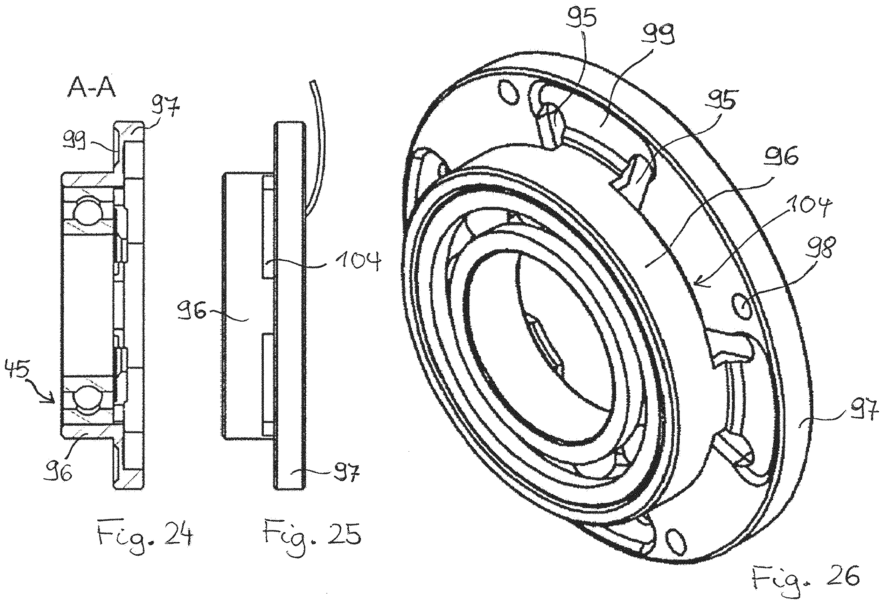

Die Messlaschen 90 und die Axialstützlaschen 91 sind jeweils seitlich durch einen ausgefrästen Radialschlitz 95 voneinander getrennt. Auf der Abtriebsseite gehen die Messlaschen 90 in eine Aufnahmehülse 96 über, die den Außenring des Kugellagers 45 in sich aufnimmt. Diese Aufnahmehülse 96 ist am besten in Fig. 26 zu erkennen.

Auf der Antriebsseite gehen die Laschen 90, 91 in einen äußeren Ring 97 über. Die Bereiche des äußeren Rings 97, die den Messlaschen 90 und den Radialschlitzen 95 gegenüberliegen, weisen in radialer Richtung jeweils einen Umfangsschlitz 105 auf, die ungefähr die halbe radiale Ausdehnung wie die Messlaschen 90 hat. Ein erster Radialschlitz 95, ein Umfangsschlitz 105 und ein zweiter Radialschlitz 95 bilden gemeinsam einen Begrenzungsschlitz, der in einer abgewinkelten U-Form verläuft, und der die Axialstützlasche 91 von der Aufnahmehülse 96 und von den benachbarten Messlaschen trennt.

Der äußere Ring 97 weist vier Befestigungslöcher 98 auf, mit denen die Kraftmessdose 47 an einem in Fig. 1 nicht gezeigten Getriebegehäuse befestigt werden kann, wobei eine Stirnseite des äußeren Rings 97 an dem Getriebegehäuse anliegt. Eine Befestigung der Kraftmessdose 47 am Getriebegehäuse ist beispielhaft in den Figuren 12 bis 14 gezeigt.

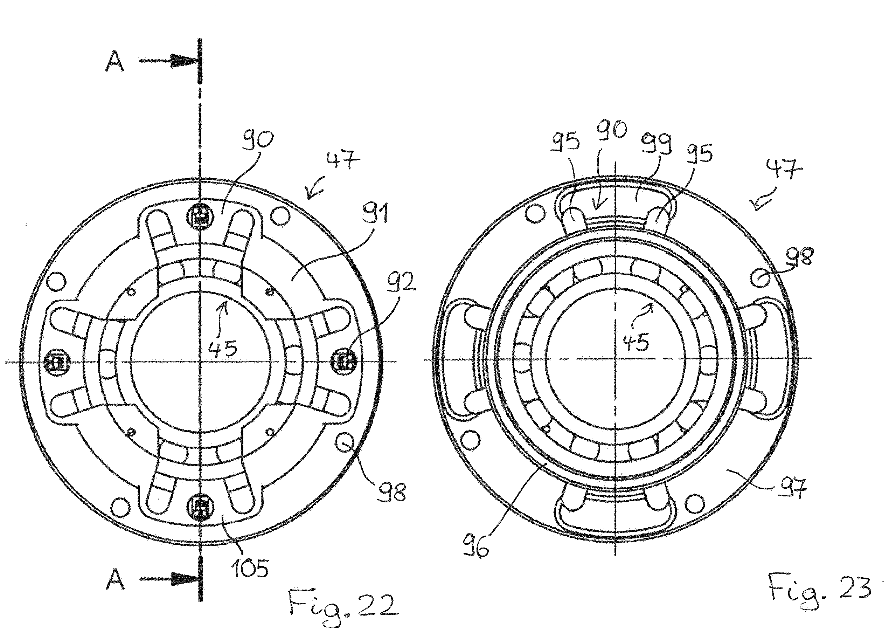

Fig. 22 zeigt eine von der Antriebsseite her gesehene Aufsicht auf die Kraftmessdose 47 mit dem in der Kraftmessdose 47 angeordneten Kugellager 45.

Fig. 23 zeigt eine von der Abtriebsseite her gesehene Aufsicht auf die Kraftmessdose 47 mit dem in der Kraftmessdose 47 angeordneten Kugellager 45. Wie in Fig. 23 gezeigt, weisen die Messlaschen 90 auf der abtriebsseitigen Stirnfläche des äußeren Rings 97 Bereiche 99 auf, die gegenüber der abtriebsseitigen Stirnfläche des äußeren Rings 97 leicht zurückgesetzt sind. Dadurch kann die Dicke der Messlaschen verringert werden, so dass sich eine stärkere Verformung ergibt.

Fig. 24 zeigt eine Querschnittsansicht der Kraftmessdose 47 entlang der Querschnittslinie A-A von Fig. 22, in der die zurückgesetzten Bereiche 99, die Hülse 96 und der äußere Ring 97 erkennbar sind.

Fig. 25 zeigt eine seitliche Ansicht der Kraftmessdose 47, in der die Schlitze 104 erkennbar sind, die den Stützlaschen 91 gegenüberliegen, und durch die die Stützlaschen 91 von der Hülse 96 getrennt sind.

Fig. 26 zeigt eine von der Abtriebsseite her gesehene perspektivische Ansicht der Kraftmessdose 47.

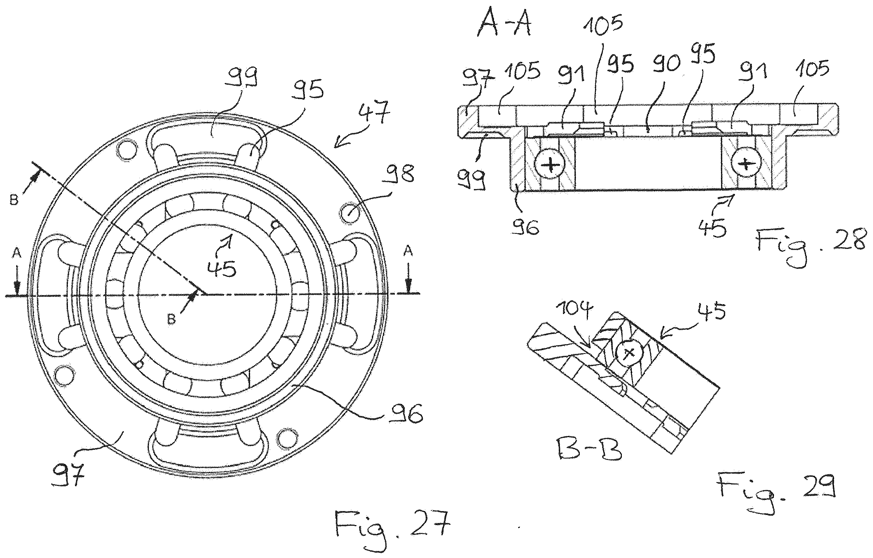

Fig. 27 zeigt eine von der Abtriebsseite her gesehene Aufsicht auf die Kraftmessdose 47.

Fig. 28 zeigt eine Querschnittsansicht der Kraftmessdose 47 entlang der Schnittlinie A-A der Figur 26.

Fig. 29 zeigt eine Querschnittsansicht entlang der Schnittlinie B-B der Figur 26.

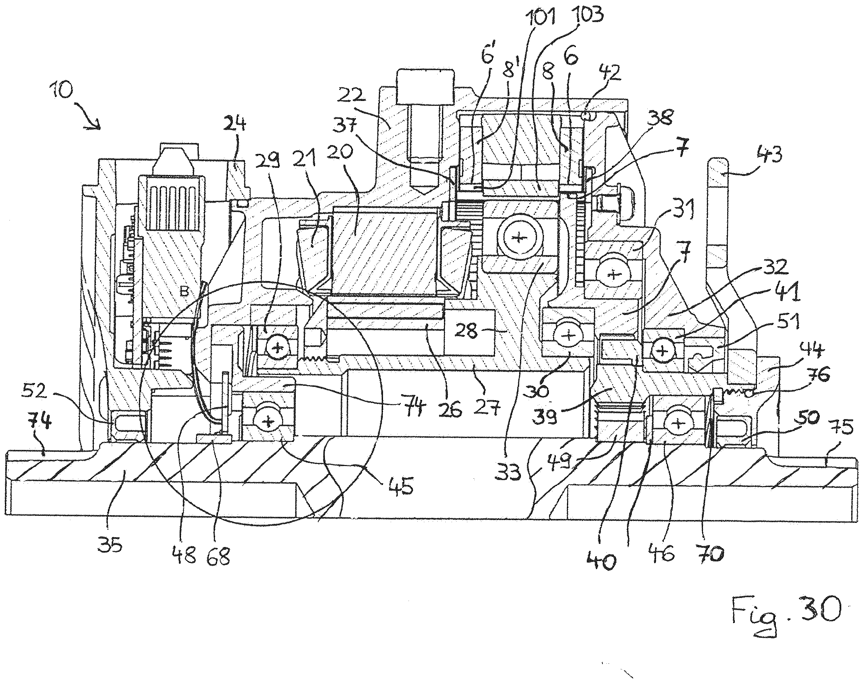

Fig. 30 zeigt ein harmonisches Pinring-Getriebe, in das die Kraftmessdose 47 von Fig. 21 eingebaut ist und das im Folgenden in Einzelheiten beschrieben wird. In Fig. 30 entspricht die linke Seite einer Antriebsseite und die rechte Seite einer Abtriebsseite des harmonischen Pinring-Getriebes 10. Gemäß der üblichen Anordnung des Antriebs auf der rechten Seite ist die Blickrichtung von Fig. 10 in Fahrtrichtung gerichtet.

Ein Stator 20 einer Stator-Baugruppe des harmonischen Pin-ring-Getriebes 10 ist in einem Motorgehäuse 22 angeordnet. Der Stator 20 weist drei separate Spulen 21 zum Anschluss an drei Phasen eines Dreiphasen-Wechselrichters auf. Die drei Spulen des Stators 20 sind mit dem Dreiphasen-Wechselrichter durch drei Anschlüsse 25 verbunden, von denen einer in Fig. 30 gezeigt ist.

Der Dreiphasen-Wechselrichter ist als eine Leistungselektronik ausgebildet, die auf einer Leiterplatte 23 angeordnet ist, wobei die Leiterplatte 23 in einem Kühldeckel 24 angeordnet ist, das antriebsseitig auf das Motorgehäuse 22 aufgesetzt ist. Die Leiterplatte 23 ist als eine ringförmige Scheibe ausgebildet, die sich außerhalb von zylindrischen hervorkragenden Abschnitten des Motorgehäuses und des Kühldeckels befinden, so dass die darauf befindliche Motorelektronik gegen Öl und Fett des Getriebes abgedichtet ist.

Eine mittig durch das Motorgehäuse 22 verlaufende Tretwelle 35 ist abtriebsseitig abgestuft und weist drei Stufen auf, deren Durchmesser von außen nach innen zunimmt und auf denen jeweils der Wellendichtring 50, das abtriebsseitige Tretwellen-Kugellager 46 und der Tretwellen-Freilauf 49 angeordnet sind. Der Durchmesser der Tretwelle 35 ist antriebsseitig ebenfalls abgestuft und weist zwei Stufen auf, wobei auf der äußeren Stufe der Wellendichtring und ein Sensorring 68, und auf der inneren Stufe das Kugellager 45 angeordnet sind.

Eine äußere Rotorwelle 26, die mit Permanentmagneten bestückt ist, ist radial innerhalb des Stators 20 angeordnet. Diese äußere Rotorwelle wird auch als "Rotorpaket" bezeichnet. Die äußere Rotorwelle 26 weist an ihrer Innenseite einen elastischen Bereich auf, der auf einer inneren Rotorwelle 27 aufgesteckt ist. Auf der inneren Rotorwelle 27 ist abtriebsseitig eine exzentrisch angeordnete ovale Kurvenscheibe 28 ausgeformt.

Die innere Rotorwelle 27 ist an der Antriebsseite nach außen durch ein antriebsseitiges Rotor-Kugellager 29 in dem Motorgehäuse 22 gelagert. Und zwar ist ein Außenring des antriebsseitigen Rotor-Kugellagers 29 in einer zylindrischen Aussparung des Motorgehäuses 22 angeordnet.

Weiterhin ist die innere Rotorwelle 27 an der Abtriebsseite in einem abtriebsseitigen Rotor-Kugellager 30 radial nach außen in einem Innenrad 7 gelagert. Eine Hohlwelle des Innenrads 7 ist abtriebsseitig integral mit einem ringförmigen Bereich des Innenrads 7 verbunden, der eine Außenverzahnung 5 aufweist.

Die Hohlwelle des Innenrads 7 ist ihrerseits radial nach außen über ein Innenrad-Kugellager 31 auf einem Gehäuse-deckel 32 gelagert, der an dem Motorgehäuse 22 durch Schrauben 33 festgeschraubt ist. Das Innenrad-Kugellager 31 ist gegenüber dem abtriebsseitigen Rotor-Kugellager 30 in axialer Richtung zur Abtriebsseite hin versetzt und ist in radialer Richtung nach außen hin versetzt. Außerdem überlappt das Innenrad-Kugellager 31 mit dem abtriebsseitigen Rotor-Kugellager 30 in axialer Richtung.

Auf der Kreisscheibe 28 der inneren Rotorwelle 27 ist ein flexibles Kugellager oder Dünnringkugellager 33 aufgespannt, bei dem ein Innenring und ein Außenring verformbar sind.

Auf dem flexiblen Kugellager 33 liegt ein Pin-Haltering 103 mit Pins 101 auf, wobei die Pins 101 in zylindrischen Aussparungen an der Innenseite eines Pin-Halterings gehalten sind. Gemäß dem Ausführungsbeispiel der Fig. 30 sind die Pins 101 miteinander verbunden. Die Pins 101 des Pinrings 103 stehen in axialer Richtung zu beiden Seiten über das flexible Kugellager 33 und über den Pin-Haltering 103 hervor. Der Einfachheit halber wird im Folgenden die Pinring-Anordnung aus Pin-Haltering 103 und Pins 101 auch als Pinring 102 bezeichnet.

Die Kurvenscheibe 28 und das flexible Kugellager 33 bilden zusammen eine Transmitteranordnung, die ein Drehmoment in eine radiale Kraft umwandelt. Statt eines flexiblen Kugellagers mit flexiblem Innen- und Außenring kann auch ein Drahtwälzlager oder ein flexibles Kugellager ohne Außenring, oder ein anders geartetes flexibles Wälzlager verwendet werden.

Der Gehäusedeckel 32 ist auf der Abtriebsseite des Motorge-häuses an dem Motorgehäuse mit Befestigungsschrauben 34 aufgeschraubt. Weiterhin sind ein antriebsseitiges Außenrad 8' und ein abtriebsseitiges Außenrad 8 in einen Stützring 36 eingesteckt und durch die Schrauben 34 an dem Stützring 36 festgeschraubt. Der Stützring 36 ist in axialer Richtung in zwei zueinander spiegelsymmetrische Hälften geteilt, die zusammen eine Laufbahn 67 für den Pinhaltering 103 ausbilden.

Das antriebsseitige Außenrad 8' und das abtriebsseitige Au-ßenrad 8 sind in axialer Richtung außerhalb der Kurvenscheibe 28 und des flexiblen Kugellagers 33 angeordnet. Das antriebseitige Außenrad 8' steht in radialer Richtung den Bereichen der Pins 101 gegenüber, die auf der Antriebseite in axialer Richtung über den Pin-Haltering 103 überstehen. Das abtriebsseitige Außenrad 8 steht in radialer Richtung den Bereichen der Pins 101 gegenüber, die auf der Abtriebsseite in axialer Richtung über den Pin-Haltering 103 überstehen.

Auf der Antriebsseite ist ein antriebsseitiger Anlaufring 37 so in dem Motorgehäuse 22 angeordnet, dass er den antriebsseitigen Stirnflächen der Pins 101 in axialer Richtung gegenübersteht. In ähnlicher Weise ist auf der Abtriebsseite ein abtriebsseitiger Anlaufring 38 so in dem Motorgehäuse 22 angeordnet, dass er den abtriebsseitigen Stirnflächen der Pins 101 in axialer Richtung gegenübersteht.

Eine Abtriebswelle 39 ist radial innerhalb der Hohlwelle des Innenrads 7 angeordnet, wobei ein Getriebe-Freilauf 40 zwischen der Hohlwelle des Innenrads 7 und der Abtriebswelle 39 angeordnet ist. Die Abtriebswelle 39 ist radial nach außen in ein einem abtriebsseitigen Abtriebs-Kugellager 41 gelagert, das in eine zylinderförmige Aussparung oder einen Vorsprung des Gehäusedeckels 32 eingesetzt ist. Der abtriebsseitige Bereich der Abtriebswelle 39 steht in axialer Richtung über den Gehäusedeckel 32 über. Eine Kettenblattadapter 43 ist auf die Abtriebswelle 39 aufgesetzt, der über einer runde Abtriebsmutter 44 festgehalten ist, die in ein Innengewinde der Abtriebswelle 39 eingeschraubt ist.

Das Motorgehäuse 22 ist zum Getriebedeckel 32 hin durch einen O-Ring 42 und zum Kühldeckel 24 hin durch einen weiteren O-Ring 77 abgedichtet.

Fig. 21 zeigt einen Ausschnitt aus dem Pinring-Getriebe von Fig. 19 im Bereich der Kraftmessdose 47. Wie in Fig. 11 gezeigt ist ein Sensorring 68 auf der Tretwelle 35 angeordnet. im Betrieb kann der Sensorring 68 dazu verwendet werden, eine Position oder eine Geschwindigkeit der Tretwelle 35 zu bestimmen.

Der Einfachheit halber wird im Folgenden angenommen, dass die Kraftmessdose so orientiert ist, dass die Messlaschen jeweils senkrecht und waagerecht zur Straßenoberfläche angeordnet sind, also parallel zur Trittbewegung des Fahrers und senkrecht dazu. Andere Orientierungen sind aber ebenfalls möglich.

Die zuvor beschriebene Kraftmessdose kann insbesondere in einem Getriebe eines Elektrofahrrads verwendet werden, um eine Messung der auf eine Tretwelle ausgeübten Kraft und damit eine erforderliche Motorunterstützung zu bestimmten. Die Kraftmessdose kommt ohne bewegliche Teile aus und nimmt wenig Platz ein, insbesondere in axialer Richtung, was eine bessere Ausnutzung des verfügbaren Raumes ermöglicht. Bei einem Elektrofahrad ist der Bauraum begrenzt und somit kann die Verwendung der Kraftmessdose dort besonders vorteilhaft sein. Insbesondere ist der axiale Bauraum durch den vorgegebenen optimalen Abstand der Tretkurbeln stark begrenzt.

Während eines Betriebs übt ein Fahrer Kräfte auf die Pedale aus, insbesondere auf das abwärtsgetretene Pedal. Dadurch wirkt auf die Tretwelle auf der Seite des getretenen Pedals eine abwärts gerichtete Kraft. Des Weiteren wirkt auf die Tretwelle auf der Seite des getretenen Pedals eine nach vorne gerichtete Kraft. Durch den Hebelarm an der Lagerung der Tretwelle wirkt auf der gegenüberliegenden Seite der Tretwelle jeweils eine entgegengesetzt wirkende Kraft.

Beim Treten wird jeweils abwechselnd das linke Pedal und das recht Pedal getreten. Somit tritt bei gleichmäßiger Trittfrequenz eine periodisch abwechselnde Kraft in senkrechter Richtung und ebenso in waagerechter Richtung auf. Die Amplitude dieser Kraft ist mit dem Drehmoment korreliert, das auf die Tretwelle ausgeübt wird. Wenn die Messlaschen jeweils senkrecht und waagerecht angeordnet sind, wird die senkrechte Kraft auf die Tretwelle durch Dehnmessstreifen des senkrecht ausgerichteten Paar von Messlaschen erfasst und die waagerechte Kraft auf die Tretwelle wird durch Dehnmessstreifen des horizontal ausgerichteten Paars von Messlaschen erfasst.

Das elektrische Signal eines Dehnmessstreifens ist dabei ungefähr gleich groß und entgegengesetzt zu einem Signal eines radial gegenüberliegenden Dehnmessstreifens. Somit kann mit einer Anordnung von radial gegenüberliegenden Dehnmessstreifen die Messamplitude verdoppelt werden. Dies kann durch eine subtraktive Überlagerung der Signale erreicht werden, die durch analoge Elektronik oder nach Digitalisierung des Signals erfolgen kann.

Die Signale der Dehnmessstreifen werden über Verbindungsleitungen an eine Auswertungselektronik weitergeleitet, die auf einer Platine angeordnet ist, die an dem Getriebegehäuse befestigt ist. Gemäß einer einfachen Auswertung wird ein mittleres Drehmoment aus einer oder aus mehreren zeitlich benachbarten Maximalausschlägen der Signale der Dehnmessstreifen gemäß einer Eichkurve bestimmt, die in einem permanenten Speicher der Auswertungselektronik abgelegt ist und daraus ein Ausgabesignal erzeugt, das mit dem auf die Tretwelle ausgeübten Drehmoment in einfacher Weise korreliert ist, beispielsweise durch proportionale Abhängigkeit.

Gemäß einer aufwendigeren Auswertung wird auch der weitere zeitliche Verlauf der Signale in die elektronische Auswertung mit einbezogen und daraus mittels vorher im Speicher abgelegten Daten wie Eichkurven und Parametern ein Ausgabesignal erzeugt. Weiterhin kann eine aktuelle Winkellage und/oder Drehgeschwindigkeit der Tretwelle bestimmt werden und in die elektronische Auswertung eingehen.

Das Ausgabesignal kann dann an einen weiteren Bereich der Auswerteelektronik weitergeleitet werden, der eine erforderliche Motorunterstützung eines elektrischen Motors eines elektrisch betriebenen Fahrrads bestimmt und eine entsprechendes Motorsteuerungssignal erzeugt. Dieses Motorsteuerungssignal kann seinerseits von weiteren Parametern abhängen, wie der Neigungswinkel des Fahrzeugs, der momentanen Geschwindigkeit, einem Batteriestatus oder auch von bestimmten Fahrsituationen, die aus diesen Parametern bestimmt werden, wie zum Beispiels das Fahren über einen Bordstein, das Anfahren aus dem Stillstand, oder das Anfahren an einer Steigung.

Eine Eichung kann zum einen dadurch erfolgen, dass eine Eichkurve und andere Eichparameter aus den Bauteileigenschaften direkt berechnet und im Speicher abgelegt werden. Zum anderen kann eine Eichung auch dadurch erfolgen, dass ein weiterer Sensor angebracht wird, der die tatsächliche Verformung der Tretwelle und damit das auf die Tretwelle ausgeübte Drehmoment misst, während gleichzeitig eine periodische ausgeübte Tretkraft durch eine Testvorrichtung auf die Pedale der Tretwelle aufgebracht wird.

Aus der Korrelation der aufgebrachten Tretkraft und dem tatsächlichen Drehmoment werden Eichparameter bestimmt. Diese Eichparameter können dann für alle Elektrofahrräder desselben Modells im Speicher der Auswertungselektronik abgelegt werden. Es können auch Eichparameter für verschiedene Modelle im demselben Speicher abgelegt werden, wobei eine weitere gespeicherte Angabe das aktuell verwendete Modell des Elektrofahrrads angibt.

Eine Messung des auf die Tretwelle ausgeübten Drehmoments kann zum Zweck der Eichung auch ohne einen direkt an der Tretwelle angebrachten Sensor durchgeführt werden, in dem das Drehmoment an der Ausgangswelle oder an nachgeschalteten Getriebeelementen gemessen wird.

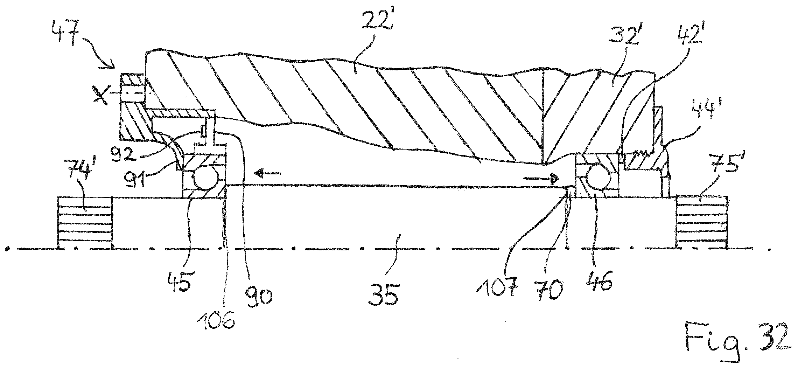

Die Figuren 32 bis 34 verdeutlichen die Aufnahme von radialen und axialen Kräften durch zwei Tretwellen-Kugellager, die auf der Tretwelle in X-Anordnung angestellt sind, und durch eine Kraftmessdose 47. Die Blickrichtung von Fig. 21 bis 24 ist in Fahrtrichtung.

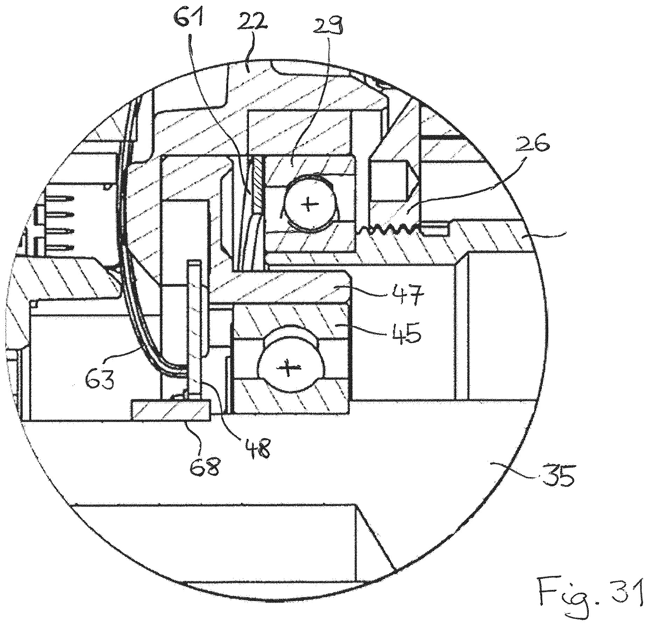

Gemäß Fig. 32 ist die Kraftmessdose 47 durch Schrauben befestigt, die auf Zug belastet sind. Die Kraftmess-dose kann aber auch an einer dazu gegenüberliegenden Seite an einem Getriebegehäuse befestigt sein, wie in Fig. 30 und 31 gezeigt ist. In diesem Fall werden die axial nach außen gerichteten Kräfte direkt durch das Getriebegehäuse aufgenommen.

Fig. 32 zeigt eine Getriebeanordnung mit einer Kraftmessdose 47 gemäß einem ersten Ausführungsbespiel, wobei die Kraftmessdose 47 an einem antriebsseitigen Kugellager 45 einer schräg angestellten Lagerung abgestützt ist.

Die schräg angestellte Lagerung weist eine Tretwelle 35 auf, die zur Mitte hin einen größeren Durchmesser als an ihren beiden Enden hat, wodurch ein antriebsseitiger Absatz 106 und ein abtriebsseitiger Absatz 107 gebildet wird. Ein Innenring eines antriebsseitigen Kugellagers 45 ist in axialer Richtung auf dem antriebsseitigen Absatz 106 abgestützt und ein Innenring eines abtriebsseitigen Kugellagers 46 ist in axialer Richtung über einen Ring auf dem abtriebsseitigen Absatz 107 der Tretwelle 35 abgestützt.

Diese nach innen an der Welle abgestützte Anordnung der Kugellager 45, 46 wird auch als "X-Anordnung" bezeichnet. Die Kugellager 45, 46 der schräg angestellten Lagerung sind als einreihige Schrägkugellager ausgebildet, wobei die höhere Seite des jeweiligen Innenrings jeweils zur Mitte der Tretwelle 35 hinzeigt.

Eine im Querschnitt gezeigte Stützlasche der Kraftmessdose 47 ist in axialer Richtung an dem abtriebsseitigen Absatz der Tretwelle 35 abgestützt. Eine dahinter befindliche Messlasche 90, an der ein Dehnmessstreifen 92 befestigt ist, ist in radialer Richtung auf einem Außenring des antriebsseitigen Kugellagers 45 abgestützt.

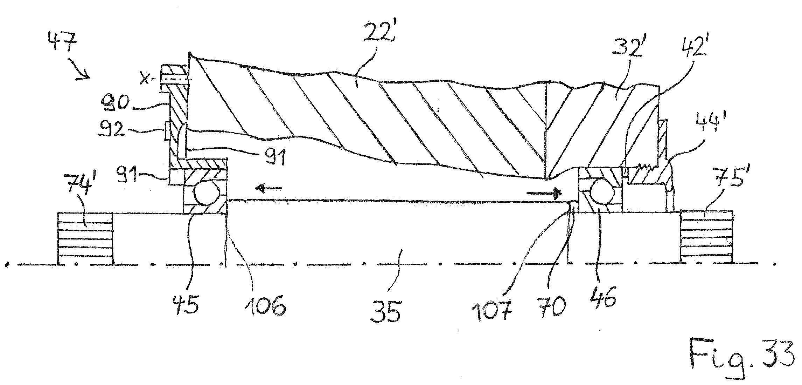

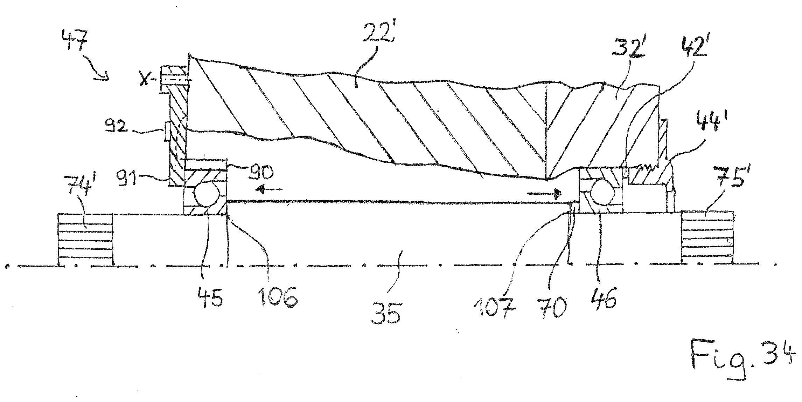

Die Figuren 33 und 34 zeigen eine ähnliche Anordnung wie Fig. 32, bei der ein radialer Bereich der Messlaschen 90 und der Stützlaschen 91 in derselben Ebene liegt. Zur Verdeutlichung verläuft die Schnittebene der Fig. 13 durch eine Stützlasche 91 und die Schnittebene der Fig. 34 durch eine Messlasche 90 der Kraftmessdose 47. Wie in Fig. 34 gezeigt ist ein axialer Querschnitt der Messlasche 90 im Bereich des Dehnmessstreifens 92 schmaler als der axiale Querschnitt der Stützlasche 91.

Hierdurch kann eine größere Verformung im Bereich des Dehnmessstreifens 92 erreicht werden. Die Ausdünnung des Querschnitts kann beispielsweise durch Ausfräsen erreicht werden.

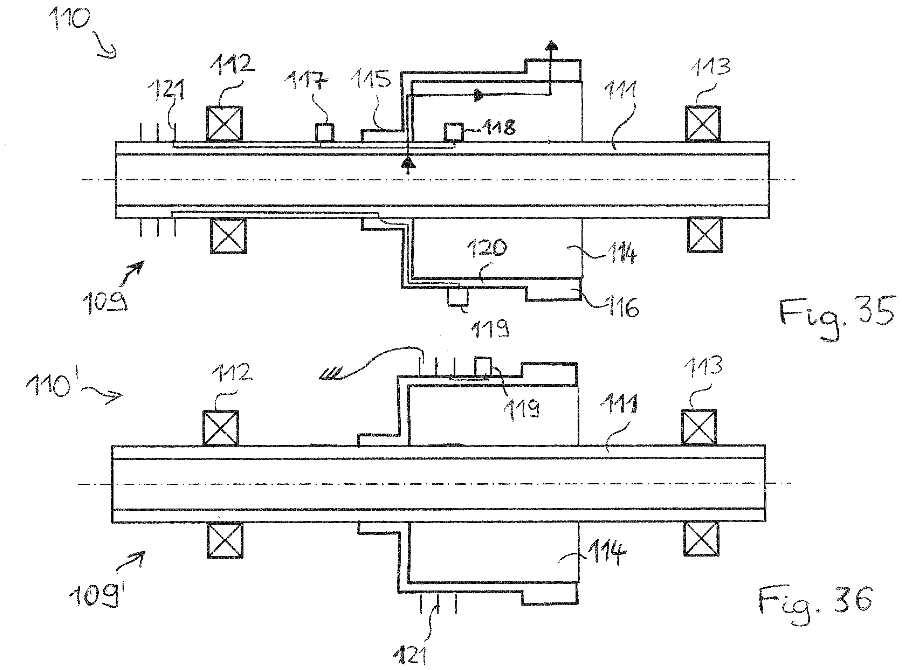

Die Figuren 35 bis 52 zeigen weitere Ausführungsformen eines Kraftmesssensors für eine Tretwelle. Der Kraftmessensor kann zur Bestimmung von radialen Kräften auf eine Aufhängung einer Tretwelle verwendet werden. Indirekt kann daraus ein Drehmoment bestimmt werden, das ein Fahrer auf die Tretwelle ausübt. Die entsprechende Vorrichtung zur Bestimmung der radialen Kräfte wird aus diesem Grund im Folgenden auch als Drehmomentmessvorrichtung bezeichnet.

Figur 35 zeigt eine weitere Ausführungsform einer Drehmomentmessvorrichtung 110, die in einem Tretlager 109 angeordnet ist. Das Tretlager 190 enthält eine Tretwelle 111 mit hier nicht gezeigten Befestigungsbereichen für Pedalkurbeln.

Eine becherförmige Hülse 114 ist auf der Tretlagerwelle 111 zwischen einem ersten Wälzlager 112 und einem zweiten Wälzlager 113 angeordnet. Die becherförmige Hülse 114 ist an einer Endfläche 115 auf der Tretwelle 111 befestigt. An einem Ende, das der Endfläche gegenüberliegt weist die Hülse 114 einen Bereich 116 zur Drehmomentübertragung auf.

Ein erster Dehnmessstreifen 117 ist zwischen der Hülse 114 und dem ersten Wälzlager 112 auf der Tretwelle 111 angeordnet. Ein zweiter Dehnmessstreifen 118 ist innerhalb der Hülse 114 auf der Tretwelle 111 angeordnet und ein dritter Dehnmessstreifen 119 ist auf einer Außenfläche 120 der Hülse 114 angeordnet.

Die Dehnmessstreifen 117, 118, 119 sind jeweils separat mit einem Schleifring 121 elektrisch verbunden, der außen auf der Tretwelle 111 angeordnet ist. Ein Drehmomentfluss von der Tretwelle 111 über die Büchse 114 ist in Fig. 15 durch Pfeile angedeutet.

Fig. 36 zeigt eine zweite Ausführungsform einer Drehmomentmessvorrichtung 110'. Im Unterschied zu der ersten Ausführungsform sind Schleifringe 121, mit denen ein Dehnmessstreifen 119 auf der Außenfläche 120 der Hülse 114 verbunden ist, auf der Außenfläche 120 der Hülse 114 angeordnet.

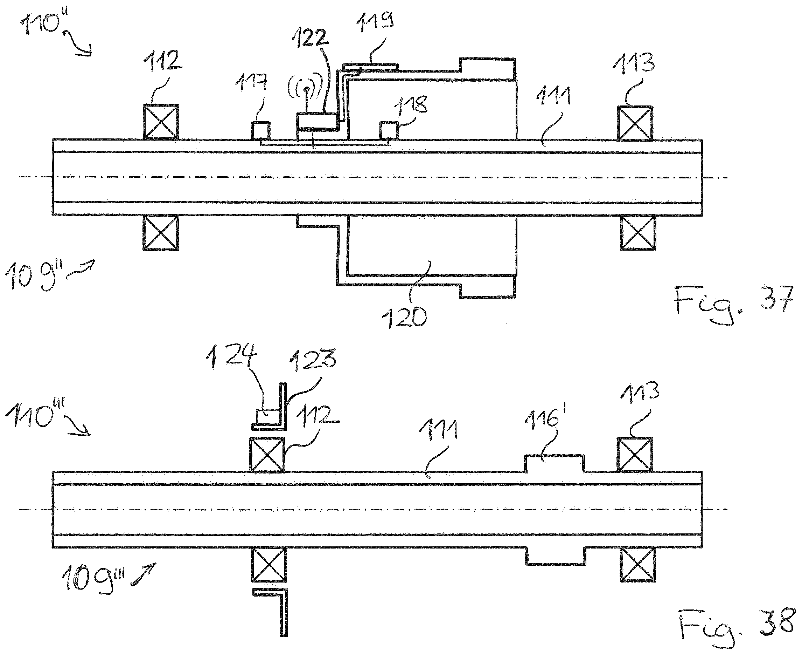

Fig. 37 zeigt eine dritte Ausführungsform einer Drehmomentmessvorrichtung 110". Im Unterschied zu den vorherigen Ausführungsbeispielen von Fig. 35 und Fig. 36 sind Dehnmessstreifen 117, 118 und 119 mit einem Transmitter 122 verbunden.

Fig. 38 zeigt eine vierte Ausführungsform einer Drehmomentmessvorrichtung 110'''. Gemäß dieser Ausführungsform ist ein Dehnmessstreifen 124 auf einem Außenring des rechten Kugellagers 112 angeordnet. Alternativ dazu kann ein Dehnmessstreifen auch auf einem Zwischenring angeordnet sein.

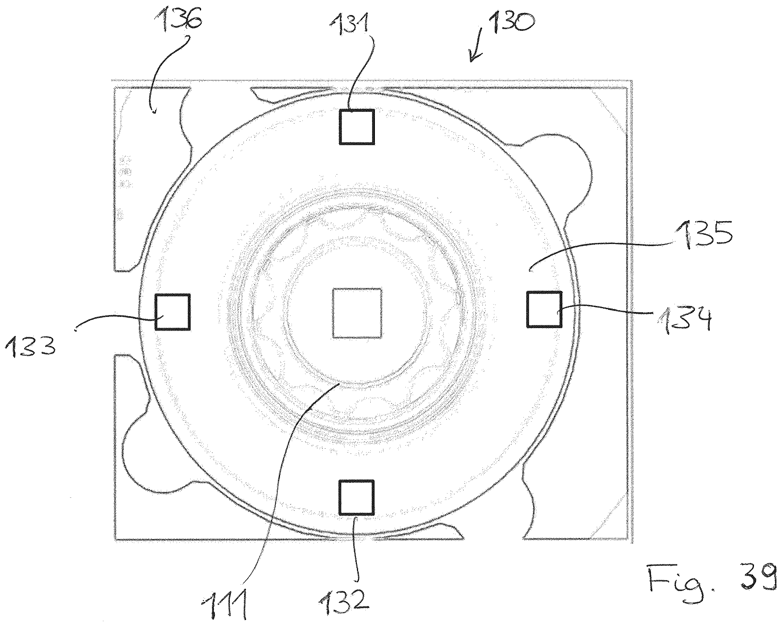

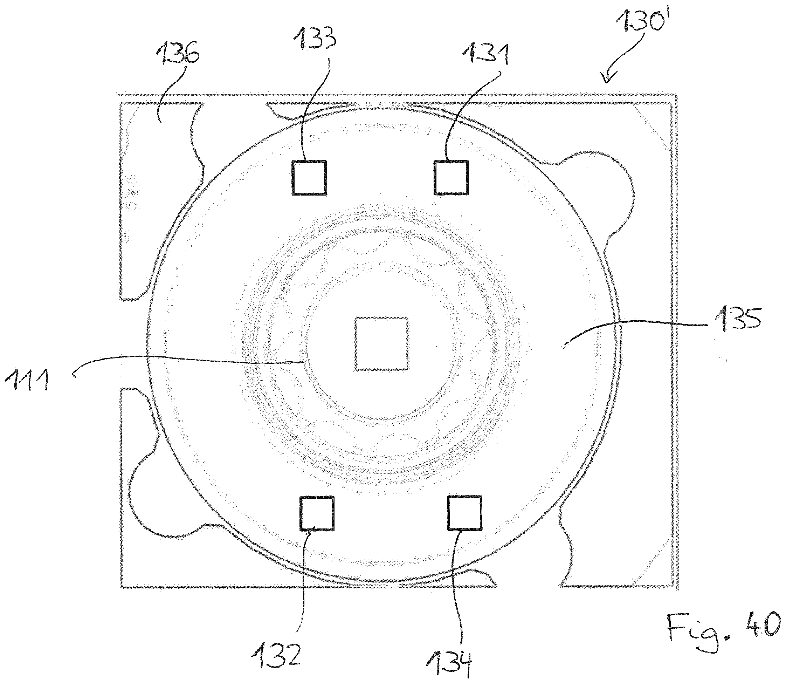

Fig. 39 und 40 zeigen ein weiteres Ausführungsbeispiel einer Drehmomentmessvorrichtung 130, bei der eine Verformung an einem Getriebegehäuse gemessen wird.

Bei der Drehmomentmessvorrichtung 130 ist ein erstes Paar von radial gegenüberliegenden Dehnmessstreifen 131, 132 auf einem Gehäuse 135 angeordnet und ein zweites Paar von radial gegenüberliegenden Dehnmessstreifen 133, 134 ist um 90 Grad versetzt zu dem ersten Paar von Dehnmessstreifen 131, 132 auf dem Gehäuse 135 angeordnet.

Weiterhin ist eine Platine 136 auf dem Gehäuse 35 angeordnet, auf der eine Auswertungslogik für die Signale der Dehnmessstreifen 31, 32, 33, 34 vorgesehen ist. Bei einer Versetzung der einzelnen Dehnmessstreifen um 90 Grad kann die Anordnung in beliebiger Orientierung bzw. Winkellage eingebaut werden. Dies schließt nicht aus, dass es Vorzugsorientierungen gibt, die besser geeignet sind als andere.

Fig. 40 zeigt ein weiteres Ausführungsbeispiel einer Drehmomentmessvorrichtung 130', das ähnlich zu dem Ausführungsbeispiel von Fig. 39 ist. Anders als bei dem Ausführungsbeispiel von Fig. 39 ist das zweite Paar von Dehnmessstreifen nur geringfügig gegenüber dem ersten Paar von Dehnmessstreifen versetzt, zum Beispiel um ca. 10 Grad.

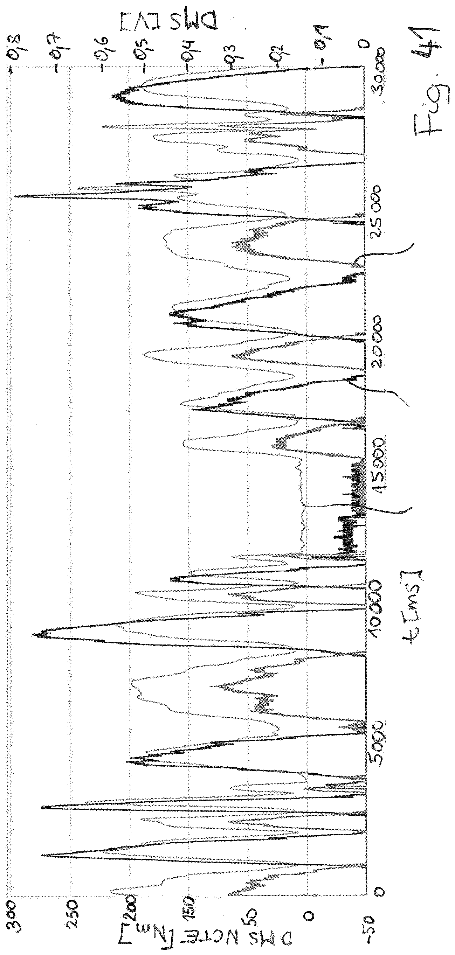

Fig. 41 zeigt einen ersten Messwerteverlauf eines Drehmomentsensors gemäß Fig. 39.

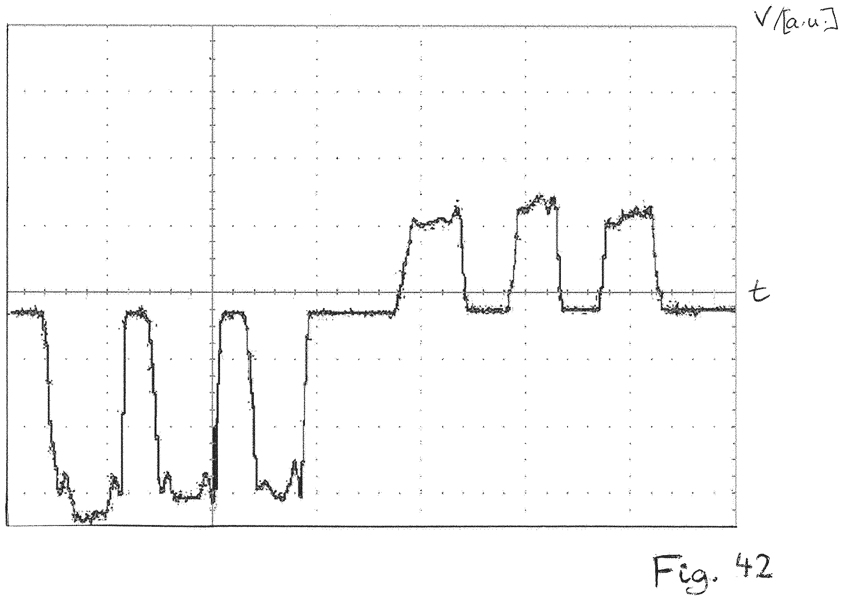

Fig. 42 zeigt einen weiteren Messwerteverlauf eines Drehmomentsensors gemäß Fig. 39. Dabei ist ein Wertebereich des Messsignals in Millivolt auf der rechten Achse aufgetragen und ein Wertebereich einer aus dem Messsignal abgeleiteten Kraft in Newtonmeter auf der linken Achse aufgetragen.

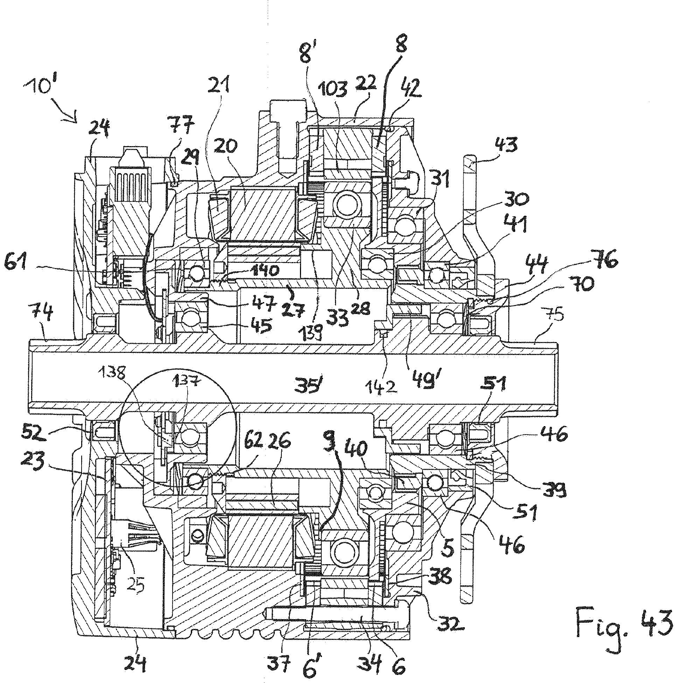

Fig. 43 zeigt einen Querschnitt eines weiteren HCD-Getriebes 10' mit einer Kraftmessdose 47, das zu dem Getriebe 10 von Fig. 30 ähnlich ist.

Anders als bei dem Getriebe von Fig. 40 ist ein magnetisierter Geberring 137 in eine mit dem Innenring des Kugellagers 45 verbundene Seitenabdeckung des Kugellagers 45 integriert. Ein dem Geberring 137 in axialer Richtung gegenüberliegender Drehzahlaufnehmer 138 registriert Änderungen des Magnetfelds, die durch die Rotation des Geberrings 137 verursacht werden. Insbesondere kann der Geberring 137 so magnetisiert sein, dass sich Nord und Südpole abwechseln, so dass die Drehbewegung des Geberrings 137 am Ort des Drehzahlaufnehmers 138 ein periodisch veränderliches Feld erzeugt.

Weiterhin ist die Tretwelle 35 als eine Hohlwelle ausgeführt, die nur in den Bereichen in der Nähe der Absätze einen vergrößerten Umfang aufweist. Die äußere Rotorwelle 26 ist auf einem Gewinde 140 der inneren Rotorwelle 27 festgeschraubt. Die innere Rotorwelle 27 weist einen antriebsseitigen Absatz 141 auf, an dem das Kugellager 29 abgestützt ist. Die Kurvenscheibe 28 weist einen ringförmigen Vorsprung 139 auf, durch den die Kurvenscheibe 28 zur Antriebsseite hin in axialer Richtung an der äußeren Rotorwelle 26 abgestützt ist.

Somit ist die axiale Position der äußeren Rotorwelle 26 in abtriebsseitiger Richtung durch das Gewinde 140 der inneren Rotorwelle 27 und in abtriebsseitiger Richtung durch den Vorsprung 139 der Kurvenscheibe 28 abgestützt. Ein erster antriebsseitiger Kraftfluss verläuft von der Kurvenscheibe 28 über die äußere Rotorwelle 26 und das Gewinde 140 in einen abtriebsseitigen Bereich der Tretwelle 35. Ein zweiter antriebsseitiger Kraftfluss verläuft von einem antriebsseitigen Absatz 141 der inneren Rotorwelle 27 über das Kugellager 29 und die Wellfeder 61 in das Getriebegehäuse 22.

Anders als bei dem Getriebe von Fig. 30 ist ein Tretwellenfreilauf 49' in dem Ausführungsbeispiel von Fig. 43 als ein Klemmrollenfreilauf ausgeführt, ähnlich wie der Motorfreilauf 40. Ein Klemmrollenhaltering des Klemmrollenfreilaufs 49' ist auf einen Absatz der Tretwelle 35 aufgesetzt und über einen O-Ring 142 abgestützt.

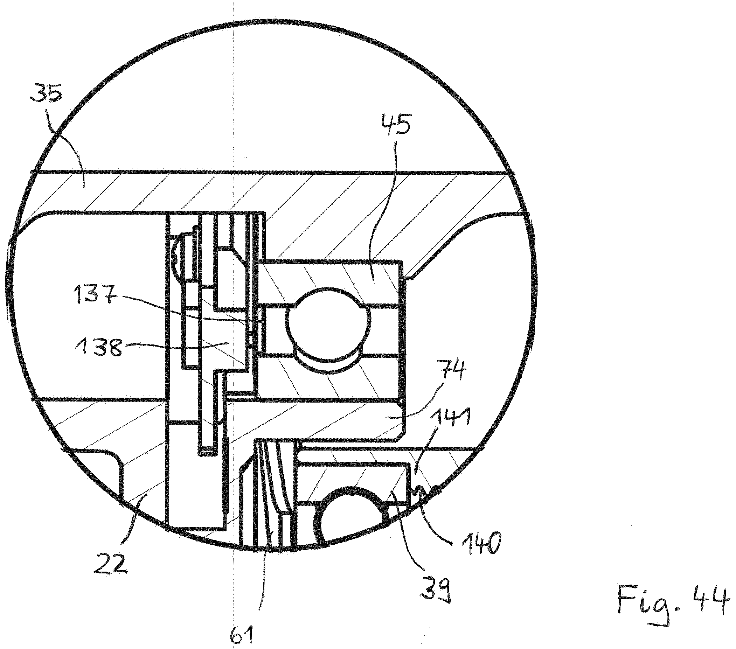

Fig. 44 zeigt einen vergrößerten Bereich der Fig. 43 im Bereich der Kraftmessdose 47.

Auch wenn die obige Beschreibung viele Einzelheiten enthält, sollten diese nicht so aufgefasst werden, dass sie den Schutzbereich der Ausführungsbeispiele einschränken, sondern nur als eine Verdeutlichung voraussichtlicher Ausführungsbeispiele. Insbesondere sollten oben erwähnte Vorteile der Ausführungsbeispiele nicht so aufgefasst werden, dass sie den Schutzbereich der Ausführungsbeispiele einschränken, sondern lediglich als eine Veranschaulichung möglicher Effekte, wenn die beschriebenen Ausführungsbeispiele in die Tat umgesetzt werden. Dementsprechend soll der Schutzbereich der Ausführungsbeispiele durch die Ansprüche und ihre Äquivalente bestimmt werden anstatt durch die beschriebenen Beispiele.

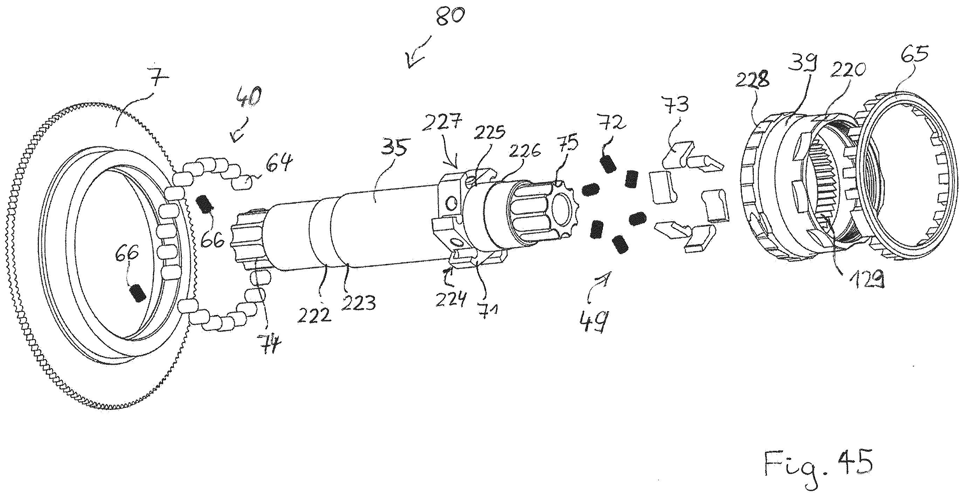

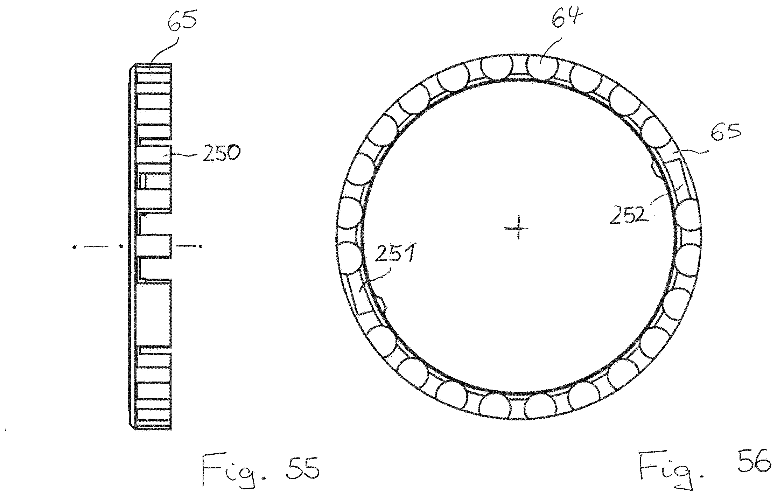

Die Figuren 45 bis 60 zeigen eine Tretwellenanordnung sowie ein harmonisches Pinring-Getriebe mit einer solchen Tretwellenanordnung.

Der Gegenstand der vorliegenden Beschreibung wird im Weiteren unter Bezug auf die folgenden Figuren

Die folgende Beschreibung erwähnt Einzelheiten zur Beschreibung der Ausführungsbeispiele der vorliegenden Beschreibung, wie beispielsweise die Formgebung und Anzahl der Einzelteile der Freiläufe. Es soll für den Fachmann jeweils ersichtlich sein, wenn die Ausführungsbeispiele auch ohne diese Einzelheiten in die Praxis umgesetzt werden können.

Figur 45 zeigt eine Explosionsansicht einer Tretwellen-Baugruppe 80, in der von einer Antriebsseite zu einer Abtriebsseite ein Innenrad 7, Schraubenfedern 66 eines äußeren oder Getriebefreilaufs 40, zylindrische Klemmrollen 64 des Getriebefreilaufs 40, eine Tretwelle 35, Schraubenfedern 72 eines inneren oder Tretwellenfreilaufs 49, Sperrklinken 73 des Tretwellenfreilaufs 49, eine Abtriebswelle 39 und ein Freilaufkäfig 65 des Getriebefreilaufs 49 gezeigt sind.

Unter der Abtriebsseite der Tretwellen-Baugruppe 80 ist hierbei die Seite zu verstehen, an der sich ein Aufnahmebereich 220 der Abtriebswelle 39 für einen Abtrieb befindet. Entsprechend ist die Antriebsseite die der Abtriebsseite gegenüberliegende Seite.

Der Radius der Tretwelle 35 ist so abgestuft, dass auf der Antriebsseite zwei Stufen 222, 223 und auf der Abtriebsseite drei Stufen 224, 225, 226 ausgebildet sind. Die Stufen 222, 223, 224, 225, 226, die in Fig. 3 am besten zu erkennen sind, bilden Aufnahmebereiche für weitere Getriebeelemente, die in Fig. 45 nicht gezeigt sind. Weiterhin ist auf der Abtriebsseite auf der dritten Stufe eine Sternanordnung 227 mit Zacken 71 ausgeformt.

Der Getriebefreilauf 40 wird auch als "Motor-Freilauf" bezeichnet, was zur Unterscheidung sinnvoll ist, wenn die Tretwelle 35 über ein zwischengeschaltetes Getriebe wie beispielsweise ein Planetengetriebe mit der Abtriebswelle 39 verbunden wird.

Die Außenseite der Abtriebswelle 39 weist auf der Antriebsseite einen treppenförmigen Abrollbereich 228 für die Klemmrollen 64 und Aussparungen für die Schraubenfedern 66 auf und weist. Die Innenseite der Abtriebswelle 39 bzw. der Abtriebs-Hohlwelle 39 weist radial gegenüberliegend zu dem treppenförmigen Abrollbereich 128 einen treppenförmigen Anschlagbereich 229 für die Sperrklinken 73 auf

Weiterhin weist die Abtriebswelle 39 auf der Abtriebsseite einen Aufnahmebereich 220 für ein in Fig. 45 nicht gezeigtes Abtriebsmittel auf, wobei das Abtriebsmittel insbesondere ein Kettenblattadapter sein kann, und weist radial gegenüberliegend zu dem Aufnahmebereich für das Abtriebsmittel ein Innengewinde zur Befestigung eines in Fig. 45 nicht gezeigten Getriebedeckels auf.

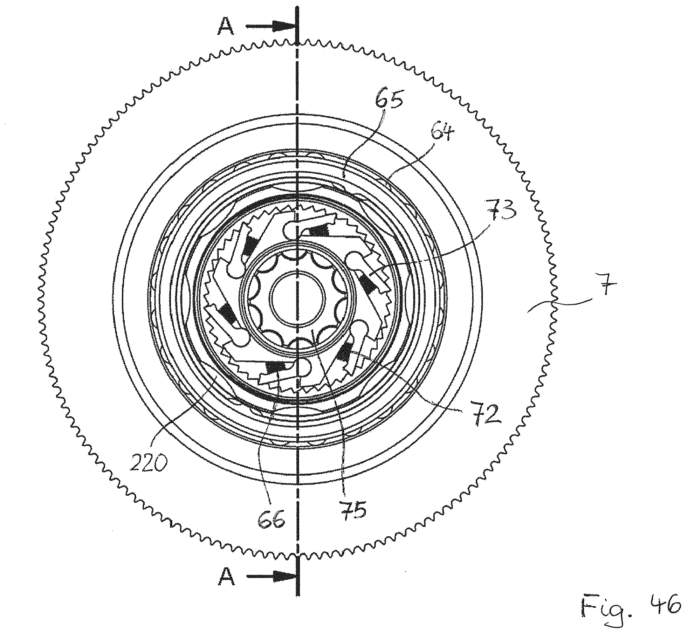

Figur 46 zeigt eine Seitenansicht der Tretwellen-Baugruppe 80 von der Abtriebsseite her, bei der zur besseren Veranschaulichung des Getriebefreilaufs 40 und des Tretwellenfreilaufs 49 eine Seitenabdeckung der Freiläufe entfernt ist. In dieser Ansicht sind, von innen nach außen gesehen, der abtriebsseitige Aufnahmebereich 75 für eine in Fig. 46 nicht gezeigte Tretkurbel, die Sternanordnung 227 mit den Sperrklinken 73 und den Schraubenfedern 66, den treppenförmigen Anschlagbereich 229 des Tretwellenfreilaufs 49, den Aufnahmebereich für das Abtriebsmittel, den Freilaufkäfig 65 des Getriebefreilaufs 40, die Klemmrollen 64 des Getriebefreilaufs, den Außenring 65 des Getriebefreilaufs 40, und das Innenrad 7 eines in Fig. 46 nicht gezeigten harmonischen Pinring Getriebes gezeigt sind.

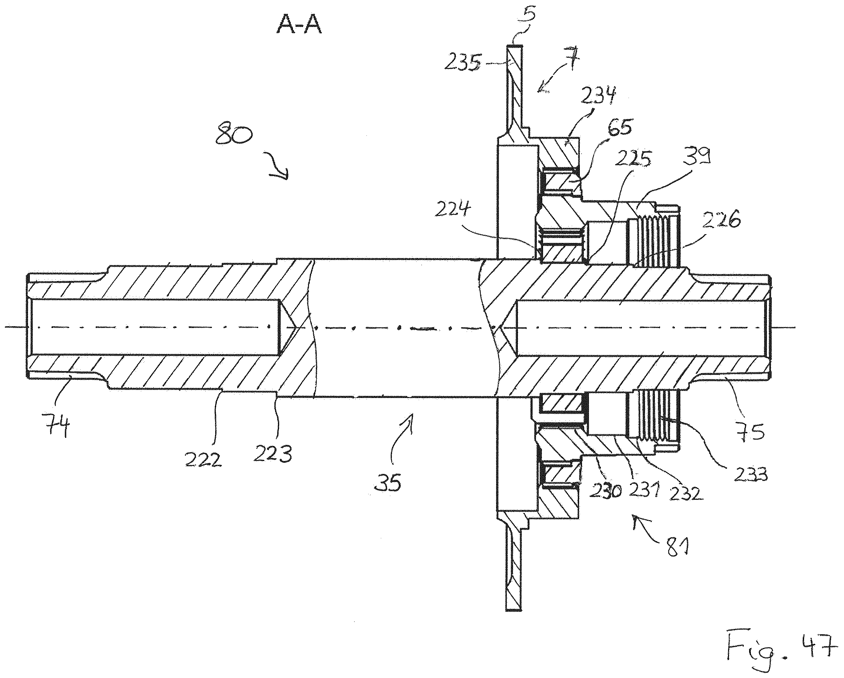

Figur 47 zeigt eine Querschnittsansicht der Tretwellen-Baugruppe 80 von Fig. 45 entlang der in Fig. 46 gezeigten Querschnittslinie. Wie in Fig. 3 gezeigt, ist ein Innenradius der als Hohlwelle ausgebildeten Abtriebswelle 39 abgestuft und bildet drei Absätze 230, 231, 232. Die äußerste Stufe der Abtriebswelle 39 weist das Innengewinde 233 auf. Der zweitäußerste Absatz der Abtriebswelle 39 und der gegenüberliegende zweitäußerste Absatz der Tretwelle 35 dienen zur Aufnahme eines in Fig. 47 nicht gezeigten Kugellagers.

An dem Innenrad 7 ist abtriebsseitig eine Hohlwelle 234 ausgebildet, die gleichzeitig einen Außenring des Getriebefreilaufs 40 bildet. Weiterhin weist das Innenrad 7 antriebsseitig einen scheibenförmigen Bereich 235 mit einer Außenverzahnung 5 auf.

Antriebsseitig ist auf einer Seitenkante der Abtriebswelle 39 eine ringförmige Verdickung ausgebildet, mit der die Antriebswelle 39 in die Hohlwelle 134 des Innenrads 7 eingesetzt ist. Ein Radius der Außenseite der Abtriebswelle 39 ist ebenfalls abgestuft, wobei die in radialer Richtung äußerste Stufe in radialer Richtung zur Aufnahme des Freilaufkäfigs 65 angepasst ist. Die weiteren Stufen der Außenseite der Abtriebswelle 39 sind zur Aufnahme eines hier nicht gezeigten Kugellagers samt Wellendichtring und zur Aufnahme eines hier nicht gezeigten Abtriebsmittels ausgebildet.

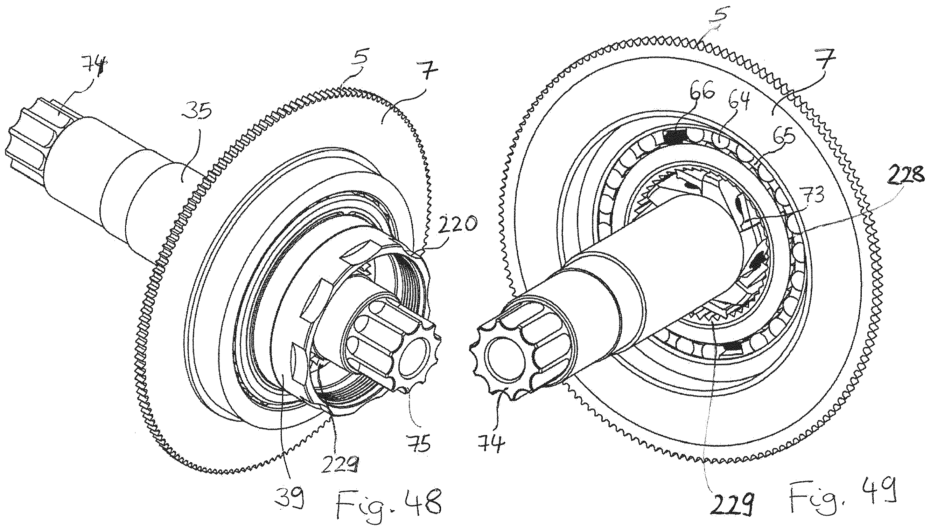

Fig. 48 zeigt eine von der Abtriebsseite her gesehene perspektivische Ansicht der Tretwellen-Baugruppe 80 von Fig. 45 bei der eine Seitenabdeckung abgenommen ist und in der der Anschlagbereich des Tretwellenfreilaufs 49, der Freilaufkäfig 65 und die Klemmrollen 64 zum Teil erkennbar sind.

Fig. 49 zeigt eine weitere perspektivische Ansicht der Getriebebaugruppe von Fig. 45, die von der Antriebsseite her betrachtet ist, und in der insbesondere der innere treppenförmige Bereich 229, die Sperrklinken 73, die Schraubenfedern 72 und der äußere treppenförmige Bereich 228 des Tretwellenfreilaufs 49 sowie die Klemmrollen 64, der Freilaufkäfig 65 und die Schraubenfedern 66 des Getriebefreilaufs 40 erkennbar sind.

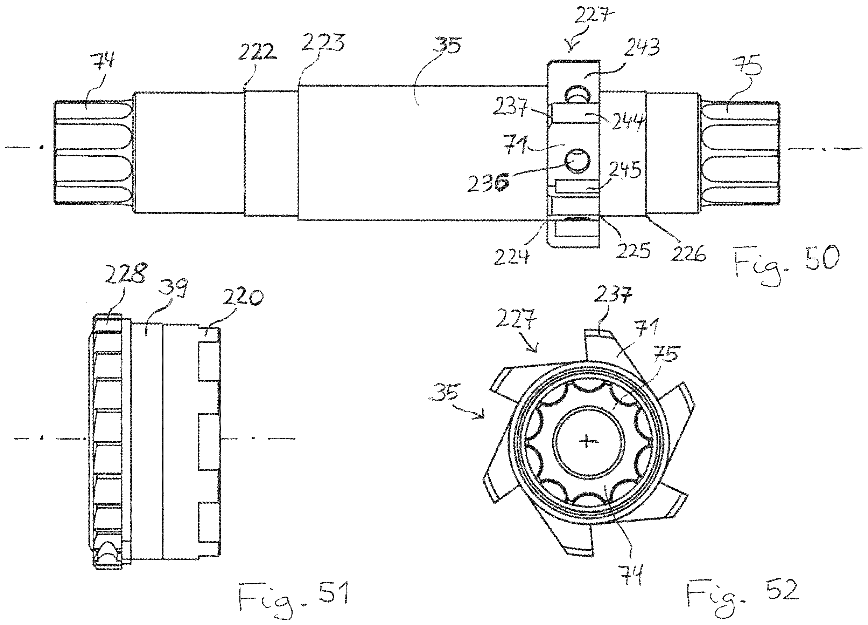

Fig. 50 zeigt eine seitliche Ansicht der Tretwelle 35 der Tretwellen-Baugruppe 80 von Fig. 45, in der insbesondere die Aufnahmebereiche 74, 75 für Tretkurbeln, die Abstufung des Umfangs der Tretwelle 35 und die Sternanordnung 227 gezeigt sind.

Wie in Fig. 50 und Fig. 52 gezeigt, weisen die Zacken 71 der Sternanordnung 227, von denen in Fig. 50 insgesamt vier Zacken 71 sichtbar sind, jeweils einen Abrollbereich 243, einen Endbereich 244 und einen Sperrklinken-Aufnahmebereich 245 auf. Die Zacken 71 weisen jeweils eine Bohrung 236 zur Aufnahme der in Fig. 50 nicht gezeigten Schraubenfeder 72 auf, wobei die Bohrung 136 senkrecht zu dem Abrollbereich 233 ausgerichtet ist. Die Bohrung 236 ist gegenüber einer Mitte des Abrollbereichs 243 leicht zu dem Sperrklinken-Aufnahmebereich 245 hin versetzt.

Fig. 51 zeigt eine seitliche Ansicht der Abtriebswelle 35, in der insbesondere der Abrollbereich 233 mit den Aufnahmebereichen für die in Fig. 7 nicht gezeigte Schraubenfeder 72, die Abstufung 228 des äußeren Umfangs und der Aufnahmebereich für das Abtriebsmittel 220 gezeigt sind.

Fig. 52 zeigt eine entlang der Mittelachse der Tretwelle 35 von der Antriebsseite her gesehene Seitenansicht der Tretwelle 35, in der insbesondere der Aufnahmebereich 75 für eine Tretkurbel, die abtriebsseitige Abstufung des Außendurchmessers der Tretwelle 35 und die Sternanordnung 227 gezeigt ist. Die Endbereiche 234 der Zacken 71 weisen an einer Seite eine Abfasung 237 auf.

Während des Betriebs drücken die Schraubenfedern 72 die Sperrklinken 73 nach außen an den treppenförmigen Bereich 229 der Innenseite der Abtriebswelle 39, so dass die Spitze der Sperrklinke 73 in eine gegenüberliegende Stufe eingreift, wenn sich die Tretwelle 35 in einer Antriebsrichtung, die durch die Ausrichtung der Sperrklinken 73 und die Ausrichtung der Stufen vorgegeben ist, schneller bewegt als die Antriebswelle 39.

Bewegt sich die Tretwelle 35 in Antriebsrichtung langsamer als die Antriebswelle 39 oder sogar in Gegenrichtung zu der Antriebswelle 39 gleiten die Sperrklinken 73 an den Stufen entlang und werden entgegen der Federkraft der Schraubenfedern 72 nach innen gedrückt bis die nächste Stufe erreicht ist. Am Übergang zweier Stufen springt die Sperrklinke 73 durch die Wirkung der Schraubfeder 72 nach außen und verursacht auf diese Weise ein charakteristisches Klicken.

Das Klicken des Tretwellenfreilaufs 49 kann eine Warnfunktion erfüllen, in dem Passanten auf ein Elektrofahrrad aufmerksam gemacht werden, das im Gegensatz zu einem Moped oder Motorroller relativ geräuschlos fährt. Weiterhin erlaubt es eine Funktionskontrolle auf Grund des Geräusches und kann eine Erwartung von Kunden erfüllen, die an ein Leerlaufgeräusch gewöhnt sind.

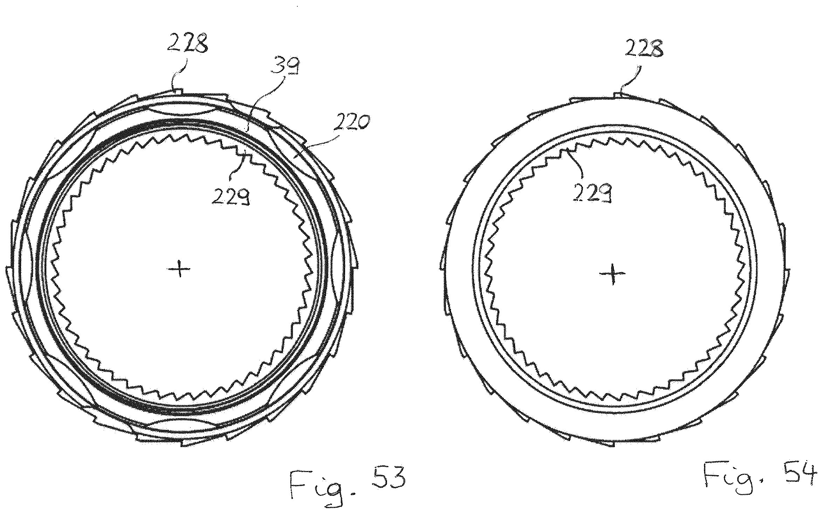

Fig. 53 zeigt eine abtriebsseitige Ansicht der Abtriebswelle 39. Eine Antriebsrichtung ist durch die Richtung der Stufenabsätze vorgeben und weist in der Ansicht von Fig. 53 in Uhrzeigerrichtung. Dabei bilden weniger geneigten Stufenabschnitte des inneren 229 die Stufenabsätze und die stärker geneigten Stufenabsätze bilden Stufenanschläge.

Die Stufen sind so ausgerichtet, dass die Antriebsrichtung der Fahrtrichtung entspricht, wenn der Abtrieb in konventioneller Weise in Fahrrichtung rechts vorgesehen ist. Der Abtrieb kann aber auch in dazu spiegelbildlicher Weise in Fahrtrichtung links vorgesehen sein. Das kommt insbesondere bei Drei- oder Vierrädern in Frage. In diesem Fall muss die Richtung der Stufen gegenüber der Anordnung von Fig. 9 umgekehrt werden, um einen Antrieb in Fahrtrichtung zu erlauben.

Bei Drei- oder Vierrädern kann auch ein schaltbarer Freilauf sinnvoll sein oder aber eine zusätzliche Antriebsverbindung wie eine schaltbare Kupplung, die einen Motorantrieb in Rückwärtsrichtung erlaubt, zum Beispiel um rückwärts auf eine Rampe zu fahren, insbesondere wenn das Fahrzeug zum Transport von Lasten ausgerüstet ist.

Fig. 54 zeigt die Fig. 53 entsprechende Aufsicht auf die Abtriebswelle 35 von der Antriebsseite her.

Fig. 11 zeigt eine Seitenansicht des Freilaufkäfigs 65, wobei die Blickrichtung senkrecht zur Mittelachse der Tretwelle 35 verläuft. Fig. 12 zeigt eine Seitenansicht des Getriebefreilaufs 40, in der die Klemmrollen 64 und der Freilaufkäfig 65 teilweise gezeigt sind.

Der Freilaufkäfig 65 weist gleichmäßig auf dem Umfang verteilte Stege 150 und zwei gegenüberliegende Aufnahmebereiche für 251, 252 für die Schraubenfedern 66 auf, die zu den Aussparungen der Abtriebswelle 39 ausgerichtet sind.

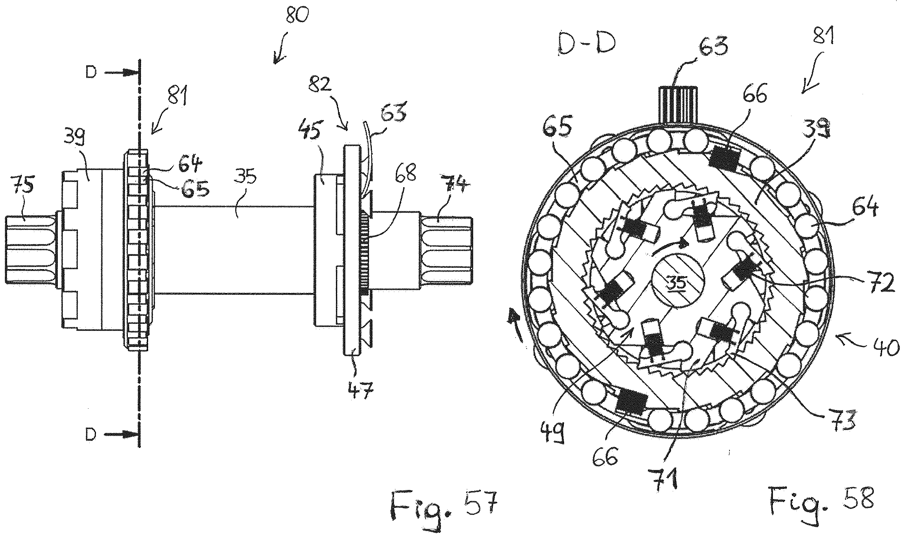

Fig. 57 zeigt eine seitliche Ansicht einer Tretwellen-Baugruppe 80, die die einen inneren Teil der in Fig. 1 gezeigten Freilaufbaugruppe 81 und eine in Fig. 1 nicht gezeigte Sensorbaugruppe umfasst.

Fig. 58 zeigt eine Querschnittsansicht entlang der in Fig. 13 gekennzeichneten Querschnittslinie D-D.

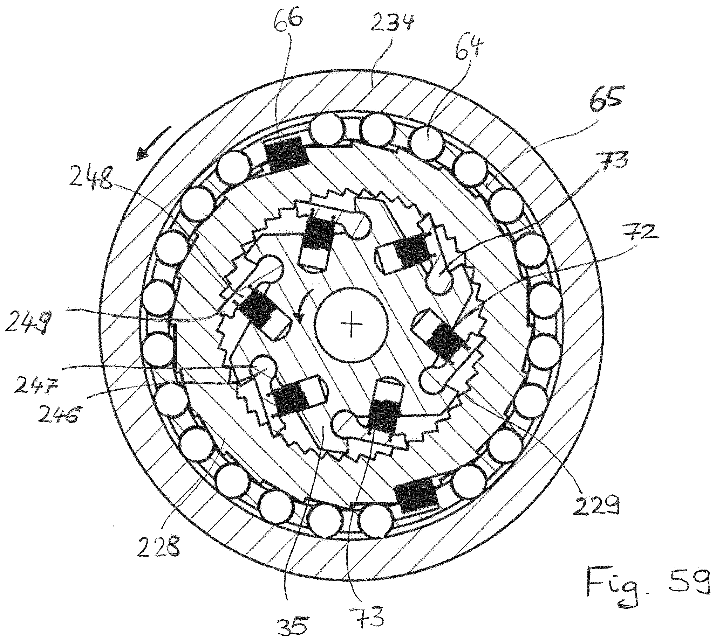

Fig. 59 zeigt eine Querschnittsansicht, die ähnlich zu der Querschnittsansicht von Fig. 14 ist, aber bei der die Blickrichtung von der Antriebsseite her gerichtet ist. Dabei ist zusätzlich der in Fig. 58 nicht gezeigte Hohlwellenbereich 235 des Innenrads 7 dargestellt, die den Außenring des Getriebefreilaufs 40 bildet.

Die Sperrklinken 73 des Tretwellenfreilaufs 49 weisen an einer Seite einen zylinderförmigen Scharnierbereich 246 auf, der in einen dazu passenden runden Scharnierbereich 247 des treppenförmigen Bereichs eingreift. Weiterhin weisen die Sperrklinken einen plattenförmigen Bereich 248 auf, der an einem Ende in den Scharnierbereich 247 übergeht und an einem dazu gegenüberliegenden Ende zu einer spitzen Kante 249 abgeschrägt ist.

Bei einer Montage oder bei einer Wartung der Tretwellenfreilaufs 49 können die Sperrklinken 73 von der Abtriebsseite her einfach in den aus der Tretwelle 35 ausgeformten runden Scharnierbereich 247 eingesetzt werden, ohne dass weitere Bauteile wie beispielsweise eine Achse erforderlich sind, um den benötigten Scharnier zu bilden.

Die beiden Federn 66 des Getriebefreilaufs 40 schieben über den Freilaufkäfig 65 alle Klemmrollen 64 nahezu in die in Fig. 59 gezeigte End- bzw. Kraftschlussposition. Dadurch kommen die Klemmrollen 64 in Berührung mit dem durch den Hohlwellenbereich 234 des Innenrads 7 gebildeten Außenring und können durch eine relative Bewegung des Außenrings in die Endposition bewegt werden. Dabei können die einzelnen Stege des Käfigs 65 elastisch ausgebildet sein, und dadurch einen ungleichmäßigen Anpressdruck auf die einzelnen Klemmrollen 64 ausgleichen.

Bewegt sich dagegen der Außenring des Getriebefreilaufs 40 in Antriebsrichtung langsamer als die Abtriebswelle 39, rollen die Klemmrollen 64 zum Zahngrund der Stufen hin und werden dadurch von dem Außenring abgehoben, so dass der Kraftschluss mit dem Innenrad 7 aufgehoben ist.

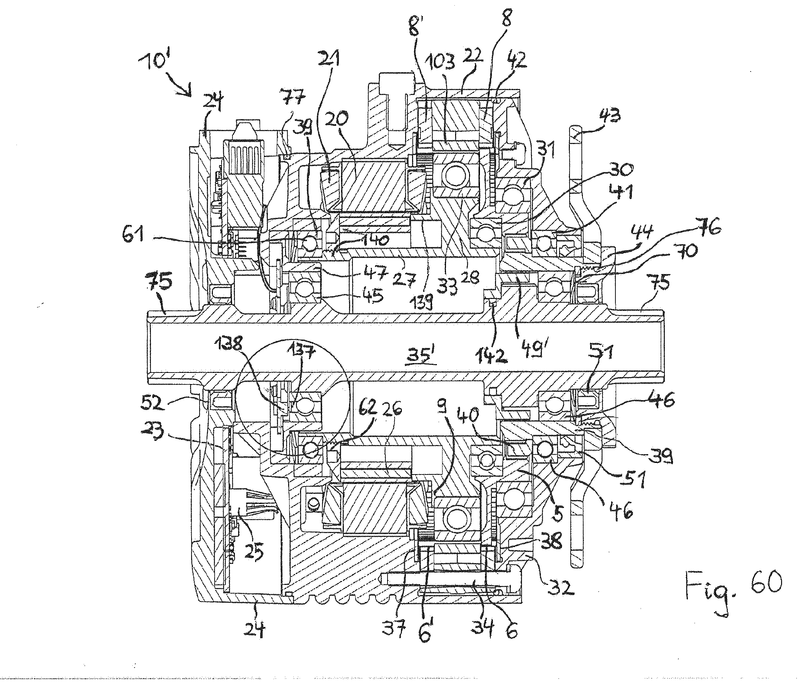

Fig. 60 zeigt einen Querschnitt eines Harmonischen Pinring-Getriebes 10', bei dem ein Tretwellenfreilauf 49' als Klemmrollen-Freilauf ausgebildet ist. Dementsprechend ist bei dieser Ausführungsform kein stufenförmiger Eingriffsbereich für Sperrklinken an der Innenseite der Abtriebswelle vorhanden.

Ein Klemmrollenhaltering des Klemmrollenfreilaufs 49' ist auf einen Absatz der Tretwelle 35 aufgesetzt und über einen O-Ring 262 abgestützt.

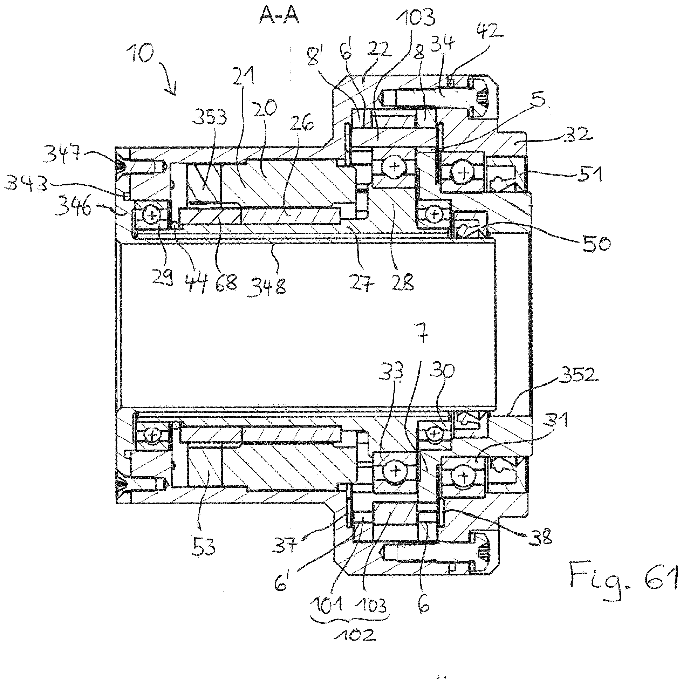

Die Figuren 61 bis 66 zeigen einen Getriebemotor mit einem harmonischen Pinring-Getriebe, das eine exzentrische Kreisscheibe aufweist.

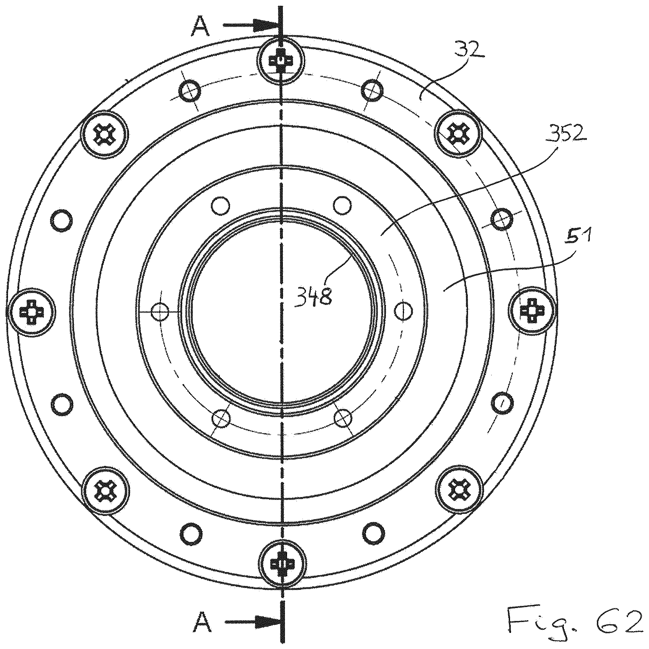

Fig. 61 zeigt eine Querschnittsansicht eines harmonischen Pinring-Getriebes 10. Die Querschnittsebene A-A der Fig. 61 ist in Fig. 62 gekennzeichnet. In Fig. 61 entspricht die lin-ke Seite einer Antriebsseite und die rechte Seite einer Ab-triebsseite des harmonischen Pinring-Getriebes 10.

Ein Stator 20 einer Stator-Baugruppe des harmonischen Pin-ring-Getriebes 10 ist in einem Motorgehäuse 22 angeordnet. Der Stator 20 weist eine in Fig. 61 nicht gezeigte Statorspule 21 zum Anschluss an eine Stromversorgung auf.

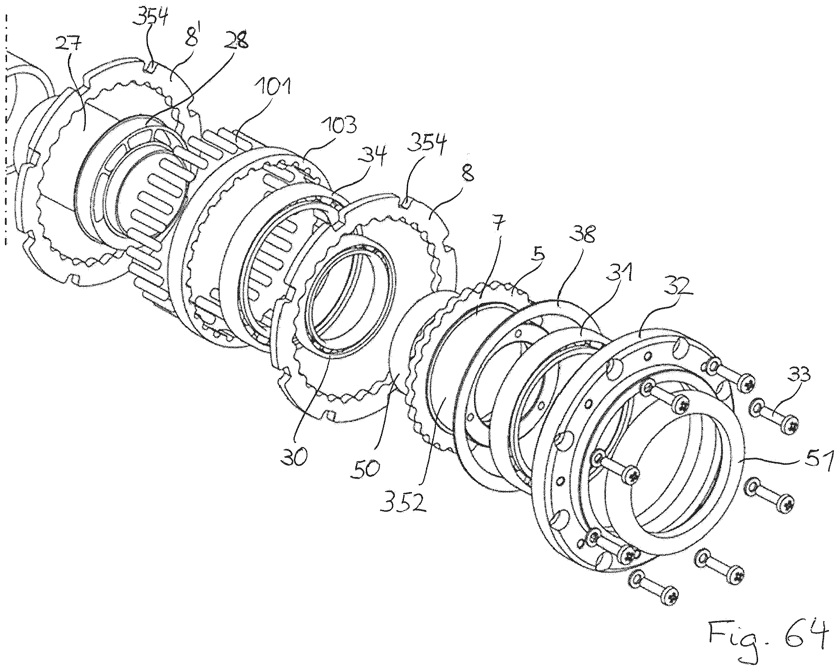

Eine äußere Rotorwelle 26, die mit Permanentmagneten bestückt ist, ist radial innerhalb des Stators 20 auf einer inneren Rotorwelle 27 angeordnet. Auf der inneren Rotorwelle 27 ist abtriebsseitig eine exzentrisch angeordnete kreisförmige Exzenterscheibe 28' bzw. eine exzentrische Kreisscheibe 28' ausgeformt, die in der Explosionsansicht von Fig. 64 näher gezeigt ist.

Die innere Rotorwelle 27 ist an der Antriebsseite nach außen durch ein antriebsseitiges Rotor-Kugellager 29 in dem Motorgehäuse 22 gelagert. Ein Außenring des antriebsseitigen Rotor-Kugellagers 29 ist in einer zylindrischen Aussparung des Motorgehäuses 22 angeordnet. Auf der Antriebsseite ist axial benachbart zu der äußeren Rotorwelle 26 ein Sensorring 68 auf der inneren Rotorwelle 27 angeordnet, dem ein Hall-Sensor 353 gegenüberliegt, der in dem Motorgehäuse 22 angeordnet ist.

Die innere Rotorwelle 27 ist an der Abtriebsseite in einem abtriebseitigen Rotor-Kugellager 30 radial nach außen in einem Innenrad 7 gelagert. Eine Hohlwelle des Innenrads 7 ist abtriebsseitig integral mit einem ringförmigen Bereich des Innenrads 7 verbunden, der eine Außenverzahnung 5 aufweist.

Auf der Abtriebsseite ist ein Gehäusedeckel 32 durch Schrauben 34 an dem Motorgehäuse 22 festgeschraubt. Auf der gegenüberliegenden Antriebsseite ist ein Innengehäuse 346 mit Schrauben 347 an dem Motorgehäuse 22 festgeschraubt. Das Innengehäuse weist einen Stützzylinder 348 auf.

Die Hohlwelle 52 des Innenrads 7 ist ihrerseits radial nach außen über ein Innenrad-Kugellager 31 auf dem Gehäusedeckel 32 gelagert. Das Innenrad-Kugellager 31 ist gegenüber dem abtriebsseitigen Rotor-Kugellager 30 in axialer Richtung zur Abtriebsseite hin versetzt und ist in radialer Richtung gegenüber dem abtriebsseitigen Rotor-Kugellager 30 nach außen hin versetzt. Außerdem überlappt das Innenrad-Kugellager 31 mit dem abtriebsseitigen Rotor-Kugellager 30 in axialer Richtung.

Auf der exzentrischen Kreisscheibe 28 der inneren Rotorwelle 27 ist ein Transmitter-Kugellager 33 angeordnet. Die Exzenterscheibe 28' und das Transmitter-Kugellager 33 bilden zusammen eine Transmitteranordnung, die ein Drehmoment in eine radiale Kraft umwandelt. Auf dem Transmitter-Kugellager 33 liegt ein Pin-Haltering 103 mit Pins 101 auf, wobei die Pins 101 in zylindrischen Aussparungen an der Innenseite des Pin-Halterings 103 gehalten sind. Die Pins 101 des Pinrings 103 stehen in axialer Richtung zu beiden Seiten über das Kugellager 33 und über den Pin-Haltering 103 hervor. Der Einfachheit halber wird im Folgenden die Pinring-Anordnung aus Pin-Haltering 103 und Pins 101 auch als Pinring 102 bezeichnet.

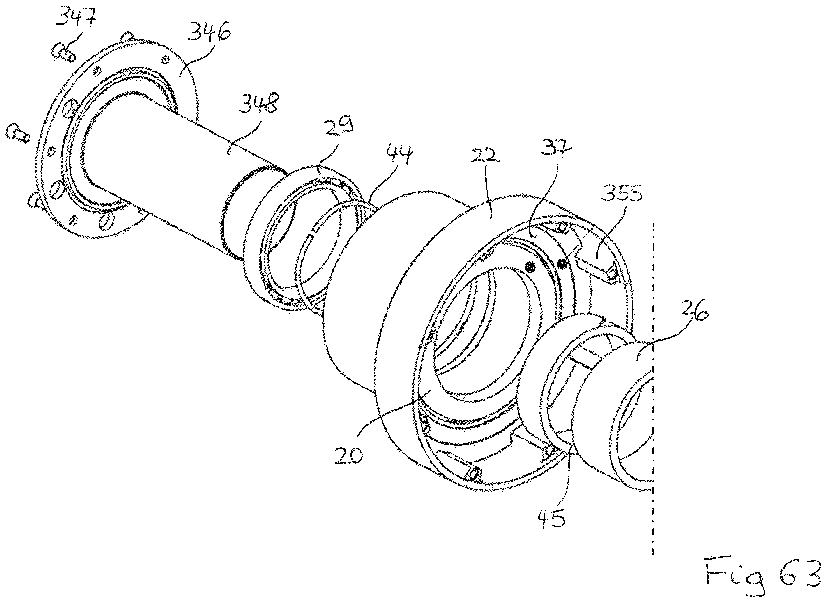

Ein antriebsseitiges Außenrad 8' und ein abtriebsseitiges Außenrad 8 sind in Stege 349 des Motorgehäuses 22 eingesteckt. Die Stege 49 des Motorgehäuses 22 sind in der Explosionsansicht der Fig. 63 gezeigt. Zwischen dem Motorgehäuse 22 und dem Gehäusedeckel 32 ist auf der Abtriebsseite radial außen ein O-Ring 42 angeordnet. Ein weiterer O-Ring 343 ist auf der Antriebsseite zwischen einem Absatz der inneren Rotorwelle 27 und dem antriebsseitigen Rotor-Kugellager 29 angeordnet.

Das antriebsseitige Außenrad 8' und das abtriebsseitige Au-ßenrad 8 sind in axialer Richtung außerhalb der Exzenter-scheibe 28' und des Transmitter-Kugellagers 33 angeordnet. Das antriebseitige Außenrad 8' steht in radialer Richtung den Bereichen der Pins 101 gegenüber, die auf der Antriebsseite in axialer Richtung über den Pin-Haltering 103 überstehen. Das abtriebsseitige Außenrad 8 steht in radialer Richtung den Bereichen der Pins 101 gegenüber, die auf der Abtriebsseite in axialer Richtung über den Pin-Haltering 103 überstehen.

Auf der Antriebsseite ist ein antriebsseitiger Anlaufring 37 so in dem Motorgehäuse 22 angeordnet, dass er den an-triebsseitigen Stirnflächen der Pins 101 in axialer Richtung gegenübersteht. In ähnlicher Weise ist auf der Ab-triebsseite ein abtriebsseitiger Anlaufring 38 so in dem Motorgehäuse 22 angeordnet, dass er den abtriebsseitigen Stirnflächen der Pins 101 in axialer Richtung gegenübersteht. Die Hohlwelle 352 des Innenrads 7 weist Schraublöcher zur Verbindung eines Abtriebs auf, die in Fig. 61 nicht gezeigt sind.

Zwischen dem Innenzylinder 348 des Innengehäuses 46 und dem Gehäusedeckel 32 ist ein innerer Wellendichtring 50 eingefügt. Weiterhin ist ein äußerer Wellendichtring 51 gegenüber dem abtriebsseitigen Tretwellen-Kugellager 46 zwischen der Hohlwelle des Innenrads 7 und dem Gehäusedeckel 32 angeordnet.

Im Betrieb überträgt der Stator 20 durch elektromagnetische Kraftwirkung ein EingangsDrehmoment auf die äußere Rotorwelle 26 und von dort auf die innere Rotorwelle 27, das durch die Exzenterscheibe 28' und das flexible Kugellager 33 in eine Radialkraft umgewandelt wird. Diese Radialkraft wird an den Zahnflanken der Innenverzahnungen 6, 6' der Außenräder 8, 8' und der Außenverzahnung 5 des Innenrads 7 in ein Ausgangs-Drehmoment umgewandelt, wobei das Innenrad 7 abgetrieben ist, und die Außenräder 8, 8' am Gehäuse festgelegt sind. Das Ausgangs-Drehmoment ist um das Untersetzungsverhältnis größer als das Eingangsdrehmoment.

Die innere Verzahnung, die durch die Außenverzahnung 5 des Innenrads 7 gebildet wird, liegt gegenüber der Innenverzah-nung 6 des abtriebsseitigen Außenrads 8, und stellt dadurch das Abtriebsdrehmoment bereit, insbesondere durch diejenigen Pins 101, die sowohl an der Außenverzahnung 5 als auch an den Innenverzahnungen 6, 6' anliegen.

Fig. 63 zeigt einen antriebseitigen Teil einer Explosionsan-sicht des Getriebes von Fig. 61, in der, von der Antriebs-seite zur Abtriebsseite gesehen, das Innengehäuse 346 mit dem Innenzylinder 348, das antriebsseitige Rotor-Kugellager 29, die Runddraht-Wellenfeder 44, das Motorgehäuse 22 mit der antriebsseitigen Anlaufscheibe 37, der Sensorring 68 und die Rotorwelle 26 gezeigt sind.

Fig. 64 zeigt einen abtriebsseitigen Teil einer Explosionsan-sicht des Getriebes von Fig. 61, in der, von der Antriebs-seite zur Abtriebsseite her gesehen die Rotorwelle 26 mit der Exzenterscheibe 28', das zweite Außenrad 8', der Pinring 102 mit den Pins 101 und dem Pin-Haltering 103, das Transmitter-Kugellager 34, das abtriebsseitige Rotor-Kugellager 30, das erste Außenrad 8, der Wellendichtring 50, das Innenrad mit der Innenrad-Hohlwelle, die abtriebsseitige Anlaufscheibe 38, das Innenrad-Kugellager 31, der Getriebedeckel 32 und der Wellendichtring 51 gezeigt sind.

Die Außenräder 8, 8' weisen jeweils Kerben 354 auf, die radial von dem Umfang des jeweiligen Außenrad 8, 8' radial nach innen gerichtet sind und in gleichmäßigen Abständen über den Umfang des jeweiligen Außenrads 8, 8' verteilt sind. Das Motorgehäuse 2 weist zu den Kerben 354 passende auf dem Umfang verteilte Zapfen 355 auf.

Wie in Fig. 61 gezeigt ist, reichen die Schrauben 34 im zusammengebauten Zustand durch den Getriebedeckel 32, das erste Außenrad 8, das zweite Außenrad 8' und den Stützring 36 in das Motorgehäuse 22.

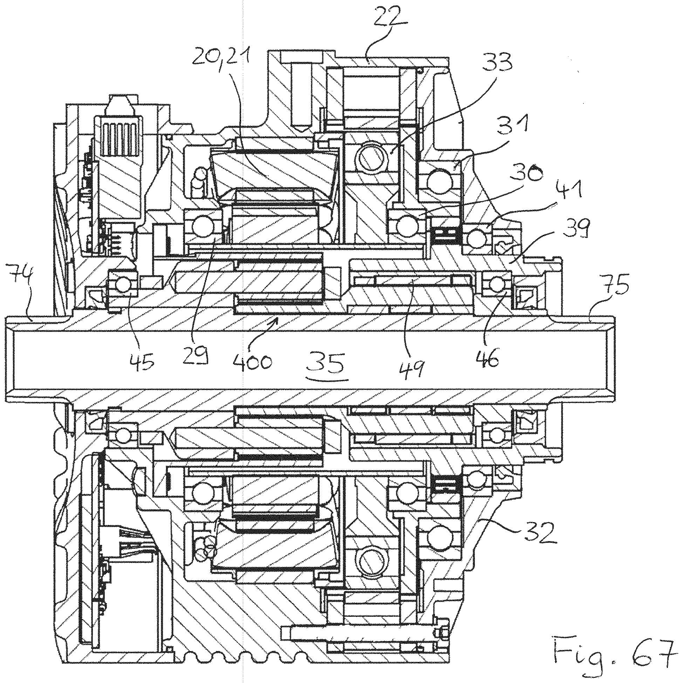

Die Figuren 67 bis 76 zeigen ein harmonisches Pinring-Getriebe mit einem Kurbelgetriebe. Das Kurbelgetriebe ist ein Planetengetriebe, das auf der Tretwelle angeordnet ist und das die Trittfrequenz eines Fahrers ins Schnelle übersetzt. Das Planetengetriebe kann auch schaltbar ausgebildet sein, insbesondere wenn das Planetengetriebe weitere Getriebestuffen enthält, die in Fig. 67 bis 76 nicht gezeigt sind, so wie es beispielsweise bei einem Ravigneaux- oder Lepelletier-Planetengetriebe der Fall ist.

Im einfachsten Fall erlaubt das Umschalten eine Auswahl zwischne einer 1 zu 1 Übersetzung und einer Übersetzung ins Schnelle. Das Umschalten des Kurbelgetriebes kann manuell über eine Bedienelement oder automatisch erfolgen. Bei einer automatischen Umschaltung kann die Umschaltung auf der Grundlage von Messwerten eines Drehmomentsensors erfolgen.

Gegenüber den Ausführungsbeispielen der Figuren 1 bis 40 wird die Tretlager-Sensor-Einheit durch ein Kurbelgetriebe ersetzt. Durch die Übersetzung des Planetengetriebes ins Schnelle kann eine Sekundärübersetzung zum Hinterrad kleiner gewählt werden. Dadurch ist es wiederum möglich, die Abtriebswelle schneller rotieren zu lassen, so dass der Motor und/oder das Untersetzungsgetriebe kleiner dimensioniert werden können oder bei gleicher Dimension mehr Leistung abgeben.

Weiterhin kann das Planetengetriebe dazu genutzt werden, das Drehmoment an der Tretwelle oder Tretkurbel zu messen, indem die Abstützkraft eines am Gehäuse fixierten Elementes des Planetengetriebes gemessen wird, beispielsweise durch aufgeklebte Dehnmessstreifen.

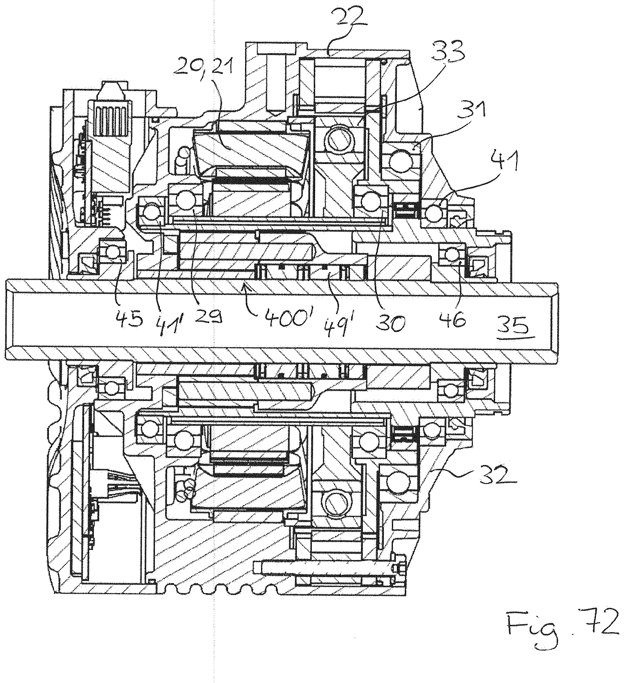

Falls das Sonnenrad am Gehäuse fixiert ist und das Hohlrad abgetrieben wird, wie im Ausführungsbeispiel von Fig. 72 bis 76, kann beispielsweise im Verhältnis 1,59:1 in Schnelle übersetzt werden, wodurch wiederum die abgegebene Motorkraft um den Faktor 0.63 verringert werden kann. Wenn das Hohlrad am Gehäuse fixiert ist und das Sonnenrad abgetrieben ist, wie im Ausführungsbeispiel von Fig. 67 bis 71, kann beispielsweise im Verhältnis 3:1 ins Schnelle übersetzt werden. Somit kann das abgegebene Drehmoment des Motors sogar um einen Faktor 0.33 verringert werden.

Die Übersetzung des Planetengetriebes kann beispielsweise dazu genutzt werden, um die Leistungsdichte zu steigern, wodurch sich allerdings auch die Motordrehzahl und damit das Motorgeräusch erhöhen kann. Weiterhin kann das Planetengetriebe als Basis für einen Motor mit integriertem Schaltgetriebe genutzt werden. Dabei kann das Schaltgetriebe entsprechend kleiner dimensioniert werden beziehungsweise es kann aufgrund einer erhöhten Motor-Leistungsdichte der nötige Bauraum für das Schaltgetriebe zur Verfügung gestellt werden.

Dabei zeigen die Figuren 67 bis 71 ein harmonisches Pinring- Getriebe mit einem auf einer Tretwelle angeordneten Planetengetriebe, bei dem ein Antrieb über einen mit der Tretwelle formschlüssig verbundenen Planetenträger erfolgt, und bei dem ein Abtrieb über ein Sonnenrad erfolgt.

Die Figuren 72 bis 76 zeigen ein harmonisches Pinring-Getriebe mit einem auf einer Tretwelle angeordneten Planetengetriebe, bei dem ein Antrieb über ein auf der Tretwelle drehbar gelagertem Planetenträger erfolgt, und bei dem ein Abtrieb über ein im Getriebegehäuse drehbar gelagertem Hohlrad erfolgt.

Die Getriebe sind ähnlich zu dem harmonischen Pinring-getriebe von Fig. 11, das eine Exzenterscheibe aufweist. Die Kurbelgetriebe von Fig. 67 bis 76 können jedoch auch mit anderen Untersetzungsgetrieben kombiniert werden.

Insbesondere können die Kurbelgetriebe von Fig. 67 bis 76 mit einem harmonischen Pinring-Getriebe kombiniert werden, das ähnlich zu dem Getriebe von Fig. 1 ist und eine oval geformte Kurvenscheibe und ein flexibles Kugellager aufweist.

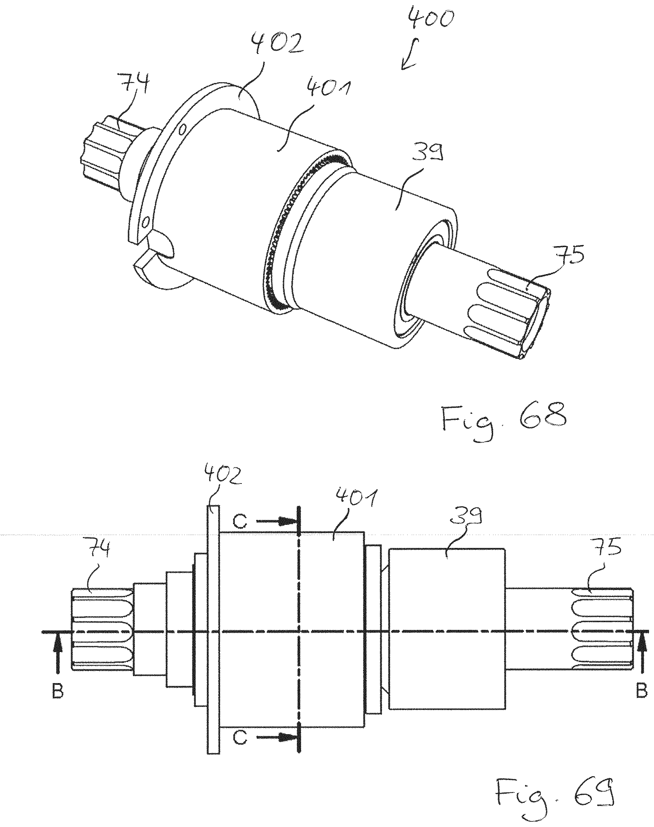

Der Übersichtlichkeit halber sind in Fig. 69 bis 76 nicht alle Komponenten, die bereits in Fig. 1 oder in Fig. 11 gezeigt sind, erneut mit Bezugsziffern versehen worden.

Fig. 68 zeigt eine perspektivische Ansicht einer Planetengetriebe-Baugruppe 400 von Fig. 67, in der ein Hohlrad 401, eine Befestigungsmuffe 402 des Hohlrads 401 und eine Abtriebswelle 39 erkennbar sind. Fig. 69 zeigt eine Seitenansicht der Planetengetriebe-Baugruppe 400 von Fig. 68.

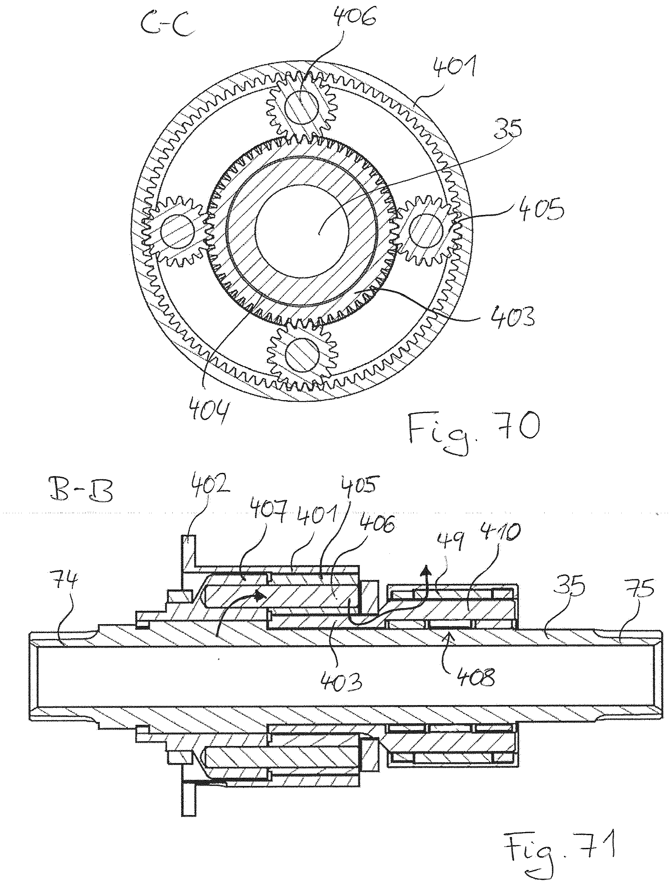

Fig. 70 zeigt einen Querschnitt der Planetengetriebe-Baugruppe 400 entlang der Schnittlinie C-C von Fig. 69. Ein Sonnenrad 403 ist als eine Hohlwelle ausgebildet, die durch einen Spalt 404 von der Tretwelle 35 getrennt ist, so dass sich das Sonnenrad 403 relativ zu der Tretwelle 35 rotieren kann. Planetenräder 405 sind jeweils auf Planetenachsen 406 angeordnet, wobei sich zwischen den Planetenräder 405 ein Wälzlager oder ein Gleitlager befindet, das durch einen Gleitfilm gebildet ist.

Fig. 71 zeigt einen Querschnitt der Planetengetriebe-Baugruppe 400 entlang der Schnittlinie B-B von Fig. 69. In dieser Querschnittsansicht ist weiterhin gezeigt, dass die Planetenachsen 406 in einem Planetenträger 407 angeordnet ist, der formschlüssig mit der Tretwelle 35 verbunden ist.

Das Sonnenrad 403 ist einstückig mit einer weiteren Hohlwelle 410 verbunden, die einen etwas größeren Durchmesser als das Sonnenrad 403 aufweist, der so bemessen ist, dass zwischen der Hohlwelle 410 und der Tretwelle 35 ein Wälzlager 408 angeordnet werden kann, das in dem Ausführungsbeispiel von Fig. 71 zwei Nadellager aufweist. Auf der zweiten Hohlwelle 410 ist ein Tretwellen-Freilauf 49 angeordnet.

Ein Drehmomentfluss von der Tretwelle 35 zur Abtriebswelle ist in Fig. 71 durch Pfeile angedeutet. Wie in der Fig. 67 gezeigt, ist der Befestigungsflansch 402 des Hohlrads am Getriebegehäuse 22 befestigt. Das stationäre Hohlrad nimmt die Gegenkräfte auf, die durch die Trittbewegung des Fahrers entstehen.

Gemäß einer weiteren Ausführungsform sind auf dem Hohlrad 401 Verformungssensoren wie beispielsweise Dehnmessstreifen angebracht, die mit einer Auswertungselektronik verbunden sind. Zur genaueren Messung kann ein Bereich des Hohlrads, in dem die Verformungssensoren angebracht sind, dünner ausgebildet sein.

Fig. 72 zeigt ein harmonisches Pinring Getriebe mit einem auf einer Tretwelle 35 angeordneten Planetengetriebe, bei dem ein Abtrieb über ein Hohlrad erfolgt.

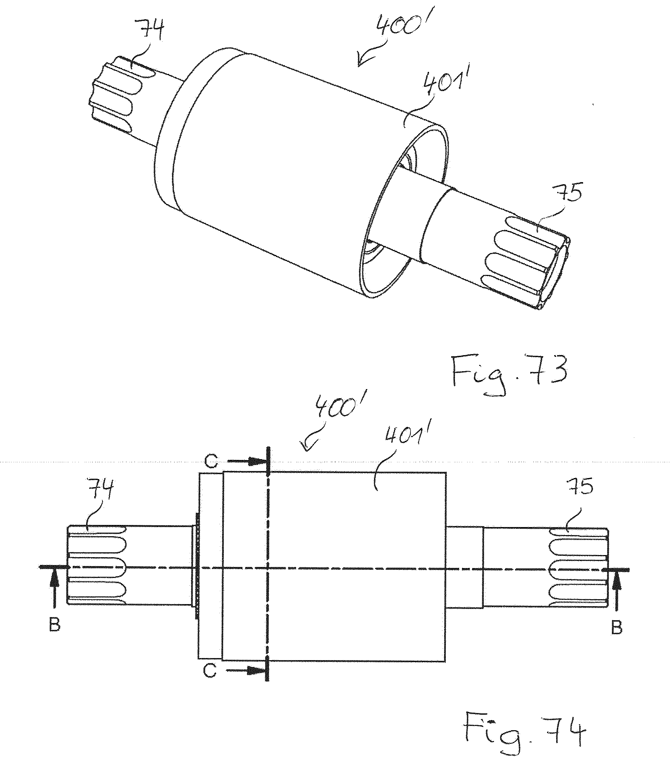

Fig. 73 zeigt eine perspektivische Ansicht der Planetengetriebe Baugruppe 400' von Fig. 67. Fig. 74 zeigt eine Seitenansicht der Planetengetriebe Baugruppe 400' von Fig. 68.

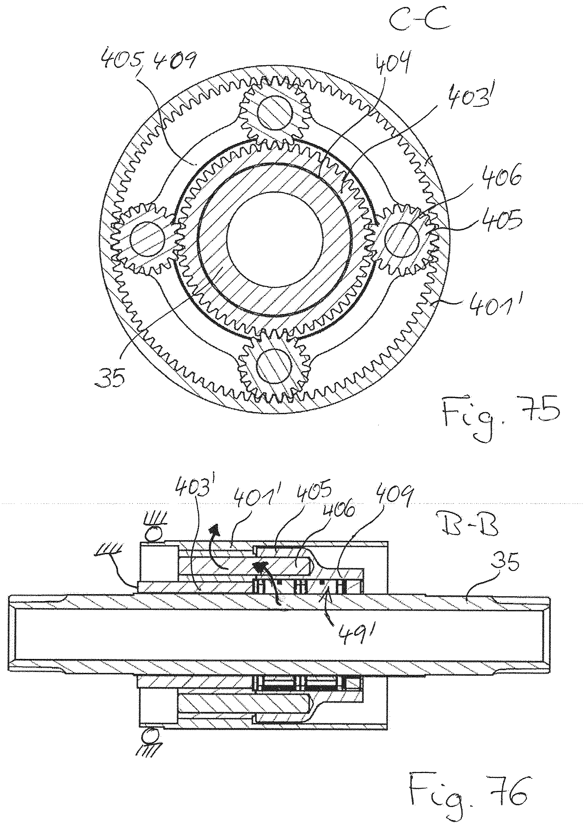

Figur 75 zeigt einen Querschnitt entlang der Schnittlinie C-C von Fig. 74. Ein Sonnenrad 403' ist durch einen Spalt 404 von der Tretwelle getrennt. Wie in Fig. 72 gezeigt, ist das Sonnenrad 403' über einen Befestigungsbereich mit dem Getriebegehäuse 22 verbunden. Insbesondere kann dieser Befestigungsbereich als eine Kraftmessdose ausgebildet sein. Die Planetenräder 405 sind drehbar auf Planetenachsen 406 angeordnet, die in einem Planetenträger 405 angeordnet sind.

Fig. 76 zeigt einen Querschnitt entlang der Schnittlinie B-B von Fig. 74. Wie in Fig. 76 gezeigt ist ein Bereich des Planetenträgers 405 als Hohlwelle 409 ausgebildet, die über einen Tretwellen-Freilauf 49' auf der Tretwelle 35 angeordnet ist.

Gemäß einer weiteren Ausführungsform, die hier nicht gezeigt ist, ist eine Hohlwelle eines auf der Tretwelle angeordneten Planetengetriebes antriebsseitig am Gehäuse festgelegt, eine Hohlwelle des Planetengetriebes ist fest mit der Tretwelle verbunden, und ein Sonnenrad ist über einen Tretwellen-Freilauf an eine Abtriebswelle gekoppelt. Zu diesem Zweck kann eine Befestigung der Hohlwelle von einer Antriebsseite aus um das Planetengetriebe herumgeführt sein. Hier und in den anderen Kurbelgetrieben kann die Tretwelle auch allgemein eine Kurbelwelle sein, wie beispielsweise eine Kurbelwelle eines Verbrennungsmotors, oder eine Antriebswelle eines Antriebs. So wie die beiden vorgenannte Kurbelgetriebe liefert auch dieses Kurbelgetriebe eine Übersetzung ins Schnelle.

Zusätzlich entsteht eine Drehrichtungsumkehr, die in Fällen günstig sein kann, in denen, anders als bei einem Elektrofahrrad ohne Rückwärtsgang, eine Drehrichtung eines Verbrauchers gegensinnig zur Drehrichtung der Kurbelwelle bzw. Antriebswelle des Kurbelgetriebes festgelegt ist, so dass in diesen Fällen keine erneute Drehrichtungsumkehr nötig ist.

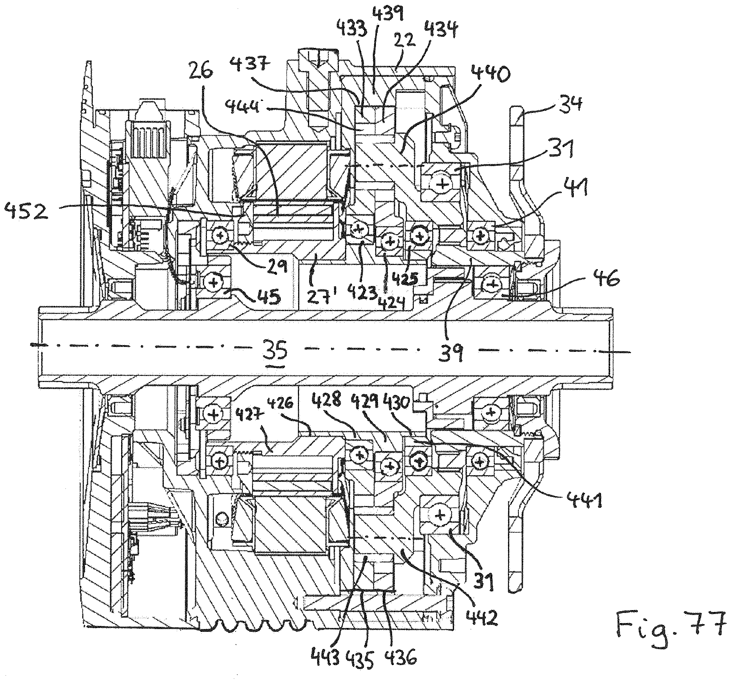

Die Figuren 77 - 81 zeigen ein Cyclo-Getriebe gemäß der vorliegenden Beschreibung sowie eine Motor-Getriebe-Einheit mit dem Cyclo Getriebe.

Fig. 77 zeigt eine Querschnittsansicht einer Motor-Getriebe Einheit für ein Elektrofahrrad, in der ein Cyclo-Getriebe als Reduktionsgetriebe verwendet wird.

Bestandteile, die in der Beschreibung der vorherigen Figuren, insbesondere der Figuren 1 - 3 und 10 - 14, bereits erläutert wurden, werden hier nicht erneut beschrieben. Wie die in Fig. 1 und Fig. 10 gezeigten Getriebe weist das Cyclo-Getriebe eine Drei-Lager Anordnung auf, bei der ein Abtriebselement mit einer Abtriebs-Hohlwelle in einem Stück ausgeformt ist und auf zwei diagonal gegenüberliegenden Lagern nach innen an einem Gehäusedeckel und nach außen an einer inneren Hohlwelle abgestützt sind. Somit sind zur Abstützung der Rotorwelle, des Abtriebselements und der Abtriebs-Hohlwelle lediglich drei Lager erforderlich.

Bei der Drei-Lager-Anordnung können die äußeren Lager der Rotorwelle weiter auseinanderstehen. Das ist insbesondere bei einer Motor-Getriebe-Einheit für ein Elektrofahrrad der Fall, bei der ein begrenzter axialer Bauraum durch Verwendung von weniger Lagern besser ausgenutzt wird. Somit ist eine Hebelwirkung eines äußeren Kippmoments auf die Lager und auf die Rotorwelle geringer, und die Rotorwelle kann als dünner Zylinder gebaut werden. Dies ist bei vielen solcher Motor-Getriebe-Einheiten der Fall.

Bei dem Zykloidgetriebe von Fig. 77 wird das Abtriebselement, an dem die Abtriebs-Hohlwelle ausgebildet ist, durch eine Abtriebsscheibe mit darauf angeordneten Mitnehmerbolzen und Mitnehmerrollen gebildet. Bei den in Fig. 1 und Fig. 10 gezeigten Motor-Getriebe-Einheiten wird es durch ein abgetriebenes Innenrad gebildet, an dem eine Abtriebs-Hohlwelle ausgebildet ist.

Eine innere Rotorwelle 27' des Zykloid-Getriebes ist aus einer Antriebswelle 426 und einer darauf aufgesetzten Rotorwelle 427 aufgebaut. Die Antriebswelle 426 weist antriebsseitige kreisförmige Exzenterscheibe 428, eine abtriebs- seitige kreisförmige Exzenterscheibe 429 und eine zentrierte Kreisscheibe 430 auf, die auf der Antriebswelle 426 ausgeformt sind und die nebeneinander angeordnet sind. Die abtriebsseitige Exzenterscheibe 429 ist gegenüber der antriebsseitigen Exzenterscheibe 428 um 180 Grad versetzt.

Auf der antriebsseitigen Exzenterscheibe 428 ist ein erstes Kugellager 423 angeordnet, auf dem ein antriebsseitiges Innenrad 433 gelagert ist. Ein abtriebsseitiges Innenrad 434 ist auf der abtriebsseitigen Exzenterscheibe 429 über ein zweites Kugellager 424 gelagert. Das antriebsseitige Innenrad 433 und das abtriebsseitige Innenrad 434 sind baugleich und weisen jeweils eine Außenverzahnung 435, 436 auf, die jeweils in eine gegenüberliegende Innenverzah- nung 437 eines stationär mit dem Gehäuse verbundenen Außenrads 439 eingreift.

Eine Abtriebsscheibe 440 ist über einen Ring 441, der auf der zentrierten Kreisscheibe 430 angeordnet ist, auf einem dritten Kugellager 425 gelagert. Die Abtriebsscheibe 440 weist Mitnehmerbolzen 442 auf, die in regelmäßigen Abständen auf der Abtriebsscheibe 441 angeordnet sind, und die in kreisförmige Öffnungen 444 der beiden Innenräder 433, 434 eingreifen. Die Mitnehmerbolzen 442 sind mit Rollen 443 versehen, die auf den Mitnehmerbolzen 442 drehbar angeordnet sind.

Die Antriebswelle 426 der inneren Rotorwelle 27' wirkt als Antriebs-Hohlwelle 426 des Zykloid-Reduktionsgetriebes.

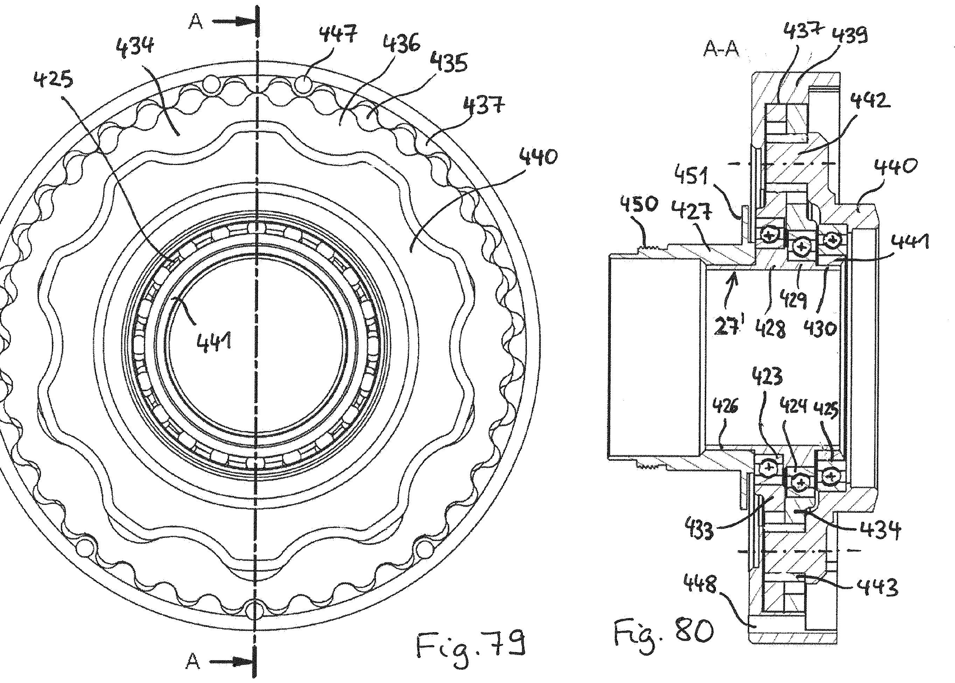

Auf der Rotorwelle 427 der inneren Rotorwelle 27' ist eine Andruckscheibe 451 und ein der Andruckscheibe gegenüberliegendes Gewinde 450 ausgeformt. Wie in der Querschnittszeichnung von Fig. 80 erkennbar ist, ist auf dem Gewinde ein Anpressring 452 aufgeschraubt, so dass das Rotorpaket 26 bzw. die äußere Rotorwelle 26 zwischen dem Anpressring und dem Haltering eingespannt ist. Dies entspricht der Anordnung von Fig. 30 und unterscheidet sich von der Anordnung von Fig. 1, bei der das Rotorpaket zwischen einem auf der inneren Rotorwelle angeordneten Abstandhalter und einer Schulter der inneren Rotorwelle festgehalten ist.

Das antriebsseitige Innenrad 433 und das abtriebsseitige Innenrad 434 werden auch als "Kurvenscheiben" bezeichnet. Statt der Innenverzahnung 437 des Außenrads 439 kann auch ein stationärer Pinring vorgesehen sein, der in Fig. 79 angedeutet ist. Dieser stationärer Pinring kann über Rollen verfügen, so dass Reibung und Scherkräfte verringert werden und ein wälzender Bewegungsablauf ermöglicht wird.

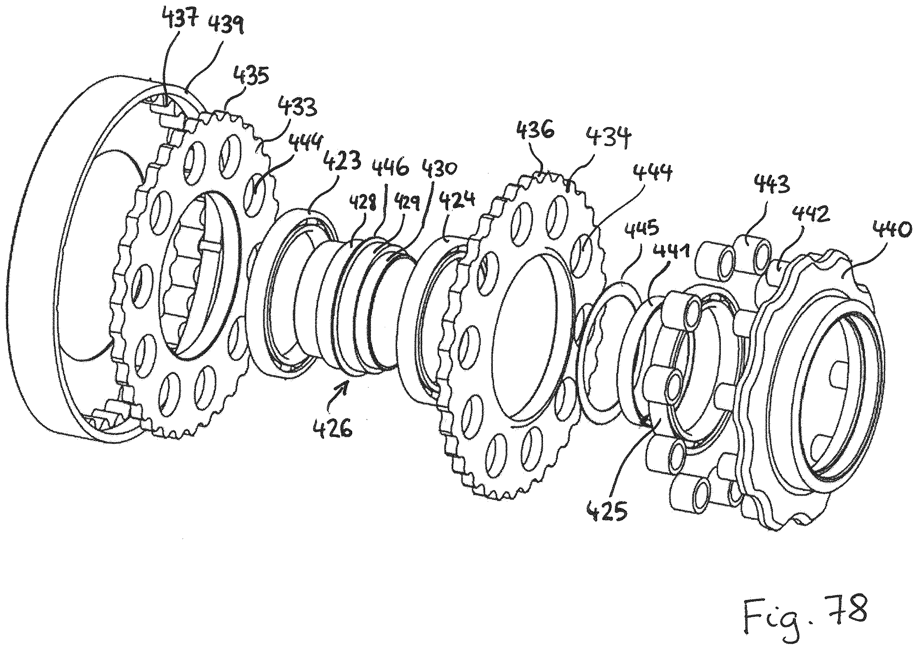

Die Explosionsansicht von Fig. 78 zeigt, von links nach rechts gesehen, das Außenrad 439 mit der Innenverzahnung 437, das abtriebsseitige Innenrad 433, das erste Kugellager 423, die innere Rotorwelle 27', auf der die antriebsseitige Exzenterscheibe 428, die abtriebsseitige Exzenterscheibe 429 und die zentrierte Kreisscheibe 430 angeordnet sind, das zweite Kugellager 424, das abtriebsseitige Innenrad 434, eine Distanzscheibe 445, den Ring 441, das dritte Kugellager 425, die Mitnehmerrollen 443 und die auf der Abtriebsscheibe 440 angeordneten Mitnehmerbolzen 442, und die Abtriebsscheibe 440.

Weiterhin zeigt die Fig. 78, einen Grat 446, der zwischen der antriebsseitigen 428 und der abtriebsseitigen Exzenterscheibe 429 vorgesehen ist.

Die Seitenansicht von Fig. 79 zeigt, von innen nach außen gesehen, den Ring 441, das dritte Kugellager 425, die Abtriebsscheibe 440, das abtriebsseitige Innenrad 434 mit der Außenverzahnung 436, die Außenverzahnung 435 des antriebsseitigen Innenrads 433, und die Innenverzahnung 437 des Außenrads 439. An zwei Stellen sind stationäre Pins 447 angedeutet, die anstelle der Innenverzahnung des Außenrads 439 vorgesehen sein können.

Die Querschnittsansicht von Fig. 80 zeigt einen Querschnitt durch das Zykloidgetriebe der Motor-Getriebe Einheit von Fig. 77, in der die innere Rotorwelle 27' mit der antriebsseitigen Exzenterscheibe 428 und dem darauf gelagerten antriebsseitigen Innenrad 433, der abtriebsseitigen Exzenterscheibe 429 und dem darauf gelagerten abtriebsseitigen Innenrad 434, der zentrierten Kreisscheibe 430 und der darauf gelagerten Abtriebsscheibe 440 mit den Mitnehmerbolzen 442 und Mitnehmerrollen 443, sowie das Außenrad 439 mit der Innenverzahnung 437 gezeigt sind.

Im unteren Bereich der Fig. 80 ist eine Befestigungsöffnung 448 des Außenrads 439 gezeigt. Wie im Querschnitt von Fig. 77 gezeigt, ist das Außenrad 439 ist durch Befestigungsschrauben an dem Getriebegehäuse befestigt, die durch die Befestigungsöffnungen 448 hindurchgeführt sind.

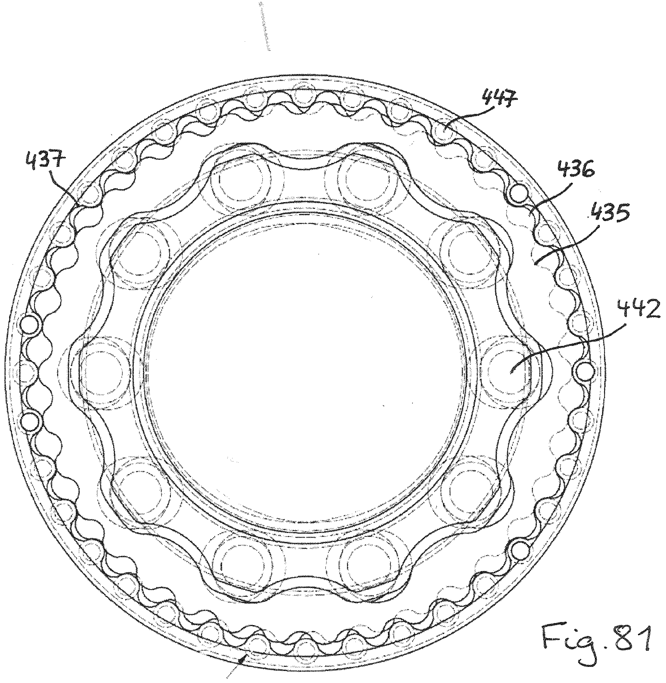

Fig. 81 zeigt eine Seitenansicht eines Ausschnitts aus dem Zykloidgetriebe von Fig. 77, in der auch verdeckte Bauteile sichtbar sind. In der Ansicht von Fig. 81 ist erkennbar, dass sich sämtliche Zahnköpfe der beiden Innenräder im Eingriff bzw. in Kontakt mit der Innenverzahnung des stationären Außenrads befinden. Weiterhin zeigt Fig. 81 gleichzeitig eine alternative Ausführungsform, bei der das Außenrad statt einer Innenverzahnung eine Anordnung aus stationären Pins oder Bolzen mit darauf angeordneten Rollen aufweist.

Im Folgenden wird beispielhaft eine Montage des Zykloidgetriebes unter Bezugnahme auf die voranstehenden Figuren 77 - 81 beschrieben.

Die Elemente, die sich antriebsseitig von der Rotorwelle 427 in dem Motorgehäuse 22 befinden werden in das Motorgehäuse 22 eingeführt oder an dem Motorgehäuse 22 befestigt. Unter anderem werden das antriebsseitige Rotor-Kugellager 29, die Kraftmessdose 47, das antriebsseitige Tretwellen-Kugellager 45 und eine Stator-Baugruppe des Motors in das Motorgehäuse 22 eingesetzt. Das Außenrad 439 wird auf das Motorgehäuse 22 aufgeschraubt.

Die Rotorwelle 427 wird antriebsseitig auf die Abtriebswelle 426 aufgesteckt. Das antriebseitige Innenrad 433 und das erste Kugellager 423 werden von der Antriebsseite her auf die antriebsseitige Exzenterscheibe 428 aufgesetzt. Das Rotorpaket wird von der Antriebsseite her auf die innere Rotorwelle 27' aufgesetzt und der Anpressring 452 wird an das Rotorpaket angeschraubt. Dann wird die Baugruppe aus der Rotorwelle 427 und der Abtriebswelle 426 wird mit den darauf montierten Bauelementen von der Abtriebsseite her in die Motor-Getriebe-Einheit eingeführt.

Das zweite Kugellager 242 und das abtriebsseitige Innenrad 434 werden von der Abtriebsseite her auf die abtriebsseitige Exzenterscheibe 429 aufgesetzt. Der Ring 441 wird auf die zentrierte Kreisscheibe 430 aufgesetzt und das dritte Kugellager 425 wird auf den Ring 441 aufgesetzt.

Die Mitnehmerrollen 443 werden auf die Mitnehmerbolzen 442 des Abtriebsrings 440 aufgesetzt und der Abtriebsring 440 wird auf das dritte Kugellager 425 aufgesetzt, so dass eine innere Schulter des Abtriebsrings 440 an dem Außenring des dritten Kugellagers 425 aufliegt. Dabei werden die Mitnehmerbolzen 442 mit dem Mitnehmerrollen 443 durch die kreisförmigen Öffnungen 444 des abtriebsseitigen Innenrads 433 und des antriebsseitigen Innenrads 434 hindurchgeführt. Das Kugellager 31 wird an eine Schulter der Abtriebsscheibe angelegt und der Getriebedeckel wird zusammen mit dem Außenrad an dem Motorgehäuse 22 festgeschraubt, wobei die Befestigungsöffnungen des Getriebedeckels und des Außenrads übereinanderliegen.

Das Rotorpaket 26 und die innere Rotorwelle 27' werden durch Bestromen des Stators 22 in Rotation versetzt. Diese Rotation wird auf die Exzenterscheiben 428, 429 übertragen. Die Exzenterscheiben 428, 429 versetzen wiederum die darauf angeordneten Innenräder 433, 434 in eine exzentrische Kreisbewegung, wodurch die Verzahnungen der Innenräder 433, 434 an der Verzahnung des stationären Außenrads 439 vorbeibewegt werden. Dadurch übt die Innenverzahnung 437 des Außenrads 439 auf die Innenräder 433, 434 eine Reaktionskraft aus. Durch diese Reaktionskraft des Außenrads 439 werden die Innenräder 433, 434 in eine Rotation um ihre eigene Rotationsachse versetzt. Diese Rotation wird durch die Mitnehmerbolzen 442 abgegriffen und auf die Abtriebsscheibe übertragen, wodurch die Bewegung der Innenräder 433, 434 in eine zentrierte Kreisbewegung umgewandelt wird. Von dort wird die Rotation direkt auf einen Verbraucher übertragen, wie beispielsweise bei einem Getriebemotor, oder, wie beispielsweise bei einem Elektrofahrrad, zunächst über einen Freilauf 40 auf eine Abtriebswelle 39 übertragen.

Die Figuren 82 - 88 zeigen ein Spannwellen-Getriebe sowie eine Motor-Getriebe-Einheit mit einem Spannwellen-Getriebe gemäß der vorliegenden Beschreibung.

Fig. 82 zeigt einen Querschnitt einer Motor-Getriebe Einheit mit dem Spannwellen- oder Flexspline-Getriebe gemäß der vorliegenden Beschreibung. Die hier nicht gezeigten Elemente entsprechen denen der Fig. 1.

Eine Außenverzahnung 5" einer Spannwelle 453 ist zwischen einer Kurvenscheibe 455' mit einem flexiblen Kugellager 33 und einem Außenrad 457 mit einer Innenverzahnung 6" angeordnet, das an einem Motorgehäuse 22 festgeschraubt ist. Die Spannwelle ist über einen Befestigungsbereich mit Nieten an einer Ausgangswelle 458 befestigt, die auf den diagonal gegenüberstehenden Kugellagern 31 und 30 gelagert ist.

Fig. 83 zeigt eine Explosionszeichnung des Spannwellen- oder Flexspline-Getriebes von Fig. 82, bei dem ein stationäres Außenrad 8" mit der weiter unten als Verzahnung für das HPD-F Getriebe bezeichneten Verzahnung versehen sind. Dadurch kann ein besonders guter Eingriff der beiden Verzahnungen erreicht werden.

Hiernach ist die Innenverzahnung des Außenrads im Wesentlichen ein äußere Äquidistante der durch

$$x(t) = r1 * \cos(t) + r2 * \cos((n+1)*t) + r3*\cos((n+3)*t)$$

und

$y(t) = r1 * \sin(t) - r2 * \sin((n+1)*t) + r3*\sin((n+3)*t)$ bestimmten Radkurve, wobei t zwischen 0 und 2 pi/Z_aussen bzw. 360°/Z_aussen liegt und wobei die Äquidistante beispielsweise den Abstand eines Pinradius von der Radkurve hat.

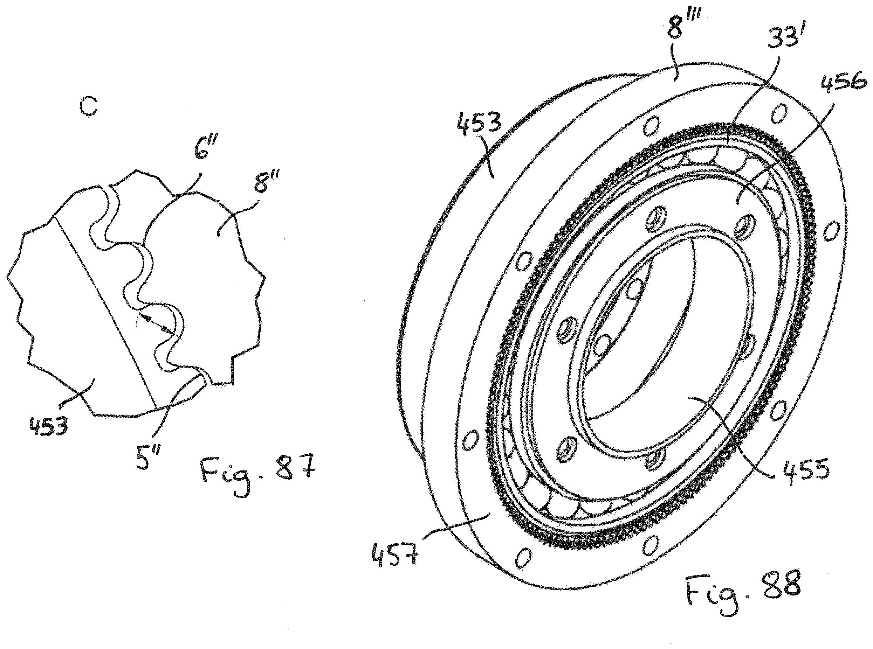

Die gegenüberliegende Außenverzahnung der Spannwelle ist von der Geometrie eines Pinrings mit zylindrischen Pins abgeleitet. Somit entspricht ein Querschnitt der Zahnköpfe in einer Ebene senkrecht zur axialen Richtung einem Kreisausschnitt, vorzugsweise einem Halbkreis. Dies ist in Fig. 87 erkennbar.

Die Explosionsansicht von Fig. 83 zeigt, von links nach rechts bzw. von der Abtriebsseite zur Antriebsseite gesehen, das stationäre Außenrad 8" bzw. den Außenring 8", die topfförmig ausgebildete Spannwelle 453 mit der Innenverzahnung 6" und dem Befestigungsbereich 454, das flexible Kugellager 33 und den Antriebszylinder 455 mit ovalem Umfang und Befestigungsflansch 456. Der Antriebszylinder von Fig. 83 ist beispielsweise für einen Getriebemotor geeignet und weicht von der Kurvenscheibe 455' der Fig. 82 ab, die auf einer inneren Rotorwelle angeordnet ist.

In der vorliegenden Beschreibung bezeichnet "Oval" vorzugsweise ein Oval mit zwei senkrecht aufeinander stehenden Spiegelsymmetrien oder Hauptachsen, wie beispielsweise eine Ellipse oder eine sinusüberlagerte Kreisform. Es kann aber auch beispielsweise ein Oval mit drei Symmetrieachsen bezeichnen, in denen der Achsabstand maximal ist, so dass statt zwei Eingriffsbereichen mit vollständigem Zahneingriff drei Eingriffsbereiche erzeugt werden.

Der Befestigungsbereich 454 der Spannwelle ist zum Befestigen einer Abtriebswelle geeignet. Weiterhin weist das stationäre Außenrad 8" einen Befestigungsbereich 457 zum Befestigen an einem Getriebegehäuse auf und der Antriebszylinder 455 weist einen Flansch 456 zum Befestigen einer Antriebsachse auf. In einer Ausführungsform des Spannwellengetriebes für ein Elektrofahrrad kann der Antriebszylinder 455 auch als Teil einer inneren Rotorwelle ausgebildet sein und braucht in diesem Fall keinen Befestigungsflansch 456 aufzuweisen.

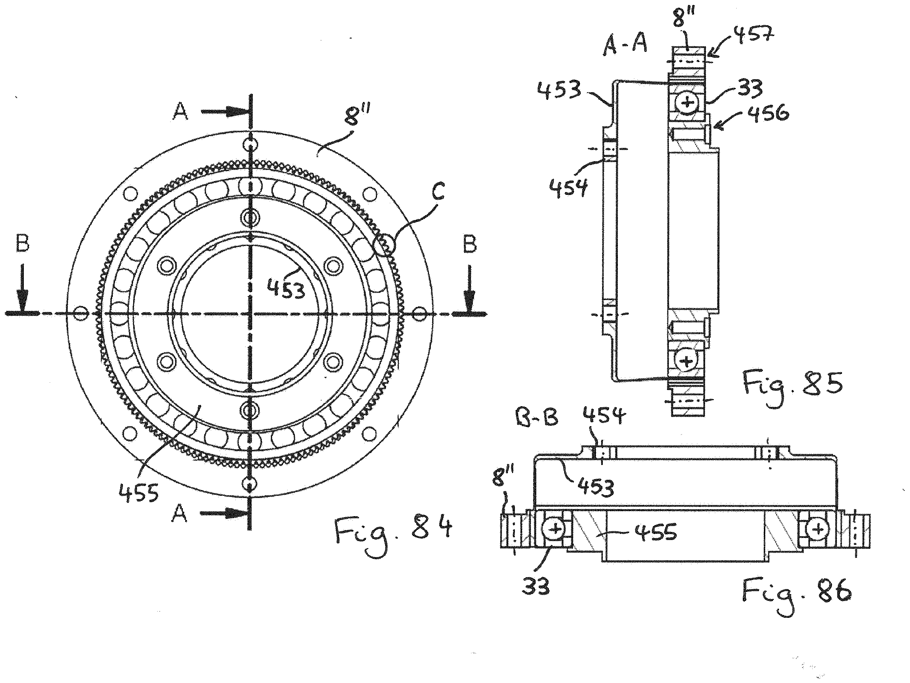

Fig. 84 zeigt eine von der Antriebsseite her betrachtete Seitenansicht des Spannwellengetriebes von Fig. 82 im zusammengebauten Zustand, in der, von innen nach außen, der Befestigungsbereich der Spannwelle, der Antriebszylinder, das flexible Kugellager, die Außenverzahnung der Spannwelle, die Innenverzahnung des Außenrads und das Außenrad gezeigt sind.

Fig. 85 zeigt einen Querschnitt entlang der Querschnittslinie A-A von Fig. 84, die entlang einer kleinen Halbachse des Antriebszylinders 455 verläuft. In der Querschnittsansicht von Fig. 85 ist erkennbar, dass die Spannwelle 453 nach innen vorgespannt ist, so dass sie im Bereich der kleinen Halbachse des Antriebszylinders 455 an dem Außenring des flexiblen Kugellagers 33 anliegt.

Fig. 86 zeigt einen Querschnitt entlang der Querschnittslinie B-B von Fig. 84, die entlang einer großen Halbachse des Antriebszylinders 455 verläuft. Wie in den Querschnittsansichten von Fig. 85 und Fig. 86 gezeigt weisen das Außenrad 8" und die Spannwelle 453 jeweils glatte, zylinderförmige Bohrungen oder Öffnungen auf, wogegen der Antriebszylinder 455 Bohrungen mit Gewinde aufweist.

Fig. 87 zeigt eine in der vorherigen Fig. 84 mit "C" bezeichnete Ausschnittsvergrößerung, in der die Form der Exzenterverzahnung erkennbar ist.

Fig. 88 zeigt das Spannwellengetriebe von Fig. 82 im zusammengebauten Zustand.

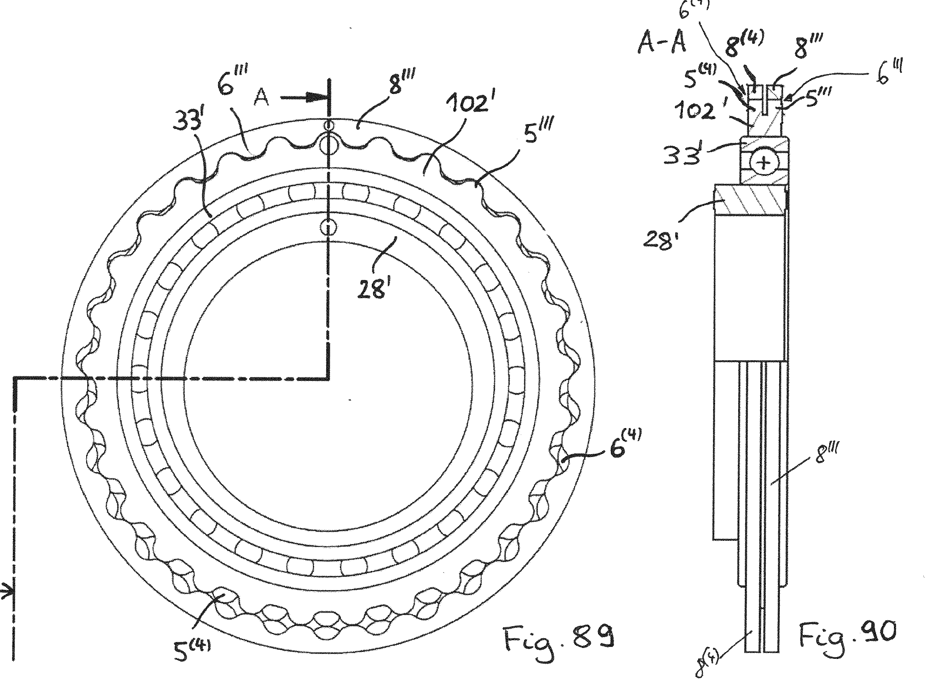

Die Figuren 89 - 93 zeigen ein zweistufiges Untersetzungs-getriebe mit einem zweigeteilten einstückigen Pinring 102' und zwei Außenrädern $8'''$, $8^{(4)}$, wobei der zweigeteilte einstückige Pinring 102' auf einer Exzenterscheibe gelagert ist.

Der zweigeteilte einstückige Pinring 102 weist auf einem ersten Abschnitt eine erste Außenverzahnung $5'''$ und auf einem daneben angeordneten Abschnitt eine zweite Außenverzahnung $5^{(4)}$ auf. Die erste Außenverzahnung $5'''$ des Pinrings 102' ist gegenüber einer ersten Innenverzahnung $6'''$ eines drehbar gelagerten Außenrads $8'''$ angeordnet und die zweite Außenverzahnung $5^{(4)}$ des Pinrings 102' ist gegenüber einer zweiten Innenverzahnung $6^{(4)}$ eines stationären Außenrads $8^{(4)}$ angeordnet.

Eine Anzahl der Zähne der ersten Außenverzahnung $5'''$ ist geringer als eine Anzahl der Zähne der Innenverzahnung $6'''$
und eine Anzahl der Zähne der zweiten Außenverzahnung $5^{(4)}$ ist geringer als eine Anzahl der Zähne der Innenverzahnung $6^{(4)}$. In einer beispielhaften Ausführungsform eines hochuntersetzten Getriebes ist eine Anzahl der Zähne der ersten Außenverzahnung $5'''$ gleich 28 und eine Anzahl der Zähne der Innenverzahnung $6'''$ des beweglichen Außenrads $8'''$ ist gleich 29, und eine Anzahl der Zähne der zweiten Außenverzahnung ist gleich 29 und eine Anzahl der Zähne der Innenverzahnung $6^{(4)}$ des stationären Außenrads ist gleich 30.

Somit ist bei diesem Ausführungsbeispiel eine Untersetzung einer antriebseitigen ersten Getriebestufe größer als eine Untersetzung einer abtriebsseitigen zweiten Getriebestufe und eine Zähnezahl des jeweiligen Außenrads ist größer als eine Zähnezahl der jeweiligen radial gegenüberliegenden Verzahnung des Pinrings. Dadurch bewegt sich die innere Außenverzahnung im Bezugssystem der äußeren Innenverzahnung entgegengesetzt zum Antrieb. Somit bewegt sich die Innenverzahnung des beweglichen Außenrads in der Richtung des Antriebs und verringert die Untersetzung der ersten Getriebestufe. In einem allgemeinen Fall kann die Zähnezahl gegenüberliegender Verzahnungen jeweils verschieden sein.

Bei Verwendung einer Exzenterscheibe muss die Differenz der Zähnezahlen mindestens eins sein. Weiterhin braucht das Kugellager und ein darauf angeordnetes Übertragungselement, wie beispielsweise ein Pinring, nicht verformbar zu sein. In einem alternativen Ausführungsbeispiel, das eine ovale Scheibe anstelle einer Exzenterscheibe und ein flexibles Kugellager, das auf der Exzenterscheibe angeordnet ist, aufweist ist die Differenz der Zähnezahlen gegenüberliegenden Verzahnung ein Vielfaches von zwei.

Bei Ausführungsbeispielen ohne einem zwischen einem Innen- und einem Außenrad angeordneten Übertragungsmittel, bei denen ein Übertragungsmittel gleichzeitig als ein Innenrad mit Außenverzahnung wirkt, wie beispielsweise bei dem Spannwellen-Getriebe von Fig. 83 oder bei dem zweistufigen Exzentergetriebe von Fig. 89, bezieht sich die Differenz der Zähnezahlen auf die Verzahnung des Übertragungsmittels und die dem Übertragungsmittel gegenüberliegende Verzahnung.

**EP 4 325 191 A1**

Fig. 89 zeigt eine Seitenansicht des zweistufigen Untersetzungsgetriebes von der Abtriebsseite her.

Fig. 90 zeigt einen Querschnitt entlang der in Fig. 89 bezeichnet Querschnittslinie A-A in der in Fig. 89 bezeichneten Blickrichtung. Somit zeigt die obere Hälfte der Fig. 90 einen echten Querschnitt, wogegen die untere Hälfte der Fig. 90 eine seitliche Aufsicht zeigt.

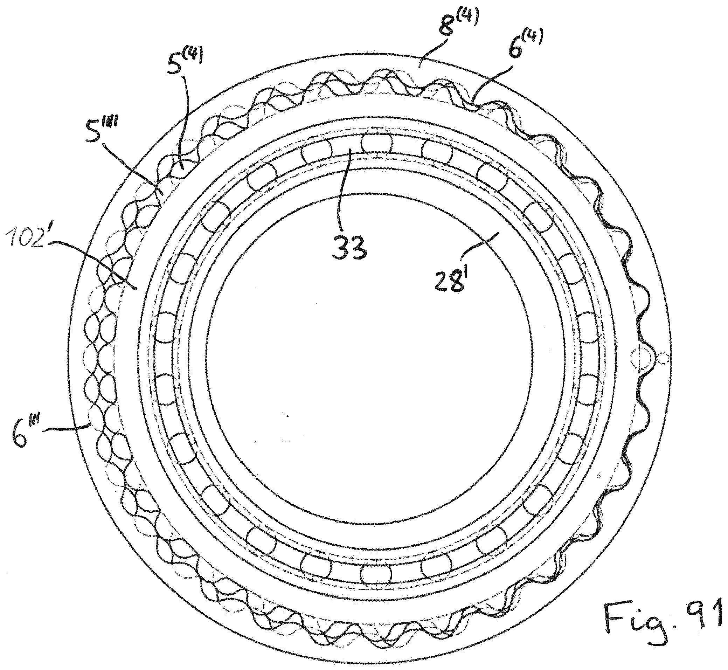

Fig. 91 zeigt eine Seitenansicht des zweistufigen Untersetzungsgetriebes von Fig. 82, wobei verdeckte Bauteile durch gestrichelte Linien angedeutet sind, um den Eingriff der gegenüberliegenden Verzahnungen zu verdeutlichen.

Fig. 92 zeigt eine teilweise angeschnittene perspektivische Ansicht des zweistufigen Untersetzungsgetriebes von Fig. 82, die von der Abtriebsseite bzw. von der Seite des beweglichen Außenrads 8‴ her betrachtet ist.

Fig. 93 zeigt eine teilweise angeschnittene perspektivische Ansicht des zweistufigen Untersetzungsgetriebes von Fig. 82, die von der Antriebsseite bzw. von der Seite des stationären Außenrads 8$^{(4)}$ her betrachtet ist. Das stationäre Außenrad 8$^{(4)}$ verfügt über einen Befestigungsbereich zum Befestigen an einem Getriebegehäuse, der in den Figuren 89 bis 93 nicht gezeigt ist. In ähnlicher Weise verfügt das bewegliche Außenrad 8‴ über einen Befestigungsbereich zum Befestigen einer Ausgangswelle, der in den Figuren 89 bis 93 nicht gezeigt ist.

Der zweigeteilte Pinring des zweistufigen Pinring-Getriebes von Fig. 89 - 93 unterscheidet sich von einer außen verzahnten Spannwelle gemäß dem Stand der Technik unter anderem durch die Verzahnungsform. Die Verzahnungsform der beiden Verzahnungen Pinrings ist im Wesentlichen eine innere Äquidistante zu einer Radkurve, die durch die weiter unten angegebene Formel (1) für eine Radkurve eines harmonischen Pinring-Getriebe mit Exzenterscheibe bestimmt ist, wobei die Äquidistante vorzugsweise den Abstand eines Pinradius von der Radkurve (1) hat.

Das harmonische Pinring-Getriebe wird auch als HPD-E Getriebe bezeichnet. Die Formel (1) beschreibt eine nicht rückläufige Epizykelbahn mit einem Epizykel.

Entsprechend ist die Verzahnung des stationären Außenrads 8$^{(4)}$ und des beweglichen Außenrads 8‴ eine äußere Äquidistante zu der durch die Formel (1) angegebene Radkurve, vorzugsweise im Abstand eines Pinradius. Dabei wird die Anzahl der Zähne durch den Parameter "n" der Formel (1) bestimmt. Sowohl bei der Außenverzahnung als auch bei der Innenverzahnung kann es ausreichen, wenn lediglich die Zahnköpfe durch die Formel (1) bestimmt sind.

Vorzugsweise sind die Verzahnungen des zweistufigen Getriebes der Figuren 89 - 93 so ausgelegt, dass ein hochuntersetztes Getriebe entsteht, bei dem eine Untersetzung der ersten Getriebestufe durch die zweite Getriebestufe nochmals verringert wird, und zwar dadurch, dass die durch die zweite Getriebestufe erzeugte zweite Winkelgeschwindigkeit gegensinnig zu einer ersten Winkelgeschwindigkeit ist, die durch die erste Getriebestufe erzeugt wird. Außerdem ist die zweite Winkelgeschwindigkeit kleiner als das Doppelte der ersten Winkelgeschwindigkeit, so dass die resultierende Winkelgeschwindigkeit am Getriebeausgang betragsmäßig kleiner ist als die Winkelgeschwindigkeit der ersten Getriebestufe.

Die zweite Winkelgeschwindigkeit kann auch größer sein als die erste Winkelgeschwindigkeit, wodurch eine Drehrichtungsumkehr erzeugt wird, so dass der Abtrieb nunmehr gleichsinnig zum Antrieb erfolgt. Die Drehrichtungsumkehr kann beispielsweise für einen Generatorbetrieb in einem Hybridfahrzeug günstig sein oder auch um die Drehbewegungen von Antrieb und Abtrieb zu überlagern.

Im Betrieb wird die Exzenterscheibe durch einen Motor, beispielweise einen elektrischen Motor, in Rotation versetzt. Diese Rotationsbewegung wird über das Kugellager auf eine exzentrische Bewegung des zweigeteilten Pinrings umgesetzt. Dadurch werden die Zähne des zweigeteilten Pinrings an den Außenverzahnungen der beiden Außenräder vorbeigeführt bzw. in die Außenverzahnungen gerakelt.

Dadurch entsteht eine Drehbewegung des Pinrings relativ zu dem stationären Außenrad und eine Drehbewegung des beweglichen Außenrads relativ zu dem bewegten Pinring, die sich zu einer Ausgangs-Drehbewegung überlagern.

Das zweistufige Untersetzungsgetriebe kann auch mit einem ovalen Transmitter, einem verformbaren Kugellager sowie einem verformbarem zweigeteiltem Pinring gebaut werden. Dabei findet vorzugsweise eine andere Innenverzahnung Verwendung als in den Figuren 89 - 93 gezeigt. Beispielsweise kann die Verzahnungsgeometrie des in Fig. 83 - 87 gezeigten SpannwellenGetriebes verwendet werden.

Insbesondere kann das zweistufige Untersetzungsgetriebe auch in umgekehrter Richtung betrieben werden und für eine Übersetzung ins Schnelle benutzt werden. Beispielsweise kann eine hohe Übersetzung für eine Streak-Kamera mit einem rotierenden Spiegel nützlich sein, der mehrere tausend Umdrehungen pro Sekunde haben kann.

Ein zweistufiges Übersetzungsgetriebe mit abgetriebenem Außenrad kann auch in dem Zykloidgetriebe eingesetzt werden. In diesem Fall entfällt die Abtriebsscheibe mit den Mitnehmerbolzen. Stattdessen ist mindestens ein Innenrad als geteiltes Innenrad mit zwei unterschiedlichen Verzahnungen ausgeführt, wobei ein Innenverzahnung des drehbaren Außenrads gegenüber der zweiten der beiden Verzahnungen angeordnet ist.

Die Beschreibung der nachfolgenden Figuren 94 - 118 offenbart Innenrad- und Außenradverzahnungen, die zusammen mit den Getrieben der vorliegenden Beschreibung eingesetzt werden können, insbesondere mit den harmonischen Pinring-Getrieben.

Insbesondere offenbart die vorliegende Beschreibung ein harmonisches Pinring Getriebe mit Exzenterscheibe, das auch als "HPD-E Getriebe" bezeichnet wird. Das HPD-E Getriebe weist ein erstes Rad mit einer ersten Verzahnung,

38

ein zweites Rad mit einer zweiten Verzahnung und einen Pinring mit runden Eingriffsbereichen auf.

Der Pinring kann durch einen flexiblen Pin-Haltering mit darin eingesetzten zylinderförmigen Pins gebildet sein. Er kann auch in einem Stück gefertigt sein, wobei der einstückige Pinring einen ringförmigen Bereich aufweist, von dem Pin-artige Fortsätze in axialer Richtung zur Seite überstehen.

Insbesondere wenn ein drittes Zahnrad als Stützrad vorgesehen ist und wenn die Pins oder pinartigen Fortsätze drehfest mit dem ringförmigen Bereich oder mit dem flexiblen Pin-Haltering verbunden sind, können die Pins oder Pin-artigen Fortsätze auf der Seite des Stützrads auch auf nur auf einer Seite als runder Eingriffsbereich ausgestaltet sein.

Beispielsweise kann bei einer Konfiguration mit einem Außenrad und einem Innenrad ein zweites Außenrad als Stützrad vorgesehen sein, das zu dem ersten Außenrad konzentrisch ausgerichtet ist, wobei ein Radius und eine Verzahnung des zweiten Außenrads mit dem ersten Außenrad übereinstimmt und die Verzahnung des zweiten Außenrads zur Verzahnung des ersten Außenrads so ausgerichtet ist, dass die Zahnköpfe in axialer Richtung hintereinanderliegen.

Gemäß einem weiteren Ausführungsbeispiel ist der Pinring einstückig ausgebildet und hat eine innere Verzahnung und eine äußere Verzahnung mit runden Zahnköpfen.

Der runde Eingriffsbereich des Pinrings weist einen kreisabschnittsförmigen Querschnitt auf und kann im Allgemeinen durch die Pins des Pinrings, die pinartigen Fortsätze des Pinrings oder durch rund geformte Zahnköpfe des Pinrings gebildet sein. Der kreisabschnittsförmige Querschnitt ist vorzugsweise gleichbleibend entlang einer axialen Richtung des Getriebes. Insbesondere kann der kreisabschnittsförmige Querschnitt die Form eines Halbkreises oder eines Vollkreises annehmen.

Weiterhin weist das HPD-E Getriebe einen umlaufenden Transmitter zum Rakeln der Eingriffsbereiche des Pinrings in die erste Verzahnung des ersten Rads und in die zweite Verzahnung des zweiten Rads auf. Dabei ist das erste Rad, der Transmitter und das zweite Rad konzentrisch zueinander angeordnet sind und der Transmitter ist radial innerhalb des Pinrings angeordnet.

Der Pinring ist zwischen dem ersten Rad und dem zweiten Rad angeordnet. Wenn sich das erste Rad und das zweite Rad in der gleichen axialen Ebene befinden, so wie es bei einer Anordnung mit einem Innenrad und einem Außenrad der Fall ist, ist eine Anordnung zwischen dem ersten Rad und dem zweiten Rad so zu verstehen, dass sich die runden Eingriffsbereiche, die Pins oder die Pinartigen Fortsätze in radialer Richtung wenigstens teilweise zwischen dem ersten Rad und dem zweiten Rad befinden.

Wenn sich das erste Rad und das zweite Rad in verschiedenen axialen Ebene befinden, so wie es bei einer Anordnung mit zwei Außenrädern der Fall ist, bei denen eines der Außenräder abgetrieben und das andere Außenrad stationär mit dem Gehäuse verbunden ist, ist eine Anordnung zwischen dem ersten Rad und dem zweiten Rad so zu verstehen, dass sich der Pin-Haltering oder ein dem Pin-Haltering entsprechender Bereich des Pinrings in axialer Richtung zwischen dem ersten Rad und dem zweiten Rad befindet.

Der Transmitter weist eine exzentrisch zu einer Getriebemittelachse angeordnete Transmitterscheibe bzw. Kurvenscheibe auf, wobei die Scheibe insbesondere als eine kreisförmige Scheibe ausgestaltet sein kann. Hierbei wird eine ringförmige Struktur, wie zum Beispiel ein Ring der über Streben auf einer Welle des Transmitters befestigt ist, auch als eine Scheibe angesehen. Im Betrieb verformt der Transmitter den Pinring, so dass sich das Außenrad und das Innenrad relativ zueinander drehen.

Die erste Verzahnung des ersten Rads und die zweite Verzahnung des zweiten Rads sind jeweils gemäß einer Epizykelkonstruktion geformt, die weiter unten in Bezug auf ein Innenrad oder ein Außenrad gemäß der Epizykelkonstruktion in weiteren Einzelheiten erläutert wird.

Gemäß der Epizykelkonstruktion sind Orte auf der jeweiligen Zahnoberfläche der ersten Verzahnung bzw. der zweiten Verzahnung jeweils durch einen radialen Abstand von der Getriebemittelachse in Abhängigkeit von einem Zykelwinkel bestimmt.

Der radiale Abstand ist seinerseits durch eine Äquidistante zu einer Radkurve bestimmt, wobei Orte auf der Radkurve jeweils durch die Vektorsumme eines Zykelvektors und eines Epizykelvektors bestimmt sind. Dabei liegt ein Anfangspunkt des Zykelvektors auf der Getriebemittelachse und ein Anfangspunkt des Epizykelvektors liegt im Endpunkt des Zykelvektors.

Weiterhin ist ein Epizykelwinkel des Epizykelvektors n-mal so groß wie der Zykelwinkel und eine Länge des Zykelvektors ist größer als eine Länge des Epizykelvektors ist, wobei n eine Anzahl der runden Eingriffsbereiche des harmonischen Pinring-Getriebes ist, die mindestens drei ist.

Diese Profilform kann auch zusammenfassend durch die folgende Formel wiedergeben werden, wobei sich das Pluszeichen auf die Innenradverzahnung und das Minuszeichen auf die Außenradverzahnung bezieht.

$$\vec{P} = \begin{pmatrix} x_P \\ y_P \end{pmatrix} = \begin{pmatrix} r_1 * \cos(\alpha) + r_2 * \cos(n * \alpha) \\ r_1 * \sin(\alpha) \pm r_2 * \sin(n * \alpha) \end{pmatrix}$$

Der weitere oben angegeben runde Eingriffsbereich bezieht sich je nach Gestaltung des Pinrings auf die Pins, auf die Pin-artigen Fortsätze oder auf die runden Zahnköpfe der Verzahnungen des Pinrings.

Gemäß einem Ausführungsbeispiel ist das erste Rad ein Innenrad mit einer Außenverzahnung und das zweite Rad ist ein Außenrad mit einer Innenverzahnung. Somit ist die erste Verzahnung die Außenverzahnung des Innenrads und die zweite Verzahnung die Innenverzahnung des Außenrades. Bei diesem Ausführungsbeispiel ist das Innenrad radial innerhalb des Außenrads angeordnet.

Bei der Außenverzahnung des Innenrads wird der Epizykelwinkel in derselben Richtung wie der Zykelwinkel gemessen und die Äquidistante ist eine innere Äquidistante. Dagegen wird bei der Innenverzahnung des Außenrads der Epizykelwinkel in entgegengesetzter Richtung zu dem Zykelwinkel gemessen und die Äquidistante ist eine äußere Äquidistante. Diese Ausgestaltung der Verzahnungen wird weiter unten in Bezug auf ein Innenrad bzw. ein Außenrad noch genauer erläutert.

Gemäß einem weiteren Ausführungsbeispiel eines HPD-E Getriebes ist das erste Rad und das zweite Rad jeweils ein Außenrad mit einer Innenverzahnung. Somit wird die erste Verzahnung durch eine Innenverzahnung eines ersten Außenrads gebildet und die zweite Verzahnung wird durch eine Innenverzahnung eines zweiten Außenrads gebildet.

Bei der Innenverzahnung der beiden Außenräder wird der Epizykelwinkel in entgegengesetzter Richtung zu dem Zykelwinkel gemessen und die Äquidistante ist eine äußere Äquidistante.

Insbesondere kann die jeweilige Äquidistante der ersten Verzahnung oder der zweiten Verzahnung eine Äquidistante im Abstand der Summe eines Radius der runden Eingriffsbereiche und einem Korrekturwert sein, wobei der Korrekturwert von einem Getriebespiel abhängt. Bei zylinderförmigen Pins ist der Radius des runden Eingriffsbereichs gleich dem Pinradius der Pins. Bei näherungsweise zylinderförmigen Pins entspricht der Radius einem Radius eines runden Eingriffsbereichs der Pins. Der Korrekturwert ist größer oder gleich Null, er kann insbesondere auch gleich Null sein. Falls der Korrekturwert größer als Null ist, entspricht der Korrekturfaktor einem Bruchteil des Radius des runden Eingriffsbereichs, beispielsweise 5% oder 10%.

Gemäß einem Ausführungsbeispiel kann das harmonische Pinring-Getriebe ein Wälzlager aufweisen, das auf der Transmitterscheibe aufliegt, wobei der Zykelradius gleich dem halben Durchmesser des Wälzlagers ist. Gemäß einem anderen Ausführungsbeispiel, bei dem die runden Eingriffsbereiche des Pinrings direkt auf der Transmitterscheibe aufliegen, ist der Zykelradius gleich dem halben Durchmesser der Transmitterscheibe. In diesem Fall kann die Transmitterscheibe an einer Innenseite drehbar gelagert sein.

Der Epizykelradius kann insbesondere gleich einem halben Exzenterversatz sein, um den die Transmitterscheibe gegenüber der Getriebemittelachse versetzt ist.

Für das HPD-E Getriebe sind verschiedene Kombinationen von Antrieb und Abtrieb möglich. Diese Möglichkeiten bestehen sowohl für das HPD-E Getriebe als auch für das HPD-F Getriebe. Dabei kann die Antriebswelle insbesondere als ein Rotor eines elektrischen Motors ausgestaltet sein.

Insbesondere kann eine Antriebswelle mit dem Transmitter verbunden sein. In diesem Fall kann eine Abtriebswelle entweder mit dem ersten Rad, mit dem zweiten Rad oder mit dem Pinring verbunden sein. Wenn die Abtriebswelle mit dem ersten oder mit dem zweiten Rad verbunden ist, dann ist das jeweils andere Rad im Allgemeinen am Gehäuse festgelegt bzw. mit dem Getriebegehäuse verbunden.

Wenn das Abtriebsdrehmoment von den Pins abgenommen wird, kann dies zum Beispiel durch ein dosenförmiges Bauteil erfolgen, das Öffnungen zum Einstecken der Pins aufweist. Das dosen- oder zylinderförmige Bauteil kann zur Stabilisierung wiederum an dem Getriebegehäuse gelagert sein. In diesem Fall läuft in der Regel entweder das Außenrad oder das Innenrad mit dem Pinring mit, während das jeweils andere Rad an dem Getriebegehäuse befestigt ist. Es ist in diesem Fall auch möglich, das Rad, das lediglich mit dem Pinring mitläuft, fortzulassen.

Weiterhin offenbart die vorliegende Beschreibung ein Innenrad für das "HPD-E Getriebe" mit einem einzelnen Exzenter, das einen Pinring mit runden Eingriffsbereichen aufweist. Das Innenrad weist eine Außenverzahnung auf, wobei geometrische Orte auf der Zahnoberfläche der Außenverzahnung jeweils durch einen radialen Abstand von einer Mittelachse des Innenrads in Abhängigkeit von einem Zykelwinkel $\alpha$ (= Symbol alpha) bestimmt sind.

Der radiale Abstand ist seinerseits durch eine innere Äquidistante zu einer Radkurve bestimmt. Geometrische Orte auf der Radkurve sind jeweils durch die Vektorsumme eines Zykelvektors und eines Epizykelvektors bestimmt. Dabei liegt ein Anfangspunkt des Zykelvektors auf einer Mittelachse des Außenrads, und ein Anfangspunkt des Epizykelvektors liegt im Endpunkt des Zykelvektors. Weiterhin befinden sich der Zykelvektor und der bzw. die Epizykelvektoren in einer gemeinsamen Ebene, die auf der Mittelachse senkrecht steht.

Der Zykelwinkel und ein Epizykelwinkel des Epizykelvektors werden relativ zu einer Bezugslinie bestimmt, die senkrecht zu der Mittelachse des Innenrads durch die Mittelachse des Innenrads verläuft. Dies betrifft auch die weiter unten genannten Zykelwinkel und Epizykelwinkel, die relativ zu einer Bezugslinie bestimmt werden, die senkrecht zu der Mittelachse des jeweiligen Zahnrads durch die Mittelachse des jeweiligen Zahnrads verläuft. Im eingebauten Zustand des Zahnrads bzw. des Innen- oder Außenrads fällt diese Mittelachse mit der Getriebemittelachse zusammen.

Ein Epizykelwinkel des Epizykelvektors ist n-mal so groß wie der Zykelwinkel, wobei der Epizykelwinkel in derselben Richtung wie der Zykelwinkel gemessen wird und wobei n eine Anzahl von Pins des harmonischen Pinring-Getriebes ist, die größer als zwei ist. Eine Anzahl Z_innen von Zähnen des Innenrads ist mindestens zwei und vorzugsweise um eins kleiner als die Anzahl der Pins. Somit ist, bezogen auf die Anzahl der Zähne des Innenrads, der Epizykelwinkel (Z_innnen + 1) mal so groß wie der Zykelwinkel, wobei Z_innen mindestens zwei ist.

Eine Länge des Zykelvektors ist größer als eine Länge des Epizykelvektors. Insbesondere können die Radien bzw. die Längen der Summenvektoren so gewählt sein, dass die Radkurve nicht rückläufig ist, also keine Selbstüberschneidungen aufweist.

Diese Profilform der Verzahnung des Innenrads kann auch zusammenfassend durch die folgende Formel wiedergegeben werden

$$\vec{P} = \begin{pmatrix} r_1 * \cos(\alpha) + r_2 * \cos((n-1)*\alpha) + r_3 * \cos((n-3)*\alpha) \\ r_1 * \sin(\alpha) + r_2 * \sin((n-1)*\alpha) - r_3 * \sin((n-3)*\alpha) \end{pmatrix}$$

Weiterhin offenbart die vorliegende Beschreibung ein Außenrad für ein harmonisches Pinring-Getriebe mit einem einzelnen Exzenter wobei die Pins vorzugsweise kreisförmigen Querschnitt haben. Das Außenrad weist eine Innenverzahnung auf, wobei geometrische Orte auf der Zahnoberfläche der Innenverzahnung jeweils durch einen radialen Abstand von einer Mittelachse des Außenrads in Abhängigkeit von einem Zykelwinkel $\alpha$ bestimmt sind.

Der radiale Abstand ist seinerseits durch eine äußere Äquidistante zu einer Radkurve definiert, wobei die Begriffe "innere Äquidistante" und "äußere Äquidistante" in Bezug auf den Abstand von der jeweiligen Mittelachse des Zahnrads zu verstehen sind.

Die geometrischen Orte auf der Radkurve sind jeweils durch die Vektorsumme eines Zykelvektors und eines Epizykelvektors bestimmt, wobei ein Anfangspunkt des Zykelvektors auf einer Mittelachse des Außenrads liegt und ein Anfangspunkt des Epizykelvektors im Endpunkt des Zykelvektors liegt.

Weiterhin ist ein Epizykelwinkel des Epizykelvektors n-mal so groß ist wie der Zykelwinkel, wobei der Epizykelwinkel in entgegengesetzter Richtung zu dem Zykelwinkel gemessen wird, wobei n eine Anzahl von Pins des harmonischen Pinring-Getriebes ist, die größer als zwei ist. Die Anzahl Z_außen der Zähne des Außenrads ist vorzugsweise um eins größer als die Anzahl der Pins. Somit ist, bezogen auf die Anzahl Z_außen der Zähne des Außenrads der Epizkelwinkel (Z_außen - 1) mal so groß wie der Zykelwinkel, wobei Z_außen mindestens vier ist.

Eine Länge des Zykelvektors ist größer als eine Länge des Epizykelvektors. Insbesondere können die Längen der Vektoren beziehungsweise das Verhältnis der Vektorlängen so gewählt sein, dass die Radkurve keine Selbstüberschneidung aufweist.

In der Epizykelkonstruktion bestimmt die Länge des Zykelvektors den mittleren Abstand der Verzahnung von der Mittelachse, also den Teikreis während die Länge des Epizyklenvektors oder der Epizyklenvektoren die Höhe der Zähne bestimmt.

Vorzugsweise ist die Zahngeometrie, also der radiale Abstand von der Mittelachse des Rades, unabhängig von einer Position in axialer Richtung auf der Mittelachse. Falls Pins vorgesehen sind, ist ein Querschnitt der Pins vorzugsweise unabhängig von einer Position auf der Längsachse der Pins. Der Querschnitt der Pins ist vorzugsweise kreisförmig, aber er kann auch anders als kreisförmig sein. Beispielsweise können die Pins in einer Umfangsrichtung des Pinrings einen etwas größeren Durchmesser aufweisen als senkrecht dazu. Entsprechend ist ein Querschnitt der runden Eingriffsbereiche vorzugsweise unabhängig von einer axialen Position.

Diese Profilform der Verzahnung des Außenrads kann auch zusammenfassend durch folgende Formel wiedergegeben werden:

$$\vec{P} = \begin{pmatrix} r_1 * \cos(\alpha) + r_2 * \cos((n+1)*\alpha) + r_3 * \cos((n+3)*\alpha) \\ r_1 * \sin(\alpha) - r_2 * \sin((n+1)*\alpha) + r_3 * \sin((n+3)*\alpha) \end{pmatrix}$$

In einem weiteren Aspekt offenbart die vorliegende Beschreibung ein Innenrad für ein harmonisches Pinring-Getriebe mit einem ovalen Transmitter oder einem Doppelexzenter, wobei sich oval auch auf ovalähnliche Ausführungen bezieht, beispielsweise mit elliptischer Form. Dieses Getriebe wird auch als "HPD-F Getriebe" bezeichnet.

Das Innenrad weist eine Außenverzahnung auf, wobei eine Zahnoberfläche der Außenverzahnung durch einen radialen Abstand von einer Mittelachse des Außenrads in Abhängigkeit von einem Zykelwinkel $\alpha$ bestimmt ist. Der radiale Abstand von der Mittelachse ist seinerseits durch eine innere Äquidistante zu einer Radkurve bestimmt.

Ein geometrischer Ort auf der Radkurve ist durch die Vektorsumme eines Zykelvektors, eines ersten Epizykelvektors und eines zweiten Epizykelvektors bestimmt ist. Dabei liegt ein Anfangspunkt des Zykelvektors auf der Mittelachse des Innenrads, ein Anfangspunkt des ersten Epizykelvektors liegt im Endpunkt des Zykelvektors, und ein Anfangspunkt des zweiten Epizykelvektors liegt im Endpunkt des ersten Epizykelvektors liegt.

Bei einer Konstruktion mit zwei Epizyklen wird der erste Epizykelvektor auch als Epizykelvektor erster Ordnung bezeichnet und der zweite Epizykelvektor wird auch als Epizykelvektor zweiter Ordnung bezeichnet. Entsprechend werden die zugehörigen Epizyklen auch als Epizyklen erster bzw. zweiter Ordnung bezeichnet. Bei einer Konstruktion mit nur einem Epizykel liegt demgemäß nur ein Epizykel erster Ordnung vor.

Weiterhin ist ein Epizykelwinkel des ersten Epizykelvektors (n - 1) mal so groß wie der Zykelwinkel und ein Epizykelwinkel des zweiten Epizykelvektors (n - 3) mal so groß wie der Zykelwinkel. Dabei ist n eine Anzahl von Pins des harmonischen Pinring-Getriebes, die größer als zwei, also mindesten drei ist. Der erste Epizykelwinkel wird in derselben Richtung wie der Zykelwinkel gemessen und der zweite Epizykelwinkel wird in einer entgegengesetzten Richtung zu dem Zykelwinkel gemessen. Das Innenrad weist mindestens zwei Zähne auf und es weist vorzugsweise zwei Zähne weniger als die Anzahl der Pins auf.

Somit ist, bezogen auf die Anzahl der Zähne des Z_innen des Innenrads der erste Epizykelwinkel (Z_innen + 2 - 1) = (Z_innen + 1) mal so groß wie der Zykelwinkel und der zweite Epizykelwinkel ist (Z_innen + 2 - 3) = (Z_innen - 1) mal so groß wie der Zykelwinkel, wobei Z_innen mindestens zwei ist.

Hierbei ist eine Länge des Zykelvektors größer als die Summe der Längen des ersten Epizykelvektors und des zweiten Epizykelvektors, und eine Länge des ersten Epizykelvektors ist größer als eine Länge des zweiten Epizykelvektors. Insbesondere sollen die Verhältnisse der Längen bzw. Radien so gewählt sein, dass die Radkurve keine Selbstüberschneidungen aufweist.

Des Weiteren offenbart die vorliegende Beschreibung ein Außenrad für ein harmonisches Pinring-Getriebe mit einem ovalen Exzenter oder einem Doppelexzenter bzw. für ein HPD-F Getriebe. Das Außenrad weist eine Innenverzahnung, wobei geometrische Orte auf der Zahnoberfläche der Innenverzahnung jeweils durch einen radialen Abstand von einer Mittelachse des Außenrads in Abhängigkeit von einem Zykelwinkel α bestimmt sind.

Der radiale Abstand ist seinerseits durch eine äußere Äquidistante zu einer Radkurve definiert, wobei geometrische Orte auf der Radkurve jeweils durch die Vektorsumme eines Zykelvektors, eines ersten Epizykelvektors und eines zweiten Epizykelvektors bestimmt ist.

Dabei liegt ein Angangspunkt des Zykelvektors auf der Mittelachse, ein Anfangspunkt des ersten Epizykelvektors liegt im Endpunkt des Zykelvektors, und ein Anfangspunkt des zweiten Epizykelvektors liegt im Endpunkt des ersten Epizykelvektors.

Weiterhin ist ein Epizykelwinkel des ersten Epizykelvektors (n + 1) mal so groß ist wie der Zykelwinkel und ein Epizykelwinkel des zweiten Epizykelvektors ist (n + 3) mal so groß ist wie der Zykelwinkel. Hierbei ist n eine Anzahl von Pins des harmonischen Pinring-Getriebes, die größer als drei, also mindestens vier ist.

Vorzugsweise ist die Anzahl Z_außen der Zähne des Außenrads um zwei größer als die Anzahl der Pins. Somit ist, bezogen auf die Anzahl Z_außen der Zähne des Außenrads, der erste Epizykelwinkel (Z_außen - 2 + 1) = (Z_außen - 1) mal so groß wie der Zykelwinkel, und der zweite Epizykelwinkel ist (Z_außen - 2 + 3) = Z_außen + 1 mal so groß wie der zweite Epizykelwinkel, wobei Z_außen mindestens 2 + 2 + 2 = sechs ist, um diesen Zusammenhang mit den Mindestzahlen auszudrücken.

Dabei wird der erste Epizykelwinkel in einer entgegengesetzten Richtung zu dem Zykelwinkel gemessen, und der zweite Epizykelwinkel wird in derselben Richtung wie der Zykelwinkel gemessen wird. Weiterhin ist eine Länge des Zykelvektors größer als die Summe der Längen des ersten Epizykelvektors und des zweiten Epizykelvektors, und eine Länge des ersten Epizykelvektors ist größer als eine Länge des zweiten Epizykelvektors. Vorzugsweise sind die Verhältnisse der Längen bzw. Radien so gewählt, dass die Radkurve keine Selbstüberschneidungen aufweist.

Weiterhin offenbart die vorliegende Beschreibung ein harmonisches Pinring Getriebe mit einem Innenrad mit der zuvor in Bezug auf das HPD-F Getriebe beschriebenen Außenverzahnung und einem Außenrad mit der zuvor in Bezug auf das HPD-F Getriebe beschriebenen Innenverzahnung.

Desweiteren weist das Getriebe einen Pinring mit runden Eingriffsbereichen auf. Insbesondere können die runden Eingriffsbereiche durch Pins oder Pin-artige Fortsätze gebildet werden, die vorzugsweise einen kreisförmigen Querschnitt aufweisen. Ein umlaufender Transmitter ist zum Rakeln runden Eingriffsbereiche des Pin-Rings in die Innenverzahnung des Außenrads und in die Außenverzahnung des Innenrads vorgesehen. Das Innenrad, der Transmitter und das Außenrad sind konzentrisch zueinander angeordnet, und der Transmitter ist radial innerhalb des Pinrings angeordnet.

Dabei ist der Pinring, bzw. sind die runden Eingriffsbereiche oder die Pins oder Pin-artigen Fortsätze des Pinrings, radial zwischen dem Innenrad und dem Außenrad angeordnet. Der Transmitter weist eine oval geformte Kurvenscheibe oder einen Doppelexzenter auf. Im Betrieb verformt die Kurvenscheibe oder der Doppelexzenter den Pinring verformt, so dass sich das Außenrad und das Innenrad relativ zueinander drehen.

Bei der Konfiguration mit einem Paar aus Innenrad und Außenrad sind das Innenrad und das Außenrad in einer ersten axialen Eben angeordnet. Ein Bereich des Pinrings, der einem PinHaltering entspricht und der in Kontakt mit dem Transmitter ist, ist in einer zweiten axialen Ebene angeordnet. Zweckmäßigerweise ist weiterhin zur Abstützung des Pinrings ein weiteres Außenrad in einer dritten axialen Ebene vorgesehen, wobei das zweite Außenrad im Wesentlichen dieselben Dimensionen und dieselbe Zahnform wie das erste Außenrad hat und wobei die Verzahnung zu der des ersten Außenrads ausgerichtet ist. Die zweite axiale Ebene liegt dabei zwischen der ersten und der dritten axialen Ebene. Diese Ausführungen gelten sowohl für das HPD-E als auch für das HPD-F Getriebe.

In einem weiteren Ausführungsbeispiel offenbart die vorliegende Beschreibung ein harmonisches Pinring Getriebe mit einem ersten Außenrad gemäß der zuvor in Bezug auf das HPD-F Getriebe beschriebenen Innenverzahnung und einem zweiten Außenrad gemäß der zuvor in Bezug auf das HPD-F Getriebe beschriebenen Innenverzahnung.

Zudem weist das harmonische Pinring Getriebe einen Pinring mit runden Eingriffsbereichen und einen umlaufenden Transmitter zum Rakeln der runden Eingriffsbereiche des Pin-Rings in die Innenverzahnung des ersten Außenrads und in die Innenverzahnung des zweiten Außenrads auf. Bei diesem Getriebe sind der Transmitter, das erste Außenrad und das zweite Außenrad konzentrisch zueinander angeordnet, und der Transmitter ist radial innerhalb des Pinrings angeordnet. Anders als bei dem zuvor beschriebenen Paar aus Innenrad und Außenrad befinden sich das erste Außenrad und das zweite Außenrad in verschiedenen axialen Ebenen und der Pinring, bzw. ein mittlerer Bereich des Pinrings, der einem Pin-Halterung entspricht, ist in axialer Richtung zwischen dem ersten Außenrad und dem zweiten Außenrad angeordnet.

Wie für das HPD-E Getriebe bestehen auch für das HPD-F Getriebe verschieden Möglichkeiten, eine Antriebswelle und eine Abtriebswelle zu verbinden.

Unter anderen kann eine Antriebswelle mit dem Transmitter verbunden sein. In diesem Fall kann eine Abtriebswelle mit dem Pinring verbunden sein. Weiterhin kann bei der Konfiguration mit einem Paar aus Innenrad und Außenrad eine Abtriebswelle mit dem Innenrad oder mit dem Außenrad verbunden sein.

Wie bei dem weiter oben beschriebenen HPD-E Getriebe bestehen auch bei dem zuvor beschriebenen HPD-F Getriebe verschiedene Möglichkeiten, eine Antriebswelle und eine Abtriebswelle zu verbinden, wobei die Antriebswelle insbesondere als Rotor eines Elektromotors ausgestaltet sein kann.

Bei der Konfiguration mit zwei Außenrädern kann insbesondere eines der Außenräder abgetrieben und das andere am Gehäuse festgelegt sein. Dazu kann eine Abtriebswelle mit dem abgetriebenen Außenrad verbunden sein. Bei der Konfiguration mit zwei Außenrädern braucht kein Innenrad vorhanden zu sein, das einem Außenrad in radialer Richtung gegenübersteht. Die jeweils nicht abgetriebenen Räder sind zweckmäßigerweise mit dem Gehäuse verbunden bzw. am Gehäuse festgelegt.

Bei der Konfiguration mit zwei Außenrädern dient das zweite Außenrad dazu, die Rotationsbewegung von dem Pinring abzunehmen. Dabei kann die Zähnezahl des zweiten Außenrads der Anzahl der runden Eingriffsbereiche des Pinrings entsprechen, um einen besseren Eingriff zu gewährleisten. In diesem Fall verdreht sich der Pinring leicht, da die Anzahl der Zähne des ersten Außenrads größer als die Anzahl der Pins oder der runden Eingriffsbereiche des Pinrings ist.

Sowohl bei der Anordnung mit zwei Außenrädern als auch bei der Anordnung mit einem Paar aus Innen- und Außenrad und einem weiteren Außenrad ist es zweckmäßig, einen Pinring zu verwenden, der einen mittleren Bereich aufweist, von dem die Pins, die Pin-artigen Fortsätze oder die runden Eingriffsbereiche an zwei gegenüberliegenden Seiten in axialer Richtung hervorstehen.

Insbesondere wenn der Pinring aus einem Stück gefertigt ist können sich die runden Eingriffsbereiche aber auch durchgängig von einer Seite zur andern erstrecken.

Die jeweilige Äquidistante der Epizykelkonstruktion kann insbesondere eine Äquidistante im Abstand der Summe eines Radius der runden Eingriffsbereiche und eines Korrekturwerts sein, wobei der Korrekturwert durch ein Getriebespiel bestimmt ist. Dabei können die runden Eingriffsbereiche insbesondere durch Pins oder Pin-artige Fortsätze gebildet sein.

Gemäß einem Ausführungsbeispiel weist der Transmitter des zuvor beschriebenen harmonischen Pinring-Getriebe eine oval geformte Kurvenscheibe und ein flexibles Wälzlager auf, wobei oval insbesondere auch ovalähnlich umfasst. Ovalähnliche Formen sind zum Beispiel die sinusüberlagerten Kreisformen, die sich durch eine Taylor-Entwicklung der Ellipsengleichung ergeben.

Das flexible Wälzlager liegt auf der oval geformten Kurvenscheibe auf. Dabei ist der Zykelradius für die jeweilige Epizykelkonstruktion der Zahnformen gleich der Summe aus einem halben Durchmesser des flexiblen Wälzlagers und einem Korrekturfaktor. Der Durchmesser des flexiblen Wälzlagers entspricht einem Teilkreisdurchmesser des Pinrings bzw. der durch den Pinring gebildeten Pinanordnung im unverformten Zustand.

Gemäß einem weiteren Ausführungsbeispiel weist das harmonische Pinring Getriebe eine erste exzentrisch zu einer Getriebemittelachse angeordnete Kreisscheibe und eine zweite exzentrisch zu einer Getriebemittelachse angeordnete Kreisscheibe auf. Bei diesem Getriebe ist der Zykelradius gleich der Summe aus einem mittleren Radius der Hüllkurve der beiden exzentrisch angeordneten Kreisscheiben und einem Korrekturfaktor. Dabei ist die Hüllkurve diejenige Kurve die durch den inneren Umfang eines Zugmittels wie z.B. eines Pinrings gebildet wird, wenn das Zugmittel auf die Kreisscheiben aufgespannt wird.

Gemäß einem weiteren Ausführungsbeispiel ist der erste Epizykelradius kleiner oder gleich der Summe aus einem halben Pinring-Hub und einem zweiten Korrekturfaktor, wobei der zweite Korrekturfaktor kleiner oder gleich null ist. Der Pinhub ist durch die Differenz zwischen dem größten und dem kleinsten Radius des flexiblen Wälzlagers im verformten Zustand bestimmt. Insbesondere kann der erste Epizykelradius größer als 1/4 des Pinring-Hubs, und insbesondere gleich 3/8 des Pinhubs sein.

Der Pinring-Hub ist dabei der Hub der runden Eingriffsbereiche des Pinrings, also die Strecke um die sich die runden Eingriffsbereiche bei einer Verformung des Pinrings durch den Transmitter in radialer Richtung bewegen.

Gemäß einem weiteren Ausführungsbeispiel beträgt die Länge des zweiten Epizykelvektors etwa ein Drittel der Länge des ersten Epizykelvektors, wobei sich "etwa" insbesondere auf einen Bereich von plus oder minus 10% oder 5% beziehen kann.

Die Toleranzen der Getriebe der vorliegenden Beschreibung entsprechen den technisch üblichen Toleranzen für Längen- und Winkelmaße, wie z.B. DIN 7168 T1 oder T2, oder auch für Verzahnungsgenauigkeit zwischen Pins und Zähnen, wie z.B. DIN 3961 oder DIN 3976.

Die gemäß einer vorgegebenen Norm berechneten Toleranzwerte können insbesondere dafür verwendet werden, um zu bestimmen, ob eine vorgegebene Verzahnung innerhalb der Toleranz mit einer Verzahnung gemäß der vorliegenden Beschreibung übereinstimmt. Hierfür kann eine normierte photographische Ansicht eines Zahnradprofils verwendet werden oder auch eine Zahnradmessmaschine, wie beispielsweise ein Flankenprüfgerät das die Zahnradoberfläche mechanisch oder optisch abtastet.

Die Toleranzen können insbesondere auf die Zahndicke oder auf den Achsabstand bezogen sein. Die entsprechenden Passsysteme werden auch als "Einheits-Achsabstand" bzw. "Einheits-Zahndicke" Passsystem bezeichnet. Beispielsweise kann ein gemessenes Zahnprofil als übereinstimmend mit einem vorbestimmten Zahnprofil gemäß der vorliegenden Beschreibung angesehen werden, wenn ein Abstand von einer Zahnflanke 5% oder 1% der vorgegebenen Zahndicke nicht überschreitet.

Dabei kann der Abstand beispielsweise senkrecht zur Zahnoberfläche oder als Abstand in Richtung einer Mittelachse des Zahnrads gemessen werden. Die Einhaltung der Toleranz kann auch im statischen Sinn gelten, beispielsweise mit einer Wahrscheinlichkeit von 90% wenn eine Standard-Wahrscheinlichkeitsverteilung wie eine Gaußkurve zu Grunde gelegt wird. Dies kann auch modellunabhängig dadurch berücksichtigt werden, dass nur ein vorgegebener Prozentsatz von Messpunkten, beispielsweise 90%, innerhalb der Toleranzgrenze zu liegen braucht. Dabei wird angenommen, dass eine hinreichende Anzahl Messpunkte hinreichend gleichmäßig über die Zahnoberfläche verteilt ist, um das Zahnprofil näherungsweise zu erfassen.

Die Verzahnungen werden im Weiteren unter Bezug auf die folgenden Abbildungen 94 - 118 näher erläutert.

Die Figuren 94 und 95 zeigen beispielhaft zwei Getriebetypen von harmonischen Pinring-Getrieben, für die in der vorliegenden Beschreibung entsprechende Zahngeometrien offenbart sind. Figur 94 zeigt ein harmonisches Pin Ring Getriebe (HPRD-F) 510 mit einer Kurvenscheibe und einem darauf aufliegenden verformbaren Lager. Der HPRD 510 weist einen Rotor 513 auf, der über ein hier nicht gezeigtes Kugellager auf einem Getriebegehäuse abgestützt ist. Ein Außenring bzw. Außenrad 508, das konzentrisch außerhalb des Rotors 513 angeordnet ist, weist eine erste als Innenverzahnung ausgeformte Außenradverzahnung bzw. äußere Verzahnung 506 auf einer ersten Seite auf.

Der Außenring 508 ist an einem zylindrischen Gehäuseteil 509 befestigt. Falls der Außenring abgetrieben ist, ist dieses Gehäuseteil seinerseits drehbar an dem Getriebegehäuse gelagert. Eine zweite als Innenverzahnung ausgeformte Außenradverzahnung bzw. äußere Verzahnung 506' ist auf einem zweiten Außenring 508' ausgeformt, der auf einer der ersten Seite gegenüberliegenden Seite in das zylindrische Gehäuseteil 509 eingesetzt ist.

Eine als Außenverzahnung ausgeführte erste Innenradverzahnung bzw. innere Verzahnung 505 ist auf einer Peripherie eines Innenrings bzw. Innenrads 507 ausgeformt und konzentrisch innerhalb der ersten äußeren Verzahnung 506 angeordnet. In ähnlicher Weise ist eine als Außenverzahnung ausgeführte zweite Innenradverzahnung bzw. innere Verzahnung 505' auf einer Peripherie eines zweiten Innenrings 507' ausgeformt und konzentrisch innerhalb der zweiten äußeren Verzahnung 506' angeordnet.

Die innere Verzahnung 505, 505' und die äußere Verzahnung 506, 506' sind konzentrisch zu einer Getriebemittelachse angeordnet, wobei die innere Verzahnung 505, 505' um die Getriebemittelachse rotierbar ist. In anderen Ausführungsbeispielen kann die äußere Verzahnung 506, 506' oder auch die äußere und die innere Verzahnung um die Getriebemittelachse rotierbar sein oder aber die innere Verzahnung kann an dem Getriebegehäuse befestigt sein, je nachdem über welche Verzahnung der Abtrieb oder der Antrieb erfolgt.

Ein flexibles Dünnring-Kugellager 502 ist auf einem speziell ausgeformten Flansch 504 der Rotorwelle 513 aufgespannt. Der Flansch 504 bildet einen Transmitter und kann beispielsweise als Oval, ovalähnlich oder als sinusüberlagerte Kreisform ausgeformt sein. Anstatt eines Flansches 504, der auf der Rotorwelle 513 ausgeformt ist, kann auch eine entsprechend geformte Scheibe oder ein Ring auf der Motorwelle vorgesehen sein.

Anstatt einer Kurvenscheibe und eines darauf aufgebrachten flexiblen Lagers kann der Transmitter bei dem Getriebetyp von Fig. 94 auch einen sogenannten Doppelexzenter aufweisen, der durch zwei exzentrisch zu der Getriebemittelachse angeordnete Kreisscheiben gebildet wird. Die Kreisscheiben können um ihre jeweilige Symmetrieachse rotierbar gelagert sein, wobei der Pinring auf die Kreisscheiben aufgespannt ist. Alternativ dazu können die Kreisscheiben an dem rotierenden Transmitter befestigt sein und ein flexibles Wälzlager auf die Kreisscheiben aufgespannt sein, wobei der Pinring auf dem Wälzlager aufliegt.

Ein flexibler Pin-Haltering 503 ist zwischen dem flexiblen Dünnring-Kugellager 502 und der äußeren Verzahnung 506, 506' angeordnet. Der flexible Pin-Haltering 503 weist an einer Innenseite Rillen zur Aufnahme von Pins 501 auf, die auf dem Pin-Haltering 503 in gleichmäßigen Abständen angeordnet sind. Die Pins sind zylindrisch geformt und haben einen kreisförmigen Querschnitt.

Der Pin-Haltering 503 ist flexibel ausgestaltet, so dass er sich entsprechend einer Winkelposition des Flansches 504 verformen kann. Aufgrund der Steifigkeit wirkt der aus dem Pin-Haltering 503 und den Pins 501 gebildete Pinring sowohl als ein Zugmittel, das das abgetriebene Getriebeteil mit sich zieht, als auch als ein Druckmittel, das das abgetriebene Getriebeteil anschiebt.

Die Fig. 94 zeigt eine dreireihige Anordnung, bei der sich ein erstes Paar 507, 508 von Innen- und Außenrad in einer ersten axialen Ebene befindet, ein zweites Paar 507, 508' von Innen- und Außenrad sich in einer zweiten axialen Ebene befindet, und ein Transmitter sich in einer dritten axialen Ebene befindet, die sich zwischen der ersten axialen Ebene und der zweiten axialen Ebene befindet.

Ebenso ist auch eine zweieinhalbreihige Anordnung mit einem Paar von Innen- und Außenrad und einem weiteren Außenrad möglich. Das ist insbesondere bei einem abgetriebenen Innenrad vorteilhaft, weil dann der Abtrieb des zweiten Innenrads in der Regel nicht nach außen geführt werden kann. In diesem Fall läuft bei einer dreireihigen Anordnung das zweite Innenrad nur zur Abstützung der Pins mit.

Aus Stabilitätsgründen ist es vorteilhaft, wenn der Pinring sowohl nach innen als auch nach außen abgestützt ist. Jedoch ist sowohl für ein HPD-F Getriebe als auch für ein HPD-E Getriebe auch eine Anordnung mit nur zwei Außenrädern oder mit nur zwei Innenrädern möglich, die konzentrisch zur Getriebemittelachse angeordnet sind, wobei jeweils ein Zahnrad am Getriebegehäuse befestigt ist und das andere Zahnrad rotierbar ist. Bei diesen Anordnungen ist der Pinring axial zwischen den beiden Innenrädern oder zwischen den beiden Außenrädern angeordnet und die Pins greifen in die jeweiligen Innenräder oder Außenräder ein.

Fig. 95 zeigt eine Explosionsansicht eines harmonischen Pinring-Getriebes 510' mit einer einzelnen Exzenterscheibe, das der Kürze halber auch als "HPD-E" Getriebe bezeichnet wird. Bauteile, die zu denen der Fig. 94 ähnlich sind, haben die gleichen oder mit einem Apostroph "'" versehene Bezugsziffern. Das HPD-E Getriebe 510' von Fig. 95 hat eine besonders einfache Bauform, bei der das Innenrad lediglich 2 Zähne und das Außenrad 4 Zähne aufweist. Generell weist das Außenrad bei diesem Getriebetyp immer zwei Zähne mehr als das Außenrad auf.

Bei der Getriebeanordnung von Fig. 95 ist ein Innenrad 505 mit zwei Zähnen konzentrisch innerhalb eines ersten Außenrads 506' mit vier Zähnen und konzentrisch zu einer Getriebemittelachse 515 in einer ersten axialen Ebene angeordnet und ein zweites Außenrad 506, das zu dem ersten Außenrad 506' im Wesentlichen baugleich ist, ist in einer zweiten axialen Ebene konzentrisch zu der Getriebemittelachse 515 angeordnet. In einer dritten axialen Ebene, die axial zwischen der ersten axialen Ebene und der zweiten axialen Ebene liegt, ist eine auf der Getriebemittelachse exzentrisch angeordnete Scheibe 514, und ein Pinhaltering 503 angeordnet. Die exzentrisch angeordnete Scheibe 514 ist auf einer hier nicht gezeigten Welle angeordnet, die beispielsweise die Rotorwelle eines Motors sein kann.

Der Pinhaltering 503 weist drei halbrunde Ausnehmungen 516 auf, die in gleichmäßigen Abständen auf einem inneren Umfang des Pinhalterings 503. Die drei Pins 501 sind in den halbrunden Ausnehmungen 516 so angeordnet, dass sie an zwei gegenüberliegenden Seiten von dem Pinhaltering 503 in axialer Richtung hervorstehen und so in die erste bzw. die zweite axiale Ebene hineinragen, dass sie in die Außenradverzahnungen 506, 506' und in die Innenradverzahnung eingreifen können.

Bei einem harmonischen Pin-Getriebe mit einem einzelnen Exzenter weist das Außenrad 2 Zähne mehr als das Innenrad auf und die Anzahl der Pins ist das arithmetische Mittel der Zähnezahlen. Im einfachsten Fall entsteht daraus ein Getriebe mit 2 Innenradzähnen, 3 Pins und 4 Außenradzähnen, wie in der Fig. 95 gezeigt. Im Prinzip kann der Unterschied der Zähnezahlen auch ein Vielfaches von zwei betragen, jedoch ergibt sich bei einem kleineren Unterschied der Zähnezahlen eine höhere Untersetzung und eine bessere Abstützung des Drehmoments.

Ein harmonisches Pingetriebe mit einem einzelnen Exzenter, bei dem ein Pinring nur an einer Rakelstelle in die Verzahnung eines Außenrads gedrückt wird, wird im Folgenden auch kurz als "HPD-E Getriebe" bezeichnet. In erweiterter Form bezieht sich diese Bezeichnung auch auf harmonische Pin-Getriebe mit mehreren Außenrädern bei denen pro Außenrad nur eine solche Rakelstelle vorhanden ist. Insbesondere ist dies der Fall, wenn für zwei oder mehr Außenräder ein gemeinsamer Exzenter vorgesehen ist, wie bei dem Ausführungsbeispiel der Figur 2.

Die Figuren 3 bis 6 zeigen Epizykelkonstruktionen für die Erzeugung einer Zahngeometrie gemäß der vorliegenden Beschreibung, wobei sich Fig. 96 auf die Innenradverzahnung der HPD-E Getriebes, Fig. 97 auf die Außenradverzahnung des HPD-E Getriebes, Fig. 98 auf die Innenradverzahnung der HPD-F Getriebes und Fig. 99 auf die Außenradverzahnung des HPD-F Getriebes bezieht. Diese Epizykelkonstruktionen werden im Folgenden näher erläutert.

In den Figuren 96 bis 99 ist der Querschnitt eines Pins durch einen Kreis 520 symbolisiert und der Ortsvektor der Radkurve ist mit der Bezugsziffer 521 bezeichnet. Der kreisförmige Pinquerschnitt hat seinen Mittelpunkt in dem Ortsvektor 521. Wenn der Zykelvektor und der Epizykelvektor bzw. der Zykelvektor und die beiden Epizyklenvektoren

gemäß den Winkelangaben der Fig. 95 bis 99 mit dem Winkel $\alpha$ umlaufen beschreibt der Pinquerschnitt 520 zwei Hüllkurven, die eine innere und eine äußere Äquidistante zu der Radkurve festlegen, und die die jeweilige Innenradverzahnung und Außenradverzahnung des Getriebes bestimmen. In den Winkelangaben bezeichnet "n" eine Pinanzahl.

Gemäß der vorliegenden Beschreibung wird eine Radkurve durch eine Epizykelkonstruktion erzeugt, und aus dieser Radkurve ergibt sich wiederum, als Hüllkurve der kreisförmigen Pins bzw. als Äquidistante, die Zahngeometrie des HPD-E Getriebes.

Die Radkurve einer Innenradverzahnung eines HPD-E Getriebes ergibt sich dadurch, dass sich ein Radius eines Zykels um 360 Grad um die Getriebeachse dreht, während sich ein Radius eines Epizykels relativ zum Bezugssystem der Getriebeachse in der gleichen Richtung um n*360 Grad dreht, wobei n die Anzahl der Pins ist. Relativ zu der Verbindungslinie Koordinatenursprung zum Mittelpunkt des Epizykels rotiert der Epizykelradius dagegen um (n-1)*360 Grad, wobei n -1 die Anzahl der Zähne des Innenrads ist. Durch die n - 1 Umdrehungen des Epizykelradius ergeben sich n - 1 Maxima und n - 1 Minima des Gesamtradius, die den Zähnen und den Einbuchtungen bzw. Zahngründen dazwischen entsprechen.

Hierbei ist der Radius r_1 des Zykels gleich dem Radius des Lagers, auf dem die Pins aufliegen plus dem Radius der Pins. Dieser Radius wird auch als "Radius erster Ordnung bezeichnet". Der Radius r_2 des Epizykels ist gleich dem halben Pinradius. Der Endpunkt des Epizykels beschreibt die Pintrajektorie. Eine innere Abrollkurve ergibt sich als Äquidistante zu Pintrajektorie in einem Abstand der sich aus der Summe des Pinradius und einem Lagerspiel ergibt. Diese innere Abrollkurve ist gleich der Zahngeometrie der Innenradverzahnung.

Die Zahnform der Außenradverzahnung des HPD-E Getriebes ergibt sich durch eine ähnliche Konstruktion, wonach sich ein Radius eines Zykels um 360 Grad um die Getriebeachse dreht, während sich ein Radius eines Epizykels in der Gegenrichtung um n*360 Grad dreht. Relativ zu der Verbindungslinie vom Koordinatenursprung zum Mittelpunkt des Epizykels rotiert der Epizykelradius dagegen um (n + 1)*360 Grad, wobei n + 1 die Anzahl der Zähne des Innenrads ist. Durch die n + 1 Umdrehungen des Epizykelradius ergeben sich n + 1 Maxima und n + 1 Minima des Gesamtradius, die den Zähnen und den Einbuchtungen bzw. Zahngründen dazwischen entsprechen.

In Formeln ausgedrückt wird die Radkurve des HPD-E Getriebes durch

$$\overrightarrow{D_1 D_2} = f(r_1; \alpha) = \begin{pmatrix} r_1 * \cos(\alpha) \\ r_1 * \sin(\alpha) \end{pmatrix}$$

$$\overrightarrow{D_2 P} = g(r_2; \beta) = \begin{pmatrix} r_2 * \cos(\beta) \\ \pm r_2 * \sin(\beta) \end{pmatrix} = \begin{pmatrix} r_2 * \cos(n * \alpha) \\ \pm r_2 * \sin(n * \alpha) \end{pmatrix}$$

beschrieben, wobei sich das Pluszeichen auf die Innenradverzahnung und das Minuszeichen auf die Außenradverzahnung bezieht.

$$\vec{P} = \begin{pmatrix} x_P \\ y_P \end{pmatrix} = \begin{pmatrix} r_1 * \cos(\alpha) + r_2 * \cos(n * \alpha) \\ r_1 * \sin(\alpha) \pm r_2 * \sin(n * \alpha) \end{pmatrix} \qquad (1)$$

Dies ist eine Parameterdarstellung der Radkurve mit dem Parameter $\alpha$. Da die Kurvennormale auf der Tangente senkrecht steht kann man aus einer Parameterdarstellung die Äquidistante im Abstand d durch die folgenden Formeln (2a) und (2b) erhalten:

$$x_d(\alpha) = x(\alpha) \pm \frac{d * y'(\alpha)}{\sqrt{x'(\alpha)^2 + y'(\alpha)^2}} \qquad (2a)$$

$$y_d(\alpha) = y(\alpha) \mp \frac{d * x'(\alpha)}{\sqrt{x'(\alpha)^2 + y'(\alpha)^2}} \qquad (2b)$$

wobei das obere Vorzeichen für die Radkurve der Außenverzahnung und das untere Vorzeichen für die Radkurve der Innenverzahnung gilt, wenn der Winkel im Gegenuhrzeigersinn durchlaufen wird. Hierbei bedeutet das Symbol x' oder y' die jeweilige Ableitung nach dem Winkel.

Im konkreten Fall des HPD-E Getriebes ergibt sich daraus:

$$x_d(\alpha) = r_1 * \cos(\alpha) \pm r_2 * \cos(n * \alpha)$$
$$+ \frac{\dot{d} * (r_1 * \cos(\alpha) \pm n\, r_2 * \cos(n * \alpha))}{\sqrt{r_1{}^2 + 2nr_1r_2(\sin(\alpha)\sin(n\alpha) \pm \cos(\alpha)\cos(n\alpha)) + n^2r_2{}^2}}$$
$$- r_1 * \cos(\alpha) \pm r_2 * \cos(n * \alpha) + \frac{d * (r_1 * \cos(\alpha) \pm n\, r_2 * \cos(n * \alpha))}{\sqrt{r_1{}^2 \mp 2nr_1r_2\cos((n \pm 1)\alpha) + n^2r_2{}^2}}$$

$$y_d(\alpha) = r_1 * \sin(\alpha) \mp r_2 * \sin(n * \alpha) - \frac{d * (n\, r_2 * \sin(n * \alpha) + r_1 * \sin(\alpha))}{\sqrt{r_1{}^2 \mp 2nr_1r_2\cos((n \pm 1)\alpha) + n^2r_2{}^2}}$$

Für das HPD-E Getriebe gelten die folgenden Randbedingungen:

$$n * d_{Pin} < h(D_1; r_1)$$

$$0 < d_{Pin} < r_1,$$

wobei h(D1, rl) die Umkreislänge des Pinrings ist.

Beispielsweise können für ein HPD-E Getriebe die folgenden Werte der Tabelle 1 konkret vorgegeben sein.

| Variable | Betrag | Einheit | Bedeutung/Zweck |
|---|---|---|---|
| n | 58 | 1 | Anzahl der Pins |
| tkPin | 103 | mm | Teilkreisdurchmesser der Pin-Anordnung |
| dPin | 3 | mm | Durchmesser eines Pins |
| Exver | 0,75 | mm | Exzentrischer Versatz der Pinanordnung |
| Bzinnen | 3 | mm | Breite Zahnrad innen |
| Bzaussen | 3 | mm | Breite Zahnrad außen |
| Lpin | 3 | mm | Länge Pin |
| Gsi | 0,0 | mm | Zusätzliches Getriebespiel zw. Pin und Zahnrad innen |
| Gsa | 0,0 | mm | Zusätzliches Getriebespiel zw. Pin und Zahnrad außen |

Aus den ersten vier Werten n, tkPin, dPin und Exver ergeben sich die folgenden abgeleiteten Werte der Tabelle 2:

| Variable | Betrag | Einhei t | Formel | Bedeutung/Zweck |
|---|---|---|---|---|
| rli | 51,5 | mm | tkPin/2 | Radius des Zykels |
| rla | 51,5 | mm | tkPin/2 | Radius des Zykels |
| r3 | 0,75 | mm | Exver | Radius des Epizykels |
| tPin | 5,579 | mm | tkPin*$\pi$/n | Teilung der Pins (tangential) |
| Z_innen | 148 | 1 | n - 1 | Zähnezahl innen |
| Z_außen | 152 | 1 | n + 1 | Zähnezahl außen |
| i1 | 37 | 1 | Z_innen/2 | Übersetzung bei festem Außenrad |
| i2 | 38 | 1 | Z_außen/2 | Übersetzung bei festem Innenrad |

In ähnlicher Form wie obenstehend für eine HPD Getriebe mit Exzenter geschehen kann für ein HPD Getriebe mit ovaler Kurvenscheibe und verformbarem Lager die Zahngeometrie durch eine Epizyklenkonstruktion erhalten werden, wobei hierbei allerdings Epizyklen erster und zweiter Ordnung verwendet werden. Ein solches Getriebe wird der Kürze halber auch als "HPD-F" Getriebe bezeichnet.

Für die Innenverzahnung des HPD-F Getriebes ergibt sich die Radkurve als Überlagerung eines Zykels mit Radius r_1, eine Epizykels 1. Ordnung mit Radius r_2 und eines Epizykels 2. Ordnung mit Radius r_3. Hierbei dreht sich der Epizykel 1. Ordnung (n - 1) mal so schnell in der gleichsinnig zu dem Zykel und der Epizykel 2. Ordnung dreht sich (n - 3) mal so schnell und gegensinnig zu dem Zykel.

$$\overrightarrow{D_1 D_2} = f(r_1; \alpha) = \begin{pmatrix} r_1 * \cos(\alpha) \\ r_1 * \sin(\alpha) \end{pmatrix}$$

$$\overrightarrow{D_2 D_3} = g(r_2; \beta) = \begin{pmatrix} r_2 * \cos(\beta) \\ r_2 * \sin(\beta) \end{pmatrix} = \begin{pmatrix} r_2 * \cos((n - 1) * \alpha) \\ r_2 * \sin((n - 1) * \alpha) \end{pmatrix}$$

$$\overrightarrow{D_3 P} = h(r_3; \gamma) = \begin{pmatrix} r_3 * \cos(\gamma) \\ -r_3 * \sin(\gamma) \end{pmatrix} = \begin{pmatrix} r_3 * \cos((n - 3) * \alpha) \\ -r_3 * \sin((n - 3) * \alpha) \end{pmatrix}$$

Als Überlagerung dieser drei Bewegungen ergibt sich als Radkurve der inneren Verzahnung des HPD-F Getriebes:

$$\vec{P} = \begin{pmatrix} x_P \\ x_P \end{pmatrix} = \begin{pmatrix} r_1 * \cos(\alpha) + r_2 * \cos(\beta) + r_3 * \cos(\gamma) \\ r_1 * \sin(\alpha) + r_2 * \sin(\beta) - r_3 * \sin(\gamma) \end{pmatrix}$$

und somit

$$\vec{P} = \begin{pmatrix} r_1 * \cos(\alpha) + r_2 * \cos((n - 1) * \alpha) + r_3 * \cos((n - 3) * \alpha) \\ r_1 * \sin(\alpha) + r_2 * \sin((n - 1) * \alpha) - r_3 * \sin((n - 3) * \alpha) \end{pmatrix} \qquad (3)$$

Für den einfachsten Fall mit 2 Innenzähnen, 4 Pins und 6 Außenzähnen ergibt sich als Radkurve der Innenverzahnung:

$$\vec{P} = \begin{pmatrix} x_P \\ x_P \end{pmatrix} = \begin{pmatrix} r_1 * \cos(\alpha) + r_2 * \cos(3 * \alpha) + r_3 * \cos(\alpha) \\ r_1 * \sin(\alpha) + r_2 * \sin(3 * \alpha) - r_3 * \sin(\alpha) \end{pmatrix} = \begin{pmatrix} (r_1 + r_3) * \cos(\alpha) + r_2 * \cos(3 * \alpha) \\ (r_1 - r_3) * \sin(\alpha) + r_2 * \sin(3 * \alpha) \end{pmatrix}$$

Für die Werte von r_1, r_2 und r_3 können insbesondere die folgenden Werte verwendet werden: r_1 kann dem halben Durchmesser bzw. dem halben Teilkreisdurchmesser der unverformten Pin-Anordnung entsprechen, r_2 kann drei Achtel des Pin-Hubs entsprechen und r_3 einem Drittel des Radius r_2. Der Pin-Hub ist dabei wiederum durch die Differenz zwischen dem größten und dem kleinsten Radius der Kurvenscheibe gegeben.

Gemäß einem weiteren Ausführungsbeispiel werden Korrekturterme eingefügt, die durch Parameter a und b bestimmt werden. Gemäß dieser Korrektur wird der Radius r_1 durch den effektiven Radius r_1 + (a+b)/2 ersetzt und der Radius r_2 wird durch den effektiven Radius r_2 - (b-a)/2 ersetzt. Unter Berücksichtigung dieser Korrektur ergibt sich:

$$\vec{P}(x, y, a, b) =$$
$$\begin{pmatrix} r_{1,eff} * \cos(\alpha) + r_{2,eff} * \cos((n - 1) * \alpha) + r_3 * \cos((n - 3) * \alpha) \\ r_{1,eff} * \sin(\alpha) + r_{2,eff} * \sin((n - 1) * \alpha) - r_3 * \sin((n - 3) * \alpha) \end{pmatrix} \qquad (4)$$

wobei

$$r_{1,eff} = r_1 + (a+b)/2 \text{ und } r_{2,eff} = r_2 - (b-a)/2.$$

Wie beim oben erwähnten HPD-E Getriebe ergibt sich die Zahngeometrie als eine Äquidistante zu der Radkurve im Abstand des Pinradius zu dem gegebenenfalls ein positiver Korrekturfaktor addiert werden kann, um eine Getriebespiel zu berücksichtigen.

Entsprechend ergibt sich Außenverzahnung als Überlagerung eines Zykels mit Radius r_1, eines Epizykels 1. Ordnung mit Radius r_2 und eines Epizykels 2. Ordnung mit Radius r_3. Hierbei dreht sich der Epizykel 1. Ordnung (n + 1) mal so schnell gegensinnig zu dem Zykel und der Epizykel 2. Ordnung dreht sich (n + 3) mal so schnell gleichsinnig zu dem Zykel.

Somit ergibt sich für die Radkurve der Außenverzahnung des HPD-F Getriebes folgende Formel:

$$\vec{P} = \begin{pmatrix} x_P \\ y_P \end{pmatrix} = \begin{pmatrix} r_1 * \cos(\alpha) + r_2 * \cos(\beta) + r_3 * \cos(\beta) \\ r_1 * \sin(\alpha) - r_2 * \sin(\beta) + r_3 * \sin(\gamma) \end{pmatrix} = \tag{5}$$

$$\begin{pmatrix} r_1 * \cos(\alpha) + r_2 * \cos\big((n+1)*\alpha\big) + r_3 * \cos\big((n+3)*\alpha\big) \\ r_1 * \sin(\alpha) - r_2 * \sin\big((n+1)*\alpha\big) + r_3 * \sin\big((n+3)*\alpha\big) \end{pmatrix}$$

Die oben genannten Korrekturterme gelten entsprechend auch für die Radkurve der Außenverzahnung so dass sich dann die folgende Formel ergibt:

$$\vec{P}(x,y,a,b) = \begin{pmatrix} r_{1,eff} * \cos(\alpha) + r_{2,eff} * \cos\big((n+1)*\alpha\big) + r_3 * \cos\big((n+3)*\alpha\big) \\ r_{1,eff} * \sin(\alpha) - r_{2,eff} * \sin\big((n+1)*\alpha\big) + r_3 * \sin\big((n+3)*\alpha\big) \end{pmatrix} \tag{6}$$

Die folgenden Bedingungen gelten für das Verhältnis von Epizykelradius und Pinradius sowie für das Verhältnis der Epizykelbahn des Epizykels 1. Ordnung zum Pindurchmesser:

$$0 < r_{Pin} < 2 * r_2$$

$$n * d_{Pin} < f(r_1; r_2; \alpha; \beta)$$

Somit ist r_2 immer größer als der halbe Pinradius und f ist immer größer als der n-fache Pindurchmesser, der eine Untergrenze für den Umfang des Pinrings darstellt.

Beispielsweise können für ein HPD-F Getriebe die folgenden Werte der Tabelle 3 konkret vorgegeben sein.

| Variable | Betrag | Einheit | Bedeutung/Zweck |
|---|---|---|---|
| n | 150 | 1 | Anzahl der Pins |
| tkPnom | 111,5 | mm | Teilkreisdurchmesser der Pin Anordnung nominal (unverformt) |
| dPin | 1,4 | mm | Durchmesser eines Pins |
| Hub | 1,29 | mm | Hub der Pins (vom Getriebemittelpunkt) |
| aedFL | 12,5 | mm | Äquidistante flexibles Lager (Außenkontur zu Kurvenscheibe) |
| bFL | 13 | mm | Breite flexibles Lager |
| kwKS | 0 | mm | Korrekturwert Kurvenscheibe (zum Ausgleich von Radialluft im flex. Kugellager und Verformung der Kurvenscheibe) |
| Bzinnen | 2,9 | mm | Breite Zahnrad innen |

(fortgesetzt)

| Variable | Betrag | Einheit | Bedeutung/Zweck |
|---|---|---|---|
| Bzaussen | 3 | mm | Breite Zahrad außen |
| Lpin | 3 | mm | Länge Pin |
| a | 0,03 | mm | Zahnkorrektur a, Anpassung bzgl. großer Achse und Formun unter Last |
| b | 0,07 | mm | Zahnkorrektur b, Anpassung bzgl. kleiner Achse und Formung unter Last |
| Gsi | 0,0 | mm | Zusätzliches Getriebespiel zw. Pin und Zahnrad innen |
| Gsa | 0,0 | mm | Zusätzliches Getriebespiel zw. Pin und Zahnrad außen |

Aus den ersten fünf Werten n, tkPnom, dPin, Hub und aedFl der obigen Tabelle ergeben sich für das HPD-F Getriebe die folgenden abgeleiteten Werte der Tabelle 4:

| Variable | Betrag | Einhei t | Formel | Bedeutung/Zweck |
|---|---|---|---|---|
| daLnom | 110,1 | mm | tkPnom - dPin | Außendurchmesser flexibles Lager (nominal, unverformt) |
| diLnom | 85,1 | mm | daLnom - 2 aedf1 | Innendurchmesser flexibles lager (nominal, unverformt) |
| KSA | 86,39 | mm | diLnom + Hub | Kurvenscheibe, große Achse "A" |
| KSa | 83,81 | mm | diLnom - Hub | Kurvenscheibe, kleine Achse "a" |
| r1 | 55,75 | mm | tkPnom/2 | Radius des Zykels |
| r2 | 0,484 | mm | Hub* 3/8 | Radius Epizykel 1. Ordnung |
| r3 | 0,161 | mm | r2/3 | Radius Epizykel 2. Ordnung |
| tPin | 2,335 | mm | tkPnom*$\pi$/n | Teilung der Pins (tangential) |
| Zinnen | 148 | 1 | n - 2 | Zähnezahl innen |
| Zaußen | 152 | 1 | n + 2 | Zähnezahl außen |
| i1 | 37 | 1 | Zinnen/4 | Übersetzung bei festem Außenrad |
| i2 | 38 | 1 | Zaußen/4 | Übersetzung bei festem Innenrad |

Eine Kurve die durch die Pinmittelpunkte des HPD-F Getriebes gebildet wird ergibt sich aus der sinusüberlagerten Kreisform, die aus den beiden folgenden Vektoren gebildet wird:

$$\overrightarrow{D_1 D_2} = f(r_1; \alpha) = \begin{pmatrix} r_1 * \cos(\alpha) \\ r_1 * \sin(\alpha) \end{pmatrix}$$

$$\overrightarrow{D_2 M_{Pin}} = h(r_2 + r_3; \beta) = \begin{pmatrix} (r_2 + r_3) * \cos(3\alpha) \\ (r_2 + r_3) * \sin(3\alpha) \end{pmatrix}$$

Die Kurve der Pinmittelpunkte ergibt sich durch Addition der beiden Vektoren zu:

$$\begin{pmatrix} x_{M\_Pin} \\ y_{M\_Pin} \end{pmatrix} = \begin{pmatrix} r_1 * \cos(\alpha) + (r_2 + r_3) * \cos(3\alpha) \\ r_1 * \sin(\alpha) + (r_2 + r_3) * \sin(3\alpha) \end{pmatrix} \qquad (7)$$

Für das HPD-E Getriebe ist die Kurve der Pinmittelpunkte ein Kreis mit dem Radius r1, der um den halben Pinhub bzw. um den Exzenterversatz gegenüber der Getriebemittelachse 515 versetzt ist. Die jeweilige Kurve der Pinmittelpunkte rotiert bei angetriebenem Transmitter mit der Geschwindigkeit der Eingangswelle um die Getriebemittelachse 515. Hieraus ergibt sich auch die Bahn der einzelnen Pins, die mit der Winkelgeschwindigkeit des abgetriebenen Getriebeteils um diese rotierende Kurve umlaufen.

Die Figuren 7 - 10 zeigen die Erzeugung einer Radkurve und einer Äquidistante dazu für eine Innenradverzahnung eines HPD-E Getriebes mit 2 Innenradzähnen und 4 Außenradzähnen. In ähnlicher Weise zeigen die Figuren 11 bis 14 die Erzeugung einer Radkurve und einer Äquidistante dazu für eine Außenradverzahnung des HPD-E Getriebes.

Die Zahnoberfläche der Innenradverzahnung wird durch eine Äquidistante 519 zu einer Radkurve 518 im Abstand eines halben Pinradius erzeugt. In Fig. 100 - 103 ist der Querschnitt eines Pins durch einen Kreis 520 symbolisiert. Hierbei ist mit Äquidistante die innere Äquidistante gemeint, die näher an der Getriebemittelachse 515 liegt.

Ein Ort 21 auf der Radkurve 518 entsteht, wie auch in Fig. 96 gezeigt ist, als Summe oder Überlagerung des Zykelvektors mit dem Epizykelvektor.

Die Zahnoberfläche der Außenradverzahnung wird durch eine Äquidistante 519 zu einer Radkurve 518 im Abstand eines halben Pinradius erzeugt. In Fig. 104 - 107 ist der Querschnitt eines Pins durch einen Kreis 520 symbolisiert. Hierbei ist mit Äquidistante die äußere Äquidistante gemeint, die weiter entfernt von der Getriebemittelachse 515 liegt.

Fig. 108 zeigt eine Zahngeometrie für ein Innenrad und ein Außenrad, die für das HPD-E Getriebe mit drei Pins erhalten wurde, wobei die folgenden Parameter der Tabelle 5 verwendet wurden.

| Variable | Betrag | Bedeutung |
|---|---|---|
| dLager | 50 mm | Durchmesser des Lagers |
| dPin | 20 mm | Pindurchmesser |
| Exver | 5 mm | Exzenterversatz |
| Hub | 10 mm | Pinhub (= Exver x 2) |
| Tkpin | 70 mm | Pinteilkreis |

Dabei wird der Zykelradius zu 0,5 * (dLager + dPin) = 35 mm festgelegt und der Epizykelradius gleich dem Exzenterversatz Exver 5 mm gesetzt.

Die Figuren 16 bis 18 zeigen verschiedene Ansichten des in Fig. 95 in einer Explosionsansicht gezeigten HPD-E Getriebes 510' mit 3 Pins.

Fig. 109 zeigt eine Draufsicht auf das HPD-E Getriebe 510' von der Seite des Exzenters 514 her.

Fig. 107 zeigt eine Querschnittsansicht durch das HPD-E Getriebe 510' entlang der in Fig. 16 bezeichneten Querschnittslinie A-A.

Fig. 111 zeigt eine Draufsicht auf das HPD-E Getriebe 510' von der Seite des Innenrads 507 her.

Fig. 112 zeigt eine weitere Zahngeometrie, die sich für das HPE-E Getriebe mit 58 Pins mit den weiter oben angegebenen Parametern ergibt. Hierbei ergibt sich die Innenradverzahnung aus der Äquidistanten 529 zu der Radkurve 528 des Innenrads und die Außenradverzahnung aus der Äquidistanten 529' zu der Radkurve 528' des Außenrads.

Fig. 113 zeigt eine weitere Zahngeometrie, die sich für das HPD-F Getriebe mit 150 Pins mit den weiter oben angegebenen Parametern ergibt. Hierbei sind aus Gründen der Übersichtlichkeit die zugehörigen Radkurven nicht gezeigt, sondern nur die Äquidistanten 529, 529', die die Zahngeometrie festlegen.

Zur Verdeutlichung sind in der Fig. 112 zwei Pins 1 der insgesamt 58 Pins und in der Fig. 113 drei Pins 1 der insgesamt 150 Pins eingezeichnet. Der jeweilige Mittelpunkt der Pins 1 befindet sich in der Nähe von Schnittpunkten der Radkurve 528 des Innenrads und der Radkurve 528' des Außenrads, wie in Fig. 112 erkennbar ist.

Fig. 114 zeigt eine Radkurve 528 des Innenrads des Getriebes aus Fig. 113 und die zugehörige Äquidistante 529.

Fig. 115 zeigt eine Nullkontur 525 einer Verzahnung, die gemäß einer Epizykelkonstruktion ohne Korrekturen gefertigt wurde, eine eingelaufene Verzahnung 527 nach 147 Stunden Betriebsdauer und eine korrigierte Verzahnung 526, in der der Effekt des Einlaufens durch eine Vorhaltung bereits berücksichtigt ist. Bei dem Einlaufen des Getriebes wurde das Drehmoment nur in einer Richtung übertragen, so dass die Abnutzung vorwiegend an der rechten Zahnflanke erfolgte. Zur besseren Veranschaulichung enthält Fig. 115 zusätzliche Hilfslinien, wie den Fußkreis oder die Symmetrieachse der Nullkontur 525.

Diese Vorhaltung kann beispielsweise durch die oben für das HPD-F Getriebe angegebenen Korrekturfaktoren a und b berücksichtigt werden. Die Korrektur ist insbesondere bei der Verzahnung des HPD-F Getriebes relevant, da sich hier spitzere Zahnformen ergeben, die sich durch die Abrundung während des Betriebs stärker verändern als die rundere Zahnform des HPD-E Getriebes

Die einseitige Beanspruchung der Zahnflanken wie beim Beispiel der Figur 22 ist typischerweise bei einem Fahrzeugantrieb gegeben. Wenn eine einseitige Beanspruchung vorliegt, kann es sinnvoll sein, eine asymmetrische Korrektur anzubringen. Bei der Epizykelkonstruktion kann dies durch einen winkelabhängigen Radius eines Epizykels oder der Epizykel berücksichtigt werden, wobei der Epizykelradius so gewählt ist, dass sich für die Innenradverzahnung ein kleinerer Radius und bei der Außenradverzahnung ein größerer Radius ergibt, wenn ein Startwinkel erreicht wird, wobei der Startwinkel in der gewählten Umlaufrichtung vor der Zahnmitte liegt.

Dieser Radius wird dann kontinuierlich an den Radius der Nullkontur 525 angenähert bis ein Endwinkel erreicht ist, wobei der Endwinkel insbesondere durch die Winkelposition des Zahngrunds gegeben sein kann. Beispielsweise kann sich die Differenz zwischen dem Epizkelradius der Nullkurve und der korrigierten Kurve gemäß einer linearen Funktion, einem Polynom, einer Gaußkurve, einer Exponentialfunktion oder einer Winkelfunktion auf Null verringern.

Bei einer zweieinhalbreihigen Getriebeanordnung mit zwei Außenrädern und nur einem Innenrad, wie beispielsweise in Fig. 95 gezeigt, wird eine größere Kraft auf das Innenrad übertragen als auf das Außenrad. Dadurch erfolgt am Innenrad eine stärkere Abnutzung. Aus diesem Grund kann es sinnvoll sein, die Korrektur nur bei der Innenradverzahnung vorzusehen. Weiterhin kann es sinnvoll sein, das Innenrad aus einem härteren Material als die beiden Außenräder zu fertigen. Beispielsweise kann das Innenrad aus Stahl gefertigt sein und das Außenrad bzw. die Außenräder aus Plastik. Als Materialien kommen beispielsweise Chrom-Molybdän-Stahl und Polyamid in Betracht.

Fig. 116 zeigt einen Ausschnitt aus einem HPD-F Getriebe mit einer Verzahnung gemäß der in Fig. 98 und 99 gezeigten Epizykelkonstruktionen und einem integral geformten Pinring 530. Anders als bei dem Ausführungsbeispiel der Fig. 113 wird das Zugmittel nicht durch zylindrische Pins 501 gebildet, die in einen elastischen Pin-Haltering 503 eingesetzt sind, sondern durch einen integral geformten Pinring 530. Der integral geformte Pinring 530 weist eine Innenverzahnung und eine Außenverzahnung auf, bei denen die Zahnköpfe in einem kraftübertragenden Bereich rund sind.

Anstelle der Pins 501 weist der integral geformte Pinring 530 eine Innenverzahnung und eine Außenverzahnung auf, wobei die Innenverzahnung und die Außenverzahnung jeweils kreisabschnittsförmige äußere Bereiche bzw. Zähne 531 und kreisabschnittsförmige innere Bereiche bzw. Zahngründe 532 aufweist, die durch Übergangsbereiche 533 miteinander verbunden sind.

Einem Zahngrund 532 der äußeren Verzahnung des Pinrings 530 liegt jeweils ein Zahn 531 der inneren Verzahnung gegenüber und einem Zahn 531 der inneren Verzahnung liegt jeweils ein Zahngrund 532 der äußeren Verzahnung gegenüber. Die Anzahl der Zähne 531 der Außen- und der Innenverzahnung entspricht der Anzahl der Pins in dem Ausführungsbeispiel von Fig. 113. Somit weisen die Verzahnungen des Pinrings 530 jeweils zwei Zähne mehr auf als das Innenrad und zwei Zähne weniger als das Außenrad.

Der integrale Pinring 530 ist aus einem elastischen Material geformt, wie beispielsweise Gummi, Plastik oder Metall oder aus einem elastischen Verbundmaterial. Insbesondere kann er durch Fräsen aus einem ringförmigen Element ausgeformt sein. Der Pinring 530 kann auch für ein HPD-E Getriebe verwendet werden, wobei die Zahl der Zähne jeweils um eins größer als die Zähnezahl des Innenrads und um eins kleiner als die Zähnezahl des Außenrads ist.

Fig. 117 zeigt einen durch eine innere Hüllkurve 533 und eine äußere Hüllkurve 534 definierten Toleranzbereich 535 eines vorgegebenen Zahnprofils 536. Gemäß einer ersten Messmethode wird ein zu vermessendes Zahnprofil 537 als übereinstimmend mit dem vorgegebenen Zahnprofil 536 angesehen, wenn es innerhalb der Hüllkurven 536, 537 liegt, die von dem vorgegebenen Zahnprofil 536 den Abstand Δ (delta) haben.

Der Abstand Δ kann beispielsweise als Bruchteil einer Zahnbreite s, als Bruchteil eines Zahnabstands p, als Bruchteil eines Abstands r von einer Mittelachse des Zahnrads oder absolut vorgegeben sein. Dabei kann die Zahnbreite s beispielsweise auf halber Höhe zwischen Zahngrund und Zahnspitze oder auf Höhe der Wendepunkte der Profilkurve 536 gemessen werden. Abhängig von der Dimension der Verzahnung kann der Wert delta beispielsweise 0.5 mm, 0.2 mm oder 0.08 mm sein, oder er kann beispielsweise 5%, 1%, 0.5% oder 0.2% der Zahnbreite s betragen.

Gemäß einer weiteren Vergleichsmethode wird ein Vergleichswert durch einen Mittelwert der Abstände zu dem vorgegebenen Profil an vorgegebenen Messpunkten bestimmt, beispielsweise als arithmetischer Mittelwert oder als quadratischer Mittelwert. Abhängig von der Dimension der Verzahnung kann beispielsweise ein Vergleichswert von <= 0,5 mm, <= 0,2 mm oder <= 0.08 mm als gute Übereinstimmung mit dem vorgegebenen Profil 536 gewertet werden. Der Abstand kann dabei insbesondere senkrecht zur vorgegebenen Profilkurve 536 gemessen werden. Weitere Vergleichsmethoden können den weiter oben angegebenen Industrienormen entnommen werden.

Insbesondere kann das vorgegebene Zahnprofil 536 ein gemäß der vorliegenden Beschreibung vorgegebenes Zahnprofil sein, das beispielsweise durch die weiter oben angegebenen Gleichungen (1), (3) oder (5) vorgegeben ist. Die Gleichungen (1), (3) und (5) beschreiben Kurvenscharen von Profilkurven, von denen die Profilkurve auszuwählen ist, bei der ein Vergleichswert zwischen der zu messenden Verzahnung und der ausgewählten Profilkurve unter den vorgegebenen Randbedingungen minimiert wird. Beispielsweise können Randbedingungen, die aus der zu messenden Verzahnung ermittelt werden, bereits die Summe der Radien und die Anzahl n im Argument der Winkelfunktionen vorgeben.

Bei dieser Betrachtungsweise bleiben weitere Abweichungen der gemessenen Verzahnungen gegenüber der vorgegebenen Verzahnung, wie Flankenlinienabweichungen, Teilungsabweichungen, und Rundlaufabweichung unberücksichtigt. Das kann unter anderem dadurch erreicht werden, dass nur einzelne Zähne in einer vorgegebenen Seitenansicht miteinander verglichen werden oder dadurch, dass solche Abweichungen in die gemessene Abweichung mit eingehen.

Fig. 118 zeigt einen durch Profilverschiebungen definierten Toleranzbereich 535' eines Zahnprofils. Eine äußere Kurve 536' ist durch das um den Abstand delta in radialer Richtung nach außen verschobenes Profil 536 gegeben und eine innere Kurve 535' ist durch das um den Abstand delta in radialer Richtung nach innen verschobenes Profil 536 gegeben.

Wie bei dem Beispiel von Fig. 117 kann ein zu messendes Zahnprofil als übereinstimmend mit dem vorgegebenen Profil angesehen werden, wenn es sich an allen Messpunkten oder auch im statistischen Sinn, beispielsweise für 95% aller Messpunkte, im dem durch die äußere Kurve 536' und die innere Kurve 535' festgelegten Toleranzbereich befindet.

Gemäß einem Lagerungskonzept der vorliegenden Beschreibung, das sich insbesondere auf die Lagerung der Rotorwelle, eines Abtriebselement und einer damit verbundenen Abtriebswelle bezieht, sind drei Lager vorgesehen, auf denen die vorgenannten Bauelemente in dem Gehäuse gelagert sind. Insbesondere sind das Abtriebselement und die Abtriebswelle so ausgestaltet, dass sie durch zwei diagonal gegenüberliegende Lager nach innen gegenüber der Rotorwelle und nach außen gegenüber dem Gehäuse abgestützt sind.

Wenn zusätzlich eine Tretwelle vorhanden ist, die durch zwei weitere Lager in der Rotorwelle abgestützt ist, erweitert sich die Drei-Lageranordnung zu einer Fünf-Lageranordnung. In diesem Fall bildet die mit dem Abtriebselement verbundene Abtriebs-Hohlwelle eine äußere Abtriebs-Hohlwelle, die über einen äußeren Freilauf mit einer weiteren Abtriebs-Hohlwelle in Verbindung steht. Weiterhin steht die Tretwelle mit der Abtriebs-Hohlwelle über einen inneren Freilauf in Verbindung, wobei eine Übersetzung ins Schnelle, wie beispielsweise durch die in Fig. 67 bis 76 gezeigten Planetengetriebe, zwischen die Tretwelle und die Abtriebswelle geschaltet sein kann.

Vorteilhafterweise können das Innenrad und die Abtriebswelle durch zwei miteinander verbundene Hohlwellen aus einem Stück gefertigt sein, wobei die Abtriebs-Hohlwelle einen kleineren Durchmesser als das Innenrad aufweist. Ein inneres Lager kann dann auf einer inneren Schulter der Abtriebs-Hohlwelle angeordnet sein und ein diagonal gegenüberliegendes äußeres Lager kann auf einer äußeren Schulter der Abtriebs-Hohlwelle angeordnet sein, wobei sich die äußere Schulter im Verbindungsbereich zwischen dem Innenrad und der Abtriebs-Hohlwelle befindet.

In der vorliegenden Beschreibung kann Kugellager auch allgemein für Wälzlager stehen. Rollenlager können insbesondere für Lager verwendet werden, die zur Abstützung dienen. Für das Lager der Untersetzungsgetriebes, das auf der Kurvenscheibe oder Exzenterscheibe angeordnet ist, wird vorzugsweise ein Kugellager mit Kugeln verwendet, es kann aber auch ein Rollenlager verwendet werden.

Fig. 119 zeigt eine Prinzipzeichnung eines ersten Antriebs.

Bei diesem Antrieb wird ein Antriebsdrehmoment von einem Motor auf ein Untersetzungsgetriebe und von dort auf eine Abtriebswelle übertragen, wobei das Untersetzungsgetriebe ein Getriebe der in der vorliegenden Beschreibung beschriebenen Typen ist, wie beispielsweise in den Prinzipzeichnungen 121 - 124 angedeutet ist.

Der Motor kann insbesondere ein Elektromotor wie beispielsweise ein Drei-Phasen Außenläufermotor sein. Sämtliche in der vorliegenden Beschreibung erwähnten Untersetzungsgetriebe können auch in einer Motor-Getriebe-Einheit ohne Kurbelwelle verbaut werden, so wie es in Fig. 119 gezeigt ist, beispielsweise in einem Getriebemotor. Dabei entfallen die auf der Tretwelle angeordneten Bauelemente. Eine solche Bauform ist beispielsweise für einen Roboterarm geeignet.

Fig. 120 zeigt eine Prinzipzeichnung eines weiteren Antriebs.

Bei diesem Antrieb wird ein Antriebsdrehmoment von einem Motor auf ein Untersetzungsgetriebe und von dort auf einen äußeren Freilauf eines doppelten Freilaufs und auf eine Abtriebswelle übertragen.

Ein weiteres Antriebsdrehmoment wird von einer Tretwelle auf einen inneren Freilauf eines doppelten Freilaufs und auf die Abtriebswelle übertragen. Anstatt einer Tretwelle kann auch ein anderer Typ einer Kurbelwelle oder allgemein eine Antriebswelle vorgesehen sein. Allgemein kann die innere Antriebswelle auch durch einen weiteren Motor oder durch einen anderen mechanischen Antrieb wie Wind- oder Wasserkraft angetrieben sein.

Die Figur 121 zeigt eine Prinzipzeichnung eines Flexspline oder Spannungswellen-Antrieb gemäß der vorliegeden Beschreibung. Bei dem Flexspline-Antrieb wird ein Motordrehmoment auf einen Transmitter und von dort auf einen Flexspline übertragen. Der Flexspline ist auf dem Transmitter rotierbar gelagert, beispielsweise durch ein deformierbares Kugellager.

Der Flexspline stützt sich an einem stationären Außenrad ab, das an einem Gehäuse festgelegt ist. Diese Abstützung ist durch einen Doppelpfeil gekennzeichnet. Das Außenrad und das Gehäuse nehmen somit die Reaktionskraft des Abtriebs auf.

Fig. 122 zeigt eine Prinzipzeichnung eines harmonischen Pinring-Antriebs gemäß der vorliegenden Beschreibung. Eine Motorkraft wird auf einen Transmitter übertragen und von dort auf einen Pinring. Der Pinring ist auf dem Transmitter rotierbar gelagert, beispielsweise durch ein deformierbares Kugellager.

Das Abtriebsdrehmoment wird von dem Pinring auf ein drehbar angeordnetes Innenrad und von dort auf eine Abtriebswelle übertragen. Der Pinring stützt sich an einem stationären Außenrad ab, das an einem Gehäuse festgelegt ist, was ebenfalls durch einen Doppelpfeil ersichtlich ist. Das Außenrad und das Gehäuse nehmen somit die Reaktionskraft des Abtriebs auf.

Fig. 123 zeigt eine Prinzipzeichnung eines Exzentergetriebes gemäß der vorliegenden Beschreibung. Ein Motordrehmoment wird auf einen oder mehrere Exzenter übertragen und von dort auf ein bzw. mehrere Innenräder. Die Innenräder sind jeweils durch ein Lager drehbar auf den Exzentern gelagert. Mithilfe einer Anordnung von Lagern und Zapfen wird das Drehmoment auf eine Abtriebsplatte übertragen.

Die Anordnung aus Lagern und Zapfen stellt eine Zentrierungsvorrichtung bzw. ein Zentrierungsgetriebe mit einer 1:1 Übersetzung dar. Insbesondere können zwei gegeneinander um 180° versetzte Exzenter vorgesehen sein.

Die Figuren 124 bis 126 zeigen eine weitere Motor-Getriebe-Einheit mit einem Spannwellen-Getriebe. Anders als bei dem Ausführungsbeispiel von Fig. 82 ist die Spannwelle 453' hier an einer äußeren Abtriebswelle 458 ausgeformt, anstatt dass eine Spannwelle 453 mit Nieten an einer äußeren Abtriebswelle 458 befestigt ist. Die äußere Abtriebswelle 458 mit der Spannwelle 435 ist an diagonal gegenüberliegenden Kugellagern 30 und 31 abgestützt. Dies entspricht einer Drei-Lager-Anordnung mit den Kugellagern 30, 31 und 29 bzw. einer Fünf-Lager-Anordnung mit den Kugellagern 30, 31, 29, 45 und 46. Ebenso wie die äußere Abtriebswelle 458 ist auch die Abtriebswelle 39 platzsparend auf nur zwei Kugellagern 46, 41 gelagert, die gegeneinander diagonal versetzt sind.

Bauteile, die vorher bereits beschrieben wurden, beispielsweise im Zusammenhang mit Fig. 1, werden hier nicht erneut beschrieben und sind, aus Gründen der Übersichtlichkeit, im Allgemeinen auch nicht gesondert mit Bezugsziffern versehen.

Die Merkmale der Ausführungsbeispiele der Figuren 94 - 123 sind auch in den Merkmalen der folgenden Auflistung offenbart, die mit anderen Merkmalen der Beschreibung kombiniert werden können. Insbesondere können die vorgenannten Verzahnungsgeometrien mit sämtlichen Getrieben der vorliegenden Beschreibung kombiniert werden, wobei die auf der Epizykel-Radkurve mit zwei Epizykeln basierende Verzahnung vorzugsweise in Getrieben mit ovalem Transmitter eingesetzt wird, und wobei die auf der Radkurve mit einem Epizykel basierende Verzahnung vorzugsweise in Exzentergetrieben eingesetzt wird.

Die Dimensionierung gegenüberliegender Verzahnungen und, wenn vorhanden, eines dazwischenliegenden Übertragungsmittels kann gemäß der vorliegenden Beschreibung insbesondere so gewählt sein, dass ein vollständiger Zahneingriff vorliegt, und zwar sowohl bei einem Pinring-Getriebe als auch bei einem Spannwellengetriebe oder einem Zykloid-Getriebe, wobei das Pinring-Getriebe und das Spannwellengetriebe als Bauform mit einem exzentrischem Transmitter oder auch als Bauform mit einem ovalen Transmitter gebaut werden können.

1. Harmonisches Pinring Getriebe, das aufweist

- ein erstes Rad mit einer ersten Verzahnung und
- ein zweites Rad mit einer zweiten Verzahnung,
- einen Pinring mit runden Eingriffsbereichen,
- einen umlaufenden Transmitter zum Rakeln der Eingriffsbereiche des Pinrings in die erste Verzahnung des ersten Rads und in die zweite Verzahnung des zweiten Rads, wobei das erste Rad, der Transmitter und das zweite Rad konzentrisch zueinander angeordnet sind und der Transmitter radial innerhalb des Pinrings angeordnet ist, und wobei der Pinring zwischen dem ersten Rad und dem zweiten Rad angeordnet ist, wobei der Transmitter eine exzentrisch zu einer Getriebemittelachse angeordnete Transmitterscheibe aufweist, wobei die erste Verzahnung des ersten Rads und die zweite Verzahnung des zweiten Rads gemäß einer Epizykelkonstruktion geformt ist,

wobei Orte auf der jeweiligen Zahnoberfläche der ersten Verzahnung bzw. der zweiten Verzahnung jeweils durch einen radialen Abstand von der Getriebemittelachse in Abhängigkeit von einem Zykelwinkel bestimmt sind, wobei der radiale Abstand seinerseits durch eine Äquidistante zu einer Radkurve bestimmt ist,

wobei Orte auf der Radkurve jeweils durch die Vektorsumme eines Zykelvektors und eines Epizykelvektors bestimmt sind, wobei ein Anfangspunkt des Zykelvektors auf der Getriebemittelachse liegt und ein Anfangspunkt des Epizykelvektors im Endpunkt des Zykelvektors liegt, wobei ein Epizykelwinkel des Epizykelvektors n-mal so groß ist wie der Zykelwinkel und eine Länge des Zykelvektors größer als eine Länge des Epizykelvektors ist, wobei $n$ eine Anzahl der runden Eingriffsbereiche des harmonischen Pinring-Getriebes ist, die mindestens drei ist.

2. Harmonisches Pinring Getriebe nach Aufzählungspunkt 1, wobei das erste Rad ein Innenrad mit einer Außenverzahnung ist und das zweite Rad ein Außenrad mit einer Innenverzahnung ist, wobei bei der Außenverzahnung des Innenrads der Epizykelwinkel in derselben Richtung wie der Zykelwinkel gemessen wird und die Äquidistante eine innere Äquidistante ist,

und wobei bei der Innenverzahnung des Außenrads der Epizykelwinkel in entgegengesetzter Richtung zu dem Zykelwinkel gemessen wird und die Äquidistante eine äußere Äquidistante ist.

3. Harmonisches Pinring Getriebe nach Aufzählungspunkt 1, wobei das erste Rad und das zweite Rad jeweils ein Außenrad mit einer Innenverzahnung ist,
wobei bei der Innenverzahnung der beiden Außenräder der Epizykelwinkel in entgegengesetzter Richtung zu dem Zykelwinkel gemessen wird und die Äquidistante eine äußere Äuqidistante ist.

4. Harmonisches Pinring Getriebe nach Aufzählungspunkt 3, wobei die jeweilige Äquidistante eine Äquidistante im Abstand der Summe eines Radius der runden Eingriffsbereiche und einem Korrekturwert ist, wobei der Korrekturwert von einem Getriebespiel abhängt.

5. Harmonisches Pinring Getriebe nach Aufzählungspunkt 3 oder 4, wobei das harmonische Pinring-Getriebe ein Wälzlager aufweist, das auf der Transmitterscheibe aufliegt, wobei der Zykelradius gleich dem halben Durchmesser des Wälzlagers ist.

6. Harmonisches Pinring Getriebe nach Aufzählungspunkt 3 oder 4, wobei der Zykelradius gleich dem halben Durchmesser der Transmitterscheibe ist.

7. Harmonisches Pinring Getriebe nach einem der Aufzählungspunkt 3 bis 6, wobei der Epizykelradius gleich einem halben Exzenterversatz ist, um den die Transmitterscheibe gegenüber der Getriebemittelachse versetzt ist.

8. Harmonisches Pinring-Getriebe nach einem der Aufzählungspunkte 3 bis 7, wobei eine Antriebswelle mit dem Transmitter verbunden ist.

9. Harmonisches Pinring-Getriebe nach Aufzählungspunkt 8, wobei eine Abtriebswelle mit dem ersten Rad verbunden ist.

10. Harmonisches Pinring-Getriebe nach Aufzählungspunkt 8, wobei eine Abtriebswelle mit dem zweiten Rad verbunden ist.

11. Harmonisches Pinring-Getriebe nach Aufzählungspunkt 8, wobei eine Abtriebswelle mit dem Pinring verbunden ist.

12. Innenrad für ein harmonisches Pinring-Getriebe mit einer Außenverzahnung, wobei die Zahnoberfläche der Außenverzahnung durch einen radialen Abstand von einer Mittelachse des Innenrads in Abhängigkeit von einem Zykelwinkel bestimmt ist,

wobei der radiale Abstand von der Mittelachse seinerseits durch eine innere Äquidistante zu einer Radkurve bestimmt ist,
wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors $n - 1$ mal so groß ist wie der Zykelwinkel und ein Epizykelwinkel des zweiten Epizykelvektors $n - 3$ mal so groß ist wie der Zykelwinkel, wobei n eine Anzahl von Pins des harmonischen Pinring-Getriebes ist, die mindestens vier ist, wobei der erste Epizykelwinkel in derselben Richtung wie der Zykelwinkel gemessen wird und der zweite Epizykelwinkel in einer entgegengesetzten Richtung zu dem Zykelwinkel gemessen wird, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.

13. Außenrad für ein harmonisches Pinring-Getriebe mit einer Innenverzahnung, wobei Orte auf der Zahnoberfläche der Innenverzahnung jeweils durch einen radialen Abstand von einer Mittelachse des Außenrads in Abhängigkeit von einem Zykelwinkel bestimmt sind, wobei der radiale Abstand seinerseits durch eine äußere Äquidistante zu einer Radkurve definiert ist,

wobei Orte auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors $n + 1$ mal so groß ist wie der Zykelwinkel und ein Epizykelwinkel des zweiten Epizykelvektors n + 3 mal so groß ist wie der Zykelwinkel, wobei n eine Anzahl von Pins des harmonischen Pinring-Getriebes ist, die mindestens vier ist, wobei der erste Epizykelwinkel in einer entgegengesetzten Richtung zu dem Zykelwinkel gemessen wird und der zweite Epizykelwinkel in derselben Richtung wie der Zykelwinkel gemessen wird, und wobei eine Länge des Zykelvektors größer als die Summe der Längen des ersten Epizykelvektors und des zweiten Epizykelvektors, ist und eine Länge des ersten Epizykelvektors größer als eine Länge des zweiten Epizykelvektors ist.

14. Harmonisches Pinring Getriebe, das aufweist

- ein Innenrad gemäß Aufzählungspunkt 12 und
- ein Außenrad gemäß Aufzählungspunkt 13,
- einen Pinring mit runden Eingriffsbereichen,
- einen umlaufenden Transmitter zum Rakeln der runden Eingriffsbereiche des Pin-Rings in die Innenverzahnung des Außenrads und in die Außenverzahnung des Innenrads, wobei das Innenrad, der Transmitter und das Außenrad konzentrisch zueinander angeordnet sind, der Transmitter radial innerhalb des Pinrings angeordnet ist, und wobei der Pinring zwischen dem Innenrad und dem Außenrad angeordnet ist.

15. Harmonisches Pinring Getriebe, das aufweist

- ein erstes Außenrad gemäß Aufzählungspunkt 13 und
- ein zweites Außenrad gemäß Aufzählungspunkt 13,
- einen Pinring mit runden Eingriffsbereichen,
- einen umlaufenden Transmitter zum Rakeln der runden Eingriffsbereiche des Pin-Rings in die Innenverzahnung des ersten Außenrads und in die Innenverzahnung des zweiten Außenrads,

wobei das der Transmitter, das erste Außenrad und das zweite Außenrad konzentrisch zueinander angeordnet sind, der Transmitter radial innerhalb des Pinrings angeordnet ist, und wobei der Pinring in axialer Richtung zwischen dem ersten Außenrad und dem zweiten Außenrad angeordnet ist.

16. Harmonisches Pinring-Getriebe nach Aufzählungspunkt 14 oder Aufzählungspunkt 15, wobei eine Antriebswelle mit dem Transmitter verbunden ist.

17. Harmonisches Pinring-Getriebe nach Aufzählungspunkt 16, wobei eine Abtriebswelle mit dem Pinring verbunden ist.

18. Harmonisches Pinring-Getriebe nach Aufzählungspunkt 14, wobei eine Antriebswelle mit dem Transmitter verbunden ist und eine Abtriebswelle mit dem Innenrad verbunden ist.

19. Harmonisches Pinring-Getriebe nach Aufzählungspunkt 14, wobei eine Antriebswelle mit dem Transmitter verbunden ist und eine Abtriebswelle mit dem Außenrad verbunden ist.

20. Harmonisches Pinring Getriebe nach Aufzählungspunkt 15, wobei eine Antriebswelle mit dem Transmitter verbunden ist und eine Abtriebswelle mit einem der beiden Außenräder verbunden ist.

21. Harmonisches Pinring Getriebe nach einem der Aufzählungspunkte 14 bis 20, wobei die jeweilige Äquidistante eine Äquidistante im Abstand der Summe eines Radius der runden Eingriffsbereiche und eines Korrekturwerts ist, wobei der Korrekturwert durch ein Getriebespiel bestimmt ist.

22. Harmonisches Pinring Getriebe nach einem der Aufzählungspunkte 14 bis 21, wobei der Transmitter eine oval geformte Kurvenscheibe und ein flexibles Wälzlager aufweist, das auf der oval geformten Kurvenscheibe aufliegt, wobei der Zykelradius gleich der Summe aus einem halben Durchmesser des flexiblen Wälzlagers und einem Korrekturwert ist.

23. Harmonisches Pinring Getriebe nach einem der Aufzählungspunkte 14 bis 21, wobei der Transmitter eine erste exzentrisch zu einer Getriebemittelachse angeordnete Kreisscheibe und eine zweite exzentrisch zu der Getriebemittelachse angeordnete Kreisscheibe aufweist, wobei der Zykelradius gleich der Summe aus einem mittleren Radius der Hüllkurve der beiden exzentrisch angeordneten Kreisscheiben und einem Korrekturwert ist.

24. Harmonisches Pinring Getriebe nach einem der Aufzählungspunkte 14 bis 23, wobei der erste Epizykelradius kleiner oder gleich der Summe aus einem halben Pinring-Hub und einem zweiten Korrekturwert ist, wobei der zweite Korrekturwert kleiner oder gleich null ist.

25. Harmonisches Pinring Getriebe nach einem der Aufzählungspunkte 14 bis 24, wobei die Länge des zweiten Epizykelvektors ein Drittel der Länge des ersten Epizykelvektors beträgt.

Die Merkmale der Ausführungsbeispiele der Figuren 1 - 92 sind auch in den Merkmalen der folgenden Auflistung offenbart, die mit allen anderen Merkmalen der Beschreibung kombiniert werden können.

1. Harmonisches Pinring-Getriebe mit einer Eingangswelle und einer Ausgangswelle, wobei das Getriebe die folgenden Bestandteile aufweist:

-    ein erstes Außenrad, ein Innenrad, das konzentrisch in Bezug auf das erste Außenrad in einer ersten axialen Ebene angeordnet ist,

     ein zweites Außenrad, das in einer zweiten axialen Ebene angeordnet ist,
     ein Zugmittel, das sich zwischen dem ersten Außenrad und dem Innenrad erstreckt, einen umlaufenden Transmitter, der das Zugmittel von einem äußeren Umfang des Innenrads abhebt und gegen einen inneren Umfang des ersten Außenrads drückt,
     wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet, und
     wobei die Kurvenscheibe in einem Stück mit der Antriebs-Hohlwelle ausgebildet ist.

2. Harmonisches Pinring-Getriebe nach Aufzählungspunkt 1, wobei das Zugmittel als ein Pinring ausgebildet ist, wobei Pins an zwei gegenüberliegenden Seiten von einem mittleren Bereich hervorstehen, wobei der mittlere Bereich in der dritten axialen Ebene angeordnet ist, und wobei der umlaufende Transmitter die Pins von einem äußeren Umfang des Innenrads abhebt und gegen einen inneren Umfang des ersten Außenrads drückt.

3. Harmonisches Pinring-Getriebe nach Aufzählungspunkt 1 oder Aufzählungspunkt 2, wobei ein Umfang der Kurvenscheibe eine ovale Form hat.

4. Harmonisches Pinring-Getriebe nach Aufzählungspunkt 1 oder Aufzählungspunkt 2, wobei ein Umfang der Kurvenscheibe eine kreisförmige Form hat und exzentrisch zu einer Getriebe-Mittelachse angeordnet ist.

5. Harmonisches Pinring-Getriebe nach einem der Aufzählungspunkte 1 bis 4, wobei ein Wälzlager zwischen der Kurvenscheibe und dem Zugmittel angeordnet ist.

6. Harmonisches Pinring-Getriebe nach einem der Aufzählungspunkte 1 bis 5, wobei der Transmitter im Wesentlichen aus Aluminium besteht.

7. Harmonisches Pinring-Getriebe nach einem der Aufzählungspunkte 1 bis 6, wobei der Transmitter einen Ring aufweist, der über Verbindungsstreben mit der Antriebs-Hohlwelle verbunden ist.

8. Harmonisches Pinring-Getriebe mit einer Eingangswelle und einer Ausgangswelle, wobei das Getriebe die folgenden Bestandteile aufweist:

-    ein erstes Außenrad, ein Innenrad, das konzentrisch in Bezug auf das erste Außenrad in einer ersten axialen Ebene angeordnet ist,

     ein zweites Außenrad, das in einer zweiten axialen Ebene angeordnet ist,
     ein Zugmittel, das sich zwischen dem ersten Außenrad und dem Innenrad erstreckt, einen umlaufenden Transmitter, der das Zugmittel von einem äußeren Umfang des Innenrads abhebt und gegen einen inneren Umfang des ersten Außenrads drückt,
     wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet, und wobei das erste Außenrad durch einen ersten Außenring gebildet ist und das zweite Außenrad durch einen zweiten Außenring gebildet ist, wobei der erste Ring und er zweite Ring in einen Stützring eingesetzt sind.

9. Harmonisches Pinring-Getriebe nach Aufzählungspunkt 8, wobei der erste Außenring und der zweite Außenring jeweils aus Plastik gefertigt sind.

10. Harmonisches Pinring-Getriebe nach Aufzählungspunkt 8 oder Aufzählungspunkt 9, wobei der erste Außenring und der zweite Außenring jeweils radial nach außen abstehende Zapfen aufweisen, die über den Umfang des jeweiligen Außenrings verteilt sind, und wobei der Stützring dazu passende Ausnehmungen aufweist, in die die Zapfen eingesetzt sind.

11. Harmonisches Pinring-Getriebe nach einem der Aufzählungspunkte 8 bis 10, wobei der Stützring aus Aluminium gefertigt ist.

12. Harmonisches Pinring-Getriebe nach einem der Aufzählungspunkte 8 bis 11, wobei der Stützring zwei Teilringe aufweist, die in axialer Richtung aneinanderstoßen.

13. Harmonisches Pinring-Getriebe nach einem der Aufzählungspunkte 8 bis 12, wobei der erste Außenring, der zweite Außenring und der Stützring zueinander passende Schrauböffnungen aufweisen.

14. Harmonisches Pinring-Getriebe nach Aufzählungspunkt 13, wobei Schrauben durch Schrauböffnungen eines Getriebedeckels und durch die zueinander passenden Schrauböffnungen des ersten Außenrings, des Stützrings und des zweiten Außenrings hindurchgeführt und in einem Gewinde eines Getriebegehäuses des Harmonischen Pinring-Getriebes festgeschraubt sind.

15. Harmonisches Pinring-Getriebe mit einer Eingangswelle und einer Ausgangswelle, wobei das Getriebe die folgenden Bestandteile aufweist:

- ein erstes Außenrad, ein Innenrad, das konzentrisch in Bezug auf das erste Außenrad in einer ersten axialen Ebene angeordnet ist,

ein zweites Außenrad, das in einer zweiten axialen Ebene angeordnet ist,
ein Zugmittel, das sich zwischen dem ersten Außenrad und dem Innenrad erstreckt, einen umlaufenden Transmitter, der das Zugmittel von einem äußeren Umfang des Innenrads abhebt und gegen einen inneren Umfang des ersten Außenrads drückt,
wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
und das eine Abtriebs-Hohlwelle aufweist, die in dem Innenrad über einen Motor-Freilauf gelagert ist, und eine Tretwelle, die in der Abtriebs-Hohlwelle durch einen Tretwellen-Freilauf gelagert ist, wobei die Tretwelle an einem äußeren Umfang einen Aufnahmebereich für den Motor-Freilauf und an einem inneren Umfang einen Aufnahmebereich für den Tretwellen-Freilauf aufweist.

16. Harmonisches Pinring-Getriebe nach Aufzählungspunkt 15, wobei der Motor-Freilauf als Klemmrollen-Freilauf ausgebildet ist und der Tretwellen-Freilauf als Sperrklinken-Freilauf ausgebildet ist.

17. Harmonisches Pinring-Getriebe nach Aufzählungspunkt 15 oder Aufzählungspunkt 16, wobei sich die Abtriebswelle in axialer Richtung abtriebsseitig von der Antriebs-Hohlwelle erstreckt, wobei ein Kugellager zwischen der Abtriebs-Hohlwelle und der Tretwelle angeordnet ist, und wobei die Abtriebs-Hohlwelle einen Befestigungsbereich für ein Abtriebselement aufweist.

18. Freilaufanordnung mit einem äußeren Klemmrollen-Freilauf und einem inneren Sperrklinken-Freilauf, die aufweist:

- eine Antriebs-Hohlwelle,
- eine Abtriebs-Hohlwelle,
- eine Tretwelle, wobei die Tretwelle, die Abtriebs-Hohlwelle und die Antriebs-Hohlwelle konzentrisch zueinander angeordnet sind, die Abtriebs-Hohlwelle radial innerhalb der Antriebs-Hohlwelle angeordnet ist und die Tretwelle radial innerhalb der Abtriebs-Hohlwelle angeordnet ist,

wobei die Abtriebs-Hohlwelle an einem inneren Umfang einen treppenförmigen Sperrklinken-Eingriffsbereich aufweist und an einem äußeren Umfang einen treppenförmigen Klemmrollen-Abrollbereich aufweist, wobei die Tretwelle einen sternförmigen Aufnahmebereich für Sperrklinken aufweist, wobei der sternförmige Aufnahmebereich Sperrklinkensitze und benachbart zu den Sperrklinkensitzen angeordnete Federsitze aufweist.

19. Freilaufanordnung gemäß Aufzählungspunkt 18, wobei sich der treppenförmige Klemmkörper-Abrollbereich auf dem äußeren Umfang der Abtriebs-Hohlwelle und der treppenförmige Sperrklinken-Eingriffsbereich auf dem inneren Umfang der Abtriebs-Hohlwelle im Wesentlichen in der gleichen axialen Ebene befinden.

20. Freilaufanordnung gemäß Aufzählungspunkt 18 oder Aufzählungspunkt 19, wobei die Antriebs-Hohlwelle einen scheibenförmigen Bereich mit einer Außenverzahnung aufweist, die an einem äußeren Umfang des scheibenförmigen Bereichs vorgesehen ist.

21. Freilaufanordnung gemäß einem der Aufzählungspunkte 18 bis 20, wobei die Abtriebshohlwelle an einem ersten Ende eine ringförmige Verdickung aufweist, und an einem dem ersten Ende gegenüberliegenden zweiten Ende einen Befestigungsbereich für ein Abtriebsmittel aufweist.

22. Freilaufanordnung gemäß einem der Aufzählungspunkte 18 bis 21, wobei der äußere Umfang der Abtriebshohlwelle einen Auflagebereich für ein Kugellager aufweist.

23. Freilaufanordnung gemäß einem der Aufzählungspunkte 18 bis 22, wobei der innere Umfang der Abtriebshohlwelle einen Auflagebereich für ein Kugellager aufweist.

24. Freilaufanordnung gemäß einem der Aufzählungspunkte 18 bis 23, wobei der innere Umfang der Abtriebshohlwelle an einem Ende ein Innengewinde aufweist.

25. Freilaufanordnung gemäß einem der vorhergehenden Aufzählungspunkte 18 bis 24, die weiterhin aufweist:

Sperrklinken, die in den Sperrklinkensitzen drehbar angeordnet sind und Federelemente, die in den Federsitzen angeordnet und mit den Sperrklinken verbunden sind, einen Freilaufkäfig mit Stegen und zwischen den Stegen angeordneten Klemmrollen, wobei der Freilaufkäfig und die Klemmrollen radial zwischen dem Klemmrollen-Abrollbereich der Abtriebs-Hohlwelle und einem inneren Umfang der Antriebs-Hohlwelle angeordnet sind.

26. Freilaufanordnung gemäß einem der Aufzählungspunkte 18 bis 25, wobei die Sperrklinkensitze zylinderförmig ausgeformt sind, an einem Ende durch eine Wandung abgeschlossen sind und an einem dazu gegenüberliegenden Ende offen sind.

27. Freilaufanordnung gemäß einem der Aufzählungspunkte 18 bis 26, wobei der treppenförmige Klemmkörper-Abrollbereich und der Freilaufkäfig jeweils mindestens zwei Aufnahmebereiche für Federelemente aufweisen und wobei jeweils ein Federelement zwischen einem Aufnahmebereich des Klemmkörper-Abrollbereichs und einem Aufnahmebereich des Freilaufkäfigs angeordnet ist.

28. Freilaufanordnung gemäß einem der Aufzählungspunkte 18 bis 27, wobei die Tretwelle eine Kraftsensor-Einheit aufweist, wobei die Kraftsensor-Einheit eine Kraftmessdose und ein Tretwellen-Kugellager aufweist, wobei die Kraftmessdose auf dem Tretwellen-Kugellager angeordnet ist.

29. Freilaufanordnung nach Aufzählungspunkt 28, wobei die Kraftmessdose einen inneren ringförmigen Bereich aufweist, der über Befestigungslaschen an einem äußeren ringförmigen Bereich befestigt ist, wobei das Tretwellen-Kugellager in den inneren ringförmigen Bereich eingesetzt ist.

30. Freilaufanordnung nach Aufzählungspunkt 29, wobei der innere Bereich und der äußere Bereich der Kraftmessdose radial zueinander versetzt sind, wobei die Befestigungslaschen durch radiale Schlitze seitlich begrenzt sind, und wobei mindestens zwei der Befestigungslaschen einen Dehnmessstreifen aufweisen.

31. Freilaufanordnung nach Aufzählungspunkt 29 oder Aufzählungspunkt 30, wobei eine axiale Dicke des äußeren Rings im Bereich der Befestigungslaschen reduziert ist.

32. Tretwelle für eine Freilaufanordnung, wobei die Tretwelle an einem ersten Ende einen ersten Befestigungsbereich für eine Tretkurbel und an einem dazu gegenüberliegenden zweiten Ende einen zweiten Befestigungsbereich für eine Tretkurbel aufweist,
und wobei die Tretwelle in der Nähe des ersten Endes einen sternförmigen Aufnahmebereich für Sperrklinken aufweist.

33. Tretwelle nach Aufzählungspunkt 32, wobei der sternförmige Aufnahmebereich Stufen aufweist, wobei die Stufen jeweils eine erste Seitenfläche, eine zweite Seitenfläche, einen in einer vordefinierten Richtung gegenüber der Umfangsrichtung geneigten Sperrklinken-Auflagebereich, der einen Federsitz aufweist, eine Oberseite, die im Wesentlichen zum Umfang parallel ist, und einen Endbereich mit einem Sperrklinkensitz aufweisen, wobei der Sperrklinkensitz zylinderförmig ausgeformt, axial zu einer Seite hin offen und zu einer axial dazu gegenüberliegenden Seite abgeschlossen ist.

34. Harmonisches Pinring-Getriebe mit einer Eingangswelle und einer Ausgangswelle, wobei das Getriebe die folgenden Bestandteile aufweist:

- ein erstes Außenrad, ein Innenrad, das konzentrisch in Bezug auf das erste Außenrad in einer ersten axialen Ebene angeordnet ist,

ein zweites Außenrad, das in einer zweiten axialen Ebene angeordnet ist,
ein Zugmittel, das sich zwischen dem ersten Außenrad und dem Innenrad erstreckt, einen umlaufenden Transmitter, der das Zugmittel von einem äußeren Umfang des Innenrads abhebt und gegen einen inneren Umfang des ersten Außenrads drückt,
wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
und das eine Abtriebs-Hohlwelle aufweist, die in dem Innenrad über einen Motor-Freilauf gelagert ist, und eine Tretwelle, die in der Abtriebs-Hohlwelle durch einen Tretwellen-Freilauf gelagert ist, wobei die Tretwelle an einem äußeren Umfang einen Aufnahmebereich für den Motor-Freilauf und an einem inneren Umfang einen Aufnahmebereich für den Tretwellen-Freilauf aufweist.

35. Harmonisches Pinring-Getriebe nach Aufzählungspunkt 34, wobei der Motor-Freilauf als Klemmrollen-Freilauf ausgebildet ist und der Tretwellen-Freilauf als Sperrklinken-Freilauf ausgebildet ist.

36. Harmonisches Pinring-Getriebe nach Aufzählungspunkt 34 oder Aufzählungspunkt 35, wobei sich die Abtriebswelle in axialer Richtung abtriebsseitig von der Antriebs-Hohlwelle erstreckt, wobei ein Kugellager zwischen der Abtriebs-Hohlwelle und der Tretwelle angeordnet ist, und wobei die Abtriebs-Hohlwelle einen Befestigungsbereich für ein Abtriebselement aufweist.

37. Harmonisches Pinring-Getriebe mit einer Eingangswelle und einer Ausgangswelle, wobei das Getriebe die folgenden Bestandteile aufweist:

- ein erstes Außenrad, ein Innenrad, das konzentrisch in Bezug auf das erste Außenrad in einer ersten axialen Ebene angeordnet ist,

ein zweites Außenrad, das in einer zweiten axialen Ebene angeordnet ist,
ein Pinring mit Pins, der sich zwischen dem ersten Außenrad und dem Innenrad erstreckt, einen umlaufenden Transmitter, der die Pins des Pinrings von einem äußeren Umfang des Innenrads abhebt und gegen einen inneren Umfang des ersten Außenrads drückt,
wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
und wobei der Pinring aus einem Stück ausgebildet ist und aus Metall besteht, wobei die Pins durch Fortsätze gebildet werden, die von zwei gegenüberliegenden Seiten eines mittleren Bereichs des Pinrings hervorstehen, wobei der mittlere Bereich eine innere Auflagefläche zur Auflage auf einem Lager aufweist.

38. Harmonisches Pinring Getriebe gemäß Aufzählungspunkt 37, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind, wobei ein zylinderförmig ausgebildeter Bereich sich in radialer Richtung an der Außenseite des Pinrings befindet.

39. Harmonisches Pinring Getriebe gemäß Aufzählungspunkt 37, wobei die Fortsätze an einer ersten Seite der zwei gegenüberliegen Seiten einen inneren abgerundeten Eingriffsbereich und einen äußeren abgerundeten Eingriffsbereich aufweisen,
und wobei die Fortsätze an einer zweiten der zwei gegenüberliegenden Seiten einen äußeren abgerundeten Eingriffsbereich aufweisen.

40. Harmonisches Pinring Getriebe gemäß einem der Aufzählungspunkte 37 bis 39, wobei ein Lager zwischen der Kurvenscheibe und dem Pinring angeordnet ist, und wobei der Pinring an einer Innenseite einen Absatz zur Abstützung des Lagers aufweist.

41. Pinring für ein harmonisches Pinring Getriebe, der aus einem Stück ausgebildet ist und aus Metall besteht, wobei der Pinring Pins aufweist, die durch Fortsätze gebildet werden, die von zwei gegenüberliegenden Seiten eines mittleren Bereichs des Pinrings hervorstehen, wobei der mittlere Bereich eine innere Auflagefläche zur Auflage auf einem Lager äußere Auflagefläche aufweist.

42. Pinring nach Aufzählungspunkt 41, wobei die Fortsätze an einer ersten Seite der zwei gegenüberliegen Seiten zylinderförmig ausgebildet sind und wobei die Fortsätze an einer zweiten der zwei gegenüberliegenden Seiten teilweise zylinderförmig ausgebildet sind, wobei ein zylinderförmig ausgebildeter Bereich sich in radialer Richtung an der Außenseite des Pinrings befindet.

43. Pinring nach Aufzählungspunkt 41, wobei die Fortsätze an einer ersten Seite der zwei gegenüberliegen Seiten einen inneren abgerundeten Eingriffsbereich und einen äußeren abgerundeten Eingriffsbereich aufweisen,
und wobei die Fortsätze an einer zweiten der zwei gegenüberliegenden Seiten einen äußeren abgerundeten Eingriffsbereich aufweisen.

44. Pinring nach Aufzählungspunkt 41, wobei sich zwischen den Fortsätzen an der ersten der gegenüberliegenden zwei Seiten jeweils ein Steg befindet, wobei eine äußere Begrenzungslinie der Fortsätze glatt in eine äußere Begrenzungslinie des Stegs übergeht.

45. Harmonisches Pinring Getriebe gemäß einem der Aufzählungspunkte 41 bis 44, wobei ein Lager zwischen der Kurvenscheibe und dem Pinring angeordnet ist, und wobei der Pinring an einer Innenseite einen Absatz zur Abstützung des Lagers aufweist.

46. Harmonisches Pinring-Getriebe mit einer Eingangswelle und einer Ausgangswelle, wobei das Getriebe die folgenden Bestandteile aufweist:

- ein erstes Außenrad, ein Innenrad, das konzentrisch in Bezug auf das erste Außenrad in einer ersten axialen Ebene angeordnet ist,

  ein zweites Außenrad, das in einer zweiten axialen Ebene angeordnet ist,
  ein Zugmittel, das sich zwischen dem ersten Außenrad und dem Innenrad erstreckt,
  einen umlaufenden Transmitter, der das Zugmittel von einem äußeren Umfang des Innenrads abhebt und gegen einen inneren Umfang des ersten Außenrads drückt,
  wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet,
  wobei eine Tretwelle radial innerhalb der Abtriebswelle angeordnet ist, und wobei die Tretwelle über ein antriebsseitiges Tretwellen-Kugellager und eine Kraftmessdose in dem Motorgehäuse gelagert ist.

47. Harmonisches Pinring-Getriebe nach Aufzählungspunkt 46, wobei die Kraftmessdose einen inneren ringförmigen Bereich aufweist, der über Befestigungslaschen an einem äußeren ringförmigen Bereich befestigt ist, wobei das Tretwellen-Kugellager in den inneren ringförmigen Bereich eingesetzt ist, und wobei der äußere ringförmige Bereich in einen zylindrischen Bereich des Motorgehäuses eingesetzt ist.

48. Harmonisches Pinring-Getriebe gemäß einem der Aufzählungspunkte 46 bis 47, wobei eine Wellenfeder zwischen der Kraftmessdose und dem antriebsseitigen Rotor-Kugellager angeordnet ist.

49. Harmonisches Pinring-Getriebe mit einer Eingangswelle und einer Ausgangswelle, wobei das Getriebe die folgenden Bestandteile aufweist:

- ein erstes Außenrad, ein Innenrad, das konzentrisch in Bezug auf das erste Außenrad in einer ersten axialen Ebene angeordnet ist,

ein zweites Außenrad, das in einer zweiten axialen Ebene angeordnet ist,
ein Zugmittel, das sich zwischen dem ersten Außenrad und dem Innenrad erstreckt, einen umlaufenden Transmitter, der das Zugmittel von einem äußeren Umfang des Innenrads abhebt und gegen einen inneren Umfang des ersten Außenrads drückt,
wobei der Transmitter eine Antriebs-Hohlwelle und eine Kurvenscheibe aufweist, wobei die Kurvenscheibe in einer dritten axialen Ebene angeordnet ist, die sich zwischen der ersten axialen Ebene und der zweiten axialen Ebene befindet, wobei eine Tretwelle radial innerhalb der Ausgangswelle angeordnet ist und wobei ferner ein Planetengetriebe und ein Tretwellen-Freilauf im Kraftfluss zwischen der Tretwelle und der Ausgangswelle angeordnet sind.

50. Harmonisches Pinring Getriebe nach Aufzählungspunkt 49, wobei ein Planetenträger des Planetengetriebes mit der Tretwelle verbunden ist, ein Hohlrad des Planetengetriebes einen Verbindungsbereich zum Verbindung mit einem Getriebegehäuse aufweist, ein Sonnenrad des Planetengetriebes auf der Tretwelle gelagert ist und wobei der Tretwellen-Freilauf zwischen einer mit dem Sonnenrad verbundenen Hohlwelle und der Ausgangswelle angeordnet ist.

51. Harmonisches Pinring Getriebe nach Aufzählungspunkt 49,
wobei der Tretwellen-Freilauf zwischen der Kurbelwelle und einem Planetenträger des Planetengetriebes angeordnet ist, wobei ein Hohlrad des Planetengetriebes in dem harmonischen Getriebe drehbar gelagert ist und wobei ein Sonnenrad des Planetengetriebes zur Befestigung an einem stationären Gehäuseteil ausgebildet ist.

52. Spannwellen-Getriebe, wobei das Spannwellen-Getriebe die folgenden Bestandteile aufweist:

- ein Außenrad mit einer Innenverzahnung, wobei das Außenrad einen Befestigungsbereich zur Befestigung an einem Getriebegehäuse aufweist,
- eine Spannwelle mit einer Außenverzahnung, wobei die Spannwelle konzentrisch in Bezug auf das Außenrad in einer axialen Ebene angeordnet ist,

einen umlaufenden Transmitter, der die Spannwelle gegen die Innenverzahnung des Außenrads drückt,
wobei der Transmitter eine Antriebs-Hohlwelle und eine Kurvenscheibe aufweist, wobei auf einem Umfang der Kurvenscheibe ein Kugellager angeordnet ist,
wobei ein Querschnitt der Zahnköpfe der Außenverzahnung der Spannwelle im Wesentlichen einem Kreisausschnitt entspricht
und wobei die Innenverzahnung des Außenrads in Bezug auf eine Achse des Außenrads im Wesentlichen durch eine äußere Äquidistante zu der durch die Formeln $x(t) = r1*cost(t) + r2*cos((n+1)*t) + r3*cos((n+3)*t)$ und $y(t) = r1*sin(t)-r2*sin((n+1)*t) + r3*sin((n+3)*t)$ festgelegten Radkurve bestimmt ist, wobei n+1 die Anzahl der Zähne der Innenverzahnung des Außenrads ist, wobei die Radien r1, r2 und r3 größer Null sind, und wobei für das Größenverhältnis der Radien r2 > r3 und r1 > r2 + r3 gilt.

53. Spannwellen-Getriebe nach Aufzählungspunkt 52, wobei die Spannwelle in einer Topfform ausgebildet ist wobei am Grund der Topfform ein Befestigungsbereich zum Befestigen einer Abtriebswelle ausgebildet ist.

54. Spannwellen Getriebe nach Aufzählungspunkt 53, wobei am Grund der Topfform eine zentrale kreisförmige Öffnung ausgebildet ist, und wobei der Befestigungsbereich der Spannwelle Befestigungslöcher aufweist, die um die zentrale kreisförmige Öffnung herum angeordnet sind.

55. Spannwellen-Getriebe nach Aufzählungspunkt 52, wobei die Spannwelle die Form eines Kreiszylinders hat, und wobei ein zweites Außenrad aufweist, das einen Befestigungsbereich zum Befestigen einer Abtriebswelle aufweist, wobei die Innenverzahnung des Außenrads durch die gleiche Konstruktion bestimmt ist wie die Innenverzahnung des ersten Außenrads.

56. Spannwellen-Getriebe, wobei das Spannwellen-Getriebe die folgenden Bestandteile aufweist:

- ein Außenrad mit einer Innenverzahnung, wobei das Außenrad einen Befestigungsbereich zu Befestigung an einem Getriebegehäuse aufweist,
- eine Spannwelle mit einer Außenverzahnung, wobei die Spannwelle konzentrisch in Bezug auf das Außenrad in einer axialen Ebene angeordnet ist,

wobei ein Querschnitt der Zahnköpfe der Außenverzahnung der Spannwelle im Wesentlichen einem Kreisausschnitt entspricht,
einen umlaufenden Transmitter, der die Spannwelle gegen die Innenverzahnung des Außenrads drückt,
wobei der Transmitter eine Antriebs-Hohlwelle und eine Kurvenscheibe aufweist, wobei die Zahnoberfläche der Innenverzahnung des Außenrads durch einen radialen Abstand von einer Mittelachse des Innenrads in Abhängigkeit von einem Zykelwinkel bestimmt ist,
wobei der radiale Abstand von der Mittelachse seinerseits durch eine innere Äquidistante zu einer Radkurve bestimmt ist, wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors n + 1 mal so groß ist wie der Zykelwinkel und ein Epizykelwinkel des zweiten Epizykelvektors n + 3 mal so groß ist wie der Zykelwinkel, wobei n eine Anzahl von Pins des harmonischen Pinring-Getriebes ist, die mindestens vier ist, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.

57. Zweistufiges Untersetzungsgetriebe, wobei das zweistufige Untersetzungsgetriebe die folgenden Bestandteile aufweist:

- ein stationäres Außenrad mit einer ersten Innenverzahnung, wobei das Außenrad einen Befestigungsbereich zur Befestigung an einem Getriebegehäuse aufweist,
- ein drehbares Außenrad mit einer zweiten Innenverzahnung, wobei das Außenrad einen Befestigungsbereich zu Befestigung an einer Abtriebswelle aufweist,
- einen zweigeteilten einstückigen Pinring, wobei der zweigeteilte einstückige Pinring eine erste Außenverzahnung und eine zweite Außenverzahnung aufweist, wobei die erste Außenverzahnung des zweigeteilten einstückigen Pinrings in die Innenverzahnung des stationären Außenrads eingreift, und wobei die zweite Außenverzahnung des zweigeteilten einstückigen Pinrings in die Innenverzahnung des drehbaren Außenrads eingreift,
- einen umlaufenden Transmitter, der den zweigeteilten einstückigen Pinring gegen die Innenverzahnung des stationären Außenrads und gegen die Innenverzahnung des drehbaren Außenrads drückt.

58. Zweistufiges Untersetzungsgetriebe nach Aufzählungspunkt 57, wobei die Anzahl der Zähne der Innenverzahnung des stationären Außenrads größer ist als die Anzahl der Zähne der ersten Außenverzahnung, und die Anzahl der Zähne der Innenverzahnung des drehbaren Außenrads größer ist als die Anzahl der Zähne der zweiten Außenverzahnung, und wobei die Anzahl der Zähne des stationären Außenrads größer ist als die Anzahl der Zähne des drehbaren Außenrads und die Anzahl der Zähne der ersten Außenverzahnung größer ist als die Anzahl der Zähne der zweiten Außenverzahnung.

59. Zweistufiges Untersetzungsgetriebe nach Aufzählungspunkt 57 oder Aufzählungspunkt 58, wobei der Transmitter einen exzentrisch zur Achse des stationären Außenrads einen Kreisring aufweist.

60. Zweistufiges Untersetzungsgetriebe nach einem der Aufzählungspunkte 57 bis 59, wobei ein Querschnitt der Zahnköpfe der ersten Außenverzahnung und ein Querschnitt der Zahnköpfe der zweiten Außenverzahnung im Wesentlichen einem Kreisausschnitt entspricht.

61. Zweistufiges Untersetzungsgetriebe nach einem der Aufzählungspunkte 57 bis 60, wobei ein Querschnitt der Zahnköpfe der ersten Außenverzahnung und ein Querschnitt der Zahnköpfe der zweiten Außenverzahnung im Wesentlichen einer Äquidistante zu der durch die Formel $x(t) = r1*\cos(t)+r2*\cos(nt)$ und $y(t)=r1*\sin(t)+r2*\sin(nt)$ bestimmten Radkurve entspricht, wobei für die Radien r1, r2 gilt: $r1 > 0$, $r2 > 0$ und $r1 > r2$.

62. Zweistufiges Untersetzungsgetriebe nach einem der Aufzählungspunkt 57 bis 61, wobei ein Querschnitt der Zahnköpfe der ersten Außenverzahnung und ein Querschnitt der Zahnköpfe der zweiten Außenverzahnung im Wesentlichen einer Äquidistante zu der durch die Formel x(t) = r1*cos(t) +r2*cos(nt) und y(t)=r1*sin(t)-r2*sin(nt) bestimmten Radkurve entspricht, wobei für die Radien r1, r2 gilt: r1 > 0, r2 > 0 und r1 > r2.

63. Eine Kraftmessdose zur Bestimmung einer radialen Kraft auf eine Kurbelwelle, die die folgenden Merkmale aufweist:

- eine Aufnahmehülse zur Aufnahme eines Rings eines Lagers,
- einen Befestigungsring zur Befestigung der Kraftmessdose in einem Getriebegehäuse,
- Axialstützbereiche, die an dem Befestigungsring zur axialen Abstützung des Rings des Lagers vorgesehen sind,
- Messbereiche, die zur Aufnahme von radialen Kräften der Aufnahmehülse vorgesehen sind, und die die Aufnahmehülse mit dem Befestigungsring verbinden, wobei an mindestens zwei der Messbereiche Dehnungssensoren befestigt sind.

64. Freilaufanordnung mit einem äußeren Getriebe-Freilauf und einem inneren Tretwellen-Freilauf, die aufweist:

- eine Antriebs-Hohlwelle,
- eine Abtriebs-Hohlwelle,
- eine Tretwelle, wobei die Tretwelle, die Abtriebs-Hohlwelle und die Antriebs-Hohlwelle konzentrisch zueinander angeordnet sind, die Abtriebs-Hohlwelle radial innerhalb der Antriebs-Hohlwelle angeordnet ist und die Tretwelle radial innerhalb der Abtriebs-Hohlwelle angeordnet ist, wobei der Tretwellen-Freilauf zwischen der Tretwelle und der Abtriebs-Hohlwelle angeordnet ist und wobei der Getriebe-Freilauf gegenüber dem Tretwell-Freilauf auf der Abtriebs-Hohlwelle angeordnet ist, und wobei die Abtriebs-Hohlwelle an einer Innenseite und an einer Außenseite im Bereich des jeweiligen Freilaufs angepasste Bereiche aufweist.

65. Einstückiger Pinring aus Metall, wobei ein Pin-Haltering und eine Anordnung aus Pins, die in axialer Richtung an zwei gegenüberliegenden Seiten von dem Pin-Haltering hervorstehen, aus einem Stück gefertigt ist.

66. Einstückiger Pinring nach Aufzählungspunkt 65, wobei die Pins in Umfangsrichtung miteinander verbunden sind.

67. Einstückiger Pinring nach Aufzählungspunkt 65 oder 66 wobei die Pins an einer ersten der beiden gegenüberliegenden Seiten als halbe Pins ausgebildet sind, die zum Eingriff eine Innenverzahnung geeignet sind, und wobei die Pins and einer zweiten der gegenüberliegenden Seite als ganze Pins ausgebildet sind, die zum Eingriff in eine Innverzahnung und zum Eingriff in eine der Innenverzahnung gegenüberliegende Außenverzahnung geeignet sind.

68. Einstückiger Pinring aus Metall, wobei der einstückige Pin-Haltering auf einer Innenseite einen glatten inneren Umfang aufweist und auf einer Außenseite abgerundete Ausbuchtungen aufweist, die aus einem Stück mit dem Pin-Haltering gefertigt sind.

69. Einstückiger Pin-Haltering nach Aufzählungspunkt 68, wobei zumindest ein Kopfbereich der abgerundeten Ausbuchtungen einen halbkreisförmigen Querschnitt aufweist.

70. Stützring-Anordnung für ein Untersetzungsgetriebe mit einem ersten Außenrad und einem zweiten Außenrad, das einen Stützring, ein erstes Außenrad mit einer ersten Innenverzahnung und ein zweites Außenrad mit einer zweiten Innenverzahnung aufweist, wobei das erste Außenrad und das zweite Außenrad an gegenüberliegenden Seiten in den Stützring eingesetzt sind, und wobei der Stützring einen Befestigungsbereich zur Befestigung an einem Getriebegehäuse aufweist.

71. Stützring Anordnung nach Aufzählungspunkt 70,
wobei zumindest das erste Außenrad und das zweite Außenrad aus Plastik gefertigt sind.

72. Stützring-Anordnung nach einem der Aufzählungspunkt 71 oder 72, wobei das erste Außenrad und das zweite Außenrad jeweils über eine Zapfen-Nut Verbindung mit dem Stützrad verbunden sind.

73. Einstückiges Rotor-Transmitter Element für ein Untersetzungsgetriebe, das eine Hohlwelle aufweist, die an einer ersten Seite einen Befestigungsbereich zum Befestigen eines Rotor-Paketes aufweist, und an einer zu der ersten Seite gegenüberliegenden zweiten Seite eine Kurvenscheibe aufweist, wobei eine äußerer Umfang der Kurvenscheibe als Aufnahmebereich für ein Kugellager ausgebildet ist.

74. Einstückiges Rotor-Transmitter Element nach Aufzählungspunkt 73, wobei das einstückige Rotor-Transmitter-Element aus Aluminium gefertigt ist.

75. Einstückiges Rotor-Transmitter Element nach Aufzählungspunkt 73 oder 74, wobei die Hohlwelle so dimensioniert ist, dass eine Tretwelle durch die Hohlwelle hindurchgeführt werden kann.

76. Einstückiges Rotor-Transmitter Element nach einem der Aufzählungspunkte 73 bis 75, wobei die Kurvenscheibe einen zur Mittelachse der Hohlwelle exzentrisch angeordnete kreisförmigen Umfang aufweist.

77. Einstückiges Rotor-Transmitter Element nach einem der Aufzählungspunkte 73 bis 75, wobei die Kurvenscheibe einen zur Mittelachse der Hohlwelle einen ovalen Umfang aufweist.

78. Antriebswelle mit einem auf der Antriebswelle angeordneten Planetengetriebe, wobei ein Planetenträger des Planetengetriebes fest mit der Antriebswelle verbunden ist, ein Hohlrad des Planetengetriebes einen Befestigungsbereich zum Befestigen an einem Getriebegehäuse und einen Aufnahmebereich für einen Drehmomentsensor aufweist, und ein Sonnenrad des Planetengetriebes als Hohlrad ausgebildet ist, dass konzentrisch zu der Antriebswelle angeordnet ist, und wobei das Sonnenrad mit einer Abtriebs-Hohlwelle des Planetengetriebes verbunden ist, die drehbar auf der Antriebswelle gelagert ist.

79. Antriebswelle mit einem auf der Antriebswelle angeordneten Planetengetriebe, wobei ein Planetenträger des Planetengetriebes über einen Freilauf auf der Antriebswelle gelagert ist, ein Sonnenrad des Planetengetriebes einen Befestigungsbereich zum Befestigen an einem Getriebegehäuse und einen Aufnahmebereich für einen Drehmomentsensor aufweist, und ein Hohlrad des Planetengetriebes einen Aufnahmebereich für ein Kugellager zum Abstützen an einem Getriebegehäuse aufweist.

80. Antriebswelle mit einem auf der Antriebswelle angeordneten Planetengetriebe, wobei ein Planetenträger des Planetengetriebes einen Befestigungsbereich zum Befestigen an einem Getriebegehäuse aufweist, wobei eine Hohlwelle des Planetengetriebes fest mit der Antriebswelle verbunden ist, und wobei ein Sonnenrad des Planetengetriebes als eine Hohlwelle ausgebildet ist, die konzentrisch zur Antriebswelle drehbar auf der Antriebswelle angeordnet ist.

81. Zykloid-Getriebe, wobei das Zykloid-Getriebe die folgenden Bestandteile aufweist:

- ein Getriebegehäuse,
- ein Außenrad mit einer Innenverzahnung, das an dem Getriebegehäuse befestigt ist,
- eine konzentrisch zu dem Außenrad angeordnete Eingangswelle, wobei die Eingangswelle eine antriebsseitige Exzenterscheibe, auf der ein erstes Kugellager angeordnet ist und eine abtriebsseitige Exzenterscheibe, auf der ein zweites Kugellager angeordnet ist, aufweist,
- ein antriebsseitiges Innenrad mit einer Außenverzahnung, das auf dem ersten Kugellager gelagert ist und ein abtriebsseitiges Innenrad mit einer Außenverzahnung, das auf dem zweiten Kugellager gelagert ist,

wobei das antriebsseitige Innenrad und das abtriebsseitige Innenrad innerhalb des Außenrads angeordnet sind und wobei die Außenverzahnungen des antriebseitigen Innenrads und des abtriebsseitigen Außenrads jeweils in die Innenverzahnung des Außenrads eingreifen.

82. Zykloid-Getriebe nach Aufzählungspunkt 81, wobei das Zykloidgetriebe eine Kurbellwelle aufweist, die innerhalb der Eingangswelle gelagert ist, und eine Kraftmessdose gemäß Aufzählungspunkt 63, die antriebsseitig auf der Kurbelwelle gelagert ist.

83. Zykloid-Getriebe nach einem der Aufzählungspunkte 81 oder 82, wobei die Eingangswelle als ein einstückiges Rotor-Transmitterelement gemäß einem der Aufzählungspunkte 73 bis 77 ausgebildet ist.

84. Zykloid-Getriebe nach einem der Aufzählungspunkte 81 oder bis 83,
wobei das Zykloidgetriebe eine Kurbelwelle aufweist, die innerhalb der Eingangswelle gelagert ist, und wobei die Kurbelwelle Planetengetriebe gemäß der Aufzählungspunkte 78 bis 80 aufweist, wobei die Kurbelwelle die Antriebswelle des Planetengetriebes bildet.

85. Zykloid-Getriebe nach einem der Ansprüche 81 bis 84,
wobei auf der Eingangswelle abtriebsseitig von der abtriebsseitigen Exzenterscheibe ein drittes Kugellager angeordnet ist, wobei auf dem dritten Kugellager eine Abtriebsscheibe angeordnet ist, wobei die Abtriebsscheibe Mitnehmerbolzen aufweist, die in Öffnungen des antriebsseitigen Innenrads und des abtriebsseitigen Innenrads eingreifen, wobei radial innen an der Abtriebsscheibe eine Ausgangswelle ausgeformt ist.

86. Zykloid-Getriebe nach Aufzählungspunkt 85, wobei radial innen an der Abtriebsscheibe eine Ausgangswelle ausgeformt ist, wobei das dritte Kugellager auf einer inneren Schulter der Ausgangswelle angeordnet ist, und wobei ein Innenrad-Kugellager diagonal gegenüberliegend zu dem dritten Kugellager auf einer äußeren Schulter der Ausgangswelle angeordnet ist, wobei das Innenrad-Kugellager an dem Getriebegehäuse abgestützt ist.

87. Zykloid-Getriebe nach einem der Ansprüche 81 bis 83,
wobei zumindest eines der Innenräder eine erste Verzahnung und eine zweite Außenverzahnung aufweist, und wobei das Zykloid-Getriebe ein drehbares Außenrad mit einer Innenverzahnung aufweist, wobei die zweite Außenverzahnung in die Innenverzahnung des drehbaren Außenrads eingreift, und wobei das drehbare Außenrad einen Befestigungsbereich zur Befestigung einer Abtriebswelle aufweist.

Nachfolgend werden Merkmale strukturiert wiedergegeben. Diese Merkmale können beliebig untereinander und mit anderen hierin offenbarten Merkmalen kombiniert werden.

1. Kraftmessdose zur Bestimmung einer radialen Kraft auf eine Kurbelwelle, die die folgenden Merkmale aufweist:

- eine Aufnahmehülse zur Aufnahme eines Rings eines Lagers,
- einen Befestigungsring zur Befestigung der Kraftmessdose in einem Getriebegehäuse,
- Axialstützbereiche, die an dem Befestigungsring zur axialen Abstützung des Rings des Lagers vorgesehen sind,
- Messbereiche, die zur Aufnahme von radialen Kräften der Aufnahmehülse vorgesehen sind, und die die Aufnahmehülse mit dem Befestigungsring verbinden, wobei an mindestens zwei der Messbereiche Dehnungssensoren befestigt sind.

2. Kraftmessdose gemäß Merkmal 1, wobei die Axialstützbereiche durch Radialschlitze von den Messbereichen getrennt sind, und wobei die Axialstützbereiche durch einen Umfangsschlitz von der Aufnahmehülse getrennt sind.

3. Kraftmessdose gemäß Merkmal 1 oder Merkmal 2, wobei die Messbereiche als Winkel ausgebildete Messlaschen aufweisen.

4. Kraftmessdose gemäß Merkmal 3, wobei die Messlaschen einen radialen Bereich und einen an den radialen Bereich anschließenden axialen Bereich aufweisen,
wobei der radiale Bereich mit dem Befestigungsring verbunden ist, wobei der axiale Bereich mit der Aufnahmehülse verbunden ist, und wobei der radiale Bereich zu dem axialen Bereich in einem Winkel von ungefähr 90 Grad angeordnet ist.

5. Kraftmessdose gemäß Merkmal 4, wobei der axiale Bereich mit einer zylinderförmigen Innenfläche der Aufnahmehülse bündig abschließt.

6. Kraftmessdose gemäß einem der Merkmale 1 bis 5, wobei die Axialstützbereiche über eine Innenfläche der Aufnahmehülse radial nach innen hervorstehen.

7. Kraftmessdose gemäß einem der Merkmale 1 bis 6, wobei mindestens einer der Dehnungssensoren als Dehnmessstreifen ausgebildet ist.

8. Kraftmessdose gemäß einem der Merkmale 1 bis 7,
wobei an jedem der Messbereiche ein Dehnungssensor befestigt ist.

9. Kraftmessdose gemäß einem der Merkmale 1 bis 8,
wobei mindestens zwei der Messbereiche abgesenkte Bereiche zur Befestigung der Dehnungssensoren aufweisen.

10. Kraftmessdose gemäß einem der Merkmale 1 bis 7,
wobei die Kraftmessdose vier Messbereiche aufweist, die im Abstand von 90 Grad angeordnet sind.

11. Kraftmessdose gemäß einem der Merkmale 1 bis 10, wobei der Befestigungsring Befestigungsbereiche aufweist, in denen Befestigungslöcher vorgesehen sind.

12. Kraftmessdose gemäß einem der vorhergehenden Merkmale, wobei der Befestigungsring Ausnehmungen aufweist, und wobei die Messbereiche in den Ausnehmungen angeordnet sind.

13. Kraftmessdose gemäß einem der vorhergehenden Merkmale,
wobei ein Winkelbereich der Messlaschen und der die Messlaschen begrenzenden Schlitze in etwa gleich einem Winkelbereich der Axialstützbereiche entspricht.

14. Kraftmessdose gemäß einem der vorhergehenden Merkmale wobei eine Winkelausdehnung der Messbereiche in Umfangsrichtung kleiner oder gleich 30 Grad ist.

15. Kraftmessdose gemäß einem der vorhergehenden Merkmale,
wobei die Kraftmessdose integral aus Metall gefertigt ist.

16. Messvorrichtung zur Bestimmung einer Kraft auf eine Kurbelwelle, die aufweist

- eine Kurbelwelle mit einem auf der Kurbelwelle angeordneten Lager,
- eine Kraftmessdose gemäß einem der vorhergehenden Merkmale, wobei die Aufnahmehülse der Kraftmessdose auf einem Außenring des Lagers angeordnet ist, und wobei die Axialstützbereiche der Kraftmessdose in axialer Richtung an dem Außenring des Lagers abgestützt sind,
- eine Auswertungselektronik, die mit den Dehnungssensoren der Kraftmessdose verbunden ist.

17. Getriebeanordnung mit einer Messvorrichtung gemäß Merkmal 16 mit einem Getriebegehäuse und einer Kurbelwelle, wobei die Kurbelwelle über ein erstes Lager und ein zweites Lager im Getriebegehäuse gelagert ist, wobei das erste Lager über die Kraftmessdose der Messvorrichtung in dem Getriebegehäuse aufgenommen ist, wobei die Kraftmessdose über den Befestigungsring in dem Getriebegehäuse aufgenommen ist, wobei die Aufnahmehülse einen Außenring des ersten Lagers aufnimmt und wobei die Axialstützbereiche an dem Außenring des ersten Lagers abgestützt sind.

18. Getriebeanordnung nach Merkmal 17, wobei die Kurbelwelle einen ersten Absatz und einen zweiten Absatz aufweist, und wobei ein Innenring des ersten Lagers der Messvorrichtung an dem ersten Absatz der Tretwelle anliegt, und wobei ein Innenring des zweiten Lagers an dem zweiten Absatz der Kurbelwelle anliegt, wodurch eine X-Anordnung einer schräg angestellten Lagerung gebildet wird.

19. Getriebeanordnung nach Merkmal 17 oder Merkmal 18, wobei das erste Lager der Messvorrichtung und das zweite Lager der Messvorrichtung jeweils als einreihige Schrägkugellager ausgebildet sind.

20. Getriebeanordnung nach einem der Merkmale 17 bis 19, wobei das zweite Lager über eine Wellenfeder an dem zweiten Absatz der Tretwelle oder an dem Gehäuse abgestützt ist.

21. Getriebeanordnung nach Merkmal 20 wobei das zweite Lager weiterhin über eine Abstandsscheibe an dem zweiten Absatz der Tretwelle oder an dem Gehäuse abgestützt ist.

22. Getriebeanordnung nach einem der Merkmale 17 bis 21, die weiterhin aufweist:

einen Motor, ein mit dem Motor verbundenen Untersetzungsgetriebe, und eine mit dem Untersetzungsgetriebeverbundene Abtriebs-Hohlwelle,
wobei die Kurbelwelle als Tretwelle ausgebildet ist, wobei das erste Lager und das zweite Lager jeweils als Wälzlager ausgebildet sind, wobei die Tretwelle durch die Abtriebs-Hohlwelle hindurchgeführt ist, und wobei zur Entkopplung der Tretwelle von der Abtriebs-Hohlwelle ein Freilauf zwischen der Tretwelle und der Abtriebs-Hohlwelle vorgesehen ist.

23. Elektrisch betriebenes Fahrzeug mit einer Getriebeanordnung gemäß Merkmal 22, wobei der Motor als Elektromotor ausgebildet ist, und wobei eine Batterie des elektrisch betriebenen Fahrzeugs mit dem Elektromotor verbunden ist.

Die Gegenstände der vorliegenden Beschreibung können auch durch die obenstehende Aufzählung beschrieben werden. Die jeweiligen Merkmalskombinationen, die in der Aufzählung offenbart sind, können als unabhängige Gegenstände angesehen werden, die auch mit anderen Merkmalen der vorliegenden Beschreibung kombiniert werden können.

Insbesondere können die Merkmale der Figuren 21 bis 40, die sich auf eine Drehmomentmessvorrichtung beziehen, die Merkmale der Figuren 45 bis 59, die sich auf eine Freilaufvorrichtung beziehen, und die Merkmale der Figuren 67 bis 76, die sich auf ein Kurbelgetriebe beziehen, mit den in den Figuren 1 bis 10, 11 bis 20 und 61 bis 66 gezeigten harmonischen Pinring-Getrieben und auch mit den in den in den Figuren 77 bis 93 und 124 bis 126 gezeigten weiteren Untersetzungsgetrieben bzw. Motor-Getriebe-Einheiten kombiniert werden. Diese Merkmale können außerdem auch mit hier nicht gezeigten Getrieben oder Untersetzungsgetrieben kombiniert werden.

Weiterhin kann die in Figur 1 gezeigte Lager-Anordnung auch mit den anderen in der vorliegenden Beschreibung gezeigten Getriebe-Einheiten kombiniert werden. Dasselbe gilt auch für das einstückige Rotor-Transmitter-Element und die Stützring Anordnung für das bzw. die Außenräder, sowie für den einstückigen Pinring, insofern das Getriebe einen Pinring aufweist.

**Bezugsziffern**

| | | | |
|---|---|---|---|
| 5 | Außenverzahnung | 40 | Getriebe-Freilauf |
| 5' | Außenverzahnung | 41 | Abtriebs-Kugellager |
| 6 | Innenverzahnung | 41' | antriebsseitiges Abtriebs-Kugellager |
| 6' | Innenverzahnung | | |
| 7 | Innenrad | 42 | O-Ring |
| 8 | Außenrad | 43 | Kettenblattadapter |
| 8' | Außenrad | 44 | Abtriebsmutter, Getriebedeckel |
| 9 | Absatz | 45 | antriebsseitiges Tretwellen-Kugellager |
| 10 | Motor-Getriebe Einheit | | |
| 11 | Absatz | 46 | abtriebsseitiges Tretwellen-Kugellager |
| 12 | Motor | | |
| 13 | Untersetzungsgetriebe | 47 | Kraftmessdose |
| 20 | Stator | 48 | ringförmige Leiterplatte/PCB Kraftsensor |
| 21 | Spule | | |
| 22 | Motorgehäuse | 49 | Tretwellen-Freilauf |
| 23 | Leiterplatte | 50 | innerer Wellendichtring |
| 24 | Kühldeckel | 51 | äußerer Wellendichtring |
| 25 | Anschluss | 52 | antriebsseitiger Wellendichtring |
| 26 | äußere Rotorwelle | 53 | Zapfen |
| 27 | innere Rotorwelle | 54 | radiale Schlitze |
| 28 | Kurvenscheibe | 55 | Schraublöcher |
| 28' | Exzenterscheibe | 56 | übertragender Bereich |
| 29 | antriebsseitiges Rotor-Kugellager | 57 | Absatz |
| 30 | abtriebsseitiges Rotor-Kugellager | 58 | runde Vertiefungen |
| 31 | Innenrad-Kugellager | 59 | Plateaus |
| 32 | Gehäusedeckel | 60 | Schraubgewinde |
| 33 | flexibles Kugellager | 61 | Wellenfeder |
| 33' | Kugellager | 62 | Abstandsring |
| 34 | Befestigungsschrauben | 63 | Flachbandkabel |
| 35 | Tretwelle | 64 | Zylinderrollen |
| 36 | Stützring | 65 | Klemmkörperkäfig |
| 37 | antriebsseitiger Anlaufring | 66 | Schraubenfedern |
| 38 | abtriebsseitiger Anlaufring | 67 | Laufbahn |
| 39 | Abtriebswelle | 68 | Sensorring |
| 69 | Distanzscheibe | 118 | Dehnmessstreifen |
| 70 | Wellenfeder | 119 | Dehnmessstreifen |
| 71 | Stufen | 120 | Außenfläche |
| 72 | Schraubenfedern | 121 | Schleifringe |

| 73 | Sperrklinken | 122 | Transmitter |
|---|---|---|---|
| 74 | Befestigungsbereich | 124 | Dehnmessstreifen |
| 75 | Befestigungsbereich | 130 | Drehmomentmessvorrichtung |
| 76 | O-Ring | 131 | Dehnmessstreifen |
| 80 | Tretwellen-Baugruppe | 132 | Dehnmessstreifen |
| 81 | Freilauf-Anordnung | 133 | Dehnmessstreifen |
| 82 | Sensor-Anordnung | 134 | Dehnmessstreifen |
| 90 | Messlasche | 135 | Gehäuse |
| 91 | Stützlasche | 136 | Platine |
| 92 | Dehnmessstreifen | 137 | Geberring |
| 93 | äußerer Bereich | 138 | Aufnehmer |
| 94 | innerer Bereich | 139 | Vorsprung |
| 95 | Radialschlitz | 140 | Gewinde |
| 96 | Hülse | 141 | Absatz |
| 97 | äußerer Ring | 142 | O-Ring |
| 98 | Befestigungslöcher | 220 | Aufnahmebereich |
| 99 | zurückgesetzter Bereich | 222 | Stufe, antriebsseitig |
| 101 | Pins | 223 | Stufe, antriebsseitig |
| 102 | Pinring | 224 | Stufe, abtriebsseitig |
| 103 | Pin-Haltering | 225 | Stufe, abtriebsseitig |
| 104 | Schlitze | 226 | Stufe, abtriebsseitig |
| 105 | Umfangsschlitz | 227 | Sternanordnung |
| 106 | antriebsseitiger Absatz | 228 | Abrollbereich |
| 107 | abtriebsseitiger Absatz | 229 | Abrollbereich |
| 109 | Tretlager | 230 | Absatz |
| 110 | Drehmomentmessvorrichtung | 231 | Absatz |
| 111 | Tretlagerwelle | 232 | Absatz |
| 112 | erstes Wälzlager | 233 | Innengewinde |
| 113 | zweites Wälzlager | 234 | Hohlwellenbereich |
| 114 | Hülse | 235 | scheibenförmiger Bereich |
| 115 | Endfläche | 236 | Bohrung |
| 116 | Bereich | 237 | Abfasung |
| 117 | Dehnmessstreifen | 243 | Abrollbereich |
| 244 | Endbereich | 426 | Antriebswelle |
| 245 | Sperrklinken-Aufnahmebereich | 427 | Rotorwelle |
| 246 | Scharnierbereich | 428 | Exzenterscheibe |
| 247 | Scharnierbereich | 429 | Exzenterscheibe |
| 248 | plattenförmiger Bereich | 430 | zentrierte Kreisscheibe |
| 249 | Kante | 433 | Innenrad |
| 250 | Stege | 434 | Innenrad |
| 251 | Aufnahmebereich | 435 | Außenverzahnung |
| 252 | Aufnahmebereich | 436 | Außenverzahnung |
| 255 | erster Bereich | 437 | Innenverzahnung |
| 257 | Geberring | 440 | Abtriebsscheibe |
| 258 | Drehzahlaufnehmer | 442 | Mitnehmerbolzen |
| 262 | O-Ring | 443 | Mitnehmerrollen |
| 343 | O-Ring | 441 | Ring |
| 344 | O-Ring | 444 | kreisförmige Öffnung |
| 345 | Sensorring | 445 | Distanzscheibe |
| 346 | Innengehäuse | 446 | Grat |
| 347 | Schrauben | 447 | stationäre Pins |

(fortgesetzt)

| | | | |
|---|---|---|---|
| 348 | Stützzylinder | 448 | Befestigungsöffnung |
| 349 | Stege | 450 | Außengewinde |
| 352 | Hohlwelle | 451 | Andruckscheibe |
| 353 | Hall-Sensor | 452 | Anpressring |
| 354 | Kerben | 453 | Spannwelle |
| 355 | Zapfen | 454 | Befestigungsbereich |
| 400, 400' | Planetengetriebe-Baugruppe | 455 | Antriebszylinder |
| 401, 401' | Hohlrad | 456 | Befestigungsflansch |
| 402 | Befestigungsflansch | 457 | Befestigungsbereich |
| 403 | Sonnenrad | 458 | Ausgangswelle |
| 405 | Planetenrad | 501 | Pins |
| 406 | Planetenachse | 502 | flexibles Dünnring Kugellager |
| 407 | Planetenträger | 503 | Pin-Haltering |
| 408 | Wälzlager | 504 | Flansch |
| 409 | Hohlwelle | 505, 505' | Innenradverzahnung |
| 410 | Hohlwelle | 506, 506' | Außenradverzahnung |
| 423 | Kugellager | 507 | Innenring bzw. Innenrad |
| 424 | Kugellager | 508 | Außenring bzw. Außenrad |
| 425 | Kugellager | 509 | zylindrisches Gehäuseteil |
| 510 | HPRD-Getriebe | 528' | Radkurve des Außenrads |
| 513 | Rotor | 529 | Äquidistante der Radkurve des Innenrads |
| 514 | Exzenterscheibe | | |
| 515 | Getriebemittelachse | 529' | Äquidistante der Radkurve des Außenrads |
| 516 | halbrunde Ausnehmungen | | |
| 518 | Radkurve | 530 | integraler Pinring |
| 519 | Äquidistante | 531 | Zahn des Pinrings |
| 520 | Pinquerschnitt | 532 | Zahngrund des Pinrings |
| 521 | Ortspunkt der Radkurve | 533 | innere Grenzkurve |
| 525 | Nullkurve | 534 | äußere Grenzkurve |
| 526 | Kontur mit Vorhaltung | 536 | vorgegebenes Zahnprofil |
| 527 | eingelaufene Kontur | 537 | zu messendes Zahnprofil |
| 528 | Radkurve des Innenrads | | |

## Patentansprüche

1. Harmonisches Pinring Getriebe, das aufweist

- ein erstes Rad mit einer ersten Verzahnung und
- ein zweites Rad mit einer zweiten Verzahnung,
- einen Pinring mit runden Eingriffsbereichen,
- einen umlaufenden Transmitter zum Rakeln der Eingriffsbereiche des Pinrings in die erste Verzahnung des ersten Rads und in die zweite Verzahnung des zweiten Rads, wobei das erste Rad, der Transmitter und das zweite Rad konzentrisch zueinander angeordnet sind und der Transmitter radial innerhalb des Pinrings angeordnet ist, und wobei der Pinring zwischen dem ersten Rad und dem zweiten Rad angeordnet ist, wobei der Transmitter eine exzentrisch zu einer Getriebemittelachse angeordnete Transmitterscheibe aufweist, wobei die erste Verzahnung des ersten Rads und die zweite Verzahnung des zweiten Rads gemäß einer Epizykelkonstruktion geformt ist, wobei Orte auf der jeweiligen Zahnoberfläche der ersten Verzahnung bzw. der zweiten Verzahnung jeweils durch einen radialen Abstand von der Getriebemittelachse in Abhängigkeit von einem Zykelwinkel bestimmt sind,
wobei der radiale Abstand seinerseits durch eine Äquidistante zu einer Radkurve bestimmt ist,
wobei Orte auf der Radkurve jeweils durch die Vektorsumme eines Zykelvektors und eines Epizykelvektors bestimmt sind, wobei ein Anfangspunkt des Zykelvektors auf der Getriebemittelachse liegt und ein Anfangspunkt des Epizykelvektors im Endpunkt des Zykelvektors liegt, wobei ein Epizykelwinkel des Epizykelvektors n-mal so groß ist wie der Zykelwinkel und eine Länge des Zykelvektors größer als eine Länge des Epizykelvektors ist, wobei n eine Anzahl der runden Eingriffsbereiche des harmonischen Pinring-Getriebes ist, die mindestens drei ist.

2. Harmonisches Pinring Getriebe nach Anspruch 1, wobei das erste Rad ein Innenrad mit einer Außenverzahnung ist und das zweite Rad ein Außenrad mit einer Innenverzahnung ist, wobei bei der Außenverzahnung des Innenrads der Epizykelwinkel in derselben Richtung wie der Zykelwinkel gemessen wird und die Äquidistante eine innere Äquidistante ist,

und wobei bei der Innenverzahnung des Außenrads der Epizykelwinkel in entgegengesetzter Richtung zu dem Zykelwinkel gemessen wird und die Äquidistante eine äußere Äquidistante ist.

3. Harmonisches Pinring Getriebe nach Anspruch 1, wobei das erste Rad und das zweite Rad jeweils ein Außenrad mit einer Innenverzahnung ist,

wobei bei der Innenverzahnung der beiden Außenräder der Epizykelwinkel in entgegengesetzter Richtung zu dem Zykelwinkel gemessen wird und die Äquidistante eine äußere Äuqidistante ist.

4. Harmonisches Pinring Getriebe nach Anspruch 3, wobei die jeweilige Äquidistante eine Äquidistante im Abstand der Summe eines Radius der runden Eingriffsbereiche und einem Korrekturwert ist, wobei der Korrekturwert von einem Getriebespiel abhängt.

5. Harmonisches Pinring Getriebe nach Anspruch 3 oder 4, wobei das harmonische Pinring-Getriebe ein Wälzlager aufweist, das auf der Transmitterscheibe aufliegt, wobei der Zykelradius gleich dem halben Durchmesser des Wälzlagers ist.

6. Harmonisches Pinring Getriebe nach Anspruch 3 oder 4, wobei der Zykelradius gleich dem halben Durchmesser der Transmitterscheibe ist.

7. Harmonisches Pinring Getriebe nach einem der Ansprüche 3 bis 6, wobei der Epizykelradius gleich einem halben Exzenterversatz ist, um den die Transmitterscheibe gegenüber der Getriebemittelachse versetzt ist.

8. Innenrad für ein harmonisches Pinring-Getriebe mit einer Außenverzahnung, wobei die Zahnoberfläche der Außenverzahnung durch einen radialen Abstand von einer Mittelachse des Innenrads in Abhängigkeit von einem Zykelwinkel bestimmt ist, wobei der radiale Abstand von der Mittelachse seinerseits durch eine innere Äquidistante zu einer Radkurve bestimmt ist,

wobei ein Ort auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors n - 1 mal so groß ist wie der Zykelwinkel und ein Epizykelwinkel des zweiten Epizykelvektors n - 3 mal so groß ist wie der Zykelwinkel, wobei n eine Anzahl von Pins des harmonischen Pinring-Getriebes ist, die mindestens vier ist, wobei der erste Epizykelwinkel in derselben Richtung wie der Zykelwinkel gemessen wird und der zweite Epizykelwinkel in einer entgegengesetzten Richtung zu dem Zykelwinkel gemessen wird, und wobei eine Länge des Zykelvektors größer ist als die Summe der Längen des ersten Epizykelvektors und des zweiten Epizykelvektors, und eine Länge des ersten Epizykelvektors größer ist als eine Länge des zweiten Epizykelvektors.

9. Außenrad für ein harmonisches Pinring-Getriebe mit einer Innenverzahnung, wobei Orte auf der Zahnoberfläche der Innenverzahnung jeweils durch einen radialen Abstand von einer Mittelachse des Außenrads in Abhängigkeit von einem Zykelwinkel bestimmt sind,

wobei der radiale Abstand seinerseits durch eine äußere Äquidistante zu einer Radkurve definiert ist,
wobei Orte auf der Radkurve jeweils durch die Vektorsumme eines Zykelvektors, eines ersten Epizykelvektors und eines zweiten Epizykelvektors bestimmt ist, wobei ein Anfangspunkt des Zykelvektors auf der Mittelachse liegt, ein Anfangspunkt des ersten Epizykelvektors im Endpunkt des Zykelvektors liegt und ein Anfangspunkt des zweiten Epizykelvektors im Endpunkt des ersten Epizykelvektors liegt,
und wobei ein Epizykelwinkel des ersten Epizykelvektors n + 1 mal so groß ist wie der Zykelwinkel und ein

71

Epizykelwinkel des zweiten Epizykelvektors n + 3 mal so groß ist wie der Zykelwinkel, wobei n eine Anzahl von Pins des harmonischen Pinring-Getriebes ist, die mindestens vier ist, wobei der erste Epizykelwinkel in einer entgegengesetzten Richtung zu dem Zykelwinkel gemessen wird und der zweite Epizykelwinkel in derselben Richtung wie der Zykelwinkel gemessen wird, und wobei eine Länge des Zykelvektors größer als die Summe der Längen des ersten Epizykelvektors und des zweiten Epizykelvektors, ist und eine Länge des ersten Epizykelvektors größer als eine Länge des zweiten Epizykelvektors ist.

10. Harmonisches Pinring Getriebe, das aufweist

- ein Innenrad gemäß Anspruch 8 und ein Außenrad gemäß Anspruch 9, oder ein erstes Außenrad gemäß Anspruch 9 und ein zweites Außenrad gemäß Anspruch 9,
sowie
- einen Pinring mit runden Eingriffsbereichen,
und
- einen umlaufenden Transmitter zum Rakeln der runden Eingriffsbereiche des Pin-Rings in die Innenverzahnung des Außenrads und in die Außenverzahnung des Innenrads, wobei das Innenrad, der Transmitter und das Außenrad konzentrisch zueinander angeordnet sind, der Transmitter radial innerhalb des Pinrings angeordnet ist, und wobei der Pinring zwischen dem Innenrad und dem Außenrad angeordnet ist,
oder
- einen umlaufenden Transmitter zum Rakeln der runden Eingriffsbereiche des Pin-Rings in die Innenverzahnung des ersten Außenrads und in die Innenverzahnung des zweiten Außenrads,
wobei das der Transmitter, das erste Außenrad und das zweite Außenrad konzentrisch zueinander angeordnet sind, der Transmitter radial innerhalb des Pinrings angeordnet ist, und wobei der Pinring in axialer Richtung zwischen dem ersten Außenrad und dem zweiten Außenrad angeordnet ist.

11. Harmonisches Pinring Getriebe nach Anspruch 10, wobei die jeweilige Äquidistante eine Äquidistante im Abstand der Summe eines Radius der runden Eingriffsbereiche und eines Korrekturwerts ist, wobei der Korrekturwert durch ein Getriebespiel bestimmt ist.

12. Harmonisches Pinring Getriebe nach Anspruch 10 oder 11, wobei der Transmitter eine oval geformte Kurvenscheibe und ein flexibles Wälzlager aufweist, das auf der oval geformten Kurvenscheibe aufliegt, wobei der Zykelradius gleich der Summe aus einem halben Durchmesser des flexiblen Wälzlagers und einem Korrekturwert ist, und/oder
wobei der Transmitter eine erste exzentrisch zu einer Getriebemittelachse angeordnete Kreisscheibe und eine zweite exzentrisch zu der Getriebemittelachse angeordnete Kreisscheibe aufweist, wobei der Zykelradius gleich der Summe aus einem mittleren Radius der Hüllkurve der beiden exzentrisch angeordneten Kreisscheiben und einem Korrekturwert ist.

13. Harmonisches Pinring Getriebe nach einem der Ansprüche 10 bis 13, wobei der erste Epizykelradius kleiner oder gleich der Summe aus einem halben Pinring-Hub und einem zweiten Korrekturwert ist, wobei der zweite Korrekturwert kleiner oder gleich null ist, und/oder
wobei die Länge des zweiten Epizykelvektors ein Drittel der Länge des ersten Epizykelvektors beträgt.

14. Verfahren zum Herstellen eines Getriebes,

wobei das Verfahren einen Schritt des Herstellens von Zähnen aufweist, welche gemäß einer Epizykelkonstruktion geformt sind,
wobei Orte auf der jeweiligen Zahnoberfläche jeweils durch einen radialen Abstand von einer Achse in Abhängigkeit von einem Zykelwinkel bestimmt sind,
wobei der radiale Abstand seinerseits durch eine Äquidistante zu einer Radkurve bestimmt ist,
wobei Orte auf der Radkurve jeweils durch die Vektorsumme eines Zykelvektors und eines Epizykelvektors bestimmt sind, wobei ein Anfangspunkt des Zykelvektors auf der Achse liegt und ein Anfangspunkt des Epizykelvektors im Endpunkt des Zykelvektors liegt, wobei ein Epizykelwinkel des Epizykelvektors n-mal so groß ist wie der Zykelwinkel und eine Länge des Zykelvektors größer als eine Länge des Epizykelvektors ist,
wobei n eine Anzahl der runden Eingriffsbereiche des harmonischen Pinring-Getriebes ist, die mindestens drei ist

15. Verfahren nach Anspruch 14,

- wobei der Schritt des Herstellens von Zähnen durch Abfräsen ausgeführt wird.

Fig. 1

Fig. 2

Fig. 3

Fig. 4

Fig. 5

Fig. 6

D-D

Fig. 7

Fig. 9

Fig. 8

A-A

Fig. 10

Fig. 11

Fig.12

E-E

Fig.14

Fig.13

EP 4 325 191 A1

F-F

57

103

Fig.16

101

103

Fig.17

56

101

255

G

101

103

102

F

Fig.15

85

Fig.19

Fig.18

EP 4 325 191 A1

A-A

Fig. 20

87

EP 4 325 191 A1

Fig. 21

Fig. 22

Fig. 23

EP 4 325 191 A1

A-A

Fig. 24    Fig. 25    Fig. 26

EP 4 325 191 A1

A-A

Fig. 27

Fig. 28

B-B

Fig. 29

EP 4 325 191 A1

Fig. 30

EP 4 325 191 A1

EP 4 325 191 A1

Fig. 31

93

Fig. 32

EP 4 325 191 A1

EP 4 325 191 A1

Fig.33

EP 4 325 191 A1

Fig.34

Fig. 35

Fig. 36

Fig. 37

Fig. 38

Fig. 39

Fig. 4.0

Fig. 41

Fig. 42

EP 4 325 191 A1

Fig. 43

Fig. 44

45

35

74

141

140

39

61

22

137

138

Fig. 45

Fig. 46

Fig. 47

Fig. 49

Fig. 48

Fig. 50

Fig. 51

Fig. 52

Fig. 53

Fig. 54

EP 4 325 191 A1

Fig. 56

Fig. 55

111

Fig. 58

Fig. 57

Fig. 59

EP 4 325 191 A1

Fig. 60

114

Fig. 61

Fig. 62

Fig 63

EP 4 325 191 A1

Fig. 64

118

Fig. 65

Fig. 66

Fig. 67

400

402

74

401

39

75

Fig. 68

402

C

401

39

74

75

B

C

B

Fig. 69

C-C

406    401

35

405

403

404

Fig. 70

B-B    402    405
407 401  406    49 410

74                                    35    75

403        408

Fig. 71

Fig. 72

74    400'

401'

75

Fig. 73

400'    401'

C    74    75    B

B    C

Fig. 74

C-C

405, 409

404

403'

406

405

401'

35

Fig. 75

403'  401'  405  409

406

B-B

35

49'

Fig. 76

EP 4 325 191 A1

Fig. 77

126

EP 4 325 191 A1

Fig. 78

127

EP 4 325 191 A1

Fig. 80

Fig. 79

128

Fig. 81

Fig. 82

Fig. 83

Fig. 85

Fig. 86

Fig. 84

Fig. 88

Fig. 87

Fig. 90

Fig. 89

Fig. 91

EP 4 325 191 A1

Fig. 93

Fig. 92

136

EP 4 325 191 A1

Fig. 94

137

Fig. 95

EP 4 325 191 A1

Fig. 97

Fig. 99

Fig. 96

Fig. 98

139

Fig. 100

Fig. 101

Fig. 102

Fig. 103

Fig. 104

Fig. 105

Fig. 106

Fig. 107

Fig. 108

EP 4 325 191 A1

Fig. 109

Fig. 110

142

EP 4 325 191 A1

Fig. 111

143

Fig. 112

Fig. 113

Fig. 114

Fig. 115

Fig. 116

EP 4 325 191 A1

EP 4 325 191 A1

Fig. 117

Fig. 118

149

MOTOR → UNTERSET-ZUNGS GETRIEBE

12   13   79   39

Fig. 119

MOTOR → UNTERSET ZUNGS GETRIEBE

12   13   81   40   79   39   49   35   143   75

Fig. 120

EP 4 325 191 A1

EP 4 325 191 A1

12

455,33

457

22

| MOTOR | → | TRANS-MITTER | → | FLEX-SPLINE | ↔ | AUßEN RAD | ↔ | GEHÄUSE |

453

Fig. 121

12

28,33

102

8,8'

22

| MOTOR | → | TRANS-MITTER | → | PINRING | ↔ | AUßEN RAD | ↔ | GEHÄUSE |

INNEN RAD ~7

Fig. 122

12

428, 429

433, 434

439

22

| MOTOR | → | EXZENTER | → | INNEN RAD | ↔ | AUßEN RAD | ↔ | GEHÄUSE |

LAGER+ ZAPFEN

442, 443

ABTRIEBS -PLATTE

440

Fig. 123

Fig. 125

Fig. 124

Fig. 126

Europäisches Patentamt
European Patent Office
Office européen des brevets

**EUROPÄISCHER RECHERCHENBERICHT**

**Nummer der Anmeldung**

**EP 23 19 3087**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 20 2014 010823 U1 (TQ-SYSTEMS GMBH [DE]) 13. Oktober 2016 (2016-10-13) * Abbildungen 1,27 * * Absätze [0036], [0130], [0167], [0264] * | 1-15 | INV. G01L5/00 F16C19/52 F16H49/00 |
| Y | ZHANG YUEMING ET AL: "Accuracy Measuring For the RV Reducer Cycloid Gear and Manufacturing Error Analysis", PROCEEDINGS OF THE 2ND INTERNATIONAL CONFERENCE ON ADVANCES IN MECHANICAL ENGINEERING AND INDUSTRIAL INFORMATICS (AMEII 2016), 30. April 2016 (2016-04-30), XP093118304, Paris, France DOI: 10.2991/ameii-16.2016.105 ISBN: 978-94-625-2188-9 * Abbildung 1 * * Gleichung (1) * | 1-15 | |

RECHERCHIERTE SACHGEBIETE (IPC)

F16C
G01L
F16H

Der vorliegende Recherchenbericht wurde für alle Patentansprüche erstellt

| Recherchenort | Abschlußdatum der Recherche | Prüfer |
|---|---|---|
| Den Haag | 11. Januar 2024 | Kaiser, Jean-Luc |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 3087

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2024

| Im Recherchenbericht angeführtes Patentdokument | Datum der Veröffentlichung | Mitglied(er) der Patentfamilie | Datum der Veröffentlichung |
|---|---|---|---|
| DE 202014010823 U1 | 13-10-2016 | DE 202014010823 U1 | 13-10-2016 |
| | | EP 2976551 A1 | 27-01-2016 |
| | | EP 3929469 A1 | 29-12-2021 |
| | | US 2016245386 A1 | 25-08-2016 |
| | | US 2019316667 A1 | 17-10-2019 |
| | | US 2021356029 A1 | 18-11-2021 |
| | | US 2023235814 A1 | 27-07-2023 |
| | | US 2023392677 A1 | 07-12-2023 |
| | | WO 2014147583 A1 | 25-09-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013220871 A1